(19) Europäisches Patentamt
European Patent Office
Office européen des brevets

(11) EP 4 440 196 A1

(12) EUROPEAN PATENT APPLICATION

(43) Date of publication:
**02.10.2024 Bulletin 2024/40**

(21) Application number: **24167228.6**

(22) Date of filing: **28.03.2024**

(51) International Patent Classification (IPC):
***H04W 36/00*** *(2009.01)* *H04W 74/00* *(2009.01)*
*H04W 84/06* *(2009.01)*

(52) Cooperative Patent Classification (CPC):
**H04W 36/00725; H04W 74/0833;** H04W 74/006;
H04W 84/06

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.03.2023 US 202363455364 P**

(71) Applicant: **Comcast Cable Communications LLC**
**Philadelphia, Pennsylvania 19103 (US)**

(72) Inventors:
- **DASHTAKI, Mohammad Ghadir Khoshkholgh**
  **Philadelphia, 19103 (US)**
- **CIRIK, Ali Cagatay**
  **Philadelphia, 19103 (US)**
- **DINAN, Esmael Hejazi**
  **Philadelphia, 19103 (US)**
- **JEON, Hyoungsuk**
  **Philadelphia, 19103 (US)**
- **PRASAD, Gautham**
  **Philadelphia, 19103 (US)**

(74) Representative: **V.O.**
**P.O. Box 87930**
**2508 DH Den Haag (NL)**

# (54) COMMUNICATIONS FOR HANDOVER OPERATIONS IN NON-TERRESTRIAL NETWORKS

(57) A base station may communicate with a wireless device. A control message may direct the wireless device to switch from one link to another link and maintain the same cell identifier. The control message may specify whether the wireless device should perform or skip a random access channel procedure.

NTN node 2
2402
NTN node 1
2401
feeder
link 2
Service
link 1
Service
link 2
feeder
link 1
PCI 2
2408
• PCI 1 2407 = PCI 2 2408
(PCI unchanged scenario);
• PCI 1 2407 ≠ PCI 2 2408
(PCI changed scnario)
Wireless device 2405
Source NTN
Gateway
2409
Source Base
Station 2406
PCI 1
2407
target cell 2404 (second cell)
with PCI 2 2408
source cell 2403 (first cell)
with PCI 1 2407

FIG. 24A

EP 4 440 196 A1

Processed by Luminess, 75001 PARIS (FR)

## Description

CROSS-REFERENCE TO RELATED APPLICATIONS

This application claims the benefit of U.S. Provisional Application No. 63/455,364, filed on March 29, 2023. The above referenced application is hereby incorporated by reference in its entirety.

BACKGROUND

In a wireless communication system, a base station communicates with a wireless device. Control messages are used to configure the wireless device for connection to a wireless network.

SUMMARY

The following summary presents a simplified summary of certain features. The summary is not an extensive overview and is not intended to identify key or critical elements.
A base station may communicate with a wireless device. A control message may be sent to a wireless device from a base station. A control message may direct the wireless device to switch from one link (e.g., from a source satellite) to another link (e.g., to a target satellite) and maintain the same cell identifier (e.g., the physical cell identifier of the base station). The control message may indicate whether the wireless device should perform or skip a random access channel procedure. Based on the control message, the wireless device may switch links while preserving the same cell identifier and skipping the random access channel procedure. A timing advance value comprised in the control message may be used for the link switch.
These and other features and advantages are described in greater detail below.

BRIEF DESCRIPTION OF THE DRAWINGS

Some features are shown by way of example, and not by limitation, in the accompanying drawings. In the drawings, like numerals reference similar elements.

FIG. 1A and FIG. 1B show example communication networks.

FIG. 2A shows an example user plane.

FIG. 2B shows an example control plane configuration.

FIG. 3 shows example of protocol layers.

FIG. 4A shows an example downlink data flow for a user plane configuration.

FIG. 4B shows an example format of a Medium Access Control (MAC) subheader in a MAC Protocol Data Unit (PDU).

FIG. 5A shows an example mapping for downlink channels.

FIG. 5B shows an example mapping for uplink channels.

FIG. 6 shows example radio resource control (RRC) states and RRC state transitions.

FIG. 7 shows an example configuration of a frame.

FIG. 8 shows an example resource configuration of one or more carriers.

FIG. 9 shows an example configuration of bandwidth parts (BWPs).

FIG. 10A shows example carrier aggregation configurations based on component carriers.

FIG. 10B shows example group of cells.

FIG. 11A shows an example mapping of one or more synchronization signal/physical broadcast channel (SS/PBCH) blocks.

FIG. 11B shows an example mapping of one or more channel state information reference signals (CSI-RSs).

FIG. 12A shows examples of downlink beam management procedures.

FIG. 12B shows examples of uplink beam management procedures.

FIG. 13A shows an example four-step random access procedure.

FIG. 13B shows an example two-step random access procedure.

FIG. 13C shows an example two-step random access procedure.

FIG. 14A shows an example of control resource set (CORESET) configurations.

FIG. 14B shows an example of a control channel element to resource element group (CCE-to-REG) mapping.

FIG. 15A shows an example of communications between a wireless device and a base station.

FIG. 15B shows example elements of a computing device that may be used to implement any of the various devices described herein.

FIG. 16A, FIG. 16B, FIG. 16C, and FIG. 16D show examples of uplink and downlink signal transmission.

FIG. 17 shows examples of various downlink control information (DCI) formats.

FIG. 18 shows an example handover procedure from a source base station to a target base station for a wireless device.

FIG. 19 shows an example of a conditional handover (CHO) method.

FIG. 20 shows an example of Layer 1/ Layer 2 (Layer 1/2) triggered handover method.

FIG. 21 shows an example of early TA acquisition (ETA)-based handover method.

FIG. 22 shows an example of RACH-less handover method.

FIG. 23A shows an example of a non-terrestrial network.

FIG. 23B shows an example of a non-terrestrial network with a transparent payload.

FIG. 23C shows an example of assistance information for maintenance of uplink synchronization at a wireless device in a non-terrestrial network.

FIG. 24A shows an example of a handover procedure in a non-terrestrial network.

FIG. 24B shows an example of a handover procedure in a non-terrestrial network.

FIG. 25A shows an example of a feeder link switch in a non-terrestrial network.

FIG. 25B shows a flowchart of a RACH-less handover method in a non-terrestrial network.

FIG. 26 shows an example of a RACH-less handover method in wireless communications systems.

FIG. 27 shows an example of a RACH-less handover method in wireless communications systems.

FIG. 28 shows an example of a RACH-less handover method in wireless communications systems.

FIG. 29 shows an example of a RACH-less handover method in wireless communications systems.

## DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

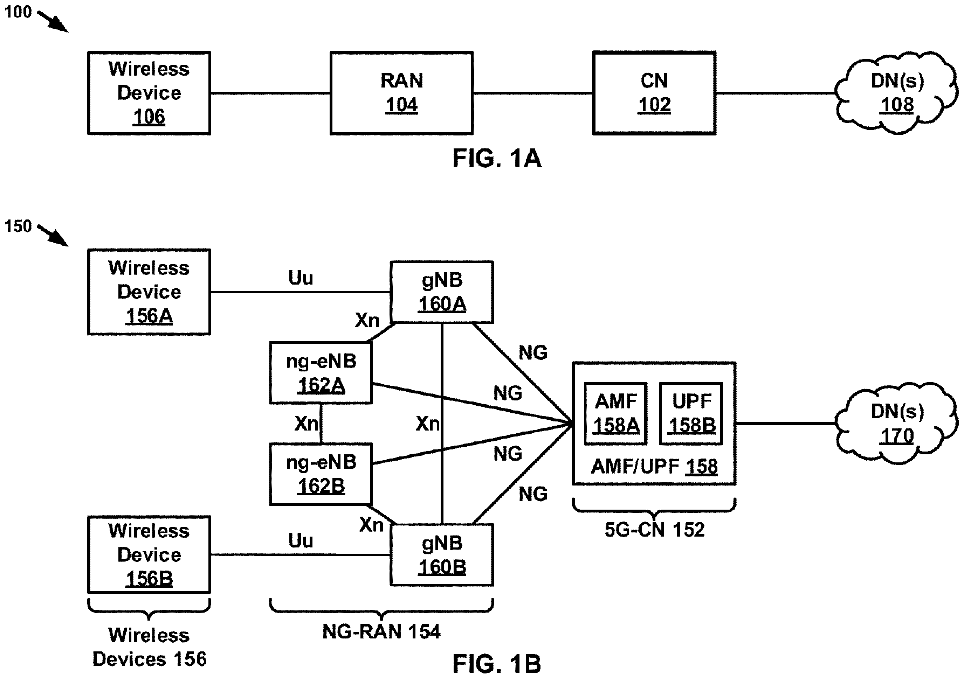

FIG. 1A shows an example communication network 100. The communication network 100 may comprise a mobile communication network). The communication network 100 may comprise, for example, a public land mobile network (PLMN) operated/managed/run by a network operator. The communication network 100 may comprise one or more of a core network (CN) 102, a radio access network (RAN) 104, and/or a wireless device 106. The communication network 100 may comprise, and/or a device within the communication network 100 may communicate with (e.g., via CN 102), one or more data networks (DN(s)) 108. The wireless device 106 may communicate with one or more DNs 108, such as public DNs (e.g., the Internet), private DNs, and/or intra-operator DNs. The wireless device 106 may communicate with the one or more DNs 108 via the RAN 104 and/or via the CN 102. The CN 102 may provide/configure the wireless device 106 with one or more interfaces to the one or more DNs 108. As part of the interface functionality, the CN 102 may set up end-to-end connections between the wireless device 106 and the one or more DNs 108, authenticate the wireless device 106, provide/configure charging functionality, etc.

The wireless device 106 may communicate with the RAN 104 via radio communications over an air interface. The RAN 104 may communicate with the CN 102 via various communications (e.g., wired communications and/or wireless communications). The wireless device 106 may establish a connection with the CN 102 via the RAN 104. The RAN 104 may provide/configure scheduling, radio resource management, and/or retransmission protocols, for example, as part of the radio communications. The communication direction from the RAN 104 to the wireless device 106 over/via the air interface may be referred to as the downlink and/or downlink communication direction. The communication direction from the wireless device 106 to the RAN 104 over/via the air interface may be referred to as the uplink and/or uplink communication direction. Downlink transmissions may be separated and/or distinguished from uplink transmissions, for example, based on at least one of: frequency division duplexing (FDD), time-division duplexing (TDD), any other duplexing schemes, and/or one or more combinations thereof.

As used throughout, the term "wireless device" may comprise one or more of: a mobile device, a fixed (e.g., non-mobile) device for which wireless communication is configured or usable, a computing device, a node, a device capable of wirelessly communicating, or any other device capable of sending and/or receiving signals. As non-limiting examples, a wireless device may comprise, for example: a telephone, a cellular phone, a Wi-Fi phone, a smartphone, a tablet, a computer, a laptop, a sensor, a meter, a wearable device, an Internet of Things (IoT) device, a hotspot, a cellular repeater, a vehicle road side unit (RSU), a relay node, an automobile, a wireless user device (e.g., user equipment (UE), a user terminal (UT), etc.), an access terminal (AT), a mobile station, a handset, a wireless transmit and receive unit (WTRU), a wireless communication device, and/or any combination thereof.

The RAN 104 may comprise one or more base stations (not shown). As used throughout, the term "base station" may comprise one or more of: a base station, a node, a Node B (NB), an evolved NodeB (eNB), a gNB, an ng-eNB, a relay node (e.g., an integrated access and backhaul (IAB) node), a donor node (e.g., a donor eNB, a donor gNB, etc.), an access point (e.g., a Wi-Fi access point), a transmission and reception point (TRP), a computing device, a device capable of wirelessly communicating, or any other device capable of sending and/or receiving signals. A base station may comprise one or more of each element listed above. For example, a base station may comprise one or more TRPs. As other non-limiting examples, a base station may comprise for example, one or more of: a Node B (e.g., associated with Universal Mobile Telecommunications System (UMTS) and/or third-generation (3G) standards), an Evolved Node B (eNB) (e.g., associated with Evolved-Universal Terrestrial Radio Access (E-UTRA) and/or fourth-generation (4G) standards), a remote radio head (RRH), a baseband processing unit coupled to one or more remote radio heads (RRHs), a repeater node or relay node used to extend the coverage area of a donor node, a Next Generation Evolved Node B (ng-eNB), a Generation Node B (gNB) (e.g., associated with NR and/or fifth-generation (5G) standards), an access point (AP) (e.g., associated with, for example, Wi-Fi or any other suitable wireless communication standard), any other generation base station, and/or any combination thereof. A base station may comprise one or more devices, such as at least one base station central device (e.g., a gNB Central Unit (gNB-CU)) and at least one base station distributed device (e.g., a gNB Distributed Unit (gNB-DU)).

A base station (e.g., in the RAN 104) may comprise one or more sets of antennas for communicating with the wireless device 106 wirelessly (e.g., via an over the air interface). One or more base stations may comprise sets (e.g., three sets or any other quantity of sets) of antennas to respectively control multiple cells or sectors (e.g., three cells, three sectors, any other quantity of cells, or any other quantity of sectors). The size of a cell may be determined by a range at which a receiver (e.g., a base station receiver) may successfully receive transmissions from a transmitter (e.g., a wireless device transmitter) operating in the cell. One or more cells of base stations (e.g., by alone or in combination with other cells) may provide/configure a radio coverage to the wireless device 106 over a wide geographic area to support wireless device mobility. A base station comprising three sectors (e.g., or n-sector, where n refers to any quantity n) may be referred to as a three-sector site (e.g., or an n-sector site) or a three-sector base station (e.g., an n-sector base station).

One or more base stations (e.g., in the RAN 104) may be implemented as a sectored site with more or less than three sectors. One or more base stations of the RAN 104 may be implemented as an access point, as a baseband processing device/unit coupled to several RRHs, and/or as a repeater or relay node used to extend the coverage area of a node (e.g., a donor node). A baseband processing device/unit coupled to RRHs may be part of a centralized or cloud RAN architecture, for example, where the baseband processing device/unit may be centralized in a pool of baseband processing devices/units or virtualized. A repeater node may amplify and send (e.g., transmit, retransmit, rebroadcast, etc.) a radio signal received from a donor node. A relay node may perform the substantially the same/similar functions as a repeater node. The relay node may decode the radio signal received from the donor node, for example, to remove noise before amplifying and sending the radio signal.

The RAN 104 may be deployed as a homogenous network of base stations (e.g., macrocell base stations) that have similar antenna patterns and/or similar high-level transmit powers. The RAN 104 may be deployed as a heterogeneous network of base stations (e.g., different base stations that have different antenna patterns). In heterogeneous networks, small cell base stations may be used to provide/configure small coverage areas, for example, coverage areas that overlap with comparatively larger coverage areas provided/configured by other base stations (e.g., macrocell base stations). The small coverage areas may be provided/configured in areas with high data traffic (or so-called "hotspots") or in areas with a weak macrocell coverage. Examples of small cell base stations may comprise, in order of decreasing coverage area, microcell base stations, picocell base stations, and femtocell base stations or home base stations.

Examples described herein may be used in a variety of types of communications. For example, communications may be in accordance with the Third-Generation Partnership Project (3GPP) (e.g., one or more network elements similar to those of the communication network 100), communications in accordance with Institute of Electrical and Electronics Engineers (IEEE), communications in accordance with International Telecommunication Union (ITU), communications in accordance with International Organization for Standardization (ISO), etc. The 3GPP has produced specifications for multiple generations of mobile networks: a 3G network known as UMTS, a 4G network known as Long-Term Evolution (LTE) and LTE Advanced (LTE-A), and a 5G network known as 5G System (5GS) and NR system. 3GPP may produce specifications for additional generations of communication networks (e.g., 6G and/or any other generation of communication network). Examples may be described with reference to one or more elements (e.g., the RAN) of a 3GPP 5G network, referred to as a next-generation RAN (NG-RAN), or any other communication network, such as a 3GPP network and/or a non-3 GPP network. Examples described herein may be applicable to other communication networks, such as 3G and/or 4G networks, and communication networks that may not yet be finalized/specified (e.g., a 3GPP 6G network), satellite communication networks, and/or any other communication network. NG-RAN implements and updates 5G radio access technology referred to as NR and may be provisioned to implement 4G radio access technology and/or other radio access technologies, such as other 3GPP and/or non-3GPP radio access technologies.

FIG. 1B shows an example communication network 150. The communication network may comprise a mobile communication network. The communication network 150 may comprise, for example, a PLMN operated/managed/run by a network operator. The communication network 150 may comprise one or more of: a CN 152 (e.g., a 5G core network (5G-CN)), a RAN 154 (e.g., an NG-RAN), and/or wireless devices 156A and 156B (collectively wireless device(s) 156). The communication network 150 may comprise, and/or a device within the communication network 150 may communicate with (e.g., via CN 152), one or more data networks (DN(s)) 170. These components may be implemented and operate in substantially the same or similar manner as corresponding components described with respect to FIG. 1A.

The CN 152 (e.g., 5G-CN) may provide/configure the wireless device(s) 156 with one or more interfaces to one or more DNs 170, such as public DNs (e.g., the Internet), private DNs, and/or intra-operator DNs. As part of the interface functionality, the CN 152 (e.g., 5G-CN) may set up end-to-end connections between the wireless device(s) 156 and the one or more DNs, authenticate the wireless device(s) 156, and/or provide/configure charging functionality. The CN 152 (e.g., the 5G-CN) may be a service-based architecture, which may differ from other CNs (e.g., such as a 3GPP 4G CN). The architecture of nodes of the CN 152 (e.g., 5G-CN) may be defined as network functions that offer services via interfaces to other network functions. The network functions of the CN 152 (e.g., 5G CN) may be implemented in several ways, for example, as network elements on dedicated or shared hardware, as software instances running on dedicated or shared hardware, and/or as virtualized functions instantiated on a platform (e.g., a cloud-based platform).

The CN 152 (e.g., 5G-CN) may comprise an Access and Mobility Management Function (AMF) device 158A and/or a User Plane Function (UPF) device 158B, which may be separate components or one component AMF/UPF device 158. The UPF device 158B may serve as a gateway between a RAN 154 (e.g., NG-RAN) and the one or more DNs 170. The UPF device 158B may perform functions, such as: packet routing and forwarding, packet inspection and user plane policy rule enforcement, traffic usage reporting, uplink classification to support routing of traffic flows to the one or more DNs 170, quality of service (QoS) handling for the user plane (e.g., packet filtering, gating, uplink/downlink rate enforcement, and uplink traffic verification), downlink packet buffering, and/or downlink data notification triggering. The UPF device 158B may serve as an anchor point for intra-/inter-Radio Access Technology (RAT) mobility, an external protocol (or packet) data unit (PDU) session point of interconnect to the one or more DNs, and/or a branching point to support a multi-homed PDU session. The wireless device(s) 156 may be configured to receive services via a PDU session, which may be a logical connection between a wireless device and a DN.

The AMF device 158A may perform functions, such as: Non-Access Stratum (NAS) signaling termination, NAS signaling security, Access Stratum (AS) security control, inter-CN node signaling for mobility between access networks (e.g., 3GPP access networks and/or non-3GPP networks), idle mode wireless device reachability (e.g., idle mode UE reachability for control and execution of paging retransmission), registration area management, intra-system and inter-system mobility support, access authentication, access authorization including checking of roaming rights, mobility management control (e.g., subscription and policies), network slicing support, and/or session management function (SMF) selection. NAS may refer to the functionality operating between a CN and a wireless device, and AS may refer to the functionality operating between a wireless device and a RAN.

The CN 152 (e.g., 5G-CN) may comprise one or more additional network functions that may not be shown in FIG. 1B. The CN 152 (e.g., 5G-CN) may comprise one or more devices implementing at least one of: a Session Management Function (SMF), an NR Repository Function (NRF), a Policy Control Function (PCF), a Network Exposure Function (NEF), a Unified Data Management (UDM), an Application Function (AF), an Authentication Server Function (AUSF), and/or any other function.

The RAN 154 (e.g., NG-RAN) may communicate with the wireless device(s) 156 via radio communications (e.g., an over the air interface). The wireless device(s) 156 may communicate with the CN 152 via the RAN 154. The RAN 154 (e.g., NG-RAN) may comprise one or more first-type base stations (e.g., gNBs comprising a gNB 160A and a gNB 160B (collectively gNBs 160)) and/or one or more second-type base stations (e.g., ng eNBs comprising an ng-eNB 162A and an ng-eNB 162B (collectively ng eNBs 162)). The RAN 154 may comprise one or more of any quantity of types of base station. The gNBs 160 and ng eNBs 162 may be referred to as base stations. The base stations (e.g., the gNBs 160 and ng eNBs 162) may comprise one or more sets of antennas for communicating with the wireless device(s) 156 wirelessly (e.g., an over an air interface). One or more base stations (e.g., the gNBs 160 and/or the ng eNBs 162) may comprise multiple sets of antennas to respectively control multiple cells (or sectors). The cells of the base stations (e.g., the gNBs 160 and the ng-eNBs 162) may provide a radio coverage to the wireless device(s) 156 over a wide geographic area to support wireless device mobility.

The base stations (e.g., the gNBs 160 and/or the ng-eNBs 162) may be connected to the CN 152 (e.g., 5G CN) via a first interface (e.g., an NG interface) and to other base stations via a second interface (e.g., an Xn interface). The NG and Xn interfaces may be established using direct physical connections and/or indirect connections over an underlying transport network, such as an internet protocol (IP) transport network. The base stations (e.g., the gNBs 160 and/or the ng-eNBs 162) may communicate with the wireless device(s) 156 via a third interface (e.g., a Uu interface). A base station (e.g., the gNB 160A) may communicate with the wireless device 156A via a Uu interface. The NG, Xn, and Uu interfaces may be associated with a protocol stack. The protocol stacks associated with the interfaces may be used by the network elements shown in FIG. 1B to exchange data and signaling messages. The protocol stacks may comprise two planes: a user plane and a control plane. Any other quantity of planes may be used (e.g., in a protocol stack). The user plane may handle data of interest to a user. The control plane may handle signaling messages of interest to the network elements.

One or more base stations (e.g., the gNBs 160 and/or the ng-eNBs 162) may communicate with one or more AMF/UPF devices, such as the AMF/UPF 158, via one or more interfaces (e.g., NG interfaces). A base station (e.g., the gNB 160A) may be in communication with, and/or connected to, the UPF 158B of the AMF/UPF 158 via an NG-User plane (NG-U) interface. The NG-U interface may provide/perform delivery (e.g., non-guaranteed delivery) of user plane PDUs between a base station (e.g., the gNB 160A) and a UPF device (e.g., the UPF 158B). The base station (e.g., the gNB 160A) may be in communication with, and/or connected to, an AMF device (e.g., the AMF 158A) via an NG-Control plane (NG-C) interface. The NG-C interface may provide/perform, for example, NG interface management, wireless device context management (e.g., UE context management), wireless device mobility management (e.g., UE mobility management), transport of NAS messages, paging, PDU session management, configuration transfer, and/or warning message transmission.

A wireless device may access the base station, via an interface (e.g., Uu interface), for the user plane configuration and the control plane configuration. The base stations (e.g., gNBs 160) may provide user plane and control plane protocol terminations towards the wireless device(s) 156 via the Uu interface. A base station (e.g., the gNB 160A) may provide user plane and control plane protocol terminations toward the wireless device 156A over a Uu interface associated with a first protocol stack. A base station (e.g., the ng-eNBs 162) may provide Evolved UMTS Terrestrial Radio Access (E UTRA) user plane and control plane protocol terminations towards the wireless device(s) 156 via a Uu interface (e.g.,

where E UTRA may refer to the 3GPP 4G radio-access technology). A base station (e.g., the ng-eNB 162B) may provide E UTRA user plane and control plane protocol terminations towards the wireless device 156B via a Uu interface associated with a second protocol stack. The user plane and control plane protocol terminations may comprise, for example, NR user plane and control plane protocol terminations, 4G user plane and control plane protocol terminations, etc.

The CN 152 (e.g., 5G-CN) may be configured to handle one or more radio accesses (e.g., NR, 4G, and/or any other radio accesses). It may also be possible for an NR network/device (or any first network/device) to connect to a 4G core network/device (or any second network/device) in a non-standalone mode (e.g., non-standalone operation). In a non-standalone mode/operation, a 4G core network may be used to provide (or at least support) control-plane functionality (e.g., initial access, mobility, and/or paging). Although only one AMF/UPF 158 is shown in FIG. 1B, one or more base stations (e.g., one or more gNBs and/or one or more ng-eNBs) may be connected to multiple AMF/UPF nodes, for example, to provide redundancy and/or to load share across the multiple AMF/UPF nodes.

An interface (e.g., Uu, Xn, and/or NG interfaces) between network elements (e.g., the network elements shown in FIG. 1B) may be associated with a protocol stack that the network elements may use to exchange data and signaling messages. A protocol stack may comprise two planes: a user plane and a control plane. Any other quantity of planes may be used (e.g., in a protocol stack). The user plane may handle data associated with a user (e.g., data of interest to a user). The control plane may handle data associated with one or more network elements (e.g., signaling messages of interest to the network elements).

The communication network 100 in FIG. 1A and/or the communication network 150 in FIG. 1B may comprise any quantity/number and/or type of devices, such as, for example, computing devices, wireless devices, mobile devices, handsets, tablets, laptops, internet of things (IoT) devices, hotspots, cellular repeaters, computing devices, and/or, more generally, user equipment (e.g., UE). Although one or more of the above types of devices may be referenced herein (e.g., UE, wireless device, computing device, etc.), it should be understood that any device herein may comprise any one or more of the above types of devices or similar devices. The communication network, and any other network referenced herein, may comprise an LTE network, a 5G network, a satellite network, and/or any other network for wireless communications (e.g., any 3GPP network and/or any non-3GPP network). Apparatuses, systems, and/or methods described herein may generally be described as implemented on one or more devices (e.g., wireless device, base station, eNB, gNB, computing device, etc.), in one or more networks, but it will be understood that one or more features and steps may be implemented on any device and/or in any network.

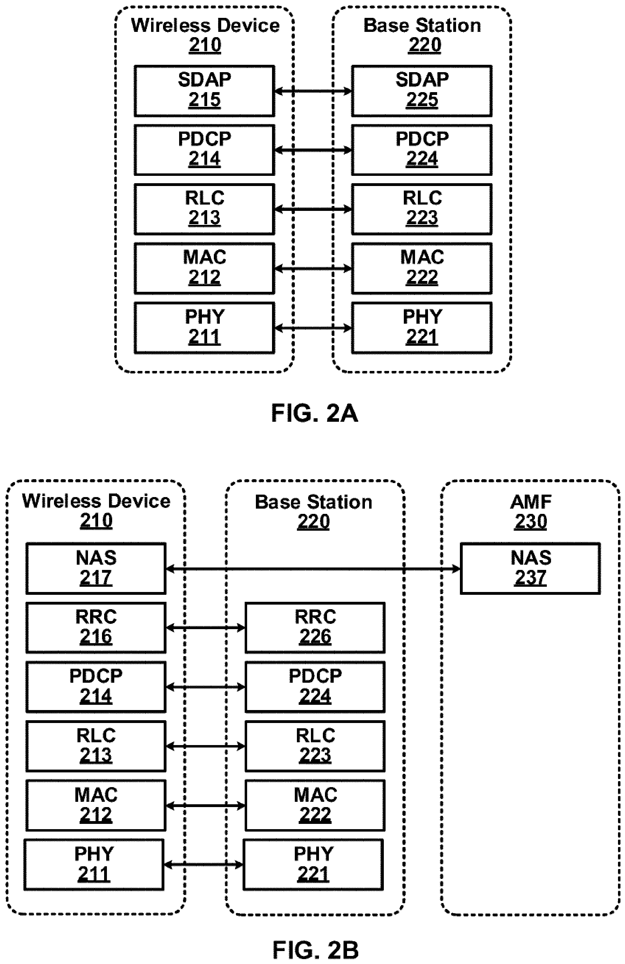

FIG. 2A shows an example user plane configuration. The user plane configuration may comprise, for example, an NR user plane protocol stack. FIG. 2B shows an example control plane configuration. The control plane configuration may comprise, for example, an NR control plane protocol stack. One or more of the user plane configuration and/or the control plane configuration may use a Uu interface that may be between a wireless device 210 and a base station 220. The protocol stacks shown in FIG. 2A and FIG. 2B may be substantially the same or similar to those used for the Uu interface between, for example, the wireless device 156A and the base station 160A shown in FIG. 1B.

A user plane configuration (e.g., an NR user plane protocol stack) may comprise multiple layers (e.g., five layers or any other quantity of layers) implemented in the wireless device 210 and the base station 220 (e.g., as shown in FIG. 2A). At the bottom of the protocol stack, physical layers (PHYs) 211 and 221 may provide transport services to the higher layers of the protocol stack and may correspond to layer 1 of the Open Systems Interconnection (OSI) model. The protocol layers above PHY 211 may comprise a medium access control layer (MAC) 212, a radio link control layer (RLC) 213, a packet data convergence protocol layer (PDCP) 214, and/or a service data application protocol layer (SDAP) 215. The protocol layers above PHY 221 may comprise a medium access control layer (MAC) 222, a radio link control layer (RLC) 223, a packet data convergence protocol layer (PDCP) 224, and/or a service data application protocol layer (SDAP) 225. One or more of the four protocol layers above PHY 211 may correspond to layer 2, or the data link layer, of the OSI model. One or more of the four protocol layers above PHY 221 may correspond to layer 2, or the data link layer, of the OSI model.

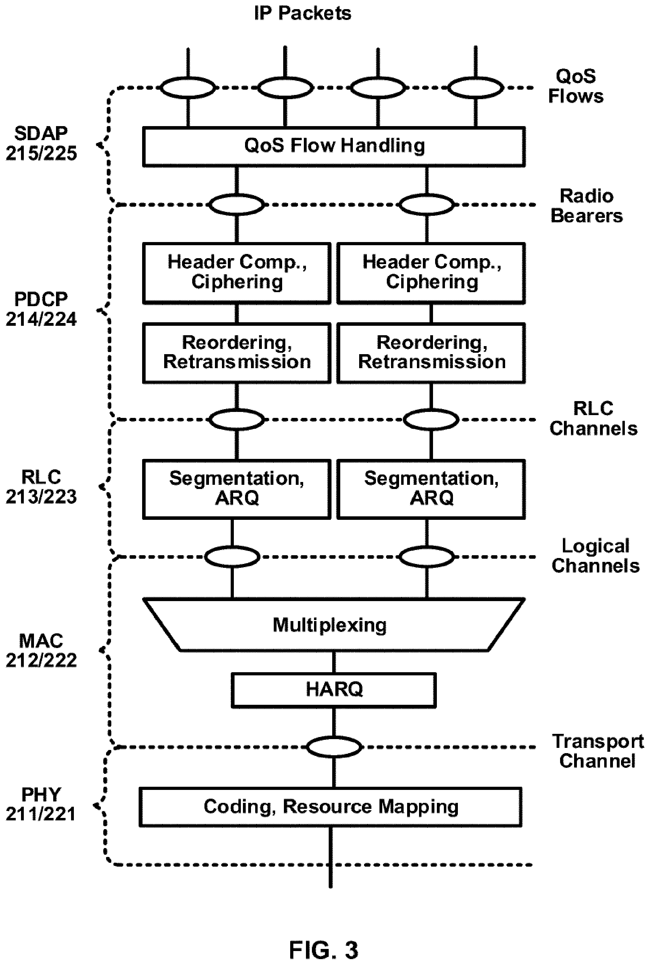

FIG. 3 shows an example of protocol layers. The protocol layers may comprise, for example, protocol layers of the NR user plane protocol stack. One or more services may be provided between protocol layers. SDAPs (e.g., SDAPS 215 and 225 shown in FIG. 2A and FIG. 3) may perform Quality of Service (QoS) flow handling. A wireless device (e.g., the wireless devices 106, 156A, 156B, and 210) may receive services through/via a PDU session, which may be a logical connection between the wireless device and a DN. The PDU session may have one or more QoS flows 310. A UPF (e.g., the UPF 158B) of a CN may map IP packets to the one or more QoS flows of the PDU session, for example, based on one or more QoS requirements (e.g., in terms of delay, data rate, error rate, and/or any other quality/service requirement). The SDAPs 215 and 225 may perform mapping/de-mapping between the one or more QoS flows 310 and one or more radio bearers 320 (e.g., data radio bearers). The mapping/demapping between the one or more QoS flows 310 and the radio bearers 320 may be determined by the SDAP 225 of the base station 220. The SDAP 215 of the wireless device 210 may be informed of the mapping between the QoS flows 310 and the radio bearers 320 via reflective mapping and/or control signaling received from the base station 220. For reflective mapping, the SDAP 225 of the base station 220 may mark the downlink packets with a QoS flow indicator (QFI), which may be monitored/detected/identified/indicated/observed by the SDAP 215 of the wireless device 210 to determine the mapping/de-mapping between the one or more QoS flows 310 and the radio bearers 320.

PDCPs (e.g., the PDCPs 214 and 224 shown in FIG. 2A and FIG. 3) may perform header compression/decompression, for example, to reduce the amount of data that may need to be transmitted over the air interface, ciphering/deciphering to prevent unauthorized decoding of data transmitted over the air interface, and/or integrity protection (e.g., to ensure control messages originate from intended sources). The PDCPs 214 and 224 may perform retransmissions of undelivered packets, in-sequence delivery and reordering of packets, and/or removal of packets received in duplicate due to, for example, a handover (e.g., an intra-gNB handover). The PDCPs 214 and 224 may perform packet duplication, for example, to improve the likelihood of the packet being received. A receiver may receive the packet in duplicate and may remove any duplicate packets. Packet duplication may be useful for certain services, such as services that require high reliability.

The PDCP layers (e.g., PDCPs 214 and 224) may perform mapping/de-mapping between a split radio bearer and RLC channels (e.g., RLC channels 330) (e.g., in a dual connectivity example/configuration). Dual connectivity may refer to a technique that allows a wireless device to communicate with multiple cells (e.g., two cells) or, more generally, multiple cell groups comprising: a master cell group (MCG) and a secondary cell group (SCG). A split bearer may be configured and/or used, for example, if a single radio bearer (e.g., such as one of the radio bearers provided/configured by the PDCPs 214 and 224 as a service to the SDAPs 215 and 225) is handled by cell groups in dual connectivity. The PDCPs 214 and 224 may map/de-map between the split radio bearer and RLC channels 330 belonging to the cell groups.

RLC layers (e.g., RLCs 213 and 223) may perform segmentation, retransmission via Automatic Repeat Request (ARQ), and/or removal of duplicate data units received from MAC layers (e.g., MACs 212 and 222, respectively). The RLC layers (e.g., RLCs 213 and 223) may support multiple transmission modes (e.g., three transmission modes: transparent mode (TM); unacknowledged mode (UM); and acknowledged mode (AM)). The RLC layers may perform one or more of the noted functions, for example, based on the transmission mode an RLC layer is operating. The RLC configuration may be per logical channel. The RLC configuration may not depend on numerologies and/or Transmission Time Interval (TTI) durations (or other durations). The RLC layers (e.g., RLCs 213 and 223) may provide/configure RLC channels as a service to the PDCP layers (e.g., PDCPs 214 and 224, respectively), such as shown in FIG. 3.

The MAC layers (e.g., MACs 212 and 222) may perform multiplexing/demultiplexing of logical channels and/or mapping between logical channels and transport channels. The multiplexing/demultiplexing may comprise multiplexing/demultiplexing of data units/data portions, belonging to the one or more logical channels, into/from Transport Blocks (TBs) delivered to/from the PHY layers (e.g., PHYs 211 and 221, respectively). The MAC layer of a base station (e.g., MAC 222) may be configured to perform scheduling, scheduling information reporting, and/or priority handling between wireless devices via dynamic scheduling. Scheduling may be performed by a base station (e.g., the base station 220 at the MAC 222) for downlink/or and uplink. The MAC layers (e.g., MACs 212 and 222) may be configured to perform error correction(s) via Hybrid Automatic Repeat Request (HARQ) (e.g., one HARQ entity per carrier in case of Carrier Aggregation (CA)), priority handling between logical channels of the wireless device 210 via logical channel prioritization and/or padding. The MAC layers (e.g., MACs 212 and 222) may support one or more numerologies and/or transmission timings. Mapping restrictions in a logical channel prioritization may control which numerology and/or transmission timing a logical channel may use. The MAC layers (e.g., the MACs 212 and 222) may provide/configure logical channels 340 as a service to the RLC layers (e.g., the RLCs 213 and 223).

The PHY layers (e.g., PHYs 211 and 221) may perform mapping of transport channels to physical channels and/or digital and analog signal processing functions, for example, for sending and/or receiving information (e.g., via an over the air interface). The digital and/or analog signal processing functions may comprise, for example, coding/decoding and/or modulation/demodulation. The PHY layers (e.g., PHYs 211 and 221) may perform multi-antenna mapping. The PHY layers (e.g., the PHYs 211 and 221) may provide/configure one or more transport channels (e.g., transport channels 350) as a service to the MAC layers (e.g., the MACs 212 and 222, respectively).

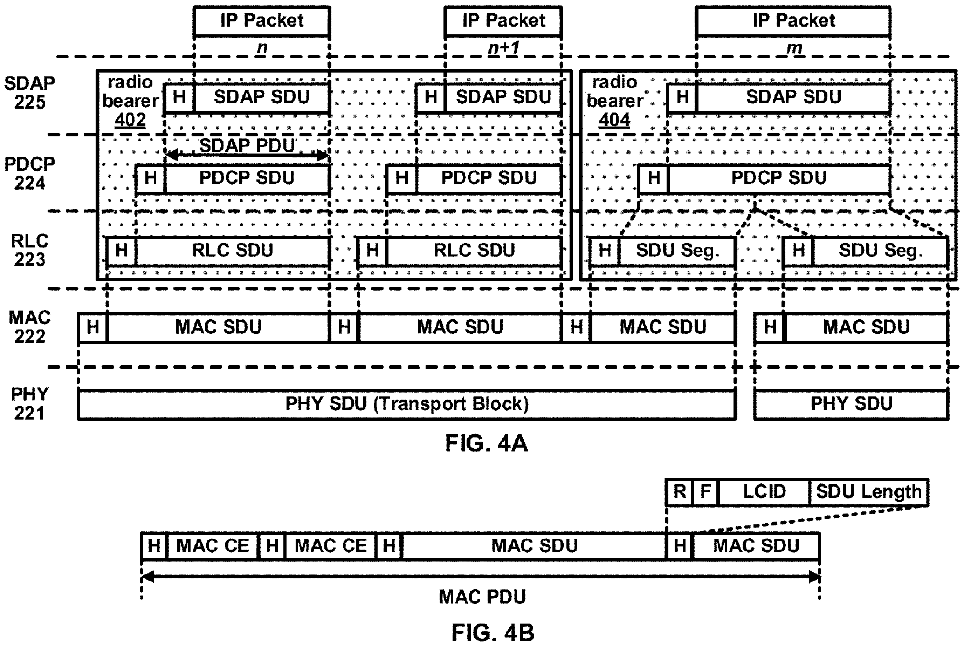

FIG. 4A shows an example downlink data flow for a user plane configuration. The user plane configuration may comprise, for example, the NR user plane protocol stack shown in FIG. 2A. One or more TBs may be generated, for example, based on a data flow via a user plane protocol stack. As shown in FIG. 4A, a downlink data flow of three IP packets (n, n+1, and m) via the NR user plane protocol stack may generate two TBs (e.g., at the base station 220). An uplink data flow via the NR user plane protocol stack may be similar to the downlink data flow shown in FIG. 4A. The three IP packets (n, n+1, and m) may be determined from the two TBs, for example, based on the uplink data flow via an NR user plane protocol stack. A first quantity of packets (e.g., three or any other quantity) may be determined from a second quantity of TBs (e.g., two or another quantity).

The downlink data flow may begin, for example, if the SDAP 225 receives the three IP packets (or other quantity of IP packets) from one or more QoS flows and maps the three packets (or other quantity of packets) to radio bearers (e.g., radio bearers 402 and 404). The SDAP 225 may map the IP packets n and n+1 to a first radio bearer 402 and map the IP packet m to a second radio bearer 404. An SDAP header (labeled with "H" preceding each SDAP SDU shown in FIG. 4A) may be added to an IP packet to generate an SDAP PDU, which may be referred to as a PDCP SDU.

The data unit transferred from/to a higher protocol layer may be referred to as a service data unit (SDU) of the lower protocol layer, and the data unit transferred to/from a lower protocol layer may be referred to as a protocol data unit (PDU) of the higher protocol layer. As shown in FIG. 4A, the data unit from the SDAP 225 may be an SDU of lower protocol layer PDCP 224 (e.g., PDCP SDU) and may be a PDU of the SDAP 225 (e.g., SDAP PDU).

Each protocol layer (e.g., protocol layers shown in FIG. 4A) or at least some protocol layers may: perform its own function(s) (e.g., one or more functions of each protocol layer described with respect to FIG. 3), add a corresponding header, and/or forward a respective output to the next lower layer (e.g., its respective lower layer). The PDCP 224 may perform an IP-header compression and/or ciphering. The PDCP 224 may forward its output (e.g., a PDCP PDU, which is an RLC SDU) to the RLC 223. The RLC 223 may optionally perform segmentation (e.g., as shown for IP packet m in FIG. 4A). The RLC 223 may forward its outputs (e.g., two RLC PDUs, which are two MAC SDUs, generated by adding respective subheaders to two SDU segments (SDU Segs)) to the MAC 222. The MAC 222 may multiplex a number of RLC PDUs (MAC SDUs). The MAC 222 may attach a MAC subheader to an RLC PDU (MAC SDU) to form a TB. The MAC subheaders may be distributed across the MAC PDU (e.g., in an NR configuration as shown in FIG. 4A). The MAC subheaders may be entirely located at the beginning of a MAC PDU (e.g., in an LTE configuration). The NR MAC PDU structure may reduce a processing time and/or associated latency, for example, if the MAC PDU subheaders are computed before assembling the full MAC PDU.

FIG. 4B shows an example format of a MAC subheader in a MAC PDU. A MAC PDU may comprise a MAC subheader (H) and a MAC SDU. Each of one or more MAC subheaders may comprise an SDU length field for indicating the length (e.g., in bytes) of the MAC SDU to which the MAC subheader corresponds; a logical channel identifier (LCID) field for identifying/indicating the logical channel from which the MAC SDU originated to aid in the demultiplexing process; a flag (F) for indicating the size of the SDU length field; and a reserved bit (R) field for future use.

One or more MAC control elements (CEs) may be added to, or inserted into, the MAC PDU by a MAC layer, such as MAC 223 or MAC 222. As shown in FIG. 4B, two MAC CEs may be inserted/added before two MAC PDUs. The MAC CEs may be inserted/added at the beginning of a MAC PDU for downlink transmissions (as shown in FIG. 4B). One or more MAC CEs may be inserted/added at the end of a MAC PDU for uplink transmissions. MAC CEs may be used for in band control signaling. Example MAC CEs may comprise scheduling-related MAC CEs, such as buffer status reports and power headroom reports; activation/deactivation MAC CEs (e.g., MAC CEs for activation/deactivation of PDCP duplication detection, channel state information (CSI) reporting, sounding reference signal (SRS) transmission, and prior configured components); discontinuous reception (DRX)-related MAC CEs; timing advance MAC CEs; and random access-related MAC CEs. A MAC CE may be preceded by a MAC subheader with a similar format as described for the MAC subheader for MAC SDUs and may be identified with a reserved value in the LCID field that indicates the type of control information included in the corresponding MAC CE.

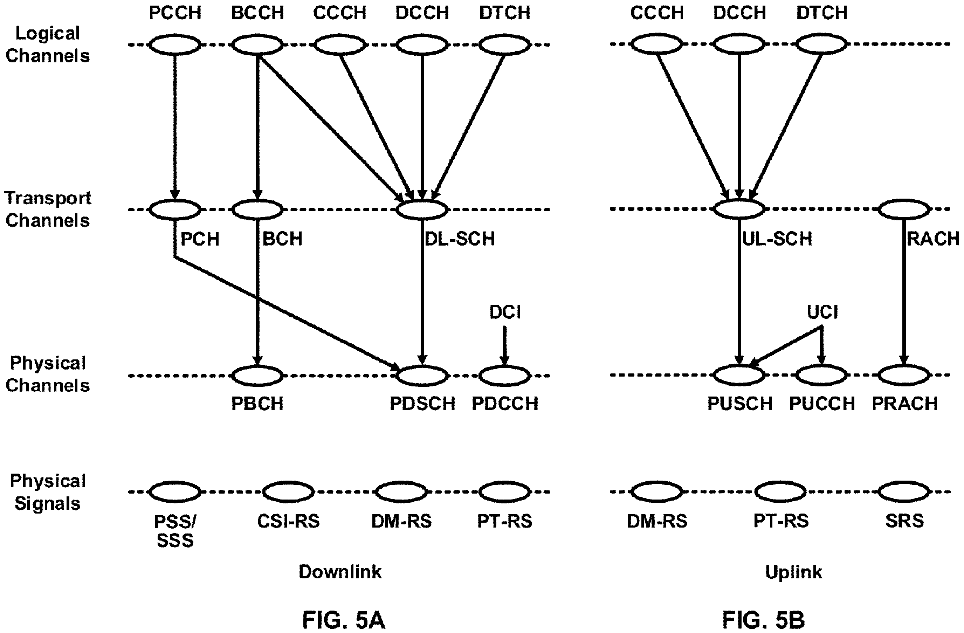

FIG. 5A shows an example mapping for downlink channels. The mapping for uplink channels may comprise mapping between channels (e.g., logical channels, transport channels, and physical channels) for downlink. FIG. 5B shows an example mapping for uplink channels. The mapping for uplink channels may comprise mapping between channels (e.g., logical channels, transport channels, and physical channels) for uplink. Information may be passed through/via channels between the RLC, the MAC, and the PHY layers of a protocol stack (e.g., the NR protocol stack). A logical channel may be used between the RLC and the MAC layers. The logical channel may be classified/indicated as a control channel that may carry control and/or configuration information (e.g., in the NR control plane), or as a traffic channel that may carry data (e.g., in the NR user plane). A logical channel may be classified/indicated as a dedicated logical channel that may be dedicated to a specific wireless device, and/or as a common logical channel that may be used by more than one wireless device (e.g., a group of wireless devices).

A logical channel may be defined by the type of information it carries. The set of logical channels (e.g., in an NR configuration) may comprise one or more channels described below. A paging control channel (PCCH) may comprise/carry one or more paging messages used to page a wireless device whose location is not known to the network on a cell level. A broadcast control channel (BCCH) may comprise/carry system information messages in the form of a master information block (MIB) and several system information blocks (SIBs). The system information messages may be used by wireless devices to obtain information about how a cell is configured and how to operate within the cell. A common control channel (CCCH) may comprise/carry control messages together with random access. A dedicated control channel (DCCH) may comprise/carry control messages to/from a specific wireless device to configure the wireless device with configuration information. A dedicated traffic channel (DTCH) may comprise/carry user data to/from a specific wireless device.

Transport channels may be used between the MAC and PHY layers. Transport channels may be defined by how the information they carry is sent/transmitted (e.g., via an over the air interface). The set of transport channels (e.g., that may be defined by an NR configuration or any other configuration) may comprise one or more of the following channels. A paging channel (PCH) may comprise/carry paging messages that originated from the PCCH. A broadcast channel (BCH) may comprise/carry the MIB from the BCCH. A downlink shared channel (DL-SCH) may comprise/carry downlink data and signaling messages, including the SIBs from the BCCH. An uplink shared channel (UL-SCH) may comprise/carry uplink data and signaling messages. A random access channel (RACH) may provide a wireless device with an access to the network without any prior scheduling.

The PHY layer may use physical channels to pass/transfer information between processing levels of the PHY layer. A physical channel may have an associated set of time-frequency resources for carrying the information of one or more transport channels. The PHY layer may generate control information to support the low-level operation of the PHY layer. The PHY layer may provide/transfer the control information to the lower levels of the PHY layer via physical control channels (e.g., referred to as L1/L2 control channels). The set of physical channels and physical control channels (e.g., that may be defined by an NR configuration or any other configuration) may comprise one or more of the following channels. A physical broadcast channel (PBCH) may comprise/carry the MIB from the BCH. A physical downlink shared channel (PDSCH) may comprise/carry downlink data and signaling messages from the DL-SCH, as well as paging messages from the PCH. A physical downlink control channel (PDCCH) may comprise/carry downlink control information (DCI), which may comprise downlink scheduling commands, uplink scheduling grants, and uplink power control commands. A physical uplink shared channel (PUSCH) may comprise/carry uplink data and signaling messages from the UL-SCH and in some instances uplink control information (UCI) as described below. A physical uplink control channel (PUCCH) may comprise/carry UCI, which may comprise HARQ acknowledgments, channel quality indicators (CQI), pre-coding matrix indicators (PMI), rank indicators (RI), and scheduling requests (SR). A physical random access channel (PRACH) may be used for random access.

The physical layer may generate physical signals to support the low-level operation of the physical layer, which may be similar to the physical control channels. As shown in FIG. 5A and FIG. 5B, the physical layer signals (e.g., that may be defined by an NR configuration or any other configuration) may comprise primary synchronization signals (PSS), secondary synchronization signals (SSS), channel state information reference signals (CSI-RS), demodulation reference signals (DM-RS), sounding reference signals (SRS), phase-tracking reference signals (PT RS), and/or any other signals.

One or more of the channels (e.g., logical channels, transport channels, physical channels, etc.) may be used to carry out functions associated with the control plan protocol stack (e.g., NR control plane protocol stack). FIG. 2B shows an example control plane configuration (e.g., an NR control plane protocol stack). As shown in FIG. 2B, the control plane configuration (e.g., the NR control plane protocol stack) may use substantially the same/similar one or more protocol layers (e.g., PHY 211 and 221, MAC 212 and 222, RLC 213 and 223, and PDCP 214 and 224) as the example user plane configuration (e.g., the NR user plane protocol stack). Similar four protocol layers may comprise the PHYs 211 and 221, the MACs 212 and 222, the RLCs 213 and 223, and the PDCPs 214 and 224. The control plane configuration (e.g., the NR control plane stack) may have radio resource controls (RRCs) 216 and 226 and NAS protocols 217 and 237 at the top of the control plane configuration (e.g., the NR control plane protocol stack), for example, instead of having the SDAPs 215 and 225. The control plane configuration may comprise an AMF 230 comprising the NAS protocol 237.

The NAS protocols 217 and 237 may provide control plane functionality between the wireless device 210 and the AMF 230 (e.g., the AMF 158A or any other AMF) and/or, more generally, between the wireless device 210 and a CN (e.g., the CN 152 or any other CN). The NAS protocols 217 and 237 may provide control plane functionality between the wireless device 210 and the AMF 230 via signaling messages, referred to as NAS messages. There may be no direct path between the wireless device 210 and the AMF 230 via which the NAS messages may be transported. The NAS messages may be transported using the AS of the Uu and NG interfaces. The NAS protocols 217 and 237 may provide control plane functionality, such as authentication, security, a connection setup, mobility management, session management, and/or any other functionality.

The RRCs 216 and 226 may provide/configure control plane functionality between the wireless device 210 and the base station 220 and/or, more generally, between the wireless device 210 and the RAN (e.g., the base station 220). The RRC layers 216 and 226 may provide/configure control plane functionality between the wireless device 210 and the base station 220 via signaling messages, which may be referred to as RRC messages. The RRC messages may be sent/transmitted between the wireless device 210 and the RAN (e.g., the base station 220) using signaling radio bearers and the same/similar PDCP, RLC, MAC, and PHY protocol layers. The MAC layer may multiplex control-plane and user-plane data into the same TB. The RRC layers 216 and 226 may provide/configure control plane functionality, such as one or more of the following functionalities: broadcast of system information related to AS and NAS; paging initiated by the CN or the RAN; establishment, maintenance and release of an RRC connection between the wireless device 210 and the RAN (e.g., the base station 220); security functions including key management; establishment, configuration, maintenance and release of signaling radio bearers and data radio bearers; mobility functions; QoS management functions; wireless device measurement reporting (e.g., the wireless device measurement reporting) and control of the reporting; detection of and recovery from radio link failure (RLF); and/or NAS message transfer. As part of establishing an RRC connection, RRC layers 216 and 226 may establish an RRC context, which may involve configuring parameters for communication between the wireless device 210 and the RAN (e.g., the base station 220).

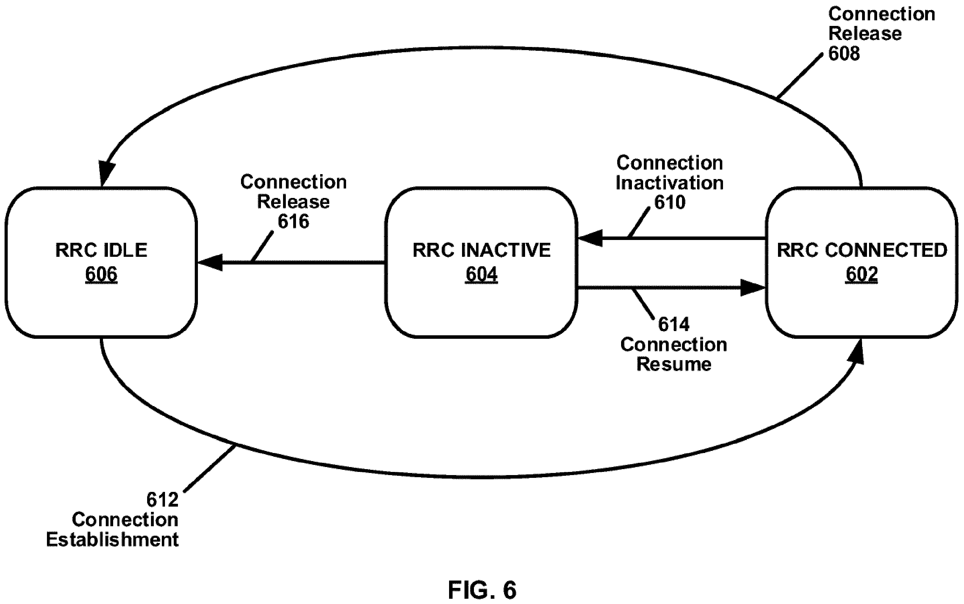

FIG. 6 shows example RRC states and RRC state transitions. An RRC state of a wireless device may be changed to another RRC state (e.g., RRC state transitions of a wireless device). The wireless device may be substantially the same or similar to the wireless device 106, 210, or any other wireless device. A wireless device may be in at least one of a plurality of states, such as three RRC states comprising RRC connected 602 (e.g., RRC_CONNECTED), RRC idle 606 (e.g., RRC_IDLE), and RRC inactive 604 (e.g., RRC INACTIVE). The RRC inactive 604 may be RRC connected but inactive.

An RRC connection may be established for the wireless device. For example, this may be during an RRC connected state. During the RRC connected state (e.g., during the RRC connected 602), the wireless device may have an established RRC context and may have at least one RRC connection with a base station. The base station may be similar to one of the one or more base stations (e.g., one or more base stations of the RAN 104 shown in FIG. 1A, one of the gNBs 160 or ng-eNBs 162 shown in FIG. 1B, the base station 220 shown in FIG. 2A and FIG. 2B, or any other base stations). The base station with which the wireless device is connected (e.g., has established an RRC connection) may have the RRC context for the wireless device. The RRC context, which may be referred to as a wireless device context (e.g., the UE context), may comprise parameters for communication between the wireless device and the base station. These parameters may comprise, for example, one or more of: AS contexts; radio link configuration parameters; bearer configuration information (e.g., relating to a data radio bearer, a signaling radio bearer, a logical channel, a QoS flow, and/or a PDU session); security information; and/or layer configuration information (e.g., PHY, MAC, RLC, PDCP, and/or SDAP layer configuration information). During the RRC connected state (e.g., the RRC connected 602), mobility of the wireless device may be managed/controlled by a RAN (e.g., the RAN 104 or the NG RAN 154). The wireless device may measure received signal levels (e.g., reference signal levels, reference signal received power, reference signal received quality, received signal strength indicator, etc.) based on one or more signals sent from a serving cell and neighboring cells. The wireless device may report these measurements to a serving base station (e.g., the base station currently serving the wireless device). The serving base station of the wireless device may request a handover to a cell of one of the neighboring base stations, for example, based on the reported measurements. The RRC state may transition from the RRC connected state (e.g., RRC connected 602) to an RRC idle state (e.g., the RRC idle 606) via a connection release procedure 608. The RRC state may transition from the RRC connected state (e.g., RRC connected 602) to the RRC inactive state (e.g., RRC inactive 604) via a connection inactivation procedure 610.

An RRC context may not be established for the wireless device. For example, this may be during the RRC idle state. During the RRC idle state (e.g., the RRC idle 606), an RRC context may not be established for the wireless device. During the RRC idle state (e.g., the RRC idle 606), the wireless device may not have an RRC connection with the base station. During the RRC idle state (e.g., the RRC idle 606), the wireless device may be in a sleep state for the majority of the time (e.g., to conserve battery power). The wireless device may wake up periodically (e.g., each discontinuous reception (DRX) cycle) to monitor for paging messages (e.g., paging messages set from the RAN). Mobility of the wireless device may be managed by the wireless device via a procedure of a cell reselection. The RRC state may transition from the RRC idle state (e.g., the RRC idle 606) to the RRC connected state (e.g., the RRC connected 602) via a connection establishment procedure 612, which may involve a random access procedure.

A previously established RRC context may be maintained for the wireless device. For example, this may be during the RRC inactive state. During the RRC inactive state (e.g., the RRC inactive 604), the RRC context previously established may be maintained in the wireless device and the base station. The maintenance of the RRC context may enable/allow a fast transition to the RRC connected state (e.g., the RRC connected 602) with reduced signaling overhead as compared to the transition from the RRC idle state (e.g., the RRC idle 606) to the RRC connected state (e.g., the RRC connected 602). During the RRC inactive state (e.g., the RRC inactive 604), the wireless device may be in a sleep state and mobility of the wireless device may be managed/controlled by the wireless device via a cell reselection. The RRC state may transition from the RRC inactive state (e.g., the RRC inactive 604) to the RRC connected state (e.g., the RRC connected 602) via a connection resume procedure 614. The RRC state may transition from the RRC inactive state (e.g., the RRC inactive 604) to the RRC idle state (e.g., the RRC idle 606) via a connection release procedure 616 that may be the same as or similar to connection release procedure 608.

An RRC state may be associated with a mobility management mechanism. During the RRC idle state (e.g., RRC idle 606) and the RRC inactive state (e.g., the RRC inactive 604), mobility may be managed/controlled by the wireless device via a cell reselection. The purpose of mobility management during the RRC idle state (e.g., the RRC idle 606) or during the RRC inactive state (e.g., the RRC inactive 604) may be to enable/allow the network to be able to notify the wireless device of an event via a paging message without having to broadcast the paging message over the entire mobile communications network. The mobility management mechanism used during the RRC idle state (e.g., the RRC idle 606) or during the RRC idle state (e.g., the RRC inactive 604) may enable/allow the network to track the wireless device on a cell-group level, for example, so that the paging message may be broadcast over the cells of the cell group that the wireless device currently resides within (e.g. instead of sending the paging message over the entire mobile communication network). The mobility management mechanisms for the RRC idle state (e.g., the RRC idle 606) and the RRC inactive state (e.g., the RRC inactive 604) may track the wireless device on a cell-group level. The mobility management mechanisms may do the tracking, for example, using different granularities of grouping. There may be a plurality of levels of cell-grouping granularity (e.g., three levels of cell-grouping granularity: individual cells; cells within a RAN area identified by a RAN area identifier (RAI); and cells within a group of RAN areas, referred to as a tracking area and identified by a tracking area identifier (TAI)).

Tracking areas may be used to track the wireless device (e.g., tracking the location of the wireless device at the CN level). The CN (e.g., the CN 102, the 5G CN 152, or any other CN) may send to the wireless device a list of TAIs associated with a wireless device registration area (e.g., a UE registration area). A wireless device may perform a registration update with the CN to allow the CN to update the location of the wireless device and provide the wireless device with a new wireless device registration area, for example, if the wireless device moves (e.g., via a cell reselection) to a cell associated with a TAI that may not be included in the list of TAIs associated with the wireless device registration area.

RAN areas may be used to track the wireless device (e.g., the location of the wireless device at the RAN level). For a wireless device in an RRC inactive state (e.g., the RRC inactive 604), the wireless device may be assigned/provided/configured with a RAN notification area. A RAN notification area may comprise one or more cell identities (e.g., a list of RAIs and/or a list of TAIs). A base station may belong to one or more RAN notification areas. A cell may belong to one or more RAN notification areas. A wireless device may perform a notification area update with the RAN to update the RAN notification area of the wireless device, for example, if the wireless device moves (e.g., via a cell reselection) to a cell not included in the RAN notification area assigned/provided/configured to the wireless device.

A base station storing an RRC context for a wireless device or a last serving base station of the wireless device may be referred to as an anchor base station. An anchor base station may maintain an RRC context for the wireless device at least during a period of time that the wireless device stays in a RAN notification area of the anchor base station and/or during a period of time that the wireless device stays in an RRC inactive state (e.g., RRC inactive 604).

A base station (e.g., gNBs 160 in FIG. 1B or any other base station) may be split in two parts: a central unit (e.g., a base station central unit, such as a gNB CU) and one or more distributed units (e.g., a base station distributed unit, such as a gNB DU). A base station central unit (CU) may be coupled to one or more base station distributed units (DUs) using an F1 interface (e.g., an F1 interface defined in an NR configuration). The base station CU may comprise the RRC, the PDCP, and the SDAP layers. A base station distributed unit (DU) may comprise the RLC, the MAC, and the PHY layers.

The physical signals and physical channels (e.g., described with respect to FIG. 5A and FIG. 5B) may be mapped onto one or more symbols (e.g., orthogonal frequency divisional multiplexing (OFDM) symbols in an NR configuration or any other symbols). OFDM is a multicarrier communication scheme that sends/transmits data over F orthogonal subcarriers (or tones). The data may be mapped to a series of complex symbols (e.g., M-quadrature amplitude modulation (M-QAM) symbols or M-phase shift keying (M PSK) symbols or any other modulated symbols), referred to as source symbols, and divided into F parallel symbol streams, for example, before transmission of the data. The F parallel symbol streams may be treated as if they are in the frequency domain. The F parallel symbols may be used as inputs to an Inverse Fast Fourier Transform (IFFT) block that transforms them into the time domain. The IFFT block may take in F source symbols at a time, one from each of the F parallel symbol streams. The IFFT block may use each source symbol to modulate the amplitude and phase of one of F sinusoidal basis functions that correspond to the F orthogonal subcarriers. The output of the IFFT block may be F time-domain samples that represent the summation of the F orthogonal subcarriers. The F time-domain samples may form a single OFDM symbol. An OFDM symbol provided/output by the IFFT block may be sent/transmitted over the air interface on a carrier frequency, for example, after one or more processes (e.g., addition of a cyclic prefix) and up-conversion. The F parallel symbol streams may be mixed, for example, using a Fast Fourier Transform (FFT) block before being processed by the IFFT block. This operation may produce Discrete Fourier Transform (DFT)-precoded OFDM symbols and may be used by one or more wireless devices in the uplink to reduce the peak to average power ratio (PAPR). Inverse processing may be performed on the OFDM symbol at a receiver using an FFT block to recover the data mapped to the source symbols.

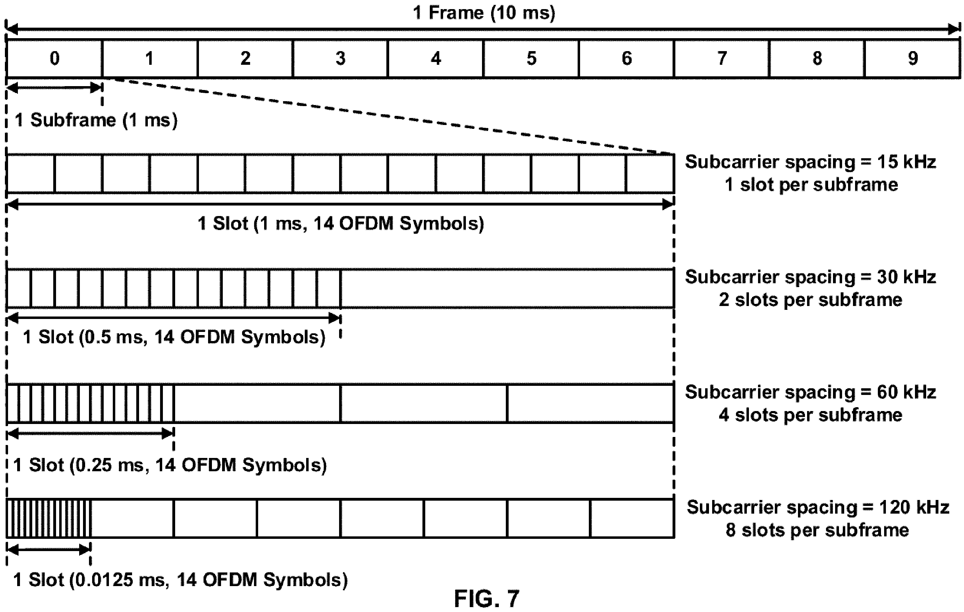

FIG. 7 shows an example configuration of a frame. The frame may comprise, for example, an NR radio frame into which OFDM symbols may be grouped. A frame (e.g., an NR radio frame) may be identified/indicated by a system frame number (SFN) or any other value. The SFN may repeat with a period of 1024 frames. One NR frame may be 10 milliseconds (ms) in duration and may comprise 10 subframes that are 1 ms in duration. A subframe may be divided into one or more slots (e.g., depending on numerologies and/or different subcarrier spacings). Each of the one or more slots may comprise, for example, 14 OFDM symbols per slot. Any quantity of symbols, slots, or duration may be used for any time interval.

The duration of a slot may depend on the numerology used for the OFDM symbols of the slot. A flexible numerology may be supported, for example, to accommodate different deployments (e.g., cells with carrier frequencies below 1 GHz up to cells with carrier frequencies in the mm-wave range). A flexible numerology may be supported, for example, in an NR configuration or any other radio configurations. A numerology may be defined in terms of subcarrier spacing and/or cyclic prefix duration. Subcarrier spacings may be scaled up by powers of two from a baseline subcarrier spacing of 15 kHz. Cyclic prefix durations may be scaled down by powers of two from a baseline cyclic prefix duration of 4.7 μs, for example, for a numerology in an NR configuration or any other radio configurations. Numerologies may be defined with the following subcarrier spacing/cyclic prefix duration combinations: 15 kHz/4.7 μs; 30 kHz/2.3 μs; 60

kHz/1.2 μs; 120 kHz/0.59 μs; 240 kHz/0.29 μs, and/or any other subcarrier spacing/cyclic prefix duration combinations.

A slot may have a fixed number/quantity of OFDM symbols (e.g., 14 OFDM symbols). A numerology with a higher subcarrier spacing may have a shorter slot duration and more slots per subframe. Examples of numerology-dependent slot duration and slots-per-subframe transmission structure are shown in FIG. 7 (the numerology with a subcarrier spacing of 240 kHz is not shown in FIG. 7). A subframe (e.g., in an NR configuration) may be used as a numerology-independent time reference. A slot may be used as the unit upon which uplink and downlink transmissions are scheduled. Scheduling (e.g., in an NR configuration) may be decoupled from the slot duration. Scheduling may start at any OFDM symbol. Scheduling may last for as many symbols as needed for a transmission, for example, to support low latency. These partial slot transmissions may be referred to as mini-slot or sub-slot transmissions.

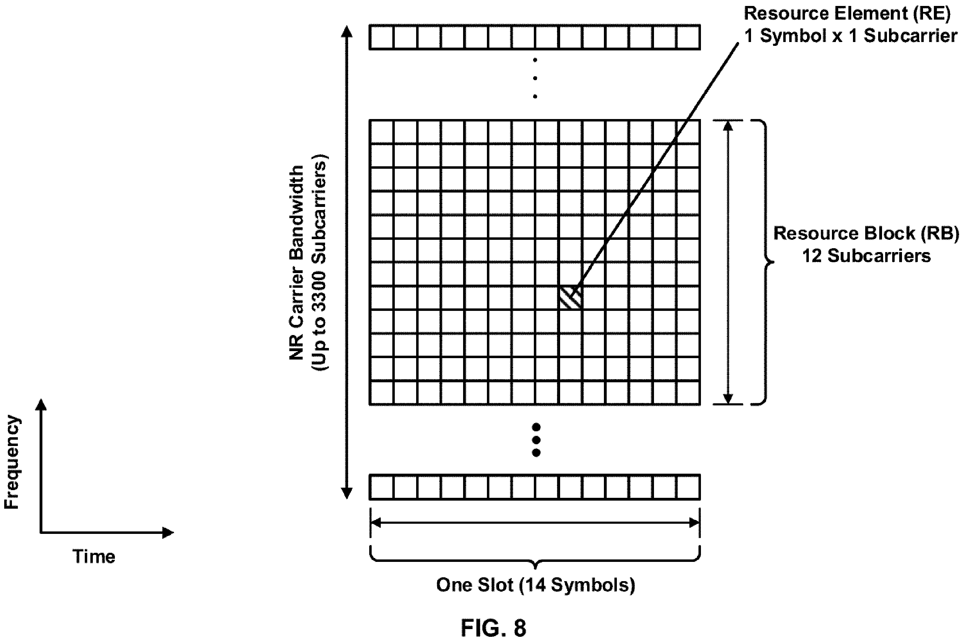

FIG. 8 shows an example resource configuration of one or more carriers. The resource configuration of may comprise a slot in the time and frequency domain for an NR carrier or any other carrier. The slot may comprise resource elements (REs) and resource blocks (RBs). A resource element (RE) may be the smallest physical resource (e.g., in an NR configuration). An RE may span one OFDM symbol in the time domain by one subcarrier in the frequency domain, such as shown in FIG. 8. An RB may span twelve consecutive REs in the frequency domain, such as shown in FIG. 8. A carrier (e.g., an NR carrier) may be limited to a width of a certain quantity of RBs and/or subcarriers (e.g., 275 RBs or 275×12 = 3300 subcarriers). Such limitation(s), if used, may limit the carrier (e.g., NR carrier) frequency based on subcarrier spacing (e.g., carrier frequency of 50, 100, 200, and 400 MHz for subcarrier spacings of 15, 30, 60, and 120 kHz, respectively). A 400 MHz bandwidth may be set based on a 400 MHz per carrier bandwidth limit. Any other bandwidth may be set based on a per carrier bandwidth limit.

A single numerology may be used across the entire bandwidth of a carrier (e.g., an NR such as shown in FIG. 8). In other example configurations, multiple numerologies may be supported on the same carrier. NR and/or other access technologies may support wide carrier bandwidths (e.g., up to 400 MHz for a subcarrier spacing of 120 kHz). Not all wireless devices may be able to receive the full carrier bandwidth (e.g., due to hardware limitations and/or different wireless device capabilities). Receiving and/or utilizing the full carrier bandwidth may be prohibitive, for example, in terms of wireless device power consumption. A wireless device may adapt the size of the receive bandwidth of the wireless device, for example, based on the amount of traffic the wireless device is scheduled to receive (e.g., to reduce power consumption and/or for other purposes). Such an adaptation may be referred to as bandwidth adaptation.

Configuration of one or more bandwidth parts (BWPs) may support one or more wireless devices not capable of receiving the full carrier bandwidth. BWPs may support bandwidth adaptation, for example, for such wireless devices not capable of receiving the full carrier bandwidth. A BWP (e.g., a BWP of an NR configuration) may be defined by a subset of contiguous RBs on a carrier. A wireless device may be configured (e.g., via an RRC layer) with one or more downlink BWPs per serving cell and one or more uplink BWPs per serving cell (e.g., up to four downlink BWPs per serving cell and up to four uplink BWPs per serving cell). One or more of the configured BWPs for a serving cell may be active, for example, at a given time. The one or more BWPs may be referred to as active BWPs of the serving cell. A serving cell may have one or more first active BWPs in the uplink carrier and one or more second active BWPs in the secondary uplink carrier, for example, if the serving cell is configured with a secondary uplink carrier.

A downlink BWP from a set of configured downlink BWPs may be linked with an uplink BWP from a set of configured uplink BWPs (e.g., for unpaired spectra). A downlink BWP and an uplink BWP may be linked, for example, if a downlink BWP index of the downlink BWP and an uplink BWP index of the uplink BWP are the same. A wireless device may expect that the center frequency for a downlink BWP is the same as the center frequency for an uplink BWP (e.g., for unpaired spectra).

A base station may configure a wireless device with one or more control resource sets (CORESETs) for at least one search space. The base station may configure the wireless device with one or more CORESETS, for example, for a downlink BWP in a set of configured downlink BWPs on a primary cell (PCell) or on a secondary cell (SCell). A search space may comprise a set of locations in the time and frequency domains where the wireless device may monitor/find/detect/identify control information. The search space may be a wireless device-specific search space (e.g., a UE-specific search space) or a common search space (e.g., potentially usable by a plurality of wireless devices or a group of wireless user devices). A base station may configure a group of wireless devices with a common search space, on a PCell or on a primary secondary cell (PSCell), in an active downlink BWP.

A base station may configure a wireless device with one or more resource sets for one or more PUCCH transmissions, for example, for an uplink BWP in a set of configured uplink BWPs. A wireless device may receive downlink receptions (e.g., PDCCH or PDSCH) in a downlink BWP, for example, according to a configured numerology (e.g., a configured subcarrier spacing and/or a configured cyclic prefix duration) for the downlink BWP. The wireless device may send/transmit uplink transmissions (e.g., PUCCH or PUSCH) in an uplink BWP, for example, according to a configured numerology (e.g., a configured subcarrier spacing and/or a configured cyclic prefix length for the uplink BWP).

One or more BWP indicator fields may be provided/comprised in Downlink Control Information (DCI). A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a wireless device with a default downlink BWP within a set of configured downlink BWPs associated with a PCell. A default downlink BWP may be an initial active downlink BWP, for example, if the base station does not provide/configure a default downlink BWP to/for the wireless device. The wireless device may determine which BWP is the initial active downlink BWP, for example, based on a CORESET configuration obtained using the PBCH.

A base station may configure a wireless device with a BWP inactivity timer value for a PCell. The wireless device may start or restart a BWP inactivity timer at any appropriate time. The wireless device may start or restart the BWP inactivity timer, for example, if one or more conditions are satisfied. The one or more conditions may comprise at least one of: the wireless device detects DCI indicating an active downlink BWP other than a default downlink BWP for a paired spectra operation; the wireless device detects DCI indicating an active downlink BWP other than a default downlink BWP for an unpaired spectra operation; and/or the wireless device detects DCI indicating an active uplink BWP other than a default uplink BWP for an unpaired spectra operation. The wireless device may start/run the BWP inactivity timer toward expiration (e.g., increment from zero to the BWP inactivity timer value, or decrement from the BWP inactivity timer value to zero), for example, if the wireless device does not detect DCI during a time interval (e.g., 1 ms or 0.5 ms). The wireless device may switch from the active downlink BWP to the default downlink BWP, for example, if the BWP inactivity timer expires.

A base station may semi-statically configure a wireless device with one or more BWPs. A wireless device may switch an active BWP from a first BWP to a second BWP, for example, after (e.g., based on or in response to) receiving DCI indicating the second BWP as an active BWP. A wireless device may switch an active BWP from a first BWP to a second BWP, for example, after (e.g., based on or in response to) an expiry of the BWP inactivity timer (e.g., if the second BWP is the default BWP).

A downlink BWP switching may refer to switching an active downlink BWP from a first downlink BWP to a second downlink BWP (e.g., the second downlink BWP is activated and the first downlink BWP is deactivated). An uplink BWP switching may refer to switching an active uplink BWP from a first uplink BWP to a second uplink BWP (e.g., the second uplink BWP is activated and the first uplink BWP is deactivated). Downlink and uplink BWP switching may be performed independently (e.g., in paired spectrum/spectra). Downlink and uplink BWP switching may be performed simultaneously (e.g., in unpaired spectrum/spectra). Switching between configured BWPs may occur, for example, based on RRC signaling, DCI signaling, expiration of a BWP inactivity timer, and/or an initiation of random access.

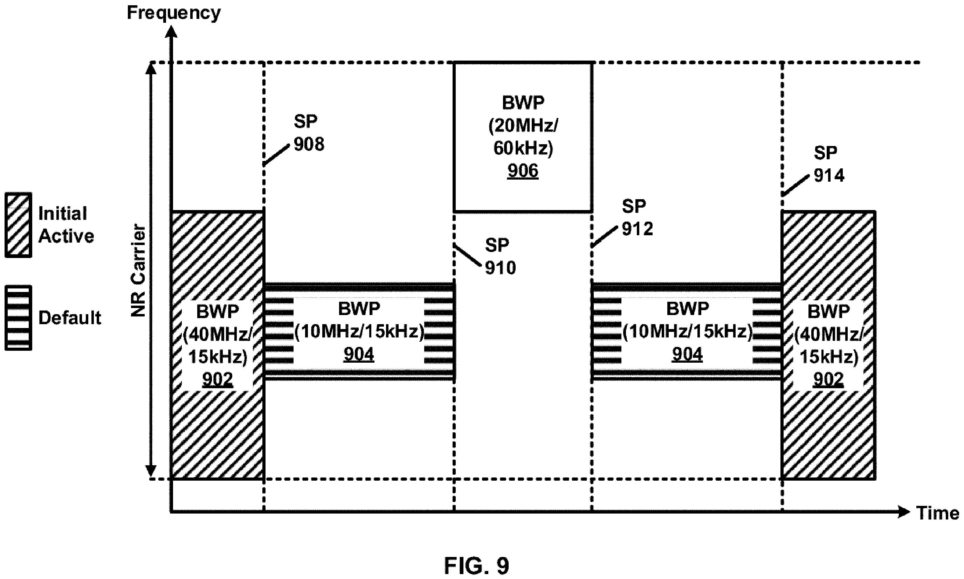

FIG. 9 shows an example of configured BWPs. Bandwidth adaptation using multiple BWPs (e.g., three configured BWPs for an NR carrier) may be available. A wireless device configured with multiple BWPs (e.g., the three BWPs) may switch from one BWP to another BWP at a switching point. The BWPs may comprise: a BWP 902 having a bandwidth of 40 MHz and a subcarrier spacing of 15 kHz; a BWP 904 having a bandwidth of 10 MHz and a subcarrier spacing of 15 kHz; and a BWP 906 having a bandwidth of 20 MHz and a subcarrier spacing of 60 kHz. The BWP 902 may be an initial active BWP, and the BWP 904 may be a default BWP. The wireless device may switch between BWPs at switching points. The wireless device may switch from the BWP 902 to the BWP 904 at a switching point 908. The switching at the switching point 908 may occur for any suitable reasons. The switching at a switching point 908 may occur, for example, after (e.g., based on or in response to) an expiry of a BWP inactivity timer (e.g., indicating switching to the default BWP). The switching at the switching point 908 may occur, for example, after (e.g., based on or in response to) receiving DCI indicating BWP 904 as the active BWP. The wireless device may switch at a switching point 910 from an active BWP 904 to the BWP 906, for example, after or in response to receiving DCI indicating BWP 906 as a new active BWP. The wireless device may switch at a switching point 912 from an active BWP 906 to the BWP 904, for example, after (e.g., based on or in response to) an expiry of a BWP inactivity timer. The wireless device may switch at the switching point 912 from an active BWP 906 to the BWP 904, for example, after or in response to receiving DCI indicating BWP 904 as a new active BWP. The wireless device may switch at a switching point 914 from an active BWP 904 to the BWP 902, for example, after or in response to receiving DCI indicating the BWP 902 as a new active BWP.

Wireless device procedures for switching BWPs on a secondary cell may be the same/similar as those on a primary cell, for example, if the wireless device is configured for a secondary cell with a default downlink BWP in a set of configured downlink BWPs and a timer value. The wireless device may use the timer value and the default downlink BWP for the secondary cell in the same/similar manner as the wireless device uses the timer value and/or default BWPs for a primary cell. The timer value (e.g., the BWP inactivity timer) may be configured per cell (e.g., for one or more BWPs), for example, via RRC signaling or any other signaling. One or more active BWPs may switch to another BWP, for example, based on an expiration of the BWP inactivity timer.

Two or more carriers may be aggregated and data may be simultaneously sent/transmitted to/from the same wireless device using carrier aggregation (CA) (e.g., to increase data rates). The aggregated carriers in CA may be referred to as component carriers (CCs). There may be a number/quantity of serving cells for the wireless device (e.g., one serving cell for a CC), for example, if CA is configured/used. The CCs may have multiple configurations in the frequency domain.

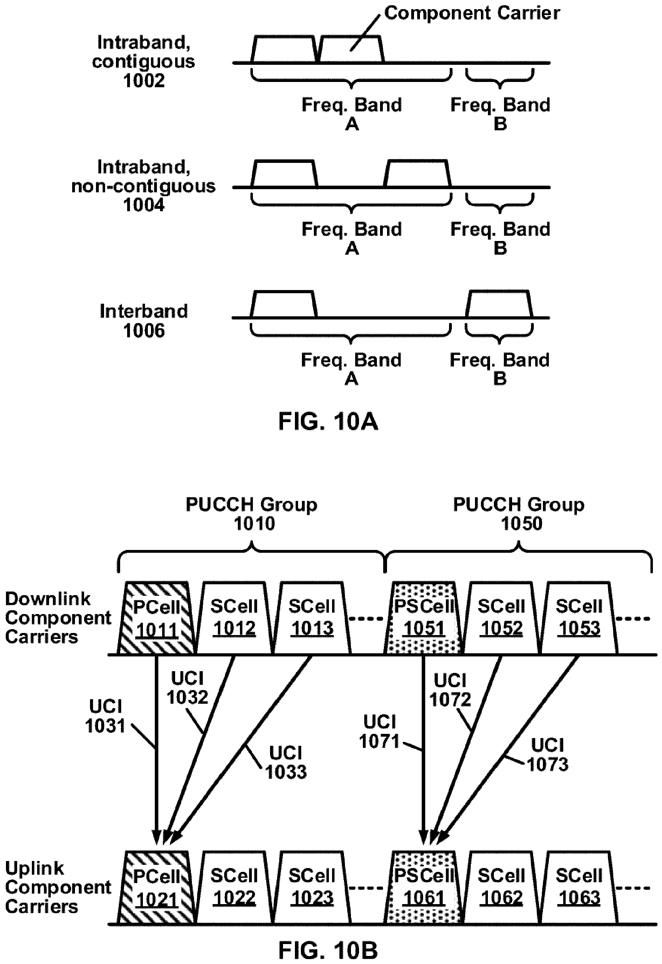

FIG. 10A shows example CA configurations based on CCs. As shown in FIG. 10A, three types of CA configurations may comprise an intraband (contiguous) configuration 1002, an intraband (non-contiguous) configuration 1004, and/or an interband configuration 1006. In the intraband (contiguous) configuration 1002, two CCs may be aggregated in the same frequency band (frequency band A) and may be located directly adjacent to each other within the frequency band. In the intraband (non-contiguous) configuration 1004, two CCs may be aggregated in the same frequency band (frequency band A) but may be separated from each other in the frequency band by a gap. In the interband configuration 1006, two CCs may be located in different frequency bands (e.g., frequency band A and frequency band B, respectively).

A network may set the maximum quantity of CCs that can be aggregated (e.g., up to 32 CCs may be aggregated in NR, or any other quantity may be aggregated in other systems). The aggregated CCs may have the same or different bandwidths, subcarrier spacing, and/or duplexing schemes (TDD, FDD, or any other duplexing schemes). A serving cell for a wireless device using CA may have a downlink CC. One or more uplink CCs may be optionally configured for a serving cell (e.g., for FDD). The ability to aggregate more downlink carriers than uplink carriers may be useful, for example, if the wireless device has more data traffic in the downlink than in the uplink.

One of the aggregated cells for a wireless device may be referred to as a primary cell (PCell), for example, if a CA is configured. The PCell may be the serving cell that the wireless initially connects to or access to, for example, during or at an RRC connection establishment, an RRC connection reestablishment, and/or a handover. The PCell may provide/configure the wireless device with NAS mobility information and the security input. Wireless device may have different PCells. For the downlink, the carrier corresponding to the PCell may be referred to as the downlink primary CC (DL PCC). For the uplink, the carrier corresponding to the PCell may be referred to as the uplink primary CC (UL PCC). The other aggregated cells (e.g., associated with CCs other than the DL PCC and UL PCC) for the wireless device may be referred to as secondary cells (SCells). The SCells may be configured, for example, after the PCell is configured for the wireless device. An SCell may be configured via an RRC connection reconfiguration procedure. For the downlink, the carrier corresponding to an SCell may be referred to as a downlink secondary CC (DL SCC). For the uplink, the carrier corresponding to the SCell may be referred to as the uplink secondary CC (UL SCC).

Configured SCells for a wireless device may be activated or deactivated, for example, based on traffic and channel conditions. Deactivation of an SCell may cause the wireless device to stop PDCCH and PDSCH reception on the SCell and PUSCH, SRS, and CQI transmissions on the SCell. Configured SCells may be activated or deactivated, for example, using a MAC CE (e.g., the MAC CE described with respect to FIG. 4B). A MAC CE may use a bitmap (e.g., one bit per SCell) to indicate which SCells (e.g., in a subset of configured SCells) for the wireless device are activated or deactivated. Configured SCells may be deactivated, for example, after (e.g., based on or in response to) an expiration of an SCell deactivation timer (e.g., one SCell deactivation timer per SCell may be configured).

DCI may comprise control information, such as scheduling assignments and scheduling grants, for a cell. DCI may be sent/transmitted via the cell corresponding to the scheduling assignments and/or scheduling grants, which may be referred to as a self-scheduling. DCI comprising control information for a cell may be sent/transmitted via another cell, which may be referred to as a cross-carrier scheduling. Uplink control information (UCI) may comprise control information, such as HARQ acknowledgments and channel state feedback (e.g., CQI, PMI, and/or RI) for aggregated cells. UCI may be sent/transmitted via an uplink control channel (e.g., a PUCCH) of the PCell or a certain SCell (e.g., an SCell configured with PUCCH). For a larger number of aggregated downlink CCs, the PUCCH of the PCell may become overloaded. Cells may be divided into multiple PUCCH groups.

FIG. 10B shows example group of cells. Aggregated cells may be configured into one or more PUCCH groups (e.g., as shown in FIG. 10B). One or more cell groups or one or more uplink control channel groups (e.g., a PUCCH group 1010 and a PUCCH group 1050) may comprise one or more downlink CCs, respectively. The PUCCH group 1010 may comprise one or more downlink CCs, for example, three downlink CCs: a PCell 1011 (e.g., a DL PCC), an SCell 1012 (e.g., a DL SCC), and an SCell 1013 (e.g., a DL SCC). The PUCCH group 1050 may comprise one or more downlink CCs, for example, three downlink CCs: a PUCCH SCell (or PSCell) 1051 (e.g., a DL SCC), an SCell 1052 (e.g., a DL SCC), and an SCell 1053 (e.g., a DL SCC). One or more uplink CCs of the PUCCH group 1010 may be configured as a PCell 1021 (e.g., a UL PCC), an SCell 1022 (e.g., a UL SCC), and an SCell 1023 (e.g., a UL SCC). One or more uplink CCs of the PUCCH group 1050 may be configured as a PUCCH SCell (or PSCell) 1061 (e.g., a UL SCC), an SCell 1062 (e.g., a UL SCC), and an SCell 1063 (e.g., a UL SCC). UCI related to the downlink CCs of the PUCCH group 1010, shown as UCI 1031, UCI 1032, and UCI 1033, may be sent/transmitted via the uplink of the PCell 1021 (e.g., via the PUCCH of the PCell 1021). UCI related to the downlink CCs of the PUCCH group 1050, shown as UCI 1071, UCI 1072, and UCI 1073, may be sent/transmitted via the uplink of the PUCCH SCell (or PSCell) 1061 (e.g., via the PUCCH of the PUCCH SCell 1061). A single uplink PCell may be configured to send/transmit UCI relating to the six downlink CCs, for example, if the aggregated cells shown in FIG. 10B are not divided into the PUCCH group 1010 and the PUCCH group 1050. The PCell 1021 may become overloaded, for example, if the UCIs 1031, 1032, 1033, 1071, 1072, and 1073 are sent/transmitted via the PCell 1021. By dividing transmissions of UCI between the PCell 1021 and the PUCCH SCell (or PSCell) 1061, overloading may be prevented and/or reduced.

A PCell may comprise a downlink carrier (e.g., the PCell 1011) and an uplink carrier (e.g., the PCell 1021). An SCell may comprise only a downlink carrier. A cell, comprising a downlink carrier and optionally an uplink carrier, may be assigned with a physical cell ID and a cell index. The physical cell ID or the cell index may indicate/identify a downlink carrier and/or an uplink carrier of the cell, for example, depending on the context in which the physical cell ID is used. A physical cell ID may be determined, for example, using a synchronization signal (e.g., PSS and/or SSS) sent/transmitted via a downlink component carrier. A cell index may be determined, for example, using one or more RRC messages. A physical cell ID may be referred to as a carrier ID, and a cell index may be referred to as a carrier index. A first physical cell ID for a first downlink carrier may refer to the first physical cell ID for a cell comprising the first downlink carrier. Substantially the same/similar concept may apply to, for example, a carrier activation. Activation of a first carrier may refer to activation of a cell comprising the first carrier.

A multi-carrier nature of a PHY layer may be exposed/indicated to a MAC layer (e.g., in a CA configuration). A HARQ entity may operate on a serving cell. A transport block may be generated per assignment/grant per serving cell. A transport block and potential HARQ retransmissions of the transport block may be mapped to a serving cell.

For the downlink, a base station may send/transmit (e.g., unicast, multicast, and/or broadcast), to one or more wireless devices, one or more reference signals (RSs) (e.g., PSS, SSS, CSI-RS, DM-RS, and/or PT-RS). For the uplink, the one or more wireless devices may send/transmit one or more RSs to the base station (e.g., DM-RS, PT-RS, and/or SRS). The PSS and the SSS may be sent/transmitted by the base station and used by the one or more wireless devices to synchronize the one or more wireless devices with the base station. A synchronization signal (SS) / physical broadcast channel (PBCH) block may comprise the PSS, the SSS, and the PBCH. The base station may periodically send/transmit a burst of SS/PBCH blocks, which may be referred to as SSBs.

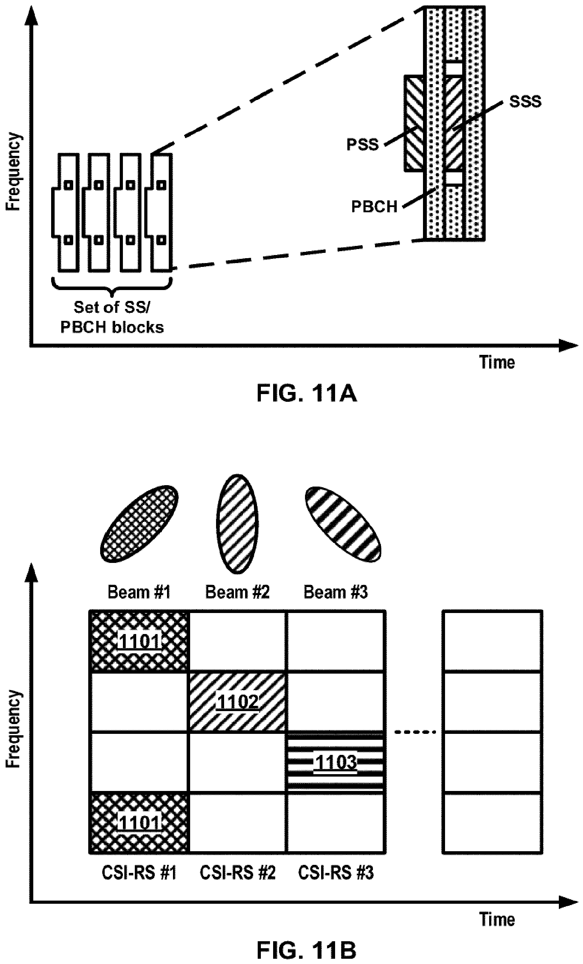

FIG. 11A shows an example mapping of one or more SS/PBCH blocks. A burst of SS/PBCH blocks may comprise one or more SS/PBCH blocks (e.g., 4 SS/PBCH blocks, as shown in FIG. 11A). Bursts may be sent/transmitted periodically (e.g., every 2 frames, 20 ms, or any other durations). A burst may be restricted to a half-frame (e.g., a first half-frame having a duration of 5 ms). Such parameters (e.g., the number of SS/PBCH blocks per burst, periodicity of bursts, position of the burst within the frame) may be configured, for example, based on at least one of: a carrier frequency of a cell in which the SS/PBCH block is sent/transmitted; a numerology or subcarrier spacing of the cell; a configuration by the network (e.g., using RRC signaling); and/or any other suitable factor(s). A wireless device may assume a subcarrier spacing for the SS/PBCH block based on the carrier frequency being monitored, for example, unless the radio network configured the wireless device to assume a different subcarrier spacing.

The SS/PBCH block may span one or more OFDM symbols in the time domain (e.g., 4 OFDM symbols, as shown in FIG. 11A or any other quantity/number of symbols) and may span one or more subcarriers in the frequency domain (e.g., 240 contiguous subcarriers or any other quantity/number of subcarriers). The PSS, the SSS, and the PBCH may have a common center frequency. The PSS may be sent/transmitted first and may span, for example, 1 OFDM symbol and 127 subcarriers. The SSS may be sent/transmitted after the PSS (e.g., two symbols later) and may span 1 OFDM symbol and 127 subcarriers. The PBCH may be sent/transmitted after the PSS (e.g., across the next 3 OFDM symbols) and may span 240 subcarriers (e.g., in the second and fourth OFDM symbols as shown in FIG. 11A) and/or may span fewer than 240 subcarriers (e.g., in the third OFDM symbols as shown in FIG. 11A).

The location of the SS/PBCH block in the time and frequency domains may not be known to the wireless device (e.g., if the wireless device is searching for the cell). The wireless device may monitor a carrier for the PSS, for example, to find and select the cell. The wireless device may monitor a frequency location within the carrier. The wireless device may search for the PSS at a different frequency location within the carrier, for example, if the PSS is not found after a certain duration (e.g., 20 ms). The wireless device may search for the PSS at a different frequency location within the carrier, for example, as indicated by a synchronization raster. The wireless device may determine the locations of the SSS and the PBCH, respectively, for example, based on a known structure of the SS/PBCH block if the PSS is found at a location in the time and frequency domains. The SS/PBCH block may be a cell-defining SS block (CD-SSB). A primary cell may be associated with a CD-SSB. The CD-SSB may be located on a synchronization raster. A cell selection/search and/or reselection may be based on the CD-SSB.

The SS/PBCH block may be used by the wireless device to determine one or more parameters of the cell. The wireless device may determine a physical cell identifier (PCI) of the cell, for example, based on the sequences of the PSS and the SSS, respectively. A person of ordinarily skill in the art would readily understand that PCI may be used to refer to a physical cell identifier and/or a physical cell identity. Accordingly, while PCI herein is used to refer to physical cell identifier, PCI herein may additionally or alternatively refer to a physical cell identity. The wireless device may determine a location of a frame boundary of the cell, for example, based on the location of the SS/PBCH block. The SS/PBCH block may indicate that it has been sent/transmitted in accordance with a transmission pattern. An SS/PBCH block in the transmission pattern may be a known distance from the frame boundary (e.g., a predefined distance for a RAN configuration among one or more networks, one or more base stations, and one or more wireless devices).

The PBCH may use a QPSK modulation and/or forward error correction (FEC). The FEC may use polar coding. One or more symbols spanned by the PBCH may comprise/carry one or more DM-RSs for demodulation of the PBCH. The PBCH may comprise an indication of a current system frame number (SFN) of the cell and/or a SS/PBCH block timing index. These parameters may facilitate time synchronization of the wireless device to the base station. The PBCH may comprise a MIB used to send/transmit to the wireless device one or more parameters. The MIB may be used by the wireless device to locate remaining minimum system information (RMSI) associated with the cell. The RMSI may comprise a System Information Block Type 1 (SIB1). The SIB1 may comprise information for the wireless device to access the cell. The wireless device may use one or more parameters of the MIB to monitor a PDCCH, which may be used to schedule a PDSCH. The PDSCH may comprise the SIB 1. The SIB1 may be decoded using parameters provided/comprised in the MIB. The PBCH may indicate an absence of SIB1. The wireless device may be pointed to a frequency, for example, based on the PBCH indicating the absence of SIB 1. The wireless device may search for an SS/PBCH block at the frequency to which the wireless device is pointed.

The wireless device may assume that one or more SS/PBCH blocks sent/transmitted with a same SS/PBCH block index are quasi co-located (QCLed) (e.g., having substantially the same/similar Doppler spread, Doppler shift, average gain, average delay, and/or spatial Rx parameters). The wireless device may not assume QCL for SS/PBCH block transmissions having different SS/PBCH block indexes. SS/PBCH blocks (e.g., those within a half-frame) may be sent/transmitted in spatial directions (e.g., using different beams that span a coverage area of the cell). A first SS/PBCH block may be sent/transmitted in a first spatial direction using a first beam, a second SS/PBCH block may be sent/transmitted in a second spatial direction using a second beam, a third SS/PBCH block may be sent/transmitted in a third spatial direction using a third beam, a fourth SS/PBCH block may be sent/transmitted in a fourth spatial direction using a fourth beam, etc.

A base station may send/transmit a plurality of SS/PBCH blocks, for example, within a frequency span of a carrier. A first PCI of a first SS/PBCH block of the plurality of SS/PBCH blocks may be different from a second PCI of a second SS/PBCH block of the plurality of SS/PBCH blocks. The PCIs of SS/PBCH blocks sent/transmitted in different frequency locations may be different or substantially the same.

The CSI-RS may be sent/transmitted by the base station and used by the wireless device to acquire/obtain/determine channel state information (CSI). The base station may configure the wireless device with one or more CSI-RSs for channel estimation or any other suitable purpose. The base station may configure a wireless device with one or more of the same/similar CSI-RSs. The wireless device may measure the one or more CSI-RSs. The wireless device may estimate a downlink channel state and/or generate a CSI report, for example, based on the measuring of the one or more downlink CSI-RSs. The wireless device may send/transmit the CSI report to the base station (e.g., based on periodic CSI reporting, semi-persistent CSI reporting, and/or aperiodic CSI reporting). The base station may use feedback provided by the wireless device (e.g., the estimated downlink channel state) to perform a link adaptation.

The base station may semi-statically configure the wireless device with one or more CSI-RS resource sets. A CSI-RS resource may be associated with a location in the time and frequency domains and a periodicity. The base station may selectively activate and/or deactivate a CSI-RS resource. The base station may indicate to the wireless device that a CSI-RS resource in the CSI-RS resource set is activated and/or deactivated.

The base station may configure the wireless device to report CSI measurements. The base station may configure the wireless device to provide CSI reports periodically, aperiodically, or semi-persistently. For periodic CSI reporting, the wireless device may be configured with a timing and/or periodicity of a plurality of CSI reports. For aperiodic CSI reporting, the base station may request a CSI report. The base station may command the wireless device to measure a configured CSI-RS resource and provide a CSI report relating to the measurement(s). For semi-persistent CSI reporting, the base station may configure the wireless device to send/transmit periodically, and selectively activate or deactivate the periodic reporting (e.g., via one or more activation/deactivation MAC CEs and/or one or more DCIs). The base station may configure the wireless device with a CSI-RS resource set and CSI reports, for example, using RRC signaling.

The CSI-RS configuration may comprise one or more parameters indicating, for example, up to 32 antenna ports (or any other quantity of antenna ports). The wireless device may be configured to use/employ the same OFDM symbols for a downlink CSI-RS and a CORESET, for example, if the downlink CSI-RS and CORESET are spatially QCLed and resource elements associated with the downlink CSI-RS are outside of the physical resource blocks (PRBs) configured for the CORESET. The wireless device may be configured to use/employ the same OFDM symbols for a downlink CSI-RS and SS/PBCH blocks, for example, if the downlink CSI-RS and SS/PBCH blocks are spatially QCLed and resource elements associated with the downlink CSI-RS are outside of PRBs configured for the SS/PBCH blocks.

Downlink DM-RSs may be sent/transmitted by a base station and received/used by a wireless device for a channel estimation. The downlink DM-RSs may be used for coherent demodulation of one or more downlink physical channels (e.g., PDSCH). A network (e.g., an NR network) may support one or more variable and/or configurable DM-RS patterns for data demodulation. At least one downlink DM-RS configuration may support a front-loaded DM-RS pattern. A front-loaded DM-RS may be mapped over one or more OFDM symbols (e.g., one or two adjacent OFDM symbols). A base station may semi-statically configure the wireless device with a number/quantity (e.g. a maximum number/quantity) of front-loaded DM-RS symbols for a PDSCH. A DM-RS configuration may support one or more DM-RS ports. A DM-RS configuration may support up to eight orthogonal downlink DM-RS ports per wireless device (e.g., for single user-MIMO). A DM-RS configuration may support up to 4 orthogonal downlink DM-RS ports per wireless device (e.g., for multiuser-MIMO). A radio network may support (e.g., at least for CP-OFDM) a common DM-RS structure for downlink and uplink. A DM-RS location, a DM-RS pattern, and/or a scrambling sequence may be the same or different. The base station may send/transmit a downlink DM-RS and a corresponding PDSCH, for example, using the same precoding matrix. The wireless device may use the one or more downlink DM-RSs for coherent demodulation/channel estimation of the PDSCH.

A transmitter (e.g., a transmitter of a base station) may use a precoder matrices for a part of a transmission bandwidth. The transmitter may use a first precoder matrix for a first bandwidth and a second precoder matrix for a second bandwidth. The first precoder matrix and the second precoder matrix may be different, for example, based on the first bandwidth being different from the second bandwidth. The wireless device may assume that a same precoding matrix is used across a set of PRBs. The set of PRBs may be determined/indicated/identified/denoted as a precoding resource block group (PRG).

A PDSCH may comprise one or more layers. The wireless device may assume that at least one symbol with DM-RS is present on a layer of the one or more layers of the PDSCH. A higher layer may configure one or more DM-RSs for a PDSCH (e.g., up to 3 DMRSs for the PDSCH). Downlink PT-RS may be sent/transmitted by a base station and used by a wireless device, for example, for a phase-noise compensation. Whether a downlink PT-RS is present or not may depend on an RRC configuration. The presence and/or the pattern of the downlink PT-RS may be configured on a wireless device-specific basis, for example, using a combination of RRC signaling and/or an association with one or more parameters used/employed for other purposes (e.g., modulation and coding scheme (MCS)), which may be indicated by DCI. A dynamic presence of a downlink PT-RS, if configured, may be associated with one or more DCI parameters comprising at least MCS. A network (e.g., an NR network) may support a plurality of PT-RS densities defined in the time and/or frequency domains. A frequency domain density (if configured/present) may be associated with at least one configuration of a scheduled bandwidth. The wireless device may assume a same precoding for a DM-RS port and a PT-RS port. The quantity/number of PT-RS ports may be fewer than the quantity/number of DM-RS ports in a scheduled resource. Downlink PT-RS may be configured/allocated/confined in the scheduled time/frequency duration for the wireless device. Downlink PT-RS may be sent/transmitted via symbols, for example, to facilitate a phase tracking at the receiver.

The wireless device may send/transmit an uplink DM-RS to a base station, for example, for a channel estimation. The base station may use the uplink DM-RS for coherent demodulation of one or more uplink physical channels. The wireless device may send/transmit an uplink DM-RS with a PUSCH and/or a PUCCH. The uplink DM-RS may span a range of frequencies that is similar to a range of frequencies associated with the corresponding physical channel. The base station may configure the wireless device with one or more uplink DM-RS configurations. At least one DM-RS configuration may support a front-loaded DM-RS pattern. The front-loaded DM-RS may be mapped over one or more OFDM symbols (e.g., one or two adjacent OFDM symbols). One or more uplink DM-RSs may be configured to send/transmit at one or more symbols of a PUSCH and/or a PUCCH. The base station may semi-statically configure the wireless device with a number/quantity (e.g. the maximum number/quantity) of front-loaded DM-RS symbols for the PUSCH and/or the PUCCH, which the wireless device may use to schedule a single-symbol DM-RS and/or a double-symbol DM-RS. A network (e.g., an NR network) may support (e.g., for cyclic prefix orthogonal frequency division multiplexing (CP-OFDM)) a common DM-RS structure for downlink and uplink. A DM-RS location, a DM-RS pattern, and/or a scrambling sequence for the DM-RS may be substantially the same or different.

A PUSCH may comprise one or more layers. A wireless device may send/transmit at least one symbol with DM-RS present on a layer of the one or more layers of the PUSCH. A higher layer may configure one or more DM-RSs (e.g., up to three DMRSs) for the PUSCH. Uplink PT-RS (which may be used by a base station for a phase tracking and/or a phase-noise compensation) may or may not be present, for example, depending on an RRC configuration of the wireless device. The presence and/or the pattern of an uplink PT-RS may be configured on a wireless device-specific basis (e.g., a UE-specific basis), for example, by a combination of RRC signaling and/or one or more parameters configured/employed for other purposes (e.g., MCS), which may be indicated by DCI. A dynamic presence of an uplink PT-RS, if configured, may be associated with one or more DCI parameters comprising at least MCS. A radio network may support a plurality of uplink PT-RS densities defined in time/frequency domain. A frequency domain density (if configured/present) may be associated with at least one configuration of a scheduled bandwidth. The wireless device may assume a same precoding for a DM-RS port and a PT-RS port. A quantity/number of PT-RS ports may be less than a quantity/number of DM-RS ports in a scheduled resource. An uplink PT-RS may be configured/allocated/confined in the scheduled time/frequency duration for the wireless device.

One or more SRSs may be sent/transmitted by a wireless device to a base station, for example, for a channel state estimation to support uplink channel dependent scheduling and/or a link adaptation. SRS sent/transmitted by the wireless device may enable/allow a base station to estimate an uplink channel state at one or more frequencies. A scheduler at the base station may use/employ the estimated uplink channel state to assign one or more resource blocks for an uplink PUSCH transmission for the wireless device. The base station may semi-statically configure the wireless device with one or more SRS resource sets. For an SRS resource set, the base station may configure the wireless device with one or more SRS resources. An SRS resource set applicability may be configured, for example, by a higher layer (e.g., RRC) parameter. An SRS resource in an SRS resource set of the one or more SRS resource sets (e.g., with the same/similar time domain behavior, periodic, aperiodic, and/or the like) may be sent/transmitted at a time instant (e.g., simultaneously), for example, if a higher layer parameter indicates beam management. The wireless device may send/transmit one or more SRS resources in SRS resource sets. A network (e.g., an NR network) may support aperiodic, periodic, and/or semi-persistent SRS transmissions. The wireless device may send/transmit SRS resources, for example, based on one or more trigger types. The one or more trigger types may comprise higher layer signaling (e.g., RRC) and/or one or more DCI formats. At least one DCI format may be used/employed for the wireless device to select at least one of one or more configured SRS resource sets. An SRS trigger type 0 may refer to an SRS triggered based on higher layer signaling. An SRS trigger type 1 may refer to an SRS triggered based on one or more DCI formats. The wireless device may be configured to send/transmit an SRS, for example, after a transmission of a PUSCH and a corresponding uplink DM-RS if a PUSCH and an SRS are sent/transmitted in a same slot. A base station may semi-statically configure a wireless device with one or more SRS configuration parameters indicating at least one of following: a SRS resource configuration identifier; a number of SRS ports; time domain behavior of an SRS resource configuration (e.g., an indication of periodic, semi-persistent, or aperiodic SRS); slot, mini-slot, and/or subframe level periodicity; an offset for a periodic and/or an aperiodic SRS resource; a number of OFDM symbols in an SRS resource; a starting OFDM symbol of an SRS resource; an SRS bandwidth; a frequency hopping bandwidth; a cyclic shift; and/or an SRS sequence ID.

An antenna port may be determined/defined such that the channel over which a symbol on the antenna port is conveyed can be inferred from the channel over which another symbol on the same antenna port is conveyed. The receiver may infer/determine the channel (e.g., fading gain, multipath delay, and/or the like) for conveying a second symbol on an antenna port, from the channel for conveying a first symbol on the antenna port, for example, if the first symbol and the second symbol are sent/transmitted on the same antenna port. A first antenna port and a second antenna port may be referred to as quasi co-located (QCLed), for example, if one or more large-scale properties of the channel over which a first symbol on the first antenna port is conveyed may be inferred from the channel over which a second symbol on a second antenna port is conveyed. The one or more large-scale properties may comprise at least one of: a delay spread; a Doppler spread; a Doppler shift; an average gain; an average delay; and/or spatial Receiving (Rx) parameters.

Channels that use beamforming may require beam management. Beam management may comprise a beam measurement, a beam selection, and/or a beam indication. A beam may be associated with one or more reference signals. A beam may be identified by one or more beamformed reference signals. The wireless device may perform a downlink beam measurement, for example, based on one or more downlink reference signals (e.g., a CSI-RS) and generate a beam measurement report. The wireless device may perform the downlink beam measurement procedure, for example, after an RRC connection is set up with a base station.

FIG. 11B shows an example mapping of one or more CSI-RSs. The CSI-RSs may be mapped in the time and frequency domains. Each rectangular block shown in FIG. 11B may correspond to a resource block (RB) within a bandwidth of a cell. A base station may send/transmit one or more RRC messages comprising CSI-RS resource configuration parameters indicating one or more CSI-RSs. One or more of parameters may be configured by higher layer signaling (e.g., RRC and/or MAC signaling) for a CSI-RS resource configuration. The one or more of the parameters may comprise at least one of : a CSI-RS resource configuration identity, a number of CSI-RS ports, a CSI-RS configuration (e.g., symbol and resource element (RE) locations in a subframe), a CSI-RS subframe configuration (e.g., a subframe location, an offset, and periodicity in a radio frame), a CSI-RS power parameter, a CSI-RS sequence parameter, a code division multiplexing (CDM) type parameter, a frequency density, a transmission comb, quasi co-location (QCL) parameters (e.g., QCL-scramblingidentity, crs-portscount, mbsfnsubframeconfiglist, csi-rs-configZPid, qcl-csi-rs-configNZPid), and/or other radio resource parameters.

One or more beams may be configured for a wireless device in a wireless device-specific configuration. Three beams are shown in FIG. 11B (beam #1, beam #2, and beam #3), but more or fewer beams may be configured. Beam #1 may be allocated with CSI-RS 1101 that may be sent/transmitted in one or more subcarriers in an RB of a first symbol. Beam #2 may be allocated with CSI-RS 1102 that may be sent/transmitted in one or more subcarriers in an RB of a second symbol. Beam #3 may be allocated with CSI-RS 1103 that may be sent/transmitted in one or more subcarriers in an RB of a third symbol. A base station may use other subcarriers in the same RB (e.g., those that are not used to send/transmit CSI-RS 1101) to transmit another CSI-RS associated with a beam for another wireless device, for example, by using frequency division multiplexing (FDM). Beams used for a wireless device may be configured such that beams for the wireless device use symbols different from symbols used by beams of other wireless devices, for example, by using time domain multiplexing (TDM). A wireless device may be served with beams in orthogonal symbols (e.g., no overlapping symbols), for example, by using the TDM.

CSI-RSs (e.g., CSI-RSs 1101, 1102, 1103) may be sent/transmitted by the base station and used by the wireless device for one or more measurements. The wireless device may measure an RSRP of configured CSI-RS resources.

The base station may configure the wireless device with a reporting configuration, and the wireless device may report the RSRP measurements to a network (e.g., via one or more base stations) based on the reporting configuration. The base station may determine, based on the reported measurement results, one or more transmission configuration indication (TCI) states comprising a number of reference signals. The base station may indicate one or more TCI states to the wireless device (e.g., via RRC signaling, a MAC CE, and/or DCI). The wireless device may receive a downlink transmission with an Rx beam determined based on the one or more TCI states. The wireless device may or may not have a capability of beam correspondence. The wireless device may determine a spatial domain filter of a transmit (Tx) beam, for example, based on a spatial domain filter of the corresponding Rx beam, if the wireless device has the capability of beam correspondence. The wireless device may perform an uplink beam selection procedure to determine the spatial domain filter of the Tx beam, for example, if the wireless device does not have the capability of beam correspondence. The wireless device may perform the uplink beam selection procedure, for example, based on one or more sounding reference signal (SRS) resources configured to the wireless device by the base station. The base station may select and indicate uplink beams for the wireless device, for example, based on measurements of the one or more SRS resources sent/transmitted by the wireless device.

A wireless device may determine/assess (e.g., measure) a channel quality of one or more beam pair links, for example, in a beam management procedure. A beam pair link may comprise a Tx beam of a base station and an Rx beam of the wireless device. The Tx beam of the base station may send/transmit a downlink signal, and the Rx beam of the wireless device may receive the downlink signal. The wireless device may send/transmit a beam measurement report, for example, based on the assessment/determination. The beam measurement report may indicate one or more beam pair quality parameters comprising at least one of: one or more beam identifications (e.g., a beam index, a reference signal index, or the like), an RSRP, a precoding matrix indicator (PMI), a channel quality indicator (CQI), and/or a rank indicator (RI).

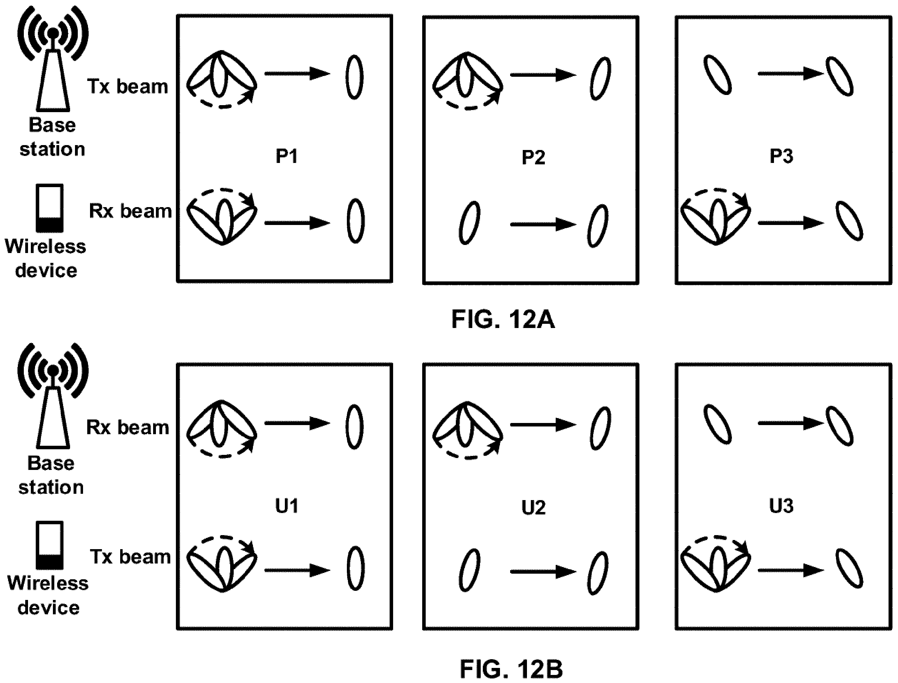

FIG. 12A shows examples of downlink beam management procedures. One or more downlink beam management procedures (e.g., downlink beam management procedures P1, P2, and P3) may be performed. Procedure P1 may enable a measurement (e.g., a wireless device measurement) on Tx beams of a TRP (or multiple TRPs) (e.g., to support a selection of one or more base station Tx beams and/or wireless device Rx beams). The Tx beams of a base station and the Rx beams of a wireless device are shown as ovals in the top row of P1 and bottom row of P1, respectively. Beamforming (e.g., at a TRP) may comprise a Tx beam sweep for a set of beams (e.g., the beam sweeps shown, in the top rows of P1 and P2, as ovals rotated in a counter-clockwise direction indicated by the dashed arrows). Beamforming (e.g., at a wireless device) may comprise an Rx beam sweep for a set of beams (e.g., the beam sweeps shown, in the bottom rows of P1 and P3, as ovals rotated in a clockwise direction indicated by the dashed arrows). Procedure P2 may be used to enable a measurement (e.g., a wireless device measurement) on Tx beams of a TRP (shown, in the top row of P2, as ovals rotated in a counter-clockwise direction indicated by the dashed arrow). The wireless device and/or the base station may perform procedure P2, for example, using a smaller set of beams than the set of beams used in procedure P1, or using narrower beams than the beams used in procedure P1. Procedure P2 may be referred to as a beam refinement. The wireless device may perform procedure P3 for an Rx beam determination, for example, by using the same Tx beam(s) of the base station and sweeping Rx beam(s) of the wireless device.

FIG. 12B shows examples of uplink beam management procedures. One or more uplink beam management procedures (e.g., uplink beam management procedures U1, U2, and U3) may be performed. Procedure U1 may be used to enable a base station to perform a measurement on Tx beams of a wireless device (e.g., to support a selection of one or more Tx beams of the wireless device and/or Rx beams of the base station). The Tx beams of the wireless device and the Rx beams of the base station are shown as ovals in the top row of U1 and bottom row of U1, respectively). Beamforming (e.g., at the wireless device) may comprise one or more beam sweeps, for example, a Tx beam sweep from a set of beams (shown, in the bottom rows of U1 and U3, as ovals rotated in a clockwise direction indicated by the dashed arrows). Beamforming (e.g., at the base station) may comprise one or more beam sweeps, for example, an Rx beam sweep from a set of beams (shown, in the top rows of U1 and U2, as ovals rotated in a counter-clockwise direction indicated by the dashed arrows). Procedure U2 may be used to enable the base station to adjust its Rx beam, for example, if the wireless device (e.g., UE) uses a fixed Tx beam. The wireless device and/or the base station may perform procedure U2, for example, using a smaller set of beams than the set of beams used in procedure P1, or using narrower beams than the beams used in procedure P1. Procedure U2 may be referred to as a beam refinement. The wireless device may perform procedure U3 to adjust its Tx beam, for example, if the base station uses a fixed Rx beam.

A wireless device may initiate/start/perform a beam failure recovery (BFR) procedure, for example, based on detecting a beam failure. The wireless device may send/transmit a BFR request (e.g., a preamble, UCI, an SR, a MAC CE, and/or the like), for example, based on the initiating the BFR procedure. The wireless device may detect the beam failure, for example, based on a determination that a quality of beam pair link(s) of an associated control channel is unsatisfactory (e.g., having an error rate higher than an error rate threshold, a received signal power lower than a received signal power threshold, an expiration of a timer, and/or the like).

The wireless device may measure a quality of a beam pair link, for example, using one or more reference signals (RSs) comprising one or more SS/PBCH blocks, one or more CSI-RS resources, and/or one or more DM-RSs. A quality of the beam pair link may be based on one or more of a block error rate (BLER), an RSRP value, a signal to interference plus noise ratio (SINR) value, an RSRQ value, and/or a CSI value measured on RS resources. The base station may indicate that an RS resource is QCLed with one or more DM-RSs of a channel (e.g., a control channel, a shared data channel, and/or the like). The RS resource and the one or more DM-RSs of the channel may be QCLed, for example, if the channel characteristics (e.g., Doppler shift, Doppler spread, an average delay, delay spread, a spatial Rx parameter, fading, and/or the like) from a transmission via the RS resource to the wireless device are similar or the same as the channel characteristics from a transmission via the channel to the wireless device.

A network (e.g., an NR network comprising a gNB and/or an ng-eNB) and/or the wireless device may initiate/start/perform a random access procedure. A wireless device in an RRC idle (e.g., an RRC_IDLE) state and/or an RRC inactive (e.g., an RRC_INACTIVE) state may initiate/perform the random access procedure to request a connection setup to a network. The wireless device may initiate/start/perform the random access procedure from an RRC connected (e.g., an RRC_CONNECTED) state. The wireless device may initiate/start/perform the random access procedure to request uplink resources (e.g., for uplink transmission of an SR if there is no PUCCH resource available) and/or acquire/obtain/determine an uplink timing (e.g., if an uplink synchronization status is non-synchronized). The wireless device may initiate/start/perform the random access procedure to request one or more system information blocks (SIBs) (e.g., other system information blocks, such as SIB2, SIB3, and/or the like). The wireless device may initiate/start/perform the random access procedure for a beam failure recovery request. A network may initiate/start/perform a random access procedure, for example, for a handover and/or for establishing time alignment for an SCell addition.

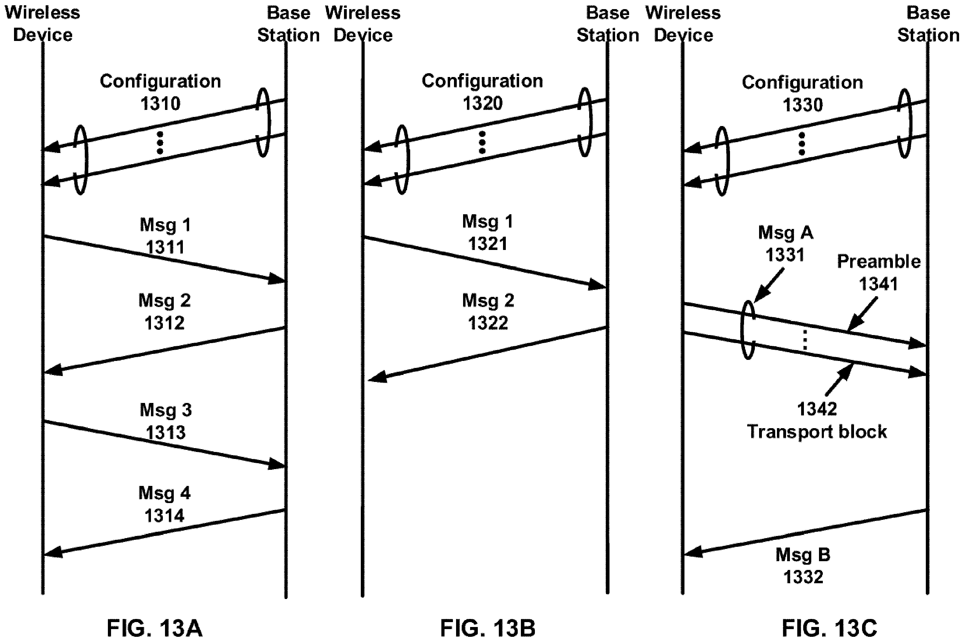

FIG. 13A shows an example four-step random access procedure. The four-step random access procedure may comprise a four-step contention-based random access procedure. A base station may send/transmit a configuration message 1310 to a wireless device, for example, before initiating the random access procedure. The four-step random access procedure may comprise transmissions of four messages comprising: a first message (e.g., Msg 1 1311), a second message (e.g., Msg 2 1312), a third message (e.g., Msg 3 1313), and a fourth message (e.g., Msg 4 1314). The first message (e.g., Msg 1 1311) may comprise a preamble (or a random access preamble). The first message (e.g., Msg 1 1311) may be referred to as a preamble. The second message (e.g., Msg 2 1312) may comprise as a random access response (RAR). The second message (e.g., Msg 2 1312) may be referred to as an RAR.

The configuration message 1310 may be sent/transmitted, for example, using one or more RRC messages. The one or more RRC messages may indicate one or more random access channel (RACH) parameters to the wireless device. The one or more RACH parameters may comprise at least one of: general parameters for one or more random access procedures (e.g., *RACH-configGeneral*); cell-specific parameters (e.g., *RACH-ConfigCommon*); and/or dedicated parameters (e.g., *RACH-ConfigDedicated*). The base station may send/transmit (e.g., broadcast or multicast) the one or more RRC messages to one or more wireless devices. The one or more RRC messages may be wireless device-specific. The one or more RRC messages that are wireless device-specific may be, for example, dedicated RRC messages sent/transmitted to a wireless device in an RRC connected (e.g., an RRC_CONNECTED) state and/or in an RRC inactive (e.g., an RRC INACTIVE) state. The wireless devices may determine, based on the one or more RACH parameters, a time-frequency resource and/or an uplink transmit power for transmission of the first message (e.g., Msg 1 1311) and/or the third message (e.g., Msg 3 1313). The wireless device may determine a reception timing and a downlink channel for receiving the second message (e.g., Msg 2 1312) and the fourth message (e.g., Msg 4 1314), for example, based on the one or more RACH parameters.

The one or more RACH parameters provided/configured/comprised in the configuration message 1310 may indicate one or more Physical RACH (PRACH) occasions available for transmission of the first message (e.g., Msg 1 1311). The one or more PRACH occasions may be predefined (e.g., by a network comprising one or more base stations). The one or more RACH parameters may indicate one or more available sets of one or more PRACH occasions (e.g., prach-ConfigIndex). The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. The one or more RACH parameters may indicate a quantity/number of SS/PBCH blocks mapped to a PRACH occasion and/or a quantity/number of preambles mapped to a SS/PBCH blocks.

The one or more RACH parameters provided/configured/comprised in the configuration message 1310 may be used to determine an uplink transmit power of first message (e.g., Msg 1 1311) and/or third message (e.g., Msg 3 1313). The one or more RACH parameters may indicate a reference power for a preamble transmission (e.g., a received target power and/or an initial power of the preamble transmission). There may be one or more power offsets indicated by the one or more RACH parameters. The one or more RACH parameters may indicate: a power ramping step; a power offset between SSB and CSI-RS; a power offset between transmissions of the first message (e.g., Msg 1 1311) and the third message (e.g., Msg 3 1313); and/or a power offset value between preamble groups. The one or more RACH parameters may indicate one or more thresholds, for example, based on which the wireless device may determine at least one reference signal (e.g., an SSB and/or CSI-RS) and/or an uplink carrier (e.g., a normal uplink (NUL) carrier and/or a supplemental uplink (SUL) carrier).

The first message (e.g., Msg 1 1311) may comprise one or more preamble transmissions (e.g., a preamble transmission and one or more preamble retransmissions). An RRC message may be used to configure one or more preamble groups (e.g., group A and/or group B). A preamble group may comprise one or more preambles. The wireless device may determine the preamble group, for example, based on a pathloss measurement and/or a size of the third message (e.g., Msg 3 1313). The wireless device may measure an RSRP of one or more reference signals (e.g., SSBs and/or CSI-RSs) and determine at least one reference signal having an RSRP above an RSRP threshold (e.g., rsrp-ThresholdSSB and/or rsrp-ThresholdCSI-RS). The wireless device may select at least one preamble associated with the one or more reference signals and/or a selected preamble group, for example, if the association between the one or more preambles and the at least one reference signal is configured by an RRC message.

The wireless device may determine the preamble, for example, based on the one or more RACH parameters provided/configured/comprised in the configuration message 1310. The wireless device may determine the preamble, for example, based on a pathloss measurement, an RSRP measurement, and/or a size of the third message (e.g., Msg 3 1313). The one or more RACH parameters may indicate: a preamble format; a maximum quantity/number of preamble transmissions; and/or one or more thresholds for determining one or more preamble groups (e.g., group A and group B). A base station may use the one or more RACH parameters to configure the wireless device with an association between one or more preambles and one or more reference signals (e.g., SSBs and/or CSI-RSs). The wireless device may determine the preamble to be comprised in first message (e.g., Msg 1 1311), for example, based on the association if the association is configured. The first message (e.g., Msg 1 1311) may be sent/transmitted to the base station via one or more PRACH occasions. The wireless device may use one or more reference signals (e.g., SSBs and/or CSI-RSs) for selection of the preamble and for determining of the PRACH occasion. One or more RACH parameters (e.g., ra-ssb-OccasionMskIndex and/or ra-OccasionList) may indicate an association between the PRACH occasions and the one or more reference signals.

The wireless device may perform a preamble retransmission, for example, if no response is received after (e.g., based on or in response to) a preamble transmission (e.g., for a period of time, such as a monitoring window for monitoring an RAR). The wireless device may increase an uplink transmit power for the preamble retransmission. The wireless device may select an initial preamble transmit power, for example, based on a pathloss measurement and/or a target received preamble power configured by the network. The wireless device may determine to resend/retransmit a preamble and may ramp up the uplink transmit power. The wireless device may receive one or more RACH parameters (e.g., PREAMBLE_POWER_RAMPING_STEP) indicating a ramping step for the preamble retransmission. The ramping step may be an amount of incremental increase in uplink transmit power for a retransmission. The wireless device may ramp up the uplink transmit power, for example, if the wireless device determines a reference signal (e.g., SSB and/or CSI-RS) that is the same as a previous preamble transmission. The wireless device may count the quantity/number of preamble transmissions and/or retransmissions, for example, using a counter parameter (e.g., PREAMBLE_TRANSMISSION_COUNTER). The wireless device may determine that a random access procedure has been completed unsuccessfully, for example, if the quantity/number of preamble transmissions exceeds a threshold configured by the one or more RACH parameters (e.g., preambleTransMax) without receiving a successful response (e.g., an RAR).

The second message (e.g., Msg 2 1312) (e.g., received by the wireless device) may comprise an RAR. The second message (e.g., Msg 2 1312) may comprise multiple RARs corresponding to multiple wireless devices. The second message (e.g., Msg 2 1312) may be received, for example, after (e.g., based on or in response to) the sending/sending (e.g., transmitting) of the first message (e.g., Msg 1 1311). The second message (e.g., Msg 2 1312) may be scheduled on the DL-SCH and may be indicated by a PDCCH, for example, using a random access radio network temporary identifier (RA RNTI). The second message (e.g., Msg 2 1312) may indicate that the first message (e.g., Msg 1 1311) was received by the base station. The second message (e.g., Msg 2 1312) may comprise a time-alignment command that may be used by the wireless device to adjust the transmission timing of the wireless device, a scheduling grant for transmission of the third message (e.g., Msg 3 1313), and/or a Temporary Cell RNTI (TC-RNTI). The wireless device may determine/start a time window (e.g., ra-ResponseWindow) to monitor a PDCCH for the second message (e.g., Msg 2 1312), for example, after sending/sending (e.g., transmitting) the first message (e.g., Msg 1 1311) (e.g., a preamble). The wireless device may determine the start time of the time window, for example, based on a PRACH occasion that the wireless device uses to send/transmit the first message (e.g., Msg 1 1311) (e.g., the preamble). The wireless device may start the time window one or more symbols after the last symbol of the first message (e.g., Msg 1 1311) comprising the preamble (e.g., the symbol in which the first message (e.g., Msg 1 1311) comprising the preamble transmission was completed or at a first PDCCH occasion from an end of a preamble transmission). The one or more symbols may be determined based on a numerology. The PDCCH may be mapped in a common search space (e.g., a Type1-PDCCH common search space) configured by an RRC message. The wireless device may identify/determine the RAR, for example, based on an RNTI. Radio network temporary identifiers (RNTIs) may be used depending on one or more events initiating/starting the random access procedure. The wireless device may use a RA-RNTI, for example, for one or more communications associated with random access or any other purpose. The RA-RNTI may be associated with PRACH occasions in which the wireless device sends/transmits a preamble. The wireless device may determine the RA-RNTI, for example, based on at least one of: an OFDM symbol index; a slot index; a frequency domain index; and/or a UL carrier indicator of the PRACH occasions. An example RA-RNTI may be determined as follows:

$$\text{RA-RNTI} = 1 + s_id + 14 \times t_id + 14 \times 80 \times f_id + 14 \times 80 \times 8 \times ul_carrier_id$$

where s_id may be an index of a first OFDM symbol of the PRACH occasion (e.g., $0 \leq s_id < 14$), t_id may be an index of a first slot of the PRACH occasion in a system frame (e.g., $0 \leq t_id < 80$), f_id may be an index of the PRACH occasion in the frequency domain (e.g., $0 \leq f_id < 8$), and ul_carrier_id may be a UL carrier used for a preamble transmission (e.g., 0 for an NUL carrier, and 1 for an SUL carrier).

The wireless device may send/transmit the third message (e.g., Msg 3 1313), for example, after (e.g., based on or in response to) a successful reception of the second message (e.g., Msg 2 1312) (e.g., using resources identified in the Msg 2 1312). The third message (e.g., Msg 3 1313) may be used, for example, for contention resolution in the contention-based random access procedure. A plurality of wireless devices may send/transmit the same preamble to a base station, and the base station may send/transmit an RAR that corresponds to a wireless device. Collisions may occur, for example, if the plurality of wireless device interpret the RAR as corresponding to themselves. Contention resolution (e.g., using the third message (e.g., Msg 3 1313) and the fourth message (e.g., Msg 4 1314)) may be used to increase the likelihood that the wireless device does not incorrectly use an identity of another the wireless device. The wireless device may comprise a device identifier in the third message (e.g., Msg 3 1313) (e.g., a C-RNTI if assigned, a TC RNTI comprised in the second message (e.g., Msg 2 1312), and/or any other suitable identifier), for example, to perform contention resolution.

The fourth message (e.g., Msg 4 1314) may be received, for example, after (e.g., based on or in response to) the sending (e.g., transmitting) of the third message (e.g., Msg 3 1313). The base station may address the wireless on the PDCCH (e.g., the base station may send the PDCCH to the wireless device) using a C-RNTI, for example, If the C-RNTI was included in the third message (e.g., Msg 3 1313). The random access procedure may be determined to be successfully completed, for example, if the unique C RNTI of the wireless device is detected on the PDCCH (e.g., the PDCCH is scrambled by the C-RNTI). Fourth message (e.g., Msg 4 1314) may be received using a DL-SCH associated with a TC RNTI, for example, if the TC RNTI is comprised in the third message (e.g., Msg 3 1313) (e.g., if the wireless device is in an RRC idle (e.g., an RRC_IDLE) state or not otherwise connected to the base station). The wireless device may determine that the contention resolution is successful and/or the wireless device may determine that the random access procedure is successfully completed, for example, if a MAC PDU is successfully decoded and a MAC PDU comprises the wireless device contention resolution identity MAC CE that matches or otherwise corresponds with the CCCH SDU sent/transmitted in third message (e.g., Msg 3 1313).

The wireless device may be configured with an SUL carrier and/or an NUL carrier. An initial access (e.g., random access) may be supported via an uplink carrier. A base station may configure the wireless device with multiple RACH configurations (e.g., two separate RACH configurations comprising: one for an SUL carrier and the other for an NUL carrier). For random access in a cell configured with an SUL carrier, the network may indicate which carrier to use (NUL or SUL). The wireless device may determine to use the SUL carrier, for example, if a measured quality of one or more reference signals (e.g., one or more reference signals associated with the NUL carrier) is lower than a broadcast threshold. Uplink transmissions of the random access procedure (e.g., the first message (e.g., Msg 1 1311) and/or the third message (e.g., Msg 3 1313)) may remain on, or may be performed via, the selected carrier. The wireless device may switch an uplink carrier during the random access procedure (e.g., between the Msg 11311 and the Msg 3 1313). The wireless device may determine and/or switch an uplink carrier for the first message (e.g., Msg 1 1311) and/or the third message (e.g., Msg 3 1313), for example, based on a channel clear assessment (e.g., a listen-before-talk).

FIG. 13B shows a two-step random access procedure. The two-step random access procedure may comprise a two-step contention-free random access procedure. Similar to the four-step contention-based random access procedure, a base station may, prior to initiation of the procedure, send/transmit a configuration message 1320 to the wireless device. The configuration message 1320 may be analogous in some respects to the configuration message 1310. The procedure shown in FIG. 13B may comprise transmissions of two messages: a first message (e.g., Msg 1 1321) and a second message (e.g., Msg 2 1322). The first message (e.g., Msg 1 1321) and the second message (e.g., Msg 2 1322) may be analogous in some respects to the first message (e.g., Msg 1 1311) and a second message (e.g., Msg 2 1312), respectively. The two-step contention-free random access procedure may not comprise messages analogous to the third message (e.g., Msg 3 1313) and/or the fourth message (e.g., Msg 4 1314).

The two-step (e.g., contention-free) random access procedure may be configured/initiated for a beam failure recovery, other SI request, an SCell addition, and/or a handover. A base station may indicate, or assign to, the wireless device a preamble to be used for the first message (e.g., Msg 1 1321). The wireless device may receive, from the base station via a PDCCH and/or an RRC, an indication of the preamble (e.g., ra-PreambleIndex).

The wireless device may start a time window (e.g., ra-ResponseWindow) to monitor a PDCCH for the RAR, for example, after (e.g., based on or in response to) sending (e.g., transmitting) the preamble. The base station may configure the wireless device with one or more beam failure recovery parameters, such as a separate time window and/or a separate PDCCH in a search space indicated by an RRC message (e.g., recoverySearchSpaceId). The base station may configure the one or more beam failure recovery parameters, for example, in association with a beam failure recovery request. The separate time window for monitoring the PDCCH and/or an RAR may be configured to start after sending (e.g., transmitting) a beam failure recovery request (e.g., the window may start any quantity of symbols and/or slots after sending (e.g., transmitting) the beam failure recovery request). The wireless device may monitor for a PDCCH transmission addressed to a Cell RNTI (C-RNTI) on the search space. During the two-step (e.g., contention-free) random access procedure, the wireless device may determine that a random access procedure is successful, for example, after (e.g., based on or in response to) sending (e.g., transmitting) first message (e.g., Msg 1 1321) and receiving a corresponding second message (e.g., Msg 2 1322). The wireless device may determine that a random access procedure has successfully been completed, for example, if a PDCCH transmission is addressed to a corresponding C-RNTI. The wireless device may determine that a random access procedure has successfully been completed, for example, if the wireless device receives an RAR comprising a preamble identifier corresponding to a preamble sent/transmitted by the wireless device and/or the RAR comprises a MAC sub-PDU with the preamble identifier. The wireless device may determine the response as an indication of an acknowledgement for an SI request.

FIG. 13C shows an example two-step random access procedure. Similar to the random access procedures shown in FIGS. 13A and 13B, a base station may, prior to initiation of the procedure, send/transmit a configuration message 1330 to the wireless device. The configuration message 1330 may be analogous in some respects to the configuration message 1310 and/or the configuration message 1320. The procedure shown in FIG. 13C may comprise transmissions of multiple messages (e.g., two messages comprising: a first message (e.g., Msg A 1331) and a second message (e.g., Msg B 1332)).

Msg A 1331 may be sent/transmitted in an uplink transmission by the wireless device. Msg A 1331 may comprise one or more transmissions of a preamble 1341 and/or one or more transmissions of a transport block 1342. The transport block 1342 may comprise contents that are similar and/or equivalent to the contents of the third message (e.g., Msg 3 1313) (e.g., shown in FIG. 13A). The transport block 1342 may comprise UCI (e.g., an SR, a HARQ ACK/NACK, and/or the like). The wireless device may receive the second message (e.g., Msg B 1332), for example, after (e.g., based on or in response to) sending (e.g., transmitting) the first message (e.g., Msg A 1331). The second message (e.g., Msg B 1332) may comprise contents that are similar and/or equivalent to the contents of the second message (e.g., Msg 2 1312) (e.g., an RAR shown in FIGS. 13A), the contents of the second message (e.g., Msg 2 1322) (e.g., an RAR shown in FIG. 13B) and/or the fourth message (e.g., Msg 4 1314) (e.g., shown in FIG. 13A).

The wireless device may start/initiate the two-step random access procedure (e.g., the two-step random access procedure shown in FIG. 13C) for a licensed spectrum and/or an unlicensed spectrum. The wireless device may determine, based on one or more factors, whether to start/initiate the two-step random access procedure. The one or more factors may comprise at least one of: a radio access technology in use (e.g., LTE, NR, and/or the like); whether the wireless device has a valid TA or not; a cell size; the RRC state of the wireless device; a type of spectrum (e.g., licensed vs. unlicensed); and/or any other suitable factors.

The wireless device may determine, based on two-step RACH parameters comprised in the configuration message 1330, a radio resource and/or an uplink transmit power for the preamble 1341 and/or the transport block 1342 (e.g., comprised in the first message (e.g., Msg A 1331)). The RACH parameters may indicate an MCS, a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the wireless device to determine a reception timing and a downlink channel for monitoring for and/or receiving second message (e.g., Msg B 1332).

The transport block 1342 may comprise data (e.g., delay-sensitive data), an identifier of the wireless device, security information, and/or device information (e.g., an International Mobile Subscriber Identity (IMSI)). The base station may send/transmit the second message (e.g., Msg B 1332) as a response to the first message (e.g., Msg A 1331). The second message (e.g., Msg B 1332) may comprise at least one of: a preamble identifier; a timing advance command; a power control command; an uplink grant (e.g., a radio resource assignment and/or an MCS); a wireless device identifier (e.g., a UE identifier for contention resolution); and/or an RNTI (e.g., a C-RNTI or a TC-RNTI). The wireless device may determine that the two-step random access procedure is successfully completed, for example, if a preamble identifier in the second message (e.g., Msg B 1332) corresponds to, or is matched to, a preamble sent/transmitted by the wireless device and/or the identifier of the wireless device in second message (e.g., Msg B 1332) corresponds to, or is matched to, the identifier of the wireless device in the first message (e.g., Msg A 1331) (e.g., the transport block 1342).

A wireless device and a base station may exchange control signaling (e.g., control information). The control signaling may be referred to as L1/L2 control signaling and may originate from the PHY layer (e.g., layer 1) and/or the MAC layer (e.g., layer 2) of the wireless device or the base station. The control signaling may comprise downlink control signaling sent/transmitted from the base station to the wireless device and/or uplink control signaling sent/transmitted from the wireless device to the base station.

The downlink control signaling may comprise at least one of: a downlink scheduling assignment; an uplink scheduling grant indicating uplink radio resources and/or a transport format; slot format information; a preemption indication; a power control command; and/or any other suitable signaling. The wireless device may receive the downlink control signaling in a payload sent/transmitted by the base station via a PDCCH. The payload sent/transmitted via the PDCCH may be referred to as downlink control information (DCI). The PDCCH may be a group common PDCCH (GC-PDCCH) that is common to a group of wireless devices. The GC-PDCCH may be scrambled by a group common RNTI.

A base station may attach one or more cyclic redundancy check (CRC) parity bits to DCI, for example, in order to facilitate detection of transmission errors. The base station may scramble the CRC parity bits with an identifier of a wireless device (or an identifier of a group of wireless devices), for example, if the DCI is intended for the wireless device (or the group of the wireless devices). Scrambling the CRC parity bits with the identifier may comprise Modulo-2 addition (or an exclusive-OR operation) of the identifier value and the CRC parity bits. The identifier may comprise a 16-bit value of an RNTI.

DCI messages may be used for different purposes. A purpose may be indicated by the type of an RNTI used to scramble the CRC parity bits. DCI having CRC parity bits scrambled with a paging RNTI (P-RNTI) may indicate paging information and/or a system information change notification. The P-RNTI may be predefined as "FFFE" in hexadecimal. DCI having CRC parity bits scrambled with a system information RNTI (SI-RNTI) may indicate a broadcast transmission of the system information. The SI-RNTI may be predefined as "FFFF" in hexadecimal. DCI having CRC parity bits scrambled with a random access RNTI (RA-RNTI) may indicate a random access response (RAR). DCI having CRC parity bits scrambled with a cell RNTI (C-RNTI) may indicate a dynamically scheduled unicast transmission and/or a triggering of PDCCH-ordered random access. DCI having CRC parity bits scrambled with a temporary cell RNTI (TC-RNTI) may indicate a contention resolution (e.g., a Msg 3 analogous to the Msg 3 1313 shown in FIG. 13A). Other RNTIs configured for a wireless device by a base station may comprise a Configured Scheduling RNTI (CS RNTI), a Transmit Power Control-PUCCH RNTI (TPC PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C RNTI), and/or the like.

A base station may send/transmit DCI messages with one or more DCI formats, for example, depending on the purpose and/or content of the DCI messages. DCI format 0_0 may be used for scheduling of a PUSCH in a cell. DCI format 0_0 may be a fallback DCI format (e.g., with compact DCI payloads). DCI format 0_1 may be used for scheduling of a PUSCH in a cell (e.g., with more DCI payloads than DCI format 0_0). DCI format 1_0 may be used for scheduling of a PDSCH in a cell. DCI format 1_0 may be a fallback DCI format (e.g., with compact DCI payloads). DCI format 1_1 may be used for scheduling of a PDSCH in a cell (e.g., with more DCI payloads than DCI format 1_0). DCI format 2_0 may be used for providing a slot format indication to a group of wireless devices. DCI format 2_1 may be used for informing/notifying a group of wireless devices of a physical resource block and/or an OFDM symbol where the group of wireless devices may assume no transmission is intended to the group of wireless devices. DCI format 2_2 may be used for transmission of a transmit power control (TPC) command for PUCCH or PUSCH. DCI format 2_3 may be used for transmission of a group of TPC commands for SRS transmissions by one or more wireless devices. DCI format(s) for new functions may be defined in future releases. DCI formats may have different DCI sizes, or may share the same DCI size.

The base station may process the DCI with channel coding (e.g., polar coding), rate matching, scrambling and/or QPSK modulation, for example, after scrambling the DCI with an RNTI. A base station may map the coded and modulated DCI on resource elements used and/or configured for a PDCCH. The base station may send/transmit the DCI via a PDCCH occupying a number of contiguous control channel elements (CCEs), for example, based on a payload size of the DCI and/or a coverage of the base station. The number of the contiguous CCEs (referred to as aggregation level) may be 1, 2, 4, 8, 16, and/or any other suitable number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

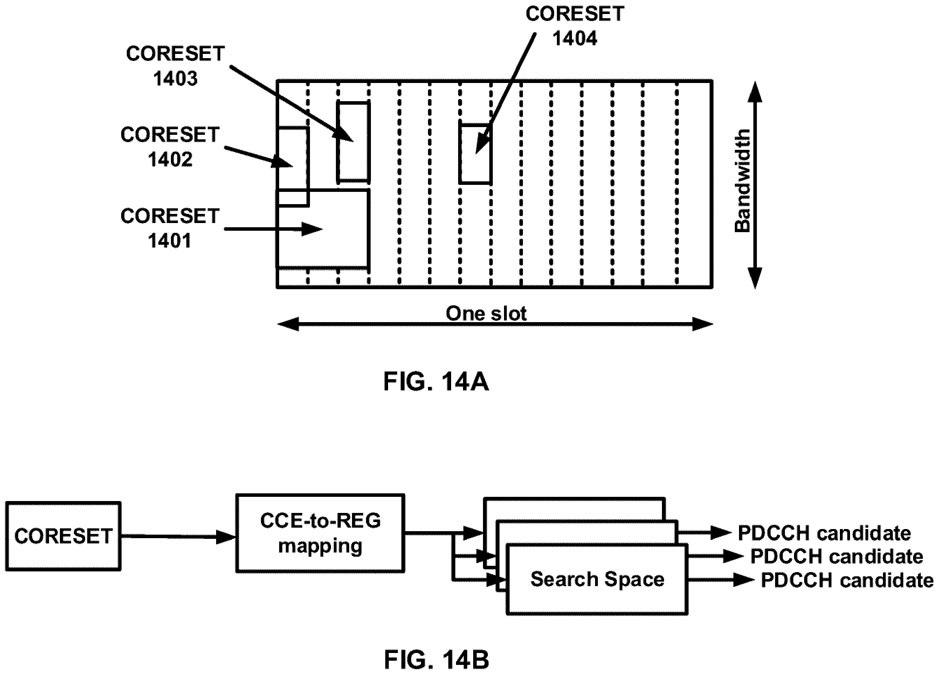

FIG. 14A shows an example of CORESET configurations. The CORESET configurations may be for a bandwidth part or any other frequency bands. The base station may send/transmit DCI via a PDCCH on one or more control resource sets (CORESETs). A CORESET may comprise a time-frequency resource in which the wireless device attempts/tries to decode DCI using one or more search spaces. The base station may configure a size and a location of the CORESET in the time-frequency domain. A first CORESET 1401 and a second CORESET 1402 may occur or may be set/configured at the first symbol in a slot. The first CORESET 1401 may overlap with the second CORESET 1402 in the frequency domain. A third CORESET 1403 may occur or may be set/configured at a third symbol in the slot. A fourth CORESET 1404 may occur or may be set/configured at the seventh symbol in the slot. CORESETs may have a different number of resource blocks in frequency domain.

FIG. 14B shows an example of a CCE-to-REG mapping. The CCE-to-REG mapping may be performed for DCI transmission via a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping (e.g., by an RRC configuration). A CORESET may be configured with an antenna port QCL parameter. The antenna port QCL parameter may indicate QCL information of a DM-RS for a PDCCH reception via the CORESET.

The base station may send/transmit, to the wireless device, one or more RRC messages comprising configuration parameters of one or more CORESETs and one or more search space sets. The configuration parameters may indicate an association between a search space set and a CORESET. A search space set may comprise a set of PDCCH candidates formed by CCEs (e.g., at a given aggregation level). The configuration parameters may indicate at least one of: a number of PDCCH candidates to be monitored per aggregation level; a PDCCH monitoring periodicity and a PDCCH monitoring pattern; one or more DCI formats to be monitored by the wireless device; and/or whether a search space set is a common search space set or a wireless device-specific search space set (e.g., a UE-specific search space set). A set of CCEs in the common search space set may be predefined and known to the wireless device. A set of CCEs in the wireless device-specific search space set (e.g., the UE-specific search space set) may be configured, for example, based on the identity of the wireless device (e.g., C-RNTI).

As shown in FIG. 14B, the wireless device may determine a time-frequency resource for a CORESET based on one or more RRC messages. The wireless device may determine a CCE-to-REG mapping (e.g., interleaved or non-interleaved, and/or mapping parameters) for the CORESET, for example, based on configuration parameters of the CORESET. The wireless device may determine a number (e.g., at most 10) of search space sets configured on/for the CORESET, for example, based on the one or more RRC messages. The wireless device may monitor a set of PDCCH candidates according to configuration parameters of a search space set. The wireless device may monitor a set of PDCCH candidates in one or more CORESETs for detecting one or more DCI messages. Monitoring may comprise decoding one or more PDCCH candidates of the set of the PDCCH candidates according to the monitored DCI formats. Monitoring may comprise decoding DCI content of one or more PDCCH candidates with possible (or configured) PDCCH locations, possible (or configured) PDCCH formats (e.g., the number of CCEs, the number of PDCCH candidates in common search spaces, and/or the number of PDCCH candidates in the wireless device-specific search spaces) and possible (or configured) DCI formats. The decoding may be referred to as blind decoding. The wireless device may determine DCI as valid for the wireless device, for example, after (e.g., based on or in response to) CRC checking (e.g., scrambled bits for CRC parity bits of the DCI matching an RNTI value). The wireless device may process information comprised in the DCI (e.g., a scheduling assignment, an uplink grant, power control, a slot format indication, a downlink preemption, and/or the like).

The wireless device may send/transmit uplink control signaling (e.g., UCI) to a base station. The uplink control signaling may comprise HARQ acknowledgements for received DL-SCH transport blocks. The wireless device may send/transmit the HARQ acknowledgements, for example, after (e.g., based on or in response to) receiving a DL-SCH transport block. Uplink control signaling may comprise CSI indicating a channel quality of a physical downlink channel. The wireless device may send/transmit the CSI to the base station. The base station, based on the received CSI, may determine transmission format parameters (e.g., comprising multi-antenna and beamforming schemes) for downlink transmission(s). Uplink control signaling may comprise scheduling requests (SR). The wireless device may send/transmit an SR indicating that uplink data is available for transmission to the base station. The wireless device may send/transmit UCI (e.g., HARQ acknowledgements (HARQ-ACK), CSI report, SR, and the like) via a PUCCH or a PUSCH. The wireless device may send/transmit the uplink control signaling via a PUCCH using one of several PUCCH formats.

There may be multiple PUCCH formats (e.g., five PUCCH formats). A wireless device may determine a PUCCH format, for example, based on a size of UCI (e.g., a quantity/number of uplink symbols of UCI transmission and a number of UCI bits). PUCCH format 0 may have a length of one or two OFDM symbols and may comprise two or fewer bits. The wireless device may send/transmit UCI via a PUCCH resource, for example, using PUCCH format 0 if the transmission is over/via one or two symbols and the quantity/number of HARQ-ACK information bits with positive or negative SR (HARQ-ACK/SR bits) is one or two. PUCCH format 1 may occupy a number of OFDM symbols (e.g., between four and fourteen OFDM symbols) and may comprise two or fewer bits. The wireless device may use PUCCH format 1, for example, if the transmission is over/via four or more symbols and the number of HARQ-ACK/SR bits is one or two. PUCCH format 2 may occupy one or two OFDM symbols and may comprise more than two bits. The wireless device may use PUCCH format 2, for example, if the transmission is over/via one or two symbols and the quantity/number of UCI bits is two or more. PUCCH format 3 may occupy a number of OFDM symbols (e.g., between four and fourteen OFDM symbols) and may comprise more than two bits. The wireless device may use PUCCH format 3, for example, if the transmission is four or more symbols, the quantity/number of UCI bits is two or more, and the PUCCH resource does not comprise an orthogonal cover code (OCC). PUCCH format 4 may occupy a number of OFDM symbols (e.g., between four and fourteen OFDM symbols) and may comprise more than two bits. The wireless device may use PUCCH format 4, for example, if the transmission is four or more symbols, the quantity/number of UCI bits is two or more, and the PUCCH resource comprises an OCC.

The base station may send/transmit configuration parameters to the wireless device for a plurality of PUCCH resource sets, for example, using an RRC message. The plurality of PUCCH resource sets (e.g., up to four sets in NR, or up to any other quantity of sets in other systems) may be configured on an uplink BWP of a cell. A PUCCH resource set may be configured with a PUCCH resource set index, a plurality of PUCCH resources with a PUCCH resource being identified by a PUCCH resource identifier (e.g., pucch-Resourceid), and/or a number (e.g. a maximum number) of UCI information bits the wireless device may send/transmit using one of the plurality of PUCCH resources in the PUCCH resource set. The wireless device may select one of the plurality of PUCCH resource sets, for example, based on a total bit length of the UCI information bits (e.g., HARQ-ACK, SR, and/or CSI) if configured with a plurality of PUCCH resource sets. The wireless device may select a first PUCCH resource set having a PUCCH resource set index equal to "0," for example, if the total bit length of UCI information bits is two or fewer. The wireless device may select a second PUCCH resource set having a PUCCH resource set index equal to "1," for example, if the total bit length of UCI information bits is greater than two and less than or equal to a first configured value. The wireless device may select a third PUCCH resource set having a PUCCH resource set index equal to "2," for example, if the total bit length of UCI information bits is greater than the first configured value and less than or equal to a second configured value. The wireless device may select a fourth PUCCH resource set having a PUCCH resource set index equal to "3," for example, if the total bit length of UCI information bits is greater than the second configured value and less than or equal to a third value (e.g., 1406, 1706, or any other quantity of bits).

The wireless device may determine a PUCCH resource from the PUCCH resource set for UCI (HARQ-ACK, CSI, and/or SR) transmission, for example, after determining a PUCCH resource set from a plurality of PUCCH resource sets. The wireless device may determine the PUCCH resource, for example, based on a PUCCH resource indicator in DCI (e.g., with DCI format 1_0 or DCI for 1_1) received on/via a PDCCH. An n-bit (e.g., a three-bit) PUCCH resource indicator in the DCI may indicate one of multiple (e.g., eight) PUCCH resources in the PUCCH resource set. The wireless device may send/transmit the UCI (HARQ-ACK, CSI and/or SR) using a PUCCH resource indicated by the PUCCH resource indicator in the DCI, for example, based on the PUCCH resource indicator.

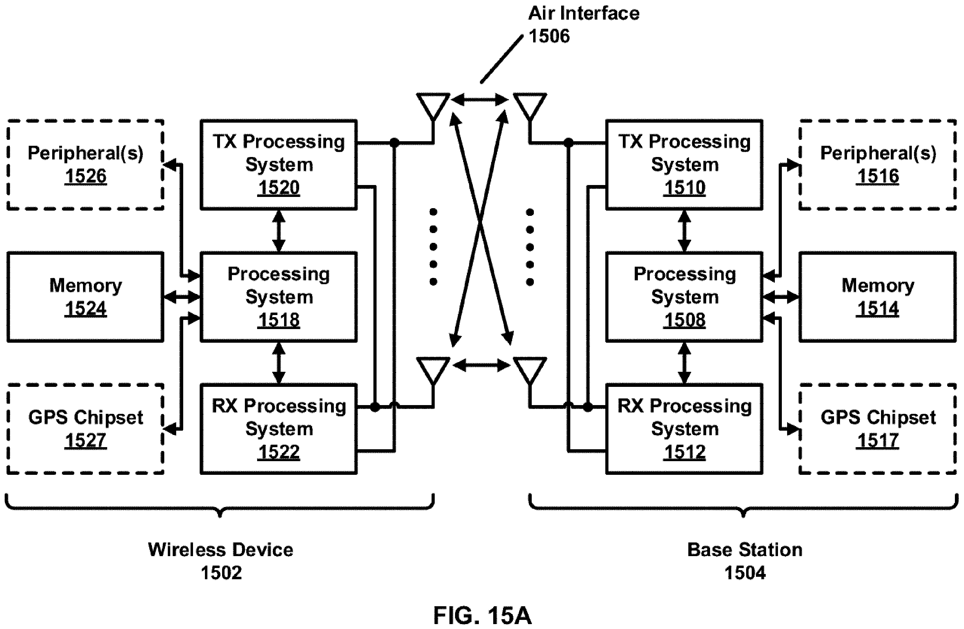

FIG. 15A shows example communications between a wireless device and a base station. A wireless device 1502 and abase station 1504 may be part of a communication network, such as the communication network 100 shown in FIG. 1A, the communication network 150 shown in FIG. 1B, or any other communication network. A communication network may comprise more than one wireless device and/or more than one base station, with substantially the same or similar configurations as those shown in FIG. 15A.

The base station 1504 may connect the wireless device 1502 to a core network (not shown) via radio communications over the air interface (or radio interface) 1506. The communication direction from the base station 1504 to the wireless device 1502 over the air interface 1506 may be referred to as the downlink. The communication direction from the wireless device 1502 to the base station 1504 over the air interface may be referred to as the uplink. Downlink transmissions may be separated from uplink transmissions, for example, using various duplex schemes (e.g., FDD, TDD, and/or some combination of the duplexing techniques).

For the downlink, data to be sent to the wireless device 1502 from the base station 1504 may be provided/transferred/sent to the processing system 1508 of the base station 1504. The data may be provided/transferred/sent to the processing system 1508 by, for example, a core network. For the uplink, data to be sent to the base station 1504 from the wireless device 1502 may be provided/transferred/sent to the processing system 1518 of the wireless device 1502. The processing system 1508 and the processing system 1518 may implement layer 3 and layer 2 OSI functionality to process the data for transmission. Layer 2 may comprise an SDAP layer, a PDCP layer, an RLC layer, and a MAC layer, for example, described with respect to FIG. 2A, FIG. 2B, FIG. 3, and FIG. 4A. Layer 3 may comprise an RRC layer, for example, described with respect to FIG. 2B.

The data to be sent to the wireless device 1502 may be provided/transferred/sent to a transmission processing system 1510 of base station 1504, for example, after being processed by the processing system 1508. The data to be sent to base station 1504 may be provided/transferred/sent to a transmission processing system 1520 of the wireless device 1502, for example, after being processed by the processing system 1518. The transmission processing system 1510 and the transmission processing system 1520 may implement layer 1 OSI functionality. Layer 1 may comprise a PHY layer, for example, described with respect to FIG. 2A, FIG. 2B, FIG. 3, and FIG. 4A. For sending/transmission processing, the PHY layer may perform, for example, forward error correction coding of transport channels, interleaving, rate matching, mapping of transport channels to physical channels, modulation of physical channel, multipleinput multiple-output (MIMO) or multi-antenna processing, and/or the like.

A reception processing system 1512 of the base station 1504 may receive the uplink transmission from the wireless device 1502. The reception processing system 1512 of the base station 1504 may comprise one or more TRPs.

A reception processing system 1522 of the wireless device 1502 may receive the downlink transmission from the base station 1504. The reception processing system 1522 of the wireless device 1502 may comprise one or more antenna panels. The reception processing system 1512 and the reception processing system 1522 may implement layer 1 OSI functionality. Layer 1 may include a PHY layer, for example, described with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

The base station 1504 may comprise multiple antennas (e.g., multiple antenna panels, multiple TRPs, etc.). The wireless device 1502 may comprise multiple antennas (e.g., multiple antenna panels, etc.). The multiple antennas may be used to perform one or more MIMO or multi-antenna techniques, such as spatial multiplexing (e.g., single-user MIMO or multi-user MIMO), transmit/receive diversity, and/or beamforming. The wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518, respectively, to carry out one or more of the functionalities (e.g., one or more functionalities described herein and other functionalities of general computers, processors, memories, and/or other peripherals). The transmission processing system 1510 and/or the reception processing system 1512 may be coupled to the memory 1514 and/or another memory (e.g., one or more non-transitory computer readable mediums) storing computer program instructions or code that may be executed to carry out one or more of their respective functionalities. The transmission processing system 1520 and/or the reception processing system 1522 may be coupled to the memory 1524 and/or another memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an onboard unit, or any combination thereof. The processing system 1508 and/or the processing system 1518 may perform at least one of signal coding/processing, data processing, power control, input/output processing, and/or any other functionality that may enable the wireless device 1502 and/or the base station 1504 to operate in a wireless environment.

The processing system 1508 may be connected to one or more peripherals 1516. The processing system 1518 may be connected to one or more peripherals 1526. The one or more peripherals 1516 and the one or more peripherals 1526 may comprise software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive input data (e.g., user input data) from, and/or provide output data (e.g., user output data) to, the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 may be connected to a Global Positioning System (GPS) chipset 1517. The processing system 1518 may be connected to a Global Positioning System (GPS) chipset 1527. The GPS chipset 1517 and the GPS chipset 1527 may be configured to determine and provide geographic location information of the wireless device 1502 and the base station 1504, respectively.

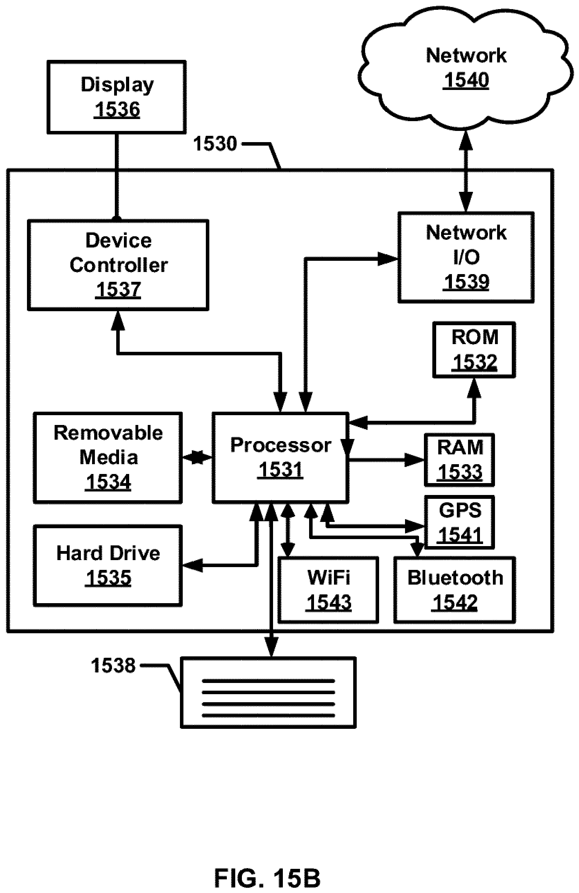

FIG. 15B shows example elements of a computing device that may be used to implement any of the various devices described herein, including, for example, the base station 160A, 160B, 162A, 162B, 220, 1504, 1801, 1901, 2201, 2301, 2601, and/or 2701, the wireless device 106, 156A, 156B, 210, 1502, 1802, 1902, 2202, 2302, 2602, and/or 2702, or any other base station, wireless device, AMF, UPF, network device, or computing device described herein. The computing device 1530 may include one or more processors 1531, which may execute instructions stored in the random access memory (RAM) 1533, the removable media 1534 (such as a Universal Serial Bus (USB) drive, compact disk (CD) or digital versatile disk (DVD), or floppy disk drive), or any other desired storage medium. Instructions may also be stored in an attached (or internal) hard drive 1535. The computing device 1530 may also include a security processor (not shown), which may execute instructions of one or more computer programs to monitor the processes executing on the processor 1531 and any process that requests access to any hardware and/or software components of the computing device 1530 (e.g., ROM 1532, RAM 1533, the removable media 1534, the hard drive 1535, the device controller 1537, a network interface 1539, a GPS 1541, a Bluetooth interface 1542, a WiFi interface 1543, etc.). The computing device 1530 may include one or more output devices, such as the display 1536 (e.g., a screen, a display device, a monitor, a television, etc.), and may include one or more output device controllers 1537, such as a video processor. There may also be one or more user input devices 1538, such as a remote control, keyboard, mouse, touch screen, microphone, etc. The computing device 1530 may also include one or more network interfaces, such as a network interface 1539, which may be a wired interface, a wireless interface, or a combination of the two. The network interface 1539 may provide an interface for the computing device 1530 to communicate with a network 1540 (e.g., a RAN, or any other network). The network interface 1539 may include a modem (e.g., a cable modem), and the external network 1540 may include communication links, an external network, an in-home network, a provider's wireless, coaxial, fiber, or hybrid fiber/coaxial distribution system (e.g., a DOCSIS network), or any other desired network. Additionally, the computing device 1530 may include a location-detecting device, such as a global positioning system (GPS) microprocessor 1541, which may be configured to receive and process global positioning signals and determine, with possible assistance from an external server and antenna, a geographic position of the computing device 1530.

The example in FIG. 15B may be a hardware configuration, although the components shown may be implemented as software as well. Modifications may be made to add, remove, combine, divide, etc. components of the computing device 1530 as desired. Additionally, the components may be implemented using basic computing devices and components, and the same components (e.g., processor 1531, ROM storage 1532, display 1536, etc.) may be used to implement any of the other computing devices and components described herein. For example, the various components described herein may be implemented using computing devices having components such as a processor executing computerexecutable instructions stored on a computer-readable medium, as shown in FIG. 15B. Some or all of the entities described herein may be software based, and may co-exist in a common physical platform (e.g., a requesting entity may be a separate software process and program from a dependent entity, both of which may be executed as software on a common computing device).

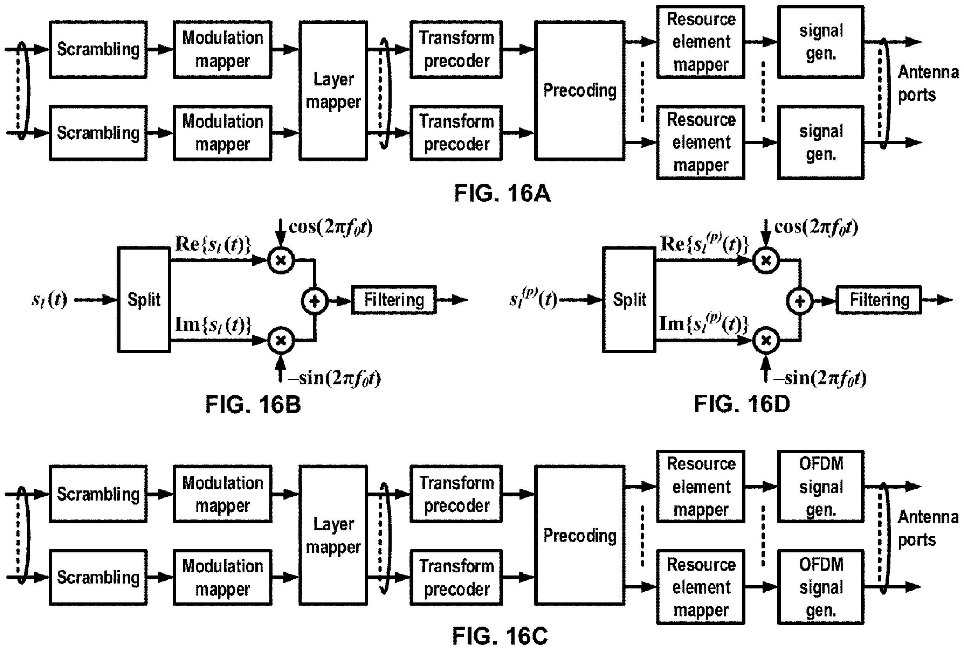

FIG. 16A shows an example structure for uplink transmission. Processing of a baseband signal representing a physical uplink shared channel may comprise/perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA), CP-OFDM signal for an antenna port, or any other signals; and/or the like. An SC-FDMA signal for uplink transmission may be generated, for example, if transform precoding is enabled. A CP-OFDM signal for uplink transmission may be generated, for example, if transform precoding is not enabled (e.g., as shown in FIG. 16A). These functions are examples and other mechanisms for uplink transmission may be implemented.

FIG. 16B shows an example structure for modulation and up-conversion of a baseband signal to a carrier frequency. The baseband signal may be a complex-valued SC-FDMA, CP-OFDM baseband signal (or any other baseband signals) for an antenna port and/or a complex-valued Physical Random Access Channel (PRACH) baseband signal. Filtering may be performed/employed, for example, prior to transmission.

FIG. 16C shows an example structure for downlink transmissions. Processing of a baseband signal representing a physical downlink channel may comprise/perform one or more functions. The one or more functions may comprise: scrambling of coded bits in a codeword to be sent/transmitted on/via a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are examples and other mechanisms for downlink transmission may be implemented.

FIG. 16D shows an example structure for modulation and up-conversion of a baseband signal to a carrier frequency. The baseband signal may be a complex-valued OFDM baseband signal for an antenna port or any other signal. Filtering may be performed/employed, for example, prior to transmission.

A wireless device may receive, from a base station, one or more messages (e.g. RRC messages) comprising configuration parameters of a plurality of cells (e.g., a primary cell, one or more secondary cells). The wireless device may communicate with at least one base station (e.g., two or more base stations in dual-connectivity) via the plurality of cells. The one or more messages (e.g. as a part of the configuration parameters) may comprise parameters of PHY, MAC, RLC, PCDP, SDAP, RRC layers for configuring the wireless device. The configuration parameters may comprise parameters for configuring PHY and MAC layer channels, bearers, etc. The configuration parameters may comprise parameters indicating values of timers for PHY, MAC, RLC, PCDP, SDAP, RRC layers, and/or communication channels.

A timer may begin running, for example, if it is started, and continue running until it is stopped or until it expires. A timer may be started, for example, if it is not running or restarted if it is running. A timer may be associated with a value (e.g., the timer may be started or restarted from a value or may be started from zero and expire if it reaches the value). The duration of a timer may not be updated, for example, until the timer is stopped or expires (e.g., due to BWP switching). A timer may be used to measure a time period/window for a process. With respect to an implementation and/or procedure related to one or more timers or other parameters, it will be understood that there may be multiple ways to implement the one or more timers or other parameters. One or more of the multiple ways to implement a timer may be used to measure a time period/window for the procedure. A random access response window timer may be used for measuring a window of time for receiving a random access response. The time difference between two time stamps may be used, for example, instead of starting a random access response window timer and determine the expiration of the timer. A process for measuring a time window may be restarted, for example, if a timer is restarted. Other example implementations may be configured/provided to restart a measurement of a time window.

A base station may transmit one or more MAC PDUs to a wireless device. A MAC PDU may be a bit string that is byte aligned (e.g., aligned to a multiple of eight bits) in length. In an example, bit strings may be represented by tables in which the most significant bit is the leftmost bit of the first line of the table, and the least significant bit is the rightmost bit on the last line of the table. More generally, the bit string may be read from left to right and then in the reading order of the lines. The bit order of a parameter field within a MAC PDU is represented with the first and most significant bit in the leftmost bit and the last and least significant bit in the rightmost bit. A MAC SDU may be a bit string that is byte aligned (e.g., aligned to a multiple of eight bits) in length. A MAC SDU may be included in a MAC PDU from the first bit onward. A MAC CE may be a bit string that is byte aligned (e.g., aligned to a multiple of eight bits) in length. A MAC subheader may be abit string that is byte aligned (e.g., aligned to a multiple of eight bits) in length. A MAC subheader may be placed immediately in front of a corresponding MAC SDU, MAC CE, or padding. A MAC entity may ignore a value of reserved bits in a DL MAC PDU.

A MAC PDU may comprise one or more MAC subPDUs. A MAC subPDU of the one or more MAC subPDUs may comprise: a MAC subheader only (including padding); a MAC subheader and a MAC SDU; a MAC subheader and a MAC CE; a MAC subheader and padding, or a combination thereof. The MAC SDU may be of variable size. A MAC subheader may correspond to a MAC SDU, a MAC CE, or padding.

When a MAC subheader corresponds to a MAC SDU, a variable-sized MAC CE, or padding, the MAC subheader may comprise: a Reserve field (R field) with a one bit length; an Format field (F field) with a one-bit length; a Logical Channel Identifier (LCID) field with a multi-bit length; a Length field (L field) with a multi-bit length, indicating the length of the corresponding MAC SDU or variable-size MAC CE in bytes, or a combination thereof. In an example, F field may indicate the size of the L field.

A MAC entity of the base station may transmit one or more MAC CEs (e.g., MAC CE commands) to a MAC entity of a wireless device. The one or more MAC CEs may comprise at least one of: a SP ZP CSI-RS Resource Set Activation/Deactivation MAC CE, a PUCCH spatial relation Activation/Deactivation MAC CE, a SP SRS Activation/Deactivation MAC CE, a SP CSI reporting on PUCCH Activation/Deactivation MAC CE, a TCI State Indication for UE-specific PDCCH MAC CE, a TCI State Indication for UE-specific PDSCH MAC CE, an Aperiodic CSI Trigger State Subselection MAC CE, a SP CSI-RS/CSI-IM Resource Set Activation/Deactivation MAC CE, a UE contention resolution identity MAC CE, a timing advance command MAC CE, a DRX command MAC CE, a Long DRX command MAC CE, an SCell activation/deactivation MAC CE (1 Octet), an SCell activation/deactivation MAC CE (4 Octet), and/or a duplication activation/deactivation MAC CE. A MAC CE, such as a MAC CE transmitted by a MAC entity of the base station to a MAC entity of the wireless device, may have an LCID in the MAC subheader corresponding to the MAC CE. A first MAC CE may have a first LCID in the MAC subheader that may be different than the second LCID in the MAC subheader of a second MAC CE. For example, an LCID given by 111011 in a MAC subheader may indicate that the MAC CE associated with the MAC subheader is a long DRX command MAC CE.

The MAC entity of the wireless device may transmit to the MAC entity of the base station one or more MAC CEs. The one or more MAC CEs may comprise at least one of: a short buffer status report (BSR) MAC CE, a long BSR MAC CE, a C-RNTI MAC CE, a configured grant confirmation MAC CE, a single entry PHR MAC CE, a multiple entry PHR MAC CE, a short truncated BSR, and/or a long truncated BSR. A MAC CE may have an LCID in the MAC subheader corresponding to the MAC CE. A first MAC CE may have a first LCID in the MAC subheader that may be different than the second LCID in the MAC subheader of a second MAC CE. For example, an LCID given by 111011 in a MAC subheader may indicate that a MAC CE associated with the MAC subheader is a short-truncated command MAC CE.

In carrier aggregation (CA), two or more component carriers (CCs) may be aggregated. The wireless device may, using the technique of CA, simultaneously receive or transmit on one or more CCs, depending on capabilities of the wireless device. In an example, the wireless device may support CA for contiguous CCs and/or for non-contiguous CCs. CCs may be organized into cells. For example, CCs may be organized into one primary cell (PCell) and one or more secondary cells (SCells). When configured with CA, the wireless device may have one RRC connection with a network. During an RRC connection establishment/re-establishment/handover, a cell providing NAS mobility information may be a serving cell. During an RRC connection re-establishment/handover procedure, a cell providing a security input may be the serving cell. The serving cell may be a PCell. For example, the base station may transmit, to the wireless device, one or more messages (e.g., one or more downlink signals). The one or more messages may comprise one or more RRC messages, for example, one or more RRC configuration/reconfiguration messages. For example, the one or more RRC messages may comprise one or more configuration parameters (e.g., one or more RRC configuration parameters).

The one or more configuration parameters may comprise configuration parameters of a plurality of one or more SCells, depending on capabilities of the wireless device. When configured with CA, the base station and/or the wireless device may employ an activation/deactivation mechanism of an SCell to improve battery or power consumption of the wireless device. When the wireless device is configured with one or more SCells, the base station may activate or deactivate at least one of the one or more SCells. Upon configuration of an SCell, the SCell may be deactivated unless the SCell state associated with the SCell is set to "activated" or "dormant." The wireless device may activate/deactivate an SCell, for example, based on (e.g., in response to) receiving the SCell Activation/Deactivation MAC CE.

For example, the base station may configure (e.g., via the one or more RRC messages parameters) the wireless device with uplink (UL) bandwidth parts (BWPs) and downlink (DL) BWPs to enable bandwidth adaptation (BA) on a PCell. If carrier aggregation (CA) is configured, the base station may further configure the wireless device with at least one DL BWP (e.g., there may be no UL BWP in the UL) to enable BA on an SCell. For the PCell, an initial active BWP may be a first BWP used for initial access. In paired spectrum (e.g., FDD), the base station and/or the wireless device may independently switch a DL BWP and an UL BWP. In unpaired spectrum (e.g., TDD), the base station and/or the wireless device may simultaneously switch a DL BWP and an UL BWP.

A serving cell may be a cell (e.g., PCell, SCell, PSCell, etc.) on which the wireless device may receive SSB/CSI-RS/PDCCH/PDSCH and/or may transmit PUCCH/PUSCH/SRS etc. The serving cell may be identified, for example, by a serving cell index (e.g., ServCellIndex or SCellIndex configured/indicated by the one or more configuration parameters). For a wireless device in RRC_CONNECTED not configured with CA/DC, there may only be one serving cell comprising a primary cell. For a wireless device in RRC_CONNECTED configured with CA/DC the term 'serving cells' may be used to denote a set of cells comprising of the Special Cell(s) and one or more (e.g., all) secondary cells. For a wireless device configured with CA, a cell providing additional radio resources on top of Special Cell may be referred to as a secondary cell.

A non-serving (or neighbor) cell may be a cell on which the wireless device may not receive MIBs/SIBs/PDCCH/PDSCH and/or may not transmit PUCCH/PUSCH/SRS. The non-serving cell may have a physical cell identifier (PCI), which may be different from a PCI of a serving cell. The non-serving cell may not be identified by (or associated with) a serving cell index (e.g., ServCellIndex or SCellIndex). The wireless device may rely on an SSB of a non-serving cell for Tx/Rx beam (or spatial domain filter) determination (e.g., for PDCCH/PDSCH/PUCCH/PUSCH/CSI-RS/SRS for a serving cell), for example, if a TCI state of the serving cell may be associated with (e.g., in TCI-state IE of TS 38.331) a SSB of the non-serving cell. The base station may not transmit configuring resources/parameters of PDCCH/PDSCH/PUCCH/PUSCH/SRS of a non-serving cell to the wireless device.

In an example, the base station and/or the wireless device may switch a BWP between configured BWPs by means of a DCI or a BWP invalidity timer. When the BWP invalidity timer is configured for the serving cell, the base station and/or the wireless device may switch the active BWP to a default BWP, for example, based on (e.g., in response to) the expiry of the BWP invalidity timer associated with the serving cell. The default BWP may be configured by the network. In an example, for FDD systems, when configured with BA, one UL BWP for each uplink carrier and one DL BWP may be active at a time in the active serving cell. In an example, for TDD systems, one DL/UL BWP pair may be active at a time in the active serving cell. Operating on one UL BWP and one DL BWP (or the one DL/UL pair) may improve the wireless device battery consumption. One or more BWPs other than the active UL BWP and the active DL BWP which the wireless device may work on, may be deactivated. On the deactivated one or more BWPs, the wireless device may: not monitor PDCCH; and/or not transmit on PUCCH, PRACH, and UL-SCH. In an example, the MAC entity of the wireless device may apply normal operations on the active BWP for an activated serving cell configured with a BWP comprising: sending (e.g., transmitting) on UL-SCH; sending (e.g., transmitting) on RACH; monitoring a PDCCH; sending (e.g., transmitting) PUCCH; receiving DL-SCH; and/or (re-)initializing any suspended configured uplink grants of configured grant Type 1 according to a stored configuration, if any. On the inactive/idle BWP for each activated serving cell configured with a BWP, the MAC entity of the wireless device may: not transmit on UL-SCH; not transmit on RACH; not monitor a PDCCH; not transmit PUCCH; not transmit SRS, not receive DL-SCH; clear any configured downlink assignment and configured uplink grant of configured grant Type 2; and/or suspend any configured uplink grant of configured Type 1.

A DCI addressed to an RNTI may comprise a CRC of the DCI being scrambled with the RNTI. The wireless device may monitor PDCCH addressed to (or for) the RNTI for detecting the DCI. For example, the PDCCH may carry (or be with) the DCI. The PDCCH may not carry the DCI.

A set of PDCCH candidates for the wireless device to monitor is defined in terms of one or more search space sets. A search space set may comprise a common search space (CSS) set or a UE-specific search space (USS) set. The wireless device may monitor one or more PDCCH candidates in one or more of the following search space sets (e.g., one or more search space sets): a Type0-PDCCH CSS set configured by *pdcch-ConfigSIB1* in *MIB* or by *searchSpaceSIB1* in *PDCCH ConfigCommon* or by *searchSpaceZero* in *PDCCH-ConfigCommon* for a DCI format with CRC scrambled by a SI-RNTI on the primary cell of the MCG, a Type0A-PDCCH CSS set configured by *searchSpace-OtherSystemInformation* in *PDCCH-ConfigCommon* for a DCI format with CRC scrambled by the SI-RNTI on the primary cell of the MCG, a Type1-PDCCH CSS set configured by *ra-SearchSpace* in *PDCCH-ConfigCommon* for a DCI format with CRC scrambled by a RA-RNTI, a MSGB-RNTI, or a TC-RNTI on the primary cell, a Type2-PDCCH CSS set configured by *pagingSearchSpace* in *PDCCH-ConfigCommon* for a DCI format with CRC scrambled by a P-RNTI on the primary cell of the MCG, a Type3-PDCCH CSS set configured by *SearchSpace* in *PDCCH-Config* with *searchSpace-Type* = *common* for DCI formats with CRC scrambled by a INT-RNTI, a SFI-RNTI, a TPC-PUSCH-RNTI, a TPC-PUCCH-RNTI, a TPC-SRS-RNTI, a CI-RNTI, or a power saving RNTI (PS-RNTI) and, only for the primary cell, a C-RNTI, a MCS-C-RNTI, or a CS-RNTI(s), and the USS set configured by *SearchSpace* in PDCCHConfig with *searchSpaceType = ue-Specific* for DCI formats with CRC scrambled by the C-RNTI, the MCS-C-RNTI, a SP-CSI-RNTI, the CS-RNTI(s), a SL-RNTI, a SL-CS-RNTI, or a SL-L-CS-RNTI.

In an example, the wireless device may monitor PDCCH candidates according to one or more configuration parameters of the search space set. For example, the search space set may comprise a plurality of search spaces (SSs). The wireless device may monitor the one or more PDCCH candidates in one or more CORESETs for detecting one or more DCIs. Monitoring the one or more PDCCH candidates may comprise decoding at least one PDCCH candidate of the one or more PDCCH candidates according to the monitored DCI formats. For example, monitoring the one or more PDCCH candidates may comprise decoding (e.g., blind decoding) a DCI content of the at least one PDCCH candidate via possible (or configured) PDCCH location(s), possible (or configured) PDCCH format(s) (e.g., number of CCEs, number of PDCCH candidates in CSS set(s), and/or number of PDCCH candidates in the USS(s), and/or possible (or configured) DCI format(s).

The wireless device may receive the C-RNTI (e.g., via one or more previous transmissions) from the base station. For example, the one or more previous transmissions may comprise a Msg2 1312, Msg4 1314, or a MsgB 1332. The wireless device may monitor the one or more PDCCH candidates for DCI format 0_0 and DCI format 1_0 with CRC scrambled by the C-RNTI in the Type1-PDCCH CSS set, for example, if the wireless device is not provided the Type3-PDCCH CSS set or the USS set and if provided the Type1-PDCCH CSS set.

The one or more search space sets may correspond to one or more search parameters. For example, the one or more search space sets may correspond to one or more of *searchSpaceZero, searchSpaceSIB1, searchSpaceOtherSystemInformation, pagingSearchSpace, ra-SearchSpace,* and the C-RNTI, the MCS-C-RNTI, or the CS-RNTI. The wireless device may monitor the one or more PDCCH candidates for the DCI format 0_0 and the DCI format 1_0 with CRC scrambled by the C-RNTI, the MCS-C-RNTI, or the CS-RNTI in the one or more search space sets in a slot where the wireless device monitors the one or more PDCCH candidates for at least the DCI format 0_0 or the DCI format 1_0 with CRC scrambled by the SI-RNTI, the RA-RNTI, the MSGB-RNTI, or the P-RNTI.

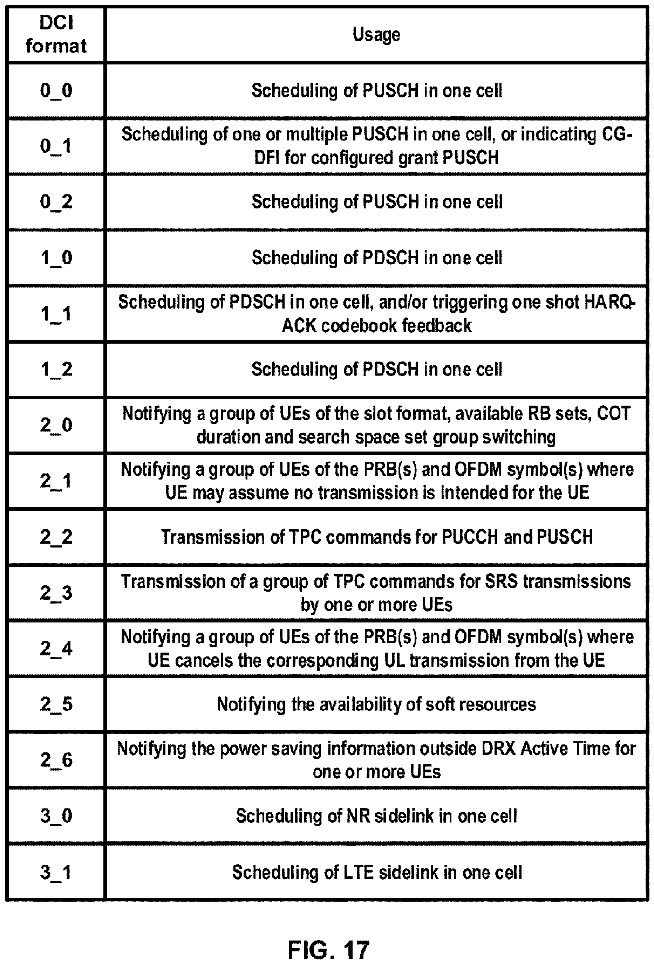

FIG. 17 shows examples of various DCI formats. The various DCI formats may be used, for example, by a base station to send (e.g., transmit) control information (e.g., downlink control information) to, for example, the wireless device. The DCI formats may be used for PDCCH monitoring. Different DCI formats may comprise different DCI fields and/or have different DCI payload sizes. Different DCI formats may have different signaling purposes. As shown in FIG. 17, DCI format 0_0 may be used to schedule PUSCH transmission in one cell. DCI format 0_1 may be used to schedule one or multiple PUSCH transmissions in one cell and/or to indicate configured grant-downlink feedback information (CG-DFI) for configured grant PUSCH transmission, etc.

A wireless device may support processing time/capability. For example, the wireless device may support a baseline processing time/capability. For example, the wireless device may support additional aggressive/faster processing time/capability. A wireless device may report to a base station a processing capability, for example, processing capability per sub-carrier spacing. For example, a PDSCH processing time may be considered to determine, by a wireless device, a first uplink symbol of a PUCCH. The PUCCH may comprise HARQ-ACK information of the PDSCH scheduled by DCI. The wireless device may determine the PDSCH processing time, for example, at least based on a HARQ-ACK timing K1 and one or more PUCCH resources to be used and including the effect of the timing advance. For example, the first uplink symbol of the PUCCH may not start earlier than a time gap (e.g., $T_{proc,1}$) after a last symbol of the PDSCH reception associated with the HARQ-ACK information. For example, the first uplink symbol of the PUCCH which carries the HARQ-ACK information may start no earlier than at symbol L1, where L1 is defined as the next uplink symbol with its Cyclic Prefix (CP) starting after the time gap $T_{proc,1}$ after the end of the last symbol of the PDSCH.

A PUSCH preparation/processing time may be considered for determining transmission time of UL data. For example, a wireless device may perform transmitting a PUSCH, for example, if a first uplink symbol in the PUSCH allocation for a transport block (including DM-RS) is no earlier than at symbol L2. For example, a wireless device may determine the symbol L2, for example, at least based on a slot offset (e.g., K2), SLIV of the PUSCH allocation indicated by time domain resource assignment of a scheduling DCI. For example, the symbol L2 may be specified as the next uplink symbol with its CP starting after a time gap with length $T_{proc,2}$ after the end of the reception of the last symbol of the PDCCH carrying the DCI scheduling the PUSCH.

A wireless device may monitor a set of PDCCH candidates according to configuration parameters of a search space set comprising a plurality of search spaces (SSs). The wireless device may monitor a set of PDCCH candidates in one or more CORESETs for detecting one or more DCIs. The one or more configuration parameters may configure the one or more CORESETs. Monitoring (e.g., of the PDCCH) may comprise decoding one or more PDCCH candidates of the set of the PDCCH candidates according to monitored DCI formats. Monitoring (e.g., of the PDCCH) may comprise decoding a DCI content of one or more PDCCH candidates with possible (or configured) PDCCH locations, possible (or configured) PDCCH formats (e.g., number of CCEs, number of PDCCH candidates in common SSs, and/or number of PDCCH candidates in the UE-specific SSs) and/or possible (or configured) DCI formats (e.g., FIG. 17). The decoding (e.g., of the PDCCH) may be a blind decoding. The one or more configuration parameters may configure the wireless device with DCI format(s) by which the wireless device may monitor the PDCCH in an SS of the plurality of SSs.

The one or more configuration parameters may comprise a configuration parameters of a master information block (MIB) of a cell (e.g., PCell). The wireless device may receive the MIB via a PBCH. The configuration parameters of the MIB may comprise six bits (*systemFrameNumber*) of system frame number (SFN), subcarrier spacing indication (*subCarrierSpacingCommon*), a frequency domain offset (*ssb-SubcarrierOffset*) between SSB and overall resource block grid in number of subcarriers, an indication (*cellBαrred*) indicating whether the cell is bared, a DMRS position indication (*dmrs-TypeA-Position*) indicating position of DMRS, parameters of CORESET and SS of a PDCCH (*pdcch-ConfigSIB1)* comprising a common CORESET, a common search space and necessary PDCCH parameters, etc.

The one or more configuration parameters may comprise configuration parameters (e.g., a pdcch-ConfigSIB1) for configuring a CORESET#0 and/or a search space with ID #0. In an example, the pdcch-ConfigSIB1 may comprise a first parameter (e.g., *controlResourceSetZero*) indicating a common *ControlResourceSet* (CORESET) with ID #0 (e.g., CORESET#0) of an initial BWP of the cell. *controlResourceSetZero* may be an integer between 0 and 15. Each integer between 0 and 15 may identify a configuration of CORESET#0. Based on a value of the integer of *controlResource-SetZero,* the wireless device may determine a SSB and CORESET#0 multiplexing pattern, a number of RBs for CORESET#0, a number of symbols for CORESET#0, an RB offset for CORESET#0.

The *pdcch-ConfigSIB1* may comprise a second parameter (e.g., *searchSpaceZero*) indicating a common search space with ID #0 (e.g., SS#0) of the initial BWP of the cell. For example, *searchSpaceZero* may be an integer between 0 and 15. Each integer between 0 and 15 may identify a configuration of SS#0. Based on a value of the integer of *searchSpaceZero,* the wireless device may determine one or more parameters (e.g., O, M) for slot determination of PDCCH monitoring, a first symbol index for PDCCH monitoring and/or a number of search spaces per slot.

The wireless device may monitor PDCCH via SS#0 of CORESET#0 for receiving a DCI scheduling a system information block 1 (SIB1), for example, based on receiving the MIB. The wireless device may receive the DCI with CRC scrambled with a system information radio network temporary identifier (SI-RNTI) dedicated for receiving the SIB1.

A SIB (e.g., SIB 1) may be transmitted to all wireless devices in a broadcast way. The SIB may contain information relevant when evaluating if a wireless device is allowed to access a cell, information of paging configuration and/or scheduling configuration of other system information. A SIB may contain radio resource configuration information that is common for all wireless devices and barring information applied to a unified access control. In an example, a base station may transmit to the wireless device (or a plurality of wireless devices) one or more SIB information. The one or more configuration parameters may comprise parameters of the one or more SIB information. For example, parameters of the one or more SIB information may comprise: one or more parameters (e.g., *cellSelectionInfo*) for cell selection related to a serving cell; and/or one or more configuration parameters of a serving cell (e.g., in *ServingCellConfigCommonSIB* IE); and/or one or more other parameters. The *ServingCellConfigCommonSIB* IE may comprise at least one of: common downlink parameters (e.g., in *DownlinkConfigCommonSIB* IE) of the serving cell; and/or common uplink parameters (e.g., in *UplinkConfigCommonSIB* IE) of the serving cell; and/or and other parameters.

A *DownlinkConfigCommonSIB* IE may comprise parameters of an initial downlink BWP *(initialDownlinkBWP* IE) of the serving cell (e.g., SpCell). The parameters of the initial downlink BWP may be comprised in a *BWP-Downlink-Common* IE. The *BWP-DownlinkCommon* IE may be used to configure common parameters of a downlink BWP of the serving cell. The base station may configure the *locationAndBandwidth* for the wireless device so that the initial downlink BWP contains the entire CORESET#0 of this serving cell in the frequency domain. The wireless device may apply the *locationAndBandwidth* upon reception of this field (e.g., to determine the frequency position of signals described in relation to this *locationAndBandwidth*) but it keeps CORESET#0 until after reception of *RRCSetup*/*RRCResume*/*RRCReestablishment.*

The *DownlinkConfigCommonSIB* IE may comprise parameters of a paging channel configuration. The parameters may comprise a paging cycle value (T, by *defaultPagingCycle* IE), a parameter (*nAndPagingFrameOffset* IE) indicating total number N) of paging frames (PFs) and paging frame offset (*PF offset*) in a paging DRX cycle, a number (Ns) for total paging occasions (POs) per PF, a first PDCCH monitoring occasion indication parameter (*firstPDCCH-MonitoringOccasionofPO* IE) indicating a first PDCCH monitoring occasion for paging of each PO of a PF. The wireless device, based on parameters of a PCCH configuration, may monitor PDCCH for receiving paging message.

The parameter first-PDCCH*MonitoringOccasionOfPO* may be signaled in SIB 1 for paging in initial DL BWP. For paging in a DL BWP other than the initial DL BWP, the parameter first-PDCCH*MonitoringOccasionOfPO* may be signaled in the corresponding BWP configuration.

The one or more configuration parameters may comprise one or more BWP configuration parameters. The one or more BWP configuration parameters may configure a downlink BWP of a serving cell (e.g., *BWP-DownlinkCommon* IE). A base station may transmit to the wireless device (or a plurality of wireless devices) one or more configuration parameters of the downlink BWP (e.g., the initial downlink BWP) of a serving cell. The one or more BWP configuration parameters of the downlink BWP may comprise: one or more generic BWP parameters of the downlink BWP, one or more cell specific parameters for PDCCH of the downlink BWP (e.g., in *pdcch-ConfigCommon* IE), one or more cell specific parameters for the PDSCH of this BWP (e.g., in *pdsch-ConfigCommon* IE), and one or more other parameters. A *pdcch-ConfigCommon* IE may comprise parameters of COESET #0 (e.g., *controlResourceSetZero*) which may be used in any common or UE-specific search spaces. A value of the *controlResourceSetZero* may be interpreted like the corresponding bits in MIB pdcch-ConfigSIB1. A *pdcch-ConfigCommon* IE may comprise parameters (e.g., in *common-ControlResourceSet*) of an additional common control resource set which may be configured and used for any common or UE-specific search space. If the network configures this field, it uses a *ControlResourceSetId* other than 0 for this *ControlResourceSet*. The network configures the *commonControlResourceSet* in SIB1 so that it is contained in the bandwidth of CORESET#0. A *pdcch-ConfigCommon* IE may comprise parameters (e.g., in *commonSearchSpaceList*) of a list of additional common search spaces. A *pdcch-ConfigCommon* IE may indicate, from a list of search spaces, a search space for paging (e.g., *pagingSearchSpace*), a search space for random access procedure (e.g., *ra-Search-Space*), a search space for SIB1 message (e.g., *se$\alpha$rchSp$\alpha$ceSIB1*), a common search space#0 (e.g., *searchSpaceZero*), and one or more other search spaces.

A control resource set (CORESET) may be associated with a CORESET index (e.g., *ControlResourceSetId*). A CORESET may be implemented based on example embodiments described above with respect to FIG. 14A and/or FIG. 14B. The CORESET index with a value of 0 may identify a common CORESET configured in *MIB* and in *Serving-CellConfigCommon* (*controlResourceSetZero*) and may not be used in the *ControlResourceSet* IE. The CORESET index with other values may identify CORESETs configured by dedicated signaling or in *SIB1.* The *controlResourceSetId* is unique among the BWPs of a serving cell. A CORESET may be associated with *coresetPoolIndex* indicating an index of a CORESET pool for the CORESET. A CORESET may be associated with a time duration parameter (e.g., *duration*) indicating contiguous time duration of the CORESET in number of symbols.

The one or more configuration parameters may comprise configuration parameters of a CORESET. For example, the configuration parameters of a CORESET may comprise at least one of: frequency resource indication (e.g., *frequencyDomainResources*), a CCE-REG mapping type indicator (e.g., *cce-REG-MappingType*), a plurality of TCI states, an indicator indicating whether a TCI is present in a DCI, and the like. The frequency resource indication, comprising a number of bits (e.g., 45 bits), may indicate frequency domain resources, each bit of the indication corresponding to a group of 6 RBs, with grouping starting from the first RB group in a BWP of a cell (e.g., SpCell, SCell). The first (left-most / most significant) bit may correspond to the first RB group in the BWP, and so on. A bit that is set to 1 may indicate that an RB group, corresponding to the bit, belongs to the frequency domain resource of this CORESET. Bits corresponding to a group of RBs not fully contained in the BWP within which the CORESET is configured may be set to zero.

The one or more configuration parameters may comprise one or more search space configuration parameters. The one or more search space configuration parameters may comprise configuration parameters of one or more SSs (e.g., *SearchSpace* IE). In an example, configuration parameters of a search space (of the one or more SSs) may comprise at least one of: a search space ID (*searchSpaceId*), a control resource set ID (*controlResourceSetId*), a monitoring slot periodicity and offset parameter (*monitoringSlotPeriodicityAndOffset*), a search space time duration value (duration), a monitoring symbol indication (*monitoringSymbolsWithinSlot*), a number of candidates for an aggregation level (*nrofCandidates*)*,* and/or a SS type indicating a common SS type or a UE-specific SS type (*searchSpaceType*). The monitoring slot periodicity and offset parameter may indicate slots (e.g., in a radio frame) and slot offset (e.g., related to a starting of a radio frame) for PDCCH monitoring. The monitoring symbol indication may indicate on which symbol(s) of a slot a wireless device may monitor PDCCH on the SS. The control resource set ID may identify a control resource set on which a SS may be located.

The wireless device, in an RRC idle (e.g., RRC_IDLE or RRC_idle) state/mode or an RRC inactive (e.g., RRC_INACTIVE or RRC_inactive) state/mode, may periodically monitor paging occasions (POs) for receiving paging message for the wireless device. Before monitoring the POs, the wireless device, in RRC_IDLE or RRC_INACTIVE state, may wake up at a time before each PO for preparation and/or turn all components in preparation of data reception (warm up). The gap between the waking up and the PO may be long enough to accommodate all the processing requirements. The wireless device may perform, after the warming up, timing acquisition from SSB and coarse synchronization, frequency and time tracking, time and frequency offset compensation, and/or calibration of local oscillator. After that, the wireless device may monitor a PDCCH for a paging DCI in one or more PDCCH monitoring occasions based on configuration parameters of the PCCH configuration (e.g., configured in SIB 1).

The base station may transmit one or more SSBs periodically to the wireless device, or a plurality of wireless devices. The wireless device (in RRC_idle state, RRC_inactive state, or RRC connected state) may use the one or more SSBs for time and frequency synchronization with a cell of the base station. An SSB, comprising a primary synchronization signal (PSS), a secondary synchronization signal (SSS), a physical broadcast channel (PBCH), a PBCH DM-RS, may be transmitted based on example embodiments described above with respect to FIG. 11A. An SSB may occupy a number (e.g., 4) of OFDM symbols as shown in FIG. 11A. The base station may transmit one or more SSBs in a SSB burst, e.g., to enable beam-sweeping for PSS/SSS and PBCH. An SSB burst comprise a set of SSBs, each SSB potentially be transmitted on a different beam. SSBs in the SSB burst may be transmitted in time-division multiplexing fashion. For example, an SSB burst may be always confined to a 5ms window and is either located in first-half or in the second-half of a 10ms radio frame. In this specification, an SSB burst may be equivalently referred to as a transmission window (e.g., 5ms) in which the set of SSBs are transmitted.

The one or more configuration parameters may configure/indicate a transmission periodicity of SSB via the (e.g., *ssb-PeriodicityServingCell* in *ServingCellConfigCommonSIB* of *SIB1* message). A candidate value of the transmission periodicity may be in a range of {5ms, 10ms, 20ms, 40ms, 80ms, 160ms}. The maximum number of candidate SSBs ($L_{max}$) within an SSB burst depends upon a carrier frequency/band of the cell. In an example, $L_{max}$=4 if $f_c$<=3GHz, wherein $f_c$ is the carrier frequency of the cell. $L_{max}$=8 if 3GHz<$f_c$<=6GHz. $L_{max}$=64 if $f_c$>=6GHz, etc.

A starting OFDM symbol index of a candidate SSB (occupying 4 OFDM symbols) within a SSB burst (5ms) may depend on a subcarrier spacing (SCS) and a carrier frequency band of the cell. Starting OFDM symbol indexes of SSBs in a SSB burst, for a cell configured with 15 kHz and carrier frequency fc<3GHz ($L_{max}$=4), are 2, 8, 16, and 22. OFDM symbols in a half-frame are indexed with the first symbol of the first slot being indexed as 0. Starting OFDM symbol indexes of SSBs in a SSB burst, for a cell configured with 15 kHz and carrier frequency 3GHz<fc<6GHz ($L_{max}$=8), are 2, 8, 16, 22, 30, 36, 44 and 50, etc. In an example, when the base station is not transmitting the SSBs with beam forming, the base station may transmit only one SSB by using the first SSB starting position.

The base station may transmit to the wireless device (or a plurality of wireless devices) an SSB burst in a periodicity. A default periodicity of an SSB burst may be 20 ms, e.g., before the wireless device receives the SIB 1 message for initial access of the cell. The base station, with 20 ms transmission periodicity of SSB (or SSB burst), may transmit the SSB burst in the first 5 ms of each 20 ms. The base station may not transmit the SSB burst in the rest 15 ms of the each 20 ms. The base station may transmit a MIB message with a transmission periodicity of 80 millisecond (ms) to the wireless device. The same MIB message may be repeated (according to the SSB periodicity) within the 80 ms. Contents of the MIB message are same over 80 ms period. The same MIB is transmitted over all SSBs within an SS burst. In an example, PBCH may indicate that there is no associated SIB1, in which case the wireless device may be pointed to another frequency from where to search for an SSB that is associated with a SIB1 as well as a frequency range where the wireless device may assume no SSB associated with SIB 1 is present. The indicated frequency range may be confined within a contiguous spectrum allocation of the same operator in which SSB is detected.

The one or more configuration parameters may (e.g., via SIB 1) indicate/comprise cell specific configuration parameters of SSB transmission. The cell specific configuration parameters may comprise a value for a transmission periodicity (ssb-PeriodicityServingCell) of an SSB burst, locations of a number of SSBs (e.g., active SSBs), of a plurality of candidate SSBs, comprised in the SSB burst. The cell specific configuration parameters may comprise position indication of a SSB in a SSB burst (e.g., ssb-PositionsInBurst). The position indication may comprise a first bitmap (e.g., groupPresence) and a second bitmap (e.g., inOneGroup) indicating locations of a number of SSBs comprised in a SSB burst.

The base station may transmit a SIB1 message with a periodicity of 160 ms. The base station may transmit the same SIB1 message with variable transmission repetition periodicity within 160 ms. A default transmission repetition periodicity of SIB 1 is 20 ms. The base station may determine an actual transmission repetition periodicity based on network implementation. In an example, for SSB and CORESET multiplexing pattern 1, SIB 1 repetition transmission period is 20 ms. For SSB and CORESET multiplexing pattern 2/3, SIB1 transmission repetition period is the same as the SSB period. SIB1 may comprise information regarding the availability and scheduling (e.g., mapping of SIBs to SI message, periodicity, SI-window size) of other SIBs, an indication whether one or more SIBs are only provided on-demand and in which case, configuration parameters needed by a wireless device to perform an SI request. The base station may enable a power saving operation for the wireless device due to limited battery capacity of the wireless device, e.g., based on BWP management, SCell dormancy mechanism, wake-up/go-to-sleep indication, SSSG switching on an active BWP, and/or PDCCH skipping.

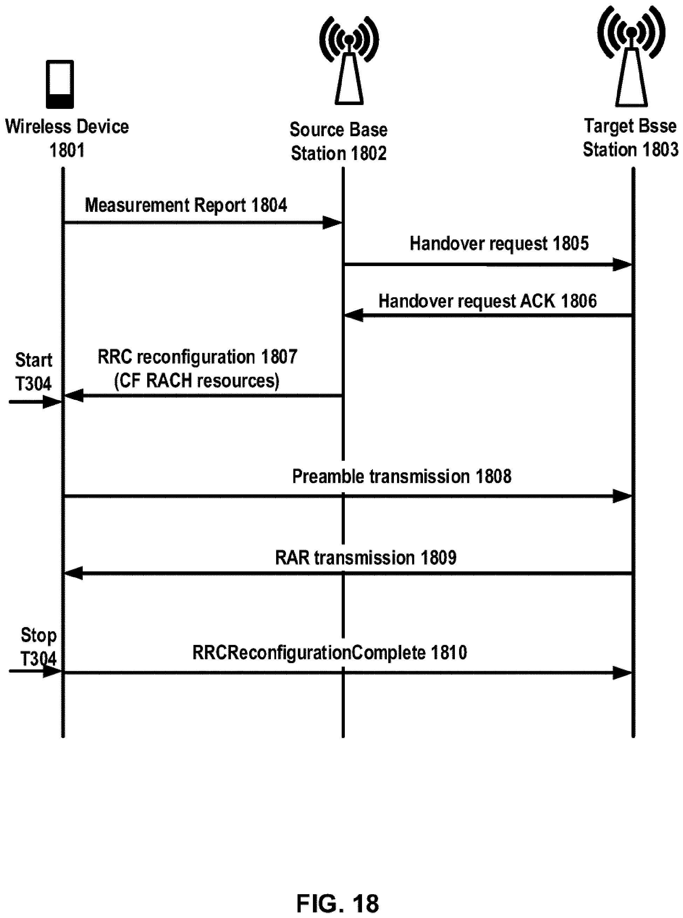

FIG. 18 shows an example of a handover procedure from a source base station 1802 to a target base station 1803 for a wireless device 1801. One or more configuration parameters may comprise an RRC reconfiguration message (e.g., *RRCReconfiguration*). The RRC reconfiguration message may be an RRC connection reconfiguration message. The RRC reconfiguration messages may comprise *reconfigurationWithSync* (in NR specifications, e.g., 3GPP Technical Specification (TS) 38.331) and/or *mobilityControlInfo* in LTE specifications (e.g., 3GPP Technical Specification (TS) 36.331). The SCell(s) may be changed, for example, using the RRC connection reconfiguration message either with or without the *reconfigurationWithSync* or *mobilityControlInfo.* For example, the base station may transmit the RRC reconfiguration messages to the wireless device 1801 (or each wireless device of a plurality of wireless devices) in a source cell to indicate a handover to a target/neighbor cell. In an example, for/via a network-controlled mobility procedure (e.g., the handover procedure) in an RRC_CONNECTED state of the wireless device 1801, the source cell (e.g., PCell) may be changed using the RRC connection reconfiguration message. In this specification, a handover triggered by receiving the RRC reconfiguration message (e.g., *RRCReconfiguration*) comprising the handover command/message (e.g., by including *reconfigurationWithSync* (in NR specifications) or *mobilityControlInfo* in LTE specifications (handover)) may be referred to as a normal handover , an unconditional handover , which is contrast with a conditional handover (CHO). The handover procedure shown in FIG. 18 may be RACH-based handover procedure.

As described with respect to FIG. 18, the network (e.g., the base station) may configure the wireless device 1801 to perform measurement reporting (possibly including the configuration of measurement gaps). The measurement reporting may be a layer 3 reporting, different from layer 1 CSI reporting. The wireless device 1801 may transmit one or more measurement reports to the source base station 1802 (or a source PCell). For example, the network may initiate handover blindly, for example without having received measurement reports from the wireless device 1801. Before sending the handover message to the wireless device 1801, the source base station 1802 may prepare candidate target cells. The source base station 1802 may select a candidate target cell (e.g., a candidate target PCell) of the candidate target cells.

For example, based on the one or more measurement reports from the wireless device 1801, the source base station 1802 may provide the target base station 1803 with a list of best cells (e.g., the candidate target cells) on each frequency for which measurement information is available, for example, in order of decreasing RSRP values. The source base station 1802 may also include available measurement information for the candidate target cells (e.g., provided in the list of the best cells). The target base station 1803 may decide which cells are configured for use after handover, which may include cells other than the ones indicated by the source base station 1802 . For example, the source base station 1802 may transmit a handover request to the target base station 1803 . The target base station 1803 may response with a handover message. In an example, in the handover message, the target base station 1803 may indicate access stratum configuration to be used in the target cell(s) for the wireless device 1801.

The source base station 1802 may transparently (for example, does not alter values/content) forward the handover message/information received from the target base station 1803 to the wireless device 1801. The handover message may configure/indicate RACH resource configurations for the wireless device 1801 to access (e.g., via initiating an RA) a cell in the target base station. When appropriate, the source base station 1802 may initiate data forwarding for (a subset of) the dedicated radio bearers.

After receiving the handover message, the wireless device 1801 may start a handover timer (e.g., T304) with an initial timer value. The handover message may configure the handover timer (e.g., the handover message may indicate the initial timer value of the handover timer). Based on the handover message, the wireless device 1801 may apply the RRC parameters of the target PCell and/or a cell group (MCG/SCG) associated with the target PCell of the target base station. For example, the wireless device 1801 may, based on the handover message, perform downlink synchronization to the target base station. After or in response to performing downlink synchronization (e.g., searching a suitable/detectable SSB from candidate SSBs configured on the target base station) to the target base station, the wireless device 1801 may initiate a random access (e.g., contention-free, or contention-based, based on examples of FIG. 13A, FIG. 13B and/or FIG. 13C) procedure, e.g., for attempting to access the target base station and/or UL synchronization to the target cell. For example, the wireless device 1801 may perform the RA procedure (e.g., a 4-step RA procedure or a 2-step RA procedure) via an available RACH occasion according to a RACH resource selection. For example, the available RACH occasion may be configured in the RACH resource configuration (e.g., indicated by the handover message). When allocating a dedicated preamble for the random access in the target base station, RAN may ensure the preamble is available from the first RACH occasion the wireless device 1801 may use.

The wireless device 1801 may activate the uplink BWP configured with *firstActiveUplinkBWP-id* and the downlink BWP configured with *firstActiveDownlinkBWP-id* on the target PCell upon performing handover to the target PCell. Performing UL synchronization may comprise transmitting a preamble via an active uplink BWP (e.g., a BWP configured as *firstActive UplinkBWP-id*) of uplink BWPs of the target cell (e.g., the target PCell), monitoring PDCCH on an active downlink BWP (e.g., a BWP configured as *firstActiveDownlinkBWP-id*) for receiving a RAR (e.g., comprising a TA value for transmission of UL signals, e.g., PUSCH/PUCCH, via the target cell) via the target cell. For example, the wireless device may receive the RAR from the target base station and obtain the TA of the target cell. The wireless device, by using the TA of the target cell, adjust uplink transmission timing for transmitting PUSCH/PUCCH via the target cell. The adjusting uplink transmission timing may comprise advancing or delay the transmissions (in the UL frame) by an amount indicated by a value of the TA of the target cell, e.g., to ensure the uplink signals received at the target base station are aligned (in time domain) with uplink signals transmitted from other wireless devices in the target cell. The wireless device 1801 may, in response to performing UL synchronization or successfully completing the RA procedure in the target cell, release RRC configuration parameters of the source cell and an MCG/SCG associated with the source cell.

As described with respect to FIG. 18, the wireless device 1801 may transmit a preamble (e.g., PRACH) to the target base station via a RACH resource/occasion. The RACH resource may be selected from a plurality of RACH resources (e.g., configured in rach-ConfigDedicated IE) based on SSBs/CSI-RSs measurements of the target base station. The wireless device 1801 may select a (best) SSB/CSI-RS of the configured SSBs/CSI-RSs of the target base station. The wireless device 1801 may select an SSB/CSI-RS, from the configured SSBs/CSI-RSs of the target base station, with a RSRP value greater than a RSRP threshold configured for the RA procedure. The wireless device 1801 may determine a RACH occasion (e.g., time domain resources, etc.) associated with the selected SSB/CSI-RS and determine the preamble associated with the selected SSB/CSI-RS.

The target base station may receive the preamble transmitted from the wireless device 1801. The target base station may transmit an RAR to the wireless device 1801. The RAR may correspond to the preamble transmitted by the wireless device 1801. The RAR may further comprise a TAC MAC CE (e.g., for indicating the TA value of the target cell) to be used for uplink transmission via the target cell. In response to receiving the RAR corresponding to (or comprising) the preamble transmitted by the wireless device 1801 on/via the target cell, the wireless device 1801 may successfully complete the random access procedure. Based on (e.g., in response to) successfully completing the random access procedure, the wireless device 1801 may stop the handover timer (T304). The wireless device 1801 may, after completing the random access procedure, transmit an RRC reconfiguration complete message to the target base station. In some implementations, wireless device 1801 may, before completing the random access procedure, send (e.g., transmit) the RRC reconfiguration complete message to the target base station. The wireless device 1801, after completing the random access procedure towards the target base station, may apply first parts of CQI reporting configuration, SR configuration and/or SRS configuration that do not require the wireless device 1801 to know a system frame number (SFN) of the target base station. The wireless device 1801, after completing the random access procedure towards the target PCell, may apply second parts of measurement and radio resource configuration that require the wireless device 1801 to know the SFN of the target base station (e.g., measurement gaps, periodic CQI reporting, SR configuration, SRS configuration), upon acquiring the SFN of the target base station.

The RRC reconfiguration message (e.g., RRCReconfiguration-IEs) may indicate information for measurement configuration, mobility control, radio resource configuration (including RBs, MAC main configuration and physical channel configuration) and AS security configuration. The RRC reconfiguration message may comprise a configuration of a master cell group (masterCellGroup). The master cell group may be associated with a SpCell (SpCellConfig). When the SpCellConfig comprises a reconfiguration with Sync (reconfigurationWithSync), the wireless device 1801 may determine that the SpCell is a target PCell for the HO. The reconfiguration with sync (reconfigurationWithSync) may comprise cell common parameters (spCellConfigCommon) of the target PCell, a RNTI (newUE-Identity) identifying the wireless device 1801 in the target PCell, a value of the handover timer (e.g., T304), a dedicated RACH resource (rach-ConfigDedicated), etc. In an example, a dedicated RACH resource may comprise one or more RACH occasions, one or more SSBs, one or more CSI-RSs, one or more RA preamble indexes, etc.

The reconfigurationWithSync IE may comprise a dedicated RACH resource indicated by a rach-ConfigDedicated IE. The rach-ConfigDedicated IE may comprise a contention free RA resource indicated by a cfra IE. The cfra IE comprises a plurality of occasions indicated by a rach-ConfigGeneric IE, a ssb-perRACH-Occasion IE, a plurality of resources associated with SSB (indicated by a ssb IE) or CSI-RS (indicated by a csirs IE). The ssb-perRACH-Occasion IE indicates a number of SSBs per RACH occasion. The rach-ConfigGeneric IE indicates configuration of CFRA occasions. The wireless device 1801 may ignore preambleReceivedTargetPower, preambleTransMax, powerRampingStep, ra-ResponseWindow signaled within this field and use the corresponding values provided in RACH-ConfigCommon.

The resources (resources IE) comprise the ssb IE, for example, if the plurality of resources for the CFRA configured in the reconfigurationWithSync IE are associated with SSBs. The ssb IE comprises a list of CFRA SSB resources (ssb-ResourceList) and an indication of PRACH occasion mask index (ra-ssb-OccasionMaskIndex). Each of the list of CFRA SSB resources comprises a SSB index, a RA preamble index and etc. The ra-ssb-OccasionMaskIndex indicates a PRACH mask index for RA resource selection. The mask is valid for all SSB resources signaled in ssb-ResourceList.

The resources (resources IE) comprise the csirs IE, for example, if the plurality of resources for the CFRA configured in the reconfigurationWithSync IE are associated with CSI-RSs. The csirs IE comprises a list of CFRA CSI-RS resources (csirs-ResourceList) and a RSRP threshold (rsrp-ThresholdCSI-RS). Each of the list of CFRA CSI-RS resources comprises a CSI-RS index, a list of RA occasions (ra-OccasionList), a RA preamble index and etc.

Executing the handover triggered by receiving the RRC reconfiguration message comprising a reconfigurationWithSync IE may introduce handover latency (e.g., too-late handover), for example, if a wireless device 1801 is moving in a network deployed with multiple small cells (e.g., with hundreds of meters of cell coverage of a cell) and/or in a non-terrestrial network (NTN) with LEO satellites/HAPS. An improved handover mechanism, based on measurement event triggering, is proposed to reduce the handover latency (e.g., via CHO).

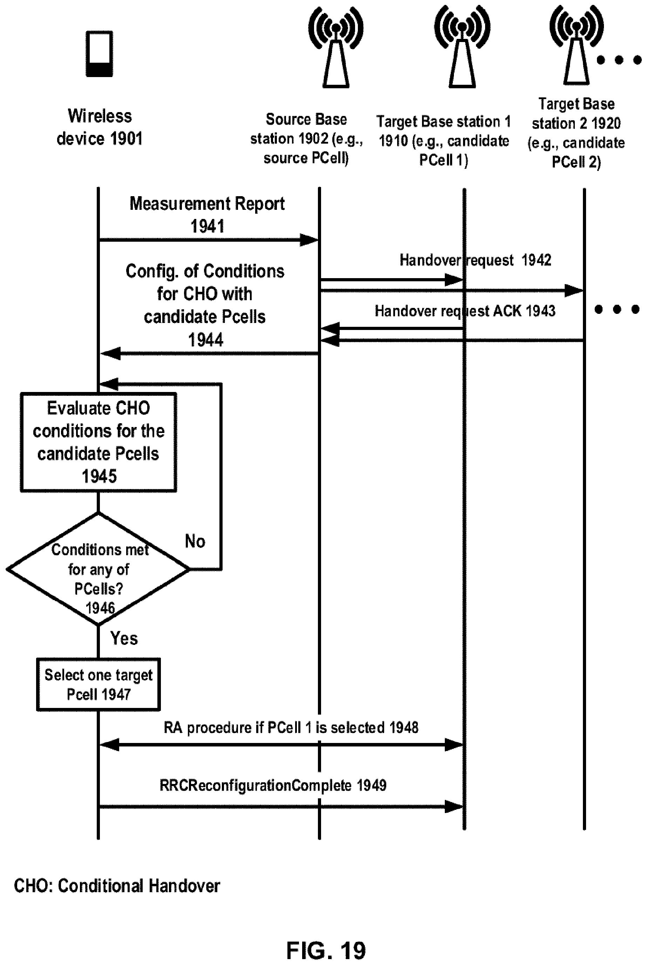

FIG. 19 shows an example of a conditional handover (CHO) procedure. For example, a network (e.g., a base station, a source base station) may configure a wireless device 1901 (e.g., via the one or more configuration parameters), for example, to perform measurement reporting (e.g., the configuration of measurement gaps) for a plurality of neighbor/candidate cells (e.g., cells from a candidate target base station 1 1910, a candidate target base station 2 1920, etc.).

The measurement reporting may be a layer 3 reporting, different from a layer 1 CSI reporting. The wireless device 1901 may send (e.g., transmit) one or more measurement reports 1941 to the source base station 1902 (or source PCell).

As described with respect to FIG. 19, based on the one or more measurement reports 1941 from the wireless device 1901, the source base station 1902 may provide the target base station (e.g., target base station 1 1910 and/or target base station 2 1920) with a list of best/candidate cells on each frequency for which measurement information is available, for example, in order of decreasing RSRP. The source base station 1902 may also include available measurement information for the cells provided in the list. The target base station (e.g., target base station 1 1910 and/or target base station 2 1920) may decide which cells are configured for use after the CHO, which may include cells other than the ones indicated by the source base station. For example, the source base station 1902 may send (e.g., transmit) a handover request 1942 to the target base station (e.g., target base station 1 1910 and/or target base station 2 1920). The target base station (e.g., target base station 1 1910 and/or target base station 2 1920) may response with a handover message. In an example, in the handover message, the target base station (e.g., target base station 1 1910 and/or target base station 2 1920) may indicate access stratum configuration (e.g., RRC configurations of the target cells) to be used in the target cell(s) for the wireless device 1901. For example, the source base station 1902 may transparently (for example, does not alter values/content) forward the handover (e.g., contained in RRC reconfiguration messages of the target base station (e.g., target base station 1 1910 and/or target base station 2 1920)) message/information received from the target base station (e.g., target base station 1 1910 and/or target base station 2 1920) to the wireless device 1901.

The source base station 1902 may configure a CHO procedure that may be different from a normal handover procedure (e.g., as shown in FIG. 18), for example, by comprising a conditional reconfiguration message (e.g., *conditionalReconfiguration* IE in the RRC reconfiguration message). The conditional reconfiguration message may comprise a list of candidate target cells (e.g., PCells), each candidate target cell being associated with dedicated RACH resource(s) for the RA procedure in case a CHO may be executed to/toward/based on the candidate target cell of the candidate cells. The conditional reconfiguration message may configure a CHO execution condition 1944 (or an RRC reconfiguration condition) for each candidate target cell of the candidate target cells. For example, the CHO execution condition 1944 may comprise a measurement event A3 where a candidate target cell becomes amount of offset better than the current cell, a measurement event A4 where a candidate target cell becomes better than absolute threshold configured in the RRC reconfiguration message, a measurement event A5 where the current cell becomes worse than a first absolute threshold and a candidate target cell becomes better than a second absolute threshold, etc.

As described with respect to FIG. 19, the wireless device 1901 may evaluate the (RRC) reconfiguration conditions 1945 for the list of candidate target cells and/or the current/source cell, for example, based on the received RRC reconfiguration messages comprising parameters of a CHO procedure. The wireless device 1901 may measure RSRP/RSRQ of SSBs/CSI-RSs of each candidate target cell of the list of candidate target cell. Different from the normal handover procedure described in FIG. 18, the wireless device 1901 may not execute the handover toward the target cell, e.g., in response to receiving the RRC reconfiguration messages comprising the parameters of the CHO procedure. The wireless device 1901 may, for performing the CHO procedure, execute the handover to a target cell for the CHO only if the (RRC) reconfiguration condition(s) of the target cell are met (or satisfied). The wireless device 1901 may keep evaluating the reconfiguration conditions for the list of the candidate target cells 1945, for example, until an expiry of a handover timer, or receiving a RRC reconfiguration indicating an abort of the CHO procedure.

The wireless device 1901 may execute the CHO procedure towards the first candidate target cell, for example, based on (e.g., in response to) a reconfiguration condition of a first candidate target cell (e.g., PCell 1) being met or satisfied. The wireless device 1901 may select one of multiple candidate target cells 1947 by its implementation if the multiple candidate target cells have reconfiguration conditions satisfied or met.

Executing the CHO procedure towards the first candidate target cell may be same as or similar to executing the handover procedure as shown in FIG. 18. By executing the CHO procedure, the wireless device 1901 may release the RRC configuration parameters of the source cell and the MCG associated with the source cell, apply the RRC configuration parameters of the PCell 1, reset MAC, perform cell group configuration for the received MCG comprised in the RRC reconfiguration message of the PCell 1, and/or perform RA procedure to the PCell 1 1948, etc.

The MCG of the RRC reconfiguration message of the PCell 1 may be associated with a SpCell (SpCellConfig) on the target base station 1 1910. If the sPCellConfig comprises a reconfiguration with Sync (reconfigurationWithSync), the wireless device 1901 may determine that the SpCell is a target PCell (PCell 1) for the handover. The reconfiguration with sync (reconfigurationWithSync) may comprise cell common parameters (spCellConfigCommon) of the target PCell, a RNTI (newUE-Identity) identifying the wireless device 1901 in the target PCell, a value of T304, a dedicated RACH resource (rach-ConfigDedicated), etc. For example, a dedicated RACH resource may comprise one or more RACH occasions, one or more SSBs, one or more CSI-RSs, one or more RA preamble indexes, etc. In an example, the wireless device 1901 may perform cell group configuration for the received master cell group comprised in the RRC reconfiguration message of the PCell 1 on the target base station 1 1910 as described herein with respect to FIG. 18.

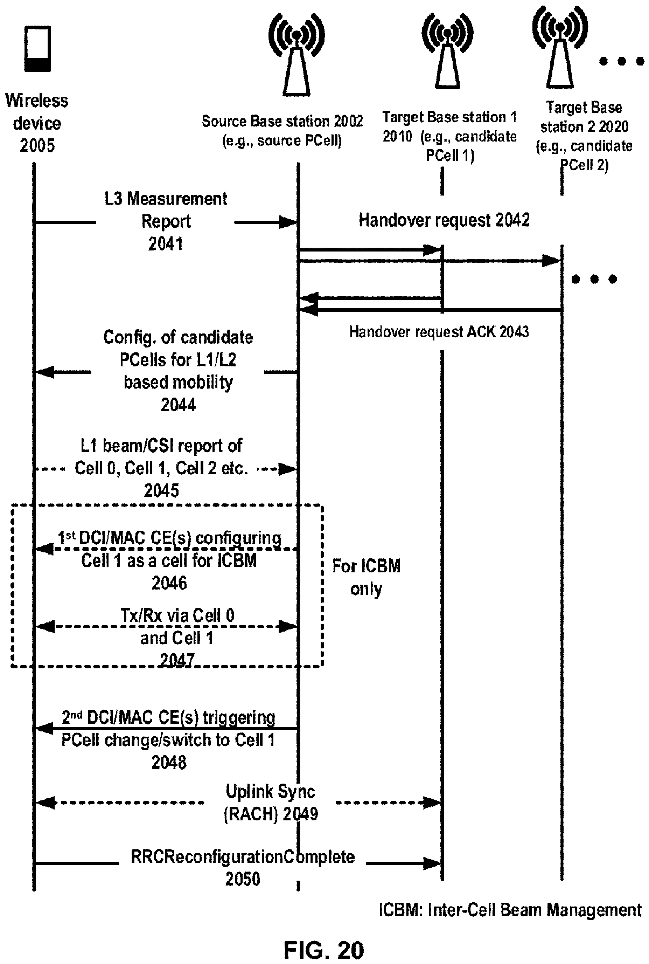

FIG. 20 shows an example of Layer 1/Layer 2 (Layer 1/2) triggered handover method. For example, the network (e.g., a base station, a source base station) may configure the wireless device 2005 to perform the measurement reporting 2041 (e.g., including the configuration of measurement gaps) for a plurality of neighbor/candidate (target) cells (e.g., cells from a candidate target base station 1, a candidate target base station 2, etc.). The wireless device 2005 may transmit one or more measurement reports 2041 to the source base station (or source PCell, cell 0 in FIG. 20).

As described with respect to FIG. 20, based on the one or more measurement reports 2041 from the wireless device 2005, the source base station 2002 may provide the target base station (e.g., target base station 1 2010 and/or target base station 2 2020) with a list of best/candidate cells on each frequency for which measurement information is available, for example, in order of decreasing RSRP. The source base station 2002 may also include available measurement information for the cells provided in the list. The target base station (e.g., target base station 1 2010 and/or target base station 2 2020) may decide which cells are configured for use (as a target PCell, and/or one or more SCells) after HO, which may include cells other than the ones indicated by the source base station 2002 . For example, as shown in FIG. 20, the source base station may transmit a handover request 2042 to the target base station (e.g., target base station 1 2010 and/or target base station 2 2020) . The target base station (e.g., target base station 1 2010 and/or target base station 2 2020) may response with a handover message. In an example, in the handover message, the target base station (e.g., target base station 1 2010 and/or target base station 2 2020) may indicate access stratum configuration (e.g., RRC configurations of the target cells) to be used in the target cell(s) for the wireless device 2005. For example, the source base station may transparently (for example, does not alter values/content) forward the handover (e.g., contained in RRC reconfiguration messages of the target base station, cell group configuration IE of the target base station, and/or SpCell configuration IE of a target PCell/SCells of the target base station (e.g., target base station 1 2010 and/or target base station 2 2020)) message/information received from the target base station (e.g., target base station 1 2010 and/or target base station 2 2020) to the wireless device 2005.

The source base station 2002 may configure a Layer 1/Layer 2 (Layer 1/2) signaling based handover (PCell switching/changing, mobility, etc.) procedure different from a normal handover procedure (e.g., as shown in FIG. 18) and/or a CHO procedure (e.g., as shown in FIG. 19), by comprising a Layer 1/2 candidate cell (e.g., PCell) configuration message (e.g., candidates-L1L2-Config IE) in the one or more configuration parameters (e.g., the RRC reconfiguration message) of the source base station 2002 . The Layer 1/2 candidate PCell configuration message may comprise a list of candidate target PCells, each candidate target PCell being associated with dedicated RACH resources for the RA procedure in case a Layer 1/2 signaling based handover is trigged by a Layer 1/2 signaling and executed to the candidate target PCell, etc. There may be multiple options for parameter configurations of a candidate target PCell.

For example, as a first option for the parameter configuration, for each candidate target PCell, the RRC reconfiguration message of the source base station 2002 may comprise a (capsuled) RRC reconfiguration message (e.g., RRCReconfiguration), of a candidate target base station, received by the source base station 2002 from a candidate target base stationvia X2/Xn interface. The (capsuled) RRC reconfiguration message, of the candidate target base station, may reuse the same signaling structure of the RRC reconfiguration message of the source base station, as shown in FIG. 18.

For example, as a second option for the parameter configuration, for each candidate target PCell, the RRC reconfiguration message of the source base station 2002 may comprise a (capsuled) cell group configuration message (e.g., CellGroupConfig), of a candidate target base station, received by the source base station 2002 from a candidate target base stationvia X2/Xn interface. The (capsuled) cell group configuration message, of the candidate target base station, may reuse the same signaling structure of the cell group configuration message of the source base station, as shown in FIG. 18. The second option may reduce signaling overhead of the parameter configuration of a candidate target PCell compared with the first option.

For example, as a third option for the parameter configuration, for each candidate target PCell, the RRC reconfiguration message of the source base station 2002 may comprise a (capsuled) SpCell configuration message (e.g., SpCellConfig), of a candidate target base station, received by the source base station 2002 from a candidate target base stationvia X2/Xn interface. The (capsuled) SpCell configuration message, of the candidate target base station, may reuse the same signaling structure of the SpCell configuration message of the source base station 2002, as shown in FIG. 18. The third option may reduce signaling overhead of the parameter configuration of a candidate target PCell compared with the second option.

For example, for each candidate target PCell, the source base station 2002 may indicate cell common and/or UE specific parameters (e.g., SSBs/CSI-RSs, BWPs, RACH resources, PDCCH/PDSCH/PUCCH/PUSCH resources etc.).

The wireless device 2005, according to the received RRC reconfiguration messages comprising parameters of a Layer 1/2 signaling based handover procedure, may perform Layer 1/2 measurement report (CSI/beam) for the list of candidate target PCells and/or the current PCell. The layer 1/2 measurement report may comprise layer 1 RSRP, layer 1 RSRQ, PMI, RI, layer 1 SINR, CQI, etc. In an example, the layer 1/2 measurement report may be transmitted with a periodicity configured by the source base station 2002. The layer 1/2 measurement report may be triggered when the measurement of the CSI/beam of a candidate target PCell is greater than a threshold, or (amount of offset) greater than the current PCell, etc.

As described with respect to FIG. 20, the base station may perform an inter-cell beam management (ICBM) procedure before transmitting a Layer 1/2 signaling triggering the handover procedure comprising switching PCell from the source base station 2002 to a target base station. The ICBM procedure may allow the base station and the wireless device to use resources (time/frequency/spatial) of the target base station (or a PCell/SCell of the target base station) without executing handover procedure to the target base station, therefore reducing frequently executing the handover procedure. The ICBM procedure may allow the base station and the wireless device to synchronize time/frequency/beam to a target PCell of the target base station before executing the HO, which may reduce handover latency. The ICBM may be implemented based on example embodiments of FIG. 20 which will be described later.

Based on (e.g., in response to) the ICBM procedure being configured, the source base station 2002 may transmit to the wireless device a first DCI/MAC CE configuring/indicating a first candidate target cell (e.g., Cell 1) of the candidate target cells (PCells/SCells) as a neighbor or non-serving cell, in addition to the current PCell (e.g., Cell 0), for the wireless device. The base station may select the first candidate target cell from the candidate target cells, based on layer 1/2 measurement report from the wireless device.

The first DCI/MAC CE (e.g., activating TCI states) may indicate that a reference RS (e.g., SSB/CSI-RS) associated with a first TCI state is from the first candidate target cell (Cell 1) (e.g., by associating the reference RS with an additional PCI, of Cell1, different from a PCI of the Cell 0), in addition to a reference RS associated with a second TCI state being from the current PCell (Cell 0). Activating, by a DCI/MAC CE, a TCI state with a RS of a neighbor (non-serving) cell as a reference RS, may allow the base station to use a beam of the neighbor cell to transmit downlink signals/channels or to receive uplink signals/channels, and/or use a beam of the current cell for the transmissions/receptions, without performing handover to the neighbor cell for the transmissions/receptions. The wireless device 2005, based on (e.g., in response to) receiving the first DCI/MAC CE, may apply the first TCI state and the second TCI state for downlink reception and/or uplink transmission.

Applying the first TCI state and the second TCI state for downlink reception may comprise: receiving (from Cell 1) PDCCH/PDSCH/CSI-RS with a reception beam/filter same as that for receiving the reference signal, transmitted from Cell 1, according to (or associated with) the first TCI state, and receiving (from cell 0) PDCCH/PDSCH/CSI-RS with a reception beam/filter same as that for receiving the reference signal, transmitted from Cell 0, according to (or associated with) the second TCI state.

Applying the first TCI state and the second TCI state for uplink transmission may comprise: transmitting (via Cell 1) PUCCH/PUSCH/SRS with a transmission beam/filter same as that for receiving the reference signal, transmitted from Cell 1, according to (or associated with) the first TCI state, and transmitting (via cell 0) PUCCH/PUSCH/SRS with a transmission beam/filter same as that for receiving the reference signal, transmitted from Cell 0, according to (or associated with) the second TCI state.

The base station may skip performing the ICBM procedure before transmitting the Layer 1/2 signaling triggering the handover procedure. The base station may skip performing the ICBM procedure, e.g., when beamforming is not used in the target PCell, or if there is no good SSB(s) from the target PCell, or if there are no available radio resources from the target PCell to accommodate the wireless device 2005, or when the wireless device 2005 may not support ICBM and/or when the base station does not support ICBM.

The source base station 2002 may determine to handover the wireless device 2005 from the source base station (Cell 0) to the target base station (Cell 1). The source base station may determine the handover based on a load/traffic condition, a CSI/beam report of the target base station, a location/trajectory of the wireless device 2005, a network energy saving strategy (e.g., the source base station determines to turn of the Cell 0 and/or one or more SCells for power saving), etc. The source base station 2002 may transmit a second DCI/MAC CE indicating a PCell changing from the current PCell (Cell 0) to a new cell (e.g., Cell 1).

The new cell may be one of the neighboring (non-serving) cells used in the ICBM procedure (e.g., indicated by the first DCI/MAC CE). The new cell may be cell 1 in the example of FIG. 20. When the ICBM procedure is supported and/or configured, the wireless device 2005, before executing handover procedure indicated by the source base station, has already synchronized with the target base station regarding which beam should be used for transmission/reception via the target base station, which is different from layer 3 signaling based handover/CHO where the wireless device 2005 may need to synchronize to the target base station upon executing the handover/CHO and then obtains an indication of a new beam to be used for the target base station.

The new cell may be one of a plurality of neighbor (non-serving) cells comprised in L1 beam/CSI report, e.g., with the best measurement report, with the distance closest to the wireless device 2005, etc., when the ICBM procedure is not configured/supported/indicated/activated for the new cell. The wireless device 2005 may change the PCell from cell 0 to cell 1, for example, based on (e.g., in response to) receiving the second DCI/MAC CE. The wireless device 2005 may apply the (stored/received) RRC parameters (comprised in RRCReconfiguration, CellGroupConfig, and/or SpCellConfig IE) of the target PCell (cell 1) as the current PCell.

The wireless device 2005 may skip downlink (time/frequency/beam) synchronization (e.g., monitoring MIB/SSB/SIBs and/or selecting an SSB as a reference for downlink reception and/or uplink transmission) in case the wireless device 2005 has already synchronized with the target PCell based on the ICBM procedure, for example, if the ICBM may be configured/supported/indicated/activated before receiving the 2nd DCI/MAC CE. The wireless device 2005 may skip performing RA procedure towards the target PCell before transmitting to and/or receiving from the target PCell, e.g., when the target PCell is close to the source PCell, or the uplink TA is same or similar for the source PCell and the target PCell, or the dedicated RACH resource is not configured in the RRC reconfiguration message of the target PCell. The wireless device 2005 may perform downlink synchronization (SSB/PBCH/SIBs monitoring) and/or uplink synchronization (RA procedure) for the layer 1/2 signaling based handover (e.g., if ICBM is not configured/indicated/supported/activated) as it does for layer 3 signaling based handover/CHO based on examples described herein with respect to FIG. 18, FIG. 19, and/or FIG. 20. The wireless device 2005, after receiving a handover command (e.g., RRC reconfiguration with a *ReconfigurationWithSync* IE), performs downlink synchronization and uplink synchronization, beam alignment/management via a target cell. Performing downlink synchronization, uplink synchronization and/or beam alignment may be time consuming (e.g., increase the handover latency or reduce RRC_connected mobility efficiency). To reduce handover latency, especially the latency introduced for uplink synchronization, the wireless device may perform an early TA acquisition scheme.

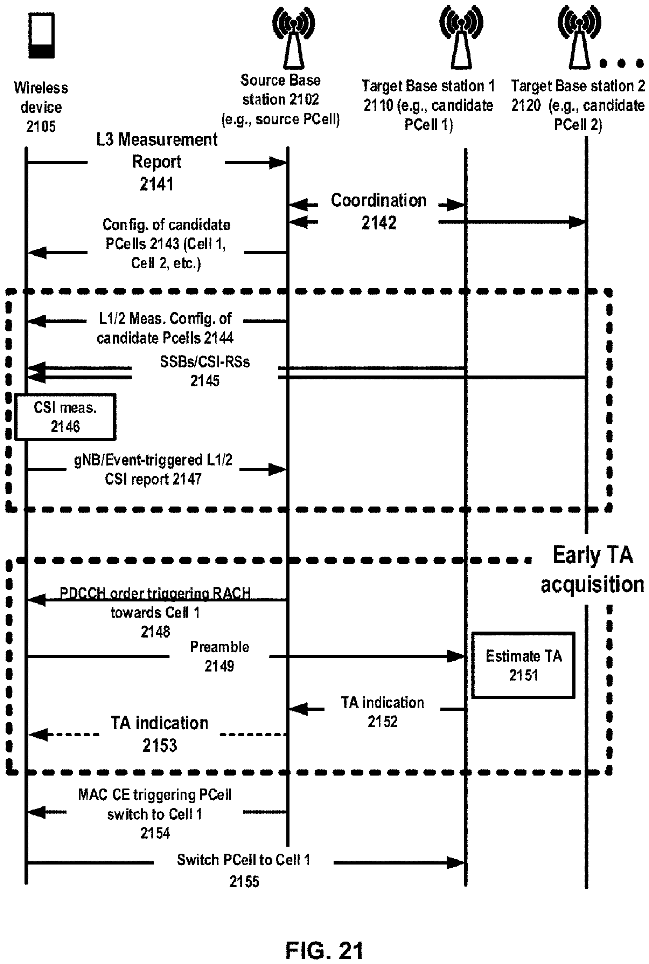

FIG. 21 shows an example of early TA acquisition (or ETA)-based handover procedure. For example, as shown in FIG. 21, the network (e.g., a base station, a source base station) may configure the wireless device 2105 to perform layer 3 (L3) measurement reporting 2141, which may include the configuration of measurement gaps, for a plurality of neighbor cells (e.g., Cell 1 from a candidate target base station 1, Cell 2 from a candidate target base station 2, etc.). For example, the source base station 2102 may configure (e.g., via the one or more configuration parameters) the Layer 1/2 signaling based handover (PCell switching/changing, mobility, layer 1/2 triggered mobility, LTM, etc.) procedure for the wireless device 2105 (e.g., as described with respect to the FIG. 20).

Cell 0, Cell 1 and/or Cell 2 may belong to a same gNB-DU, in which case, Cell 1 and/or Cell 2 may be configured as a part of Cell 0 which is a serving cell. The radio resources (PDCCH, PDSCH etc.) of Cell 0 are shared with Cell 1 and/or Cell 2. Cell 1 and/or Cell 2 may transmit SSBs different from SSBs transmitted via Cell 0. Cell 0, Cell 1 and/or Cell 2 may belong to different gNB-DUs (which are associated with a same gNB-CU or associated with different gNB-CUs), in which case, Cell 1 and/or Cell 2 may be configured as sperate cells (non-serving cell) from Cell 0. The radio resources (PDCCH, PDSCH etc.) of Cell 0 are not shared with Cell 1 and/or Cell 2. Cell 1 and/or Cell 2 may transmit SSBs different from SSBs transmitted via Cell 0.

The wireless device 2105 may perform Layer 1/2 measurement report (CSI/beam) for the list of candidate target PCells and/or the current PCell. For example, the RRC configuration messages, comprising configuration parameters of L1/2 measurements for one or more candidate cells, may be the same as the RRC messages used for L3 measurement configuration or be the same as the RRC configuration messages for the candidate PCell configuration. For example, the RRC configuration messages, comprising configuration parameters of L1/2 measurements for one or more candidate cells, may be separate and/or independent from the RRC configuration messages for the candidate PCell configuration. The RRC configuration messages (e.g., the one or more RRC configuration messages), comprising the configuration parameters of L1/2 measurements, may be the same as a RRC message configuring a serving cell (Cell 0 as shown in FIG. 21), which may comprise L1/2 measurement configurations of the serving cell.

The L1/2 measurement configuration of the serving cell may comprise a plurality of SSB resource sets (CSI-SSB-ResourceSets) for CSI (CQI/PMI/RI/L1-RSRP/L1-SINR etc.) measurements. A CSI-SSB-ResourceSet is identified by a CSI-SSB-Resource set identifier (ID) and comprises a list of SSB indexes, each SSB index being associated with a ServingAdditionalPCIIndex indicating a physical cell ID of the SSB, among multiple SSBs associated with the ServingAdditionalPCIInex. If a value of the ServingAdditionalPCIIndex is zero, the PCI of the SSB index is the PCI of the serving cell (e.g., Cell 0). If a value of the ServingAdditionalPCIIndex is not zero, the ServingAdditionalPCIIndex indicates an additionalPCIIndex of an SSB-MTC-AdditionalPCI configured using the additionalPCI-ToAddModList in ServingCell-Config, and the PCI is the additionalPCI (e.g., PCI of Cell 1, PCI of Cell 2, etc.) in the SSB-MTC-AdditionalPCI. A PCI of a cell is a cell identifier uniquely identifying the cell in a wireless communication system. In an example, a CSI-SSB-Resourceset of Cell 0 may indicate SSB 0 from Cell 0, SSB 1 from Cell 1, SSB 2 from Cell 2, etc.

The wireless device 2105 may measure CSI 2146 (e.g., CQI/PMI/L1-RSRP/L1-RSRQ/L1-SINR) of each SSB of the SSBs configured in the CSI-SSB-ResourceSet of Cell 0, wherein each SSB may be from different cells (or different PCIs), for example, based on the L1/2 measurement configurations of the serving cell (Cell 0). For example, if a CSI-SSB-ResourceSet of Cell 0 indicates SSB 0 from Cell 0, SSB 1 from Cell 1, SSB 2 from Cell 2, etc., the wireless device may measure SSB 0 from Cell 0, SSB 1 from Cell 1 and SSB 2 from Cell 2 for the L1/2 CSI/beam measurement for the LTM procedure. The wireless device 2105 may trigger a layer 1/2 measurement report, for example, based on the measuring CSI of each SSB of the SSBs configured in the CSI-SSB-ResourceSet of Cell 0. The triggering the layer 1/2 measurement report may be based on a triggering indication of the base station and/or a triggering event occurring at the wireless device.

The layer 1/2 measurement report may be triggered by a measurement event, e.g., when the measurement of the CSI of a candidate target PCell (e.g., Cell 1, Cell 2 etc.) is greater than a threshold, or (amount of offset) greater than the current PCell (Cell 0), etc. The layer 1/2 measurement report may be triggered by receiving a triggering indication (e.g., a DCI or a MAC CE) indicating to report the layer 1/2 measurement of one or more candidate target PCell (e.g., Cell 1, Cell 2, etc.). In response to receiving the triggering indication, the wireless device may (after performing the L1/2 measurement) transmit the layer 1/2 measurement report indicating whether at least one candidate target PCell has better CSI measurement than the current PCell. In response to no candidate target PCell having better CSI measurement than the current PCell after receiving the triggering indication, the wireless device may skip transmitting the layer 1/2 measurement of candidate target PCell (Cell 1, Cell 2, etc.) or may transmit only layer 1/2 CSI measurement of the serving cell (Cell 0). The layer 1/2 measurement report may be transmitted with a periodicity configured by the source base station.

The layer 1/2 measurement report may be contained in a UCI via PUCCH/PUSCH, or a MAC CE (e.g., event-triggered, associated with a configured SR for the transmission of the MAC CE). The layer 1/2 measurement and/or reporting of a candidate target PCell, before actually switching to the candidate target PCell as a serving PCell, may be referred to as an early CSI report for a candidate target PCell, which is different from a CSI report of a serving PCell. Early CSI report for a candidate target PCell, before the wireless device performs a layer 1/2 triggered mobility procedure to switch to the candidate target PCell as the serving PCell, may enable the base station to obtain correct beam information, for example, in terms of which SSB can be used as beam reference for downlink transmission for the candidate target PCell, when later the wireless device switches to the candidate target PCell as the serving PCell, without waiting for beam management after the switching, therefore, improving (handover) latency of the PCell switching.

The wireless device 2105 may determine that Cell 1 has better channel quality (L1-RSRP/L1-SINR/L1-RSRQ, etc.) than Cell 0. The wireless device may transmit the layer 1/2 measurement report indicating that Cell 1 has better channel quality than Cell 0. The source base station 2102 and/or the target base station may determine which cell is used as the target PCell. The source base station 2102, upon receiving the layer 1/2 measurement report, may coordinate (e.g., 2142 as shown in FIG. 21) with the candidate target base station (e.g., target base station 1 2110 and/or target base station 2 2120) regarding whether Cell 1 could be used as a candidate target PCell for future handover.

The source base station 2102 (e.g., according to the request of the target base station if there is no time alignment obtained before for Cell 1), may send (e.g., transmit), from Cell 0 (or an activated SCell of the wireless device) a first layer 1/2 (e.g., 1st L1/2) command (e.g., a DCI/MAC CE/RRC message comprising PDCCH order as shown in FIG. 21) triggering a preamble transmission (RACH, or other uplink signals like SRS) towards Cell 1 2148, for example, if determining Cell 1 is used as the target PCell for future handover. The DCI may be based on a PDCCH order in at least some technology.

The wireless device 2105, based on receiving the first layer 1/2 command, may send (e.g., transmit) the preamble 2149 (or SRS which is not shown in FIG. 21) to the target PCell (Cell 1). The target base station may monitor PRACH occasion for receiving the preamble to estimate the TA 2151 used for future uplink transmission from the wireless device after the wireless device switches the PCell from Cell 0 to Cell 1. The target base station may send (e.g., forward) the estimated TA for Cell 1 to the source base station 2102 2152.

The source base station 2102 may send (e.g., transmit) the sent (e.g., forwarded) TA to the wireless device 2105 2153 (e.g., via a RAR message, or via a TAC MA CE). The wireless device 2105 may monitor PDCCH (on Cell 0) for receiving the RAR message based on at least some technologies (e.g., based on example embodiments described above with respect to FIG. 13A, FIG. 13B and/or FIG. 13C). The wireless device 2105 may maintain a TAT for a TAG associated with Cell 1. The wireless device 2105 may maintain Cell 1 as a non-serving cell. The TAC MAC CE may indicate (e.g., one or more bitfields of the MAC CE) whether the TAC is for a serving cell (or a TAG associated with the serving cell) or for a non-serving cell (e.g., Cell 1). The source base station 2102 may skip transmitting the forwarded TA to the wireless device. Instead, the source base station may indicate the TA together with a second layer 1/2 command indicating/triggering PCell switching from Cell 0 to Cell 1. In this case, the wireless device may skip monitoring PDCCH (on Cell 0) for receiving the RAR message.

The transmission of a preamble to a candidate target PCell, before receiving a (P)Cell switch command (with or without comprising a TA estimated by the target base station for the target PCell) indicating to switch the PCell to the target PCell, is referred to as an early TA acquisition (ETA) procedure/process/feature/scheme in this specification. By implementing the ETA, before the wireless device performs the handover, the target base station may obtain the TA to be used by the wireless device after performing the handover to the target PCell. The TA for the target PCell may be transmitted in a RAR or combined together with the L1/2 (or L1/L2) command indicating the PCell switching. The ETA procedure may reduce the latency for uplink synchronization with the target PCell upon performing handover procedure (or PCell switching procedure).

The wireless device 2105 may receive a second L1/2 command (e.g., MAC CE as shown in FIG. 21) indicating the PCell switching from Cell 0 to Cell 1. The second L1/2 command may further indicate the TA (forwarded from the target base station to the source base station and used for the target PCell in future), for example, if the TA is not received before receiving the second L1/2 command. The second L1/2 command may further indicate a beam information (a TCI state and/or a SSB index, which may be obtained in the early CSI report as described above) to be used for downlink reception and/or uplink transmission over Cell 1. Based on (e.g., in response to) receiving the second L1/2 command, the wireless device 2105 may switch the PCell from Cell 0 to Cell 1 and send (e.g., transmit) PUSCH/PUCCH via Cell 1 based on the TA. The wireless device 2105 may receive downlink signals and send (e.g., transmit) uplink signals based on the indicated beam information. Switching the PCell from Cell 0 to Cell 1 may comprise at least one of: applying RRC configuration parameters of Cell 1, stopping applying RRC configuration parameters of Cell 0, resetting/reconfiguring MAC entity, receiving RRC messages/MIB/SSBs/SIBs/PDCCHs/PDSCHs from Cell 1 and stopping receiving RRC messages/MIB/SSBs/SIBs/PDCCHs/PDSCHs from Cell 0. A PCell switch procedure based on a L1/2 command (e.g., combined with an early CSI report and/or an ETA procedure) may be referred to as a L1/2 triggered mobility (LTM) procedure, based on example embodiments described above with respect to FIG. 20 and/or FIG. 21.

The one or more RRC configuration parameters may comprise a RRC message of a serving cell (e.g., *ServingCellConfig* IE) comprising configuration parameters of layer 1/2 measurements (e.g., csi-*MeasConfig* IE) and layer 3 measurements (e.g., *servingCellMO* IE). A csi-*MeasConfig* IE may indicate a list of non-zero power CSI-RS resource (e.g., *nzp-CSI-RS-ResourceToAddModList*), a list of non-zero power CSI-RS resource sets (e.g., *nzp-CSI-RS-ResourceSetToAddModList*), a list of SSB resource sets (e.g., *csi-SSB-ResourceSetToAddList*), a list of CSI resource configurations (e.g., *csi-ResourceConfigToAddList*), a list of CSI report configurations (e.g., *csi-ReportConfigToAddList*) and etc. A non-zero power CSI resource (e.g., NZP-CSI-RS-Resource) is identified by an *NZP-CSI-RS-ResourceId* and configured with a periodicity and offset parameter (*CSI-ResourcePeriodicityAndOffset*) and a QCL configuration (e.g., TCI-stateId), etc. A CSI-RS resource may be implemented based on example embodiments described above with respect to FIG. 11B. A non-zero power CSI resource set is identified by an NZP-CSI-RS-ResourceSetId and comprise a list of non-zero power CSI-RS resources.

A *csi-SSB-ResourceSet* is identified by a *CSI-SSB-ResourceSetId* and comprises a list of SSB indexes, each SSB index being associated with a respective *ServingAdditionalPCIIndex* of a list of additional PCIs (*servingAdditionalPCIList*). The servingAdditionalPCIList indicates the physical cell IDs (PCIs) of the SSBs in the *csi-SSB-ResourceList.* If the *servingAdditionalPCIList* is present in the *csi-SSB-ResourceSet*, the list has the same number of entries as *csi-SSB-ResourceList.* The first entry of the list indicates the value of the PCI for the first entry of *csi-SSB-ResourceList,* the second entry of this list indicates the value of the PCI for the second entry of *csi-SSB-ResourceList,* and so on. In an example, for each entry of the *servingAdditionalPCIList*, if the value is zero, the PCI is the PCI of the serving cell in which this *CSI-SSB-ResourceSet* is defined, otherwise, the value is additional *PCIIndex-r17* of an *SSB-MTC-AdditionalPCI-r17* configured using the additionalPCI-ToAddModList-r17 in *ServingCellConfig*, and the PCI is the additionalPCI-r17 in this *SSB-MTC-AdditionalPCI-r17.*

The one or more configuration parameters may configure/comprise, for each CSI resource configuration (*CSI-ResourceConfig*) identified by *CSI-ResourceConfigId*, a list of CSI-RS resource sets (*csi-RS-ResourceSetList*) comprising a list of non-zero power CSI-RS resource sets *(nzp-CS-RS-ResourceSetList)* and/or a list of *csi-SSB-ResourceSets* (*csi-SSB-ResourceSetList*) for CSI measurement, or comprising a list of *csi-IM-Resource* sets (*csi-IM-ResourceSetList*) for interference measurements, for example, based on the list of *NZP-CSI-RS-ResourceSets* and the list of *csi-SSB-ResourceSets.* Each CSI resource of a CSI resource configuration is located in the DL BWP identified by the higher layer parameter BWP-id of the CSI resource configuration, and all CSI Resource lists linked to a CSI Report Setting have the same DL BWP.

The one or more configuration parameters may configure/comprise, for each CSI report configuration (*CSI-ReportConfig*) identified by a CSI report configuration identifier (e.g., *CSI-ReportConfigId*), a serving cell index indicating in which serving cell the *CSI-ResourceConfig* are to be found (if the field is absent, the resources are on the same serving cell as this report configuration), a *CSI-ResourceConfigId* indicating CSI resources for channel measurement, a report type indication indicating whether the CSI report is periodic, semi-persistent CSI report on PUCCH, semi-persistent CSI report on PUSCH, or aperiodic, a report quantity indication indicating a report quantity (e.g., CRI-RSRP, SSB-index-RSRP, etc.) (wherein SSB-index-RSRP is referred to as layer 1 RSRP (L1-RSRP) in this specification), a time domain restriction indication for channel measurements (*timeRestrictionForChannelMeasurements*), etc. A semi-persistent CSI report on PUCCH may be triggered by a SP CSI activation/deactivation MAC CE. A semi-persistent CSI report on PUSCH may be triggered by a DCI with CRC being scrambled by SP-CSI-RNTI. An aperiodic CSI report may be indicated by a DCI scheduling a PUSCH transmission and comprising an aperiodic CSI request field.

The wireless device 2105 may measure and/and send (e.g., transmit) CSI report, for example, to the source base station 2102, for example, based on the configurations of CSI measurement and reports (e.g., via the one or more RRC configuration messages). For beam measurements, the wireless device 2105 may send (e.g., transmit) L1-RSRP report to the source base station 2102.

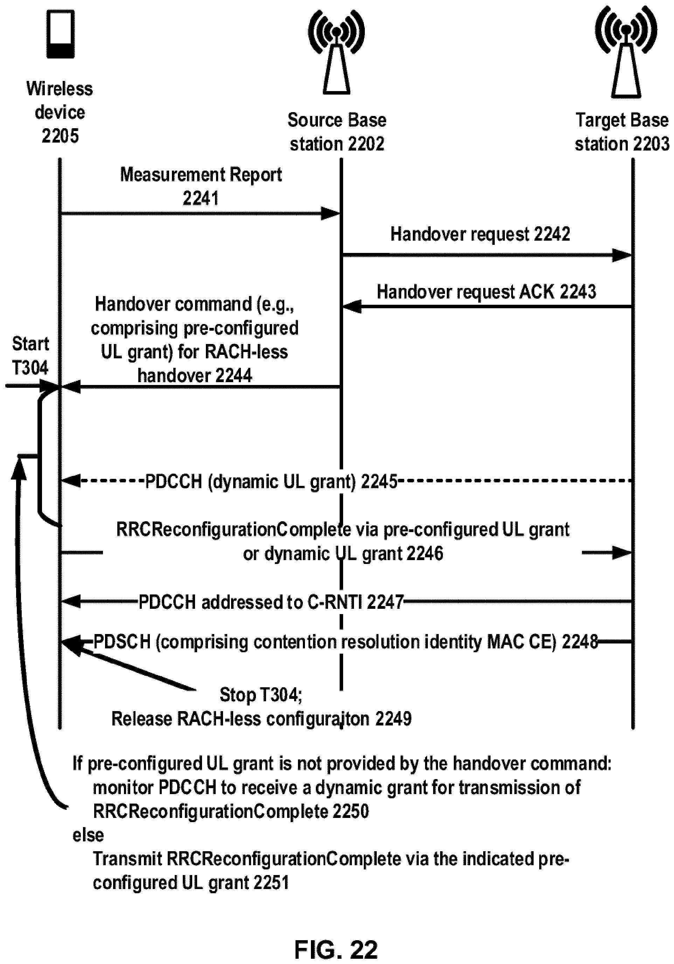

FIG. 22 shows an example of a RACH-less handover method. The wireless device 2205 may switch from a source base station 2202 (e.g., source cell) (e.g., via which the RRC reconfiguration message may be received) to a target base station 2203 (e.g., target cell), for example, without performing a RA procedure (e.g., without triggering/initiating the RA procedure and/or without sending (e.g., transmitting) a preamble on the target base station 2203 (e.g., target cell). The one or more configuration parameters may comprise configurations for skipping/avoiding RACH (e.g.,

*rach-skip IE* and/or *rach-skipSCG IE*), for example, parameters of RACH-less handover. Based on the one or more configuration parameters comprising the configurations for skipping/avoiding RACH, the wireless device 2205 may perform the handover without triggering/initiating (or performing the RA procedure).

The wireless device 2205 may perform RACH-less handover procedure. For example, the handover command may comprise one or more resources (e.g., pre-configured/configured/pre-allocated UL grant(s), e.g., Type1/2 configurated grants) for sending (e.g., transmitting) the RRC reconfiguration complete message on/via the target cell. As described herein, the "pre-configured UL grant" and/or "configured UL grant" and/or "pre-allocated UL grant" and/or "UL grant" may be used interchangeably.

The wireless device 2205 may, via the RACH-less handover procedure, reduce the handover latency and/or signaling overhead. For example, the RACH-less handover procedure may be different than the normal handover procedure of FIG. 18. The wireless device 2205 may perform the RACH-less handover procedure, for example, based on receiving the handover command 2244 (see FIG. 22) from the source base station 2202. Similar to examples of FIG. 18, FIG. 19, FIG. 20, and/or FIG. 21, the wireless device 2205 may report the one or more measurements to the source base station 2202 2241, for example, prior to receiving the handover command/RRC reconfiguration message 2244 from the source base station 2202. The wireless device 2205 may start the handover timer (T304), for example, based on (e.g., in response to) receiving the handover command 2244.

The handover command 2244 may not comprise the configured UL grant(s) for the transmission of the RRC reconfiguration complete message on/via the target cell. The wireless device 2205 may start monitoring the PDCCH (e.g., based on the RRC reconfiguration message and/or the one or more configuration parameters) for receiving dynamic UL grant(s) 2245 from the target base station 2203 (e.g., target cell). For example, the target base station 2203 (e.g., target cell) may send (e.g., transmit) one or more DCIs indicating the dynamic UL grant(s)/PUSCHs.

The wireless device 2205 may, from the target base station 2203 (e.g., via/on the target cell), receive a PDCCH addressed to a C-RNTI 2247 of the wireless device 2205, for example, based on (e.g., in response to) transmitting the RRC reconfiguration complete message 2246. For example, the C-RNTI may be indicated (e.g., by the base station) via the handover command (e.g., RRC reconfiguration message). The PDCCH addressed to the C-RNTI may schedule/indicate a PDSCH transmission from the target base station (and/or the target cell). The PDSCH transmission may comprise a contention resolution identity MAC CE. The wireless device 2205 may ignore the contention resolution identity MAC CE, for example, if the wireless device may be configured with parameters of RACH-less handover (e.g., *rach-skip* IE and/or the *rach-skipSCG* IE).

The wireless device 2205 may stop a T304 timer and/or release the *rach-skip* IE (and/or the *rach-skipSCG* IE) (e.g., releasing RACH-less configurations), for example, based on (e.g., in response to) receiving the PDCCH addressed to the C-RNTI 2247 from the target base station 2203 (e.g., via/on the target cell). For example, based on (e.g., in response to) receiving the PDCCH addressed to the C-RNTI 2247 from the target base station 2203 (e.g., via/on the target cell), the wireless device 2205 may determine the RACH-less handover procedure being successfully completed. The wireless device 2205 may, based on (e.g., after/in response to) receiving the PDCCH addressed to the C-RNTI 2247 from the target base station 2203 (e.g., via/on the target cell), apply first parts of CQI reporting configuration, SR configuration, and/or SRS configuration that may not require the wireless device 2205 to know a system frame number (SFN) of the target base station 2203. The wireless device 2205 may, based on (e.g., after/in response to) receiving the PDCCH addressed to the C-RNTI 2247 from the target base station 2203 (e.g., via/on the target cell), may apply second parts of measurement and radio resource configuration that may require the wireless device 2205 to know the SFN of the target base station 2203 (e.g., measurement gaps, periodic CQI reporting, SR configuration, SRS configuration), upon acquiring the SFN of the target base station 2203.

The handover command may indicate a target TA value corresponding to the target base station 2203 (e.g., target cell) allowing the wireless device 2205 to acquire UL synchronization with the target base station 2203 (e.g., target cell), for example, without sending (e.g., transmitting) a preamble to the target base station 2203. The wireless device 2205 may apply the target TA value of the target base station 2203 (e.g., target cell) for the transmission of a first PUSCH (e.g., via the configured UL grant or the dynamic UL grant) on/via the target cell.

The one or more configuration parameters (e.g., the handover command and/or the RRC reconfiguration message) may allow the wireless device 2205 to communicate (e.g., transmit/receive) with the source base station 2202 (e.g., source cell), for example, after receiving the handover command and before receiving the dynamic UL grant(s) (and/or before sending (e.g., transmitting) the RRC reconfiguration complete message on/via the target base station 2203 (e.g., target cell).

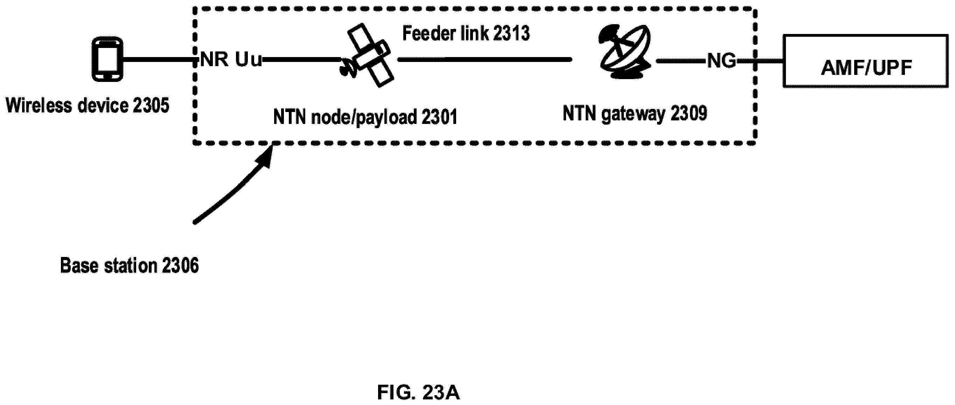

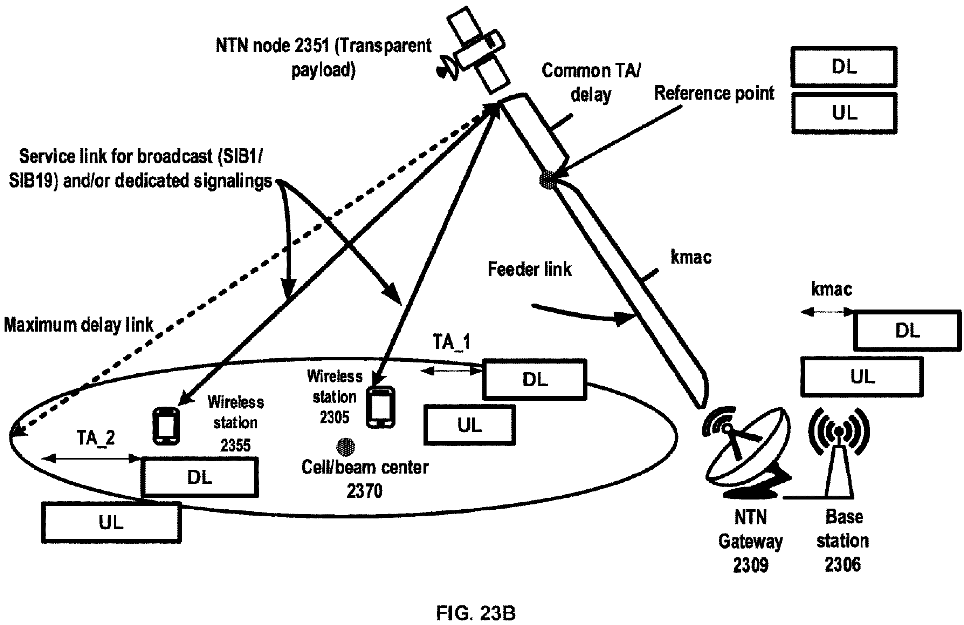

A non-terrestrial network (NTN) network (e.g., a satellite network) may be a network or network segment (e.g., an NG-RAN consisting of base stations) for providing non-terrestrial NR access to wireless devices. The NTN may use a space-borne vehicle to embark a transmission equipment relay node (e.g., radio remote unit or a transparent payload) or a base station (or a regenerative payload). While a terrestrial network is a network located on the surface of the earth, an NTN may be a network which uses an NTN node (e.g., a satellite) as an access network, a backhaul interface network, or both. In an example, an NTN may comprise one or more NTN nodes (or payloads and/or space-borne vehicles), each of which may provide connectivity functions, between the service link and the feeder link. As shown in FIG. 23B, a base station may, via the service link, send (e.g., transmit) broadcast signals (e.g., SIBx, x=1, 2, ..., 19, ...), multicast signals, and/or dedicated signals to wireless devices, e.g., in a cell.

An NTN node may embark a bent pipe payload (e.g., a transparent payload) or a regenerative payload. The NTN node with the transparent payload may comprise transmitter/receiver circuitries without the capability of on-board digital signal processing (e.g., modulation and/or coding) and connect to a base station (e.g., a base station of an NTN or the NTN base station or a non-terrestrial access point) via a feeder link.

FIG. 23A shows an example non-terrestrial network (NTN). As described with respect to FIG. 23A, a base station 2306 (e.g., gNB or eNB) may comprise a transparent NTN node/payload 2301, a feeder link 2313, and/or a gateway (e.g., an NTN gateway 2309). The gateway (e.g., NTN gateway 2039) may be an earth station that may be located at the surface of the earth, providing connectivity to the NTN node/payload 2301 using the feeder link 2313. The NTN node/payload 2301 with a regenerative payload (e.g., a base station of the NTN or an NTN base station) may comprise functionalities of a base station, e.g., the on-board processing used to demodulate and decode the received signal and/or regenerate the signal before sending (e.g., transmitting) it back to the earth. The base station 2306 (e.g., gNB) may comprise a regenerative NTN node/payload, a feeder link 2313, and/or a gateway (e.g., the NTN gateway 2309).

The NTN node/payload 2301 may be a satellite, a balloon, an air ship, an airplane, an unmanned aircraft system (UAS), an unmanned aerial vehicle (UAV), a drone, or the like. For example, the UAS may be a blimp, a high-altitude platform station (HAPS), e.g., an airborne vehicle embarking the NTN payload placed at an altitude between 8 and 50 km, or a pseudo satellite station. In an example, a satellite may be placed into a low-earth orbit (LEO) at an altitude between 250 km to 1500 km, with orbital periods ranging from 90 - 130 minutes. From the perspective of a given point on the surface of the earth, the position of the LEO satellite may change. In an example, a satellite may be placed into a medium-earth orbit (MEO) at an altitude between 5000 to 20000 km, with orbital periods ranging from 2 hours to 14 hours. In an example, a satellite may be placed into a geostationary satellite earth orbit (GEO) at 35,786 km altitude, and directly above the equator. From the perspective of a given point on the surface of the earth, the position of the GEO satellite may not change.

FIG. 23B shows an example of an NTN with a transparent NTN node/payload. As shown in FIG. 23B, the NTN node 2351 (e.g., the satellite) may forward a received signal from the NTN gateway 2309 on the ground back to the earth over the feeder link. For example, the NTN gateway 2309 and the base station 2306 may not be collocated. The NTN node 2351 may forward a received signal to the wireless device 2305 or the base station 2306 from another NTN node, for example, over inter-link satellite communication links.

The NTN node 2351 may generate one or more beams over a given area (e.g., a coverage area or a cell). The footprint of a beam (or the cell) may be referred to as a spotbeam. For example, the footprint of a cell/beam may move over the Earth's surface with the satellite movement (e.g., a LEO with moving cells or a HAPS with moving cells). The footprint of a cell/beam may be Earth fixed (e.g., quasi-earth-fixed) with some beam pointing mechanism used by the satellite to compensate for its motion (e.g., a LEO with earth fixed cells). The size of a spotbeam (e.g., diameter of the spotbeam and/or cell and/or coverage area) may range from tens of kilometers (e.g., 50 km - 200 km) to a few thousand kilometers (e.g., 3500 km). For example, the size of the spotbeam may depend on the system design.

A propagation delay may be an amount of time it takes for the head of the signal to travel from a sender (e.g., the base station or the NTN node 2351) to a receiver (e.g., the wireless device) or vice versa. The propagation delay may vary depending on a change in distance between the sender and the receiver, e.g., due to movement of the NTN node 2351, movement of the wireless device, a change of an inter-satellite link, and/or feeder link switching. One-way latency/delay may be an amount of time required to propagate through a telecommunication system from the sender (e.g., the base station) to the receiver (e.g., the wireless device). For the transparent NTN, the round-trip propagation delay (RTD or UE-gNB RTT) may comprise service link delay (e.g., between the NTN node and the wireless device), feeder link delay (e.g., between the NTN gateway and the NTN node 2351), and/or between the gateway and the base station (e.g., in the case the gateway and the NTN base station are not collocated). For example, the UE-gNB RTT (or the RTD) may be twice of the one-way delay between the wireless device and the base station. In case of a GEO satellite with the transparent payload, the RTD may be approximately 556 milliseconds. A (maximum) RTD of a LEO satellite with the transparent payload and altitude of 600 km is approximately 25.77 milliseconds and with altitude of 1200 km is approximately 41.77 milliseconds. In an example, the RTD of a terrestrial network (e.g., NR, E-UTRA, LTE) may be negligible compared to the RTD of an NTN scenario (e.g., the RTD of a terrestrial network may be less than 1 millisecond).

A differential delay within a beam/cell of a NTN node 2351 may depend on, for example, the maximum diameter of the beam/cell footprint at nadir. For example, the differential delay within the beam/cell may correspond to a maximum delay link in FIG. 23B. The differential delay may imply the maximum difference between communication latency that two wireless devices, e.g., a first wireless device (e.g., wireless device 2305) that is located close to the center of the cell/beam and a second wireless device (e.g., wireless device 2355) that may be located close to the edge of the cell/beam as shown in FIG. 23B, may experience while communicating with the base station 2306 via the NTN node 2351. The first wireless device 2305 may experience a smaller RTD compared to the second wireless device 2355. The link with a maximum propagation delay (e.g., the maximum delay link) may experience the highest propagation delay (or the maximum RTD) in the cell/beam. The differential delay may imply a difference between the maximum delay of the cell/beam and a minimum delay of the cell/beam. The service link to a cell/beam center 2370 may experience the minimum propagation delay in the cell/beam. Depending on implementation, for a LEO satellite, the differential delay may be at least 3.12 milliseconds and may increase up to 8 milliseconds. In an example of a GEO satellite, depending on implementation, the differential delay may be as large as 32 milliseconds.

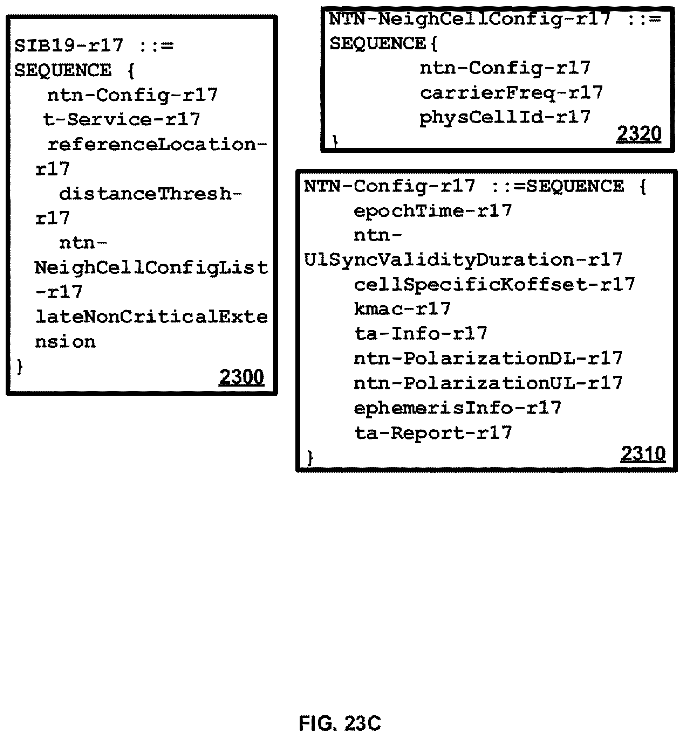

FIG. 23C shows an example of assistance information for maintenance of uplink synchronization at a wireless device in a non-terrestrial network (NTN). As described with respect to FIG. 23C, a wireless device may, from a base station, receive a first set of NTN configuration parameters via an NTN-specific SIB (e.g., SIB19) corresponding to a serving cell of the NTN. The first set of NTN configuration parameters may comprise at least one NTN-config. Each NTN-config (e.g., *ntn-Config*) of the at least one NTN-config may correspond to a cell (e.g., the serving cell or a neighbor cell of the NTN) with a corresponding physical cell ID (PCI). The wireless device may receive an NTN-config corresponding to the serving cell via a broadcast system information (e.g., SIB 1) during initial access or handover. For example, the SIB 1 may comprise an IE *ServingCellConfigCommon* of the serving cell. The IE *ServingCellConfigCommon* of the serving cell may comprise the NTN-config of the serving cell.

As shown in FIG. 23C, the first set of NTN configuration parameters may further comprise NTN-configs of one or more NTN neighbor cells (e.g., via *ntn-NeighCellConfigList* IE). Each NTN neighbor cell of the one or more NTN neighbor cells may have its unique PCI and an NTN-config of the at least one NTN-config. Each NTN-config of the at least one NTN-config may comprise at least one of the following (or a combination of thereof): corresponding ephemeris parameters of an NTN node (e.g., the satellite ephemeris data, e.g., *ephemerisInfo);* and/or one or more common delay/TA parameters (e.g., ta-Info), e.g., comprising at least one of *TACommon, TACommonDrift, TACommonDriftVariation*; and/or a cell-specific scheduling offset (e.g., *cellSpecificKoffset* or *Koffset*, e.g., $K_{cell,offset}$) in number of slots for a given subcarrier spacing (e.g., $\mu_{Koffset}$), e.g., 15 KHz; and/or MAC-layer scheduling offset (e.g., *kmac* or *K-Mac*) in number of slots for a given subcarrier spacing (e.g., $\mu_{Kmac}$), e.g., 15 KHz, indicating a portion of a feeder link delay that the base station may pre-compensate, e.g., when UL/DL configurations are not aligned at the base station (see, FIG. 23.B); and/or epoch time for applying the NTN-config (e.g., *epochTime*); and/or a validity duration of the NTN-config (e.g., *ntn-UlSyncValidityDuration*) indicating a maximum duration (e.g., in seconds) that the NTN-config stays valid (e.g., a maximum duration that the wireless device stays UL synchronized with the serving cell without (re-)acquiring/reading the SIB 19 of the serving cell); and/or one or more antenna polarization mode(s) (e.g., vertical horizontal, right-hand circular, or left-hand circular) for UL/DL communications (e.g., *ntn-PolarizationUL*/*ntn-PolarizationDL*). For example, the MAC-layer scheduling offset may be 0, for example, if the *K-Mac* is absent from (is not indicated/configured by) the NTN config of the serving cell. For example, in an NTN scenario with the transparent NTN node, when the UL frame and the DL frame is aligned at the base station, the K-Mac may be absent from the NTN-config of the serving cell.

To maintain uplink orthogonality in the serving cell, transmissions from different wireless devices in a cell/beam (e.g., the first wireless device and the second wireless device in FIG. 23B) may need to be time-aligned at the base station and/or the NTN node (e.g., satellite). In an example, time alignment/synchronization may be achieved by using different timing advance (TA) values at different wireless devices to compensate for their different propagation delays (or RTDs). As shown in FIG. 23B, for UL transmissions, the first wireless device may use the first TA value (e.g., TA_1) and the second wireless device may use the second TA value (TA_2).

The wireless device may calculate/measure/maintain a current (or latest available) TA (value) of the wireless device $T_{TA}$ (e.g., corresponding to a TAG ID) based on at least a combination of a closed-loop TA value (or a closed-loop TA procedure/control) and/or an open-loop TA value (or an open-loop TA procedure/control). In an example, a combination of the closed-loop TA control and the open-loop TA control may be based on adding/summing the open-loop TA value (e.g., derived/calculated based on the open-loop TA procedure/control) and the closed-loop TA value (or a portion of the closed-loop TA procedure/control). The current TA value of the first wireless device may be TA_1 and the current TA value of the second wireless device may be TA_2. The closed-loop TA procedure/control may be based on receiving at least one (absolute) TA command (TAC) MAC CE indicating a TA value (e.g., $T_A$ corresponding to a TAG ID, e.g., a primary TAG or a secondary TAG) from the base station (e.g., via Msg2 1312 and/or MsgB 1332 and/ora PDSCH). The TA value may indicate an adjustment of the closed-loop TA value (e.g., $N_{TA}$).

A timing advance command (e.g., the TAC MAC CE) in case of a random access response or in an absolute timing advance command MAC CE, $T_A$, for a TAG indicates $N_{TA}$ values by index values of $T_A$ = 0, 1, 2, ..., 3846, where an amount of the time alignment for the TAG with SCS of $2^{\mu} \cdot 15$ kHz is $N_{TA} = T_A \cdot 16 \cdot 64/2^{\mu}$. $N_{TA}$ may be relative to the SCS of the first uplink transmission from the wireless device after the reception of the random access response or absolute timing advance command MAC CE. A timing advance command (e.g., the TAC MAC CE), $T_A$, for a TAG may indicate adjustment of a current $N_{TA}$ value, $N_{TA_old}$, to the new $N_{TA}$ value, $N_{TA_new}$, by index values of $T_A$ = 0, 1, 2,..., 63, where for a SCS of $2^{\mu} \cdot 15$ kHz, $N_{TA_new} = N_{TA_old} + (T_A - 31) \cdot 16 \cdot 64/2^{\mu}$.

The open-loop TA procedure/control may require a GNSS-acquired position (or location information) of the wireless device and/or the NTN-config of the serving cell. The wireless device may, based on an implemented orbital predictor/propagator model, may use the ephemeris data (and/or the GNSS-acquired position) to measure/calculate/maintain movement pattern of the satellite, estimate/measure the service link delay, and/or to adjust the current TA value (e.g., the TA of the wireless device) via the open-loop TA procedure/control.

The wireless device may use the NTN-config of a cell (e.g., the serving cell) the calculate/determinate/measurement/maintain an estimate of the UE-gNB RTT between the wireless device and a base station of the cell. In an example, the wireless device may calculate/measure/estimate the UE-gNB RTT (in ms or number of slots) of the serving cell based on the current TA value and the K-Mac (if indicated by the NTN-config of the serving cell). For example, the UE-gNB RTT may be the summation of the current TA value and K-Mac (based on subcarrier spacing of the 15 KHz). When the K-Mac is 0, the wireless device may determine/measure the UE-gNB RTT based on the current TA value, e.g., the UE-gNB RTT is equal to the current TA value. The wireless device may maintain/calculate/update the open-loop TA value (or the UE-gNB RTT) over the validity duration of the NTN-config.

The validity duration may indicate (a maximum/longest) validity period of the (satellite) ephemeris data/information and/or the TA parameters of the NTN-config of the serving cell. For example, upon or in response to acquiring/receiving the NTN-config of the serving cell (e.g., upon reception of the SIB19 and/or upon reception of *RRCReconfiguration* message for a target cell including *reconfiguraionWithSync* and/or upon conditional reconfiguration execution, e.g., when applying a stored *RRCReconfiguraion* message for a target cell including *reconfiguraionWithSync*), the wireless device may start/restart the validity (or validation) duration/timer/window/period (e.g., T430 timer) of the serving cell. For example, the wireless device may start the validity timer based the epoch time indicated by the NTN-config of the serving cell, e.g., the wireless device may start the validity timer from a subframe indicated by the epoch time. The wireless device may set an initial value of the T430 timer by ntn-*UlSyncValidityDuration* of the NTN-config of the serving cell. The wireless device may stop the validity timer of the serving cell (e.g., a source cell or first cell) upon reception of the *RRCReconfiguration* message for the target cell (e.g., a second cell and/or a target serving cell) including *reconfiguraionWithSync* and/or upon conditional reconfiguration execution, e.g., when applying a stored *RRCReconfiguraion* message for the target cell including *reconfiguraionWithSync.*

The wireless device may stop UL transmissions via the serving cell and flush HARQ buffers, for example, based on (e.g., in response to) determining that the validity duration being expired. For example, the wireless device may acquire the SIB 19 of the serving cell to receive an updated (satellite) ephemeris data/information and/or an updated common TA parameters. The wireless device may, prior to expiry of the validity duration of the serving cell and to reduce interruption in UL transmissions, (reacquire the SIB 19 in order to have valid (estimate of) the open-loop TA value of the serving cell. The wireless device may become UL unsynchronized with the base station of the serving cell (e.g., for UL communication with the base station via the serving cell), for example, based on the expiry of the validity duration of the serving cell and if the wireless device is not able to (re-)acquire the SIB 19 (of the serving cell).

The base station may transmit a differential Koffset MAC CE to the wireless device. The differential Koffset MAC CE may indicate a differential Koffset in a number of slots suing SCS of 15 kHz. The wireless device may use the differential Koffset (indicated by the differential Koffset MAC CE) for determining transmission timing of UL signals and/or activation/deactivation time of one or more MAC CEs at the wireless device. When the differential Koffset is indicated, the wireless device may determine a UE-specific scheduling offset K_(UE,offset) based on the differential Koffset (e.g., the UE-specific scheduling offset is equal to the differential Koffset). If the differential Koffset is not indicated, the wireless device may set $K_{\mathrm{UE,offset}}$= 0.

The base station may transmit, to the wireless device, a DCI. The wireless device may receive the DCI during a reception occasion/time/interval (e.g., a slot/symbol). For example, the DCI may schedule/indicate/trigger a transmission of an uplink signal/channel (e.g., a PUSCH or a PUCCH or a PRACH or an SRS) to the base station via the NTN. The wireless device may transmit UL data and/or UCI and/or preamble and/or SRS resource via/based on the UL signal to the base station via/during a transmission occasion/time/interval (e.g., slot/symbol).

The DCI may trigger/schedule/indicate a transmission of the PUSCH (e.g., the UL data) and/or the PUCCH (e.g., the UCI, e.g., HARQ-ACK information). The wireless device may use the cell-specific scheduling offset and/or the UE-specific scheduling offset to determine the transmission occasion of the PUSCH/PUCCH. For example, the transmission occasion of the PUSCH may be based on $K_{offset} \cdot \frac{2^{\mu_{PUSCH}}}{2^{\mu_{K_{offset}}}}$, wherein $K_{offset} = K_{cell,offset} - K_{UE,offset}$. $\mu_{PUSCH}$ is the SCS configuration of the PUSCH transmission and $\mu_{Koffset}$ is the SCS configuration of the Koffset (e.g., $\mu_{Koffset}$ = 0 for 15 kHz or FR1). For example, the transmission occasion of the PUCCH may be based on $K_{offset} \cdot \frac{2^{\mu_{PUCCH}}}{2^{\mu_{K_{offset}}}}$, where $\mu_{PUCCH}$ is the SCS configuration of the PUCCH transmission. The wireless device may apply/use the current TA value (e.g., based on the closed-loop TA value and/or the open-loop TA value) to transmit the PUSCH/PUCCH.

For a TAC MAC CE received on uplink slot n, the wireless device may apply/adjust an uplink transmission timing (e.g., for transmission of UL signals) from a beginning/start of uplink slot $n + k + 1 + 2^{\mu} \cdot K_{\text{offset}}$ where $k = \lceil N_{\text{slot}}^{\text{subframe},\mu} \cdot (N_{\text{T},1} + N_{\text{T},2} + N_{\text{TA,max}} + 0.5)/T_{\text{sf}} \rceil$, $N_{\text{T},1}$ is a time duration in msec of $N_1$ symbols corresponding to a PDSCH processing time for UE processing capability 1 when additional PDSCH DM-RS is configured, $N_{\text{T},2}$ is a time duration in msec of $N_2$ symbols corresponding to a PUSCH preparation time for UE processing capability 1, $N_{\text{TA,max}}$ is a maximum timing advance value in msec that can be provided by a TA command field of 12 bits, $N_{\text{slot}}^{\text{subframe},\mu}$ is the number of slots per subframe, $T_{sf}$ is the subframe duration of 1 msec. $N_1$ and $N_2$ are determined with respect to the minimum SCS among the SCSs of all configured UL BWPs for all uplink carriers in the TAG and of all configured DL BWPs for the corresponding downlink carriers. For $\mu = 0$, the UE assumes $N_{1,0} = 14$. Slot n and $N_{\text{slot}}^{\text{subframe},\mu}$ are determined with respect to the minimum SCS among the SCSs of all configured UL BWPs for all uplink carriers in the TAG. $N_{\text{TA,max}}$ is determined with respect to the minimum SCS among the SCSs of all configured UL BWPs for all uplink carriers in the TAG and for all configured initial UL BWPs provided by *initialUplinkBWP*. The uplink slot n may be a last/final/ending/latest slot among uplink slot(s) overlapping with the slot(s) of PDSCH reception assuming $T_{TA} = 0$, where the PDSCH provides the timing advance command.

The DCI may trigger/indicate/order a transmission of the PRACH (e.g., the UL signal may be the ordered PRACH) corresponding to a preamble index. For example, the DCI (e.g., a PDCCH order) may comprise a random access preamble index field indicating a value (e.g., that is not zero) of the preamble index. For the PRACH transmission (e.g., during/via the transmission occasion) to the base station by the wireless device, triggered by the PDCCH order, a PRACH mask index field of the DCI may indicate the PRACH occasion for the PRACH transmission. In an example, the PRACH occasions may be associated with an SS/PBCH block (e.g., SSB) index indicated by the SS/PBCH block index field of the DCI (e.g., the PDCCH order). The wireless device may use the cell-specific scheduling offset (e.g., $K_{cell,offset}$ by *cellSpecificKoffset*) to determine the PRACH occasion. For example, the wireless device may determine the PRACH occasion being after slot $n + 2^{\mu} \cdot K_{\text{cell,offset}}$. n may be the slot of an UL BWP for the PRACH transmission that overlaps with an end of the PDCCH order reception (e.g., assuming TA being 0, e.g., $T_{\text{TA}} = 0$). $\mu$ may be the SCS configuration for the PRACH transmission. The PDCCH order reception may be received during the reception occasion.

The wireless device may attempt to detect a DCI format 1_0 with CRC scrambled by a corresponding RA-RNTI during a RAR window (e.g., *ra-ResponseWindow*), for example, based on (e.g., in response to) a PRACH transmission (e.g., for performing a 2-step/4-step CFRA/CBRA procedure, e.g., for initial access and/or for beam failure recovery) by a wireless device to the base station (e.g., via the NTN). The PRACH transmission may be indicated by a PDCCH order and/or higher layers (e.g., MAC/RRC layer) of the wireless device. The RAR window may start at a first/initial/earliest symbol of an earliest CORESET the wireless device is configured to receive PDCCH for Type1-PDCCH CSS set. For example, the earliest CORESET may be at least one symbol, after the last/final/ending symbol of a PRACH occasion corresponding to the PRACH transmission. The symbol duration may correspond to an SCS for Type1-PDCCH CSS set.

The RAR window may start after an additional UE-gNB RTT of the serving cell, for example, if communicating with the NTN (e.g., when $N_{\text{TA,adj}}^{\text{UE}}$ or $N_{\text{TA,adj}}^{\text{common}}$ is not zero, e.g., when the open-loop TA value of the wireless device is not zero). The wireless device may determine the UE-gNB RTT (e.g., in ms or in number of slots) based on the current TA value (e.g., $T_{\text{TA}}$) and/or the K-mac indicated by the NTN-config. The length of the RAR window in number of slots may be based on the SCS for Type1-PDCCH CSS set and is provided/indicated by the one or more configuration parameters (e.g., *ra-Response Window).* $N_{\text{TA,adj}}^{\text{UE}}$ may be based on a propagation delay of the service link (e.g., between the wireless device and the NTN node). The wireless device may determine/measure/estimate $N_{\text{TA,adj}}^{\text{UE}}$ based on the location information of the wireless device (e.g., position and/or GNSS of the wireless device) and the satellite ephemeris data of the serving cell. $N_{\text{TA,adj}}^{\text{common}}$ may be a common delay of the cell (e.g., a portion of the feeder link delay that is not pre-compensated by the base station). The wireless device may determine the $N_{\text{TA,adj}}^{\text{common}}$ based on the common TA parameters of the serving cell. For example, the wireless device may determine the open-loop TA value (corresponding to the serving cell) by summing up/adding the $N_{\text{TA,adj}}^{\text{common}}$ and $N_{\text{TA,adj}}^{\text{UE}}$.

Based on (e.g., in response to) a transmission of a PRACH and a PUSCH (e.g., for performing a 2-step CFRA/CBRA procedure, for example, for initial access and/or for beam failure recovery) by the wireless device to the base station (e.g., via the NTN), or to a transmission of only a PRACH if the PRACH preamble is mapped to a valid PUSCH occasion, the wireless device may attempt to detect a DCI format 1_0 with CRC scrambled by a corresponding MsgB-RNTI during a RAR window (e.g., *msgB-ResponseWindow*). The PRACH transmission may be indicated by a PDCCH order and/or higher layers (e.g., MAC/RRC layer) of the wireless device. The RAR window may start at a first/initial/earliest symbol of an earliest CORESET the wireless device is configured to receive PDCCH for Type 1-PDCCH CSS set. For example, the earliest CORESET may be at least one symbol, after the last/final/ending symbol of a PUSCH occasion corresponding to the PRACH transmission. The symbol duration may correspond to an SCS for Type1-PDCCH CSS set. When communicating with the NTN (e.g., when $N_{\text{TA,adj}}^{\text{UE}}$ or $N_{\text{TA,adj}}^{\text{common}}$ is not zero, e.g., when the open-loop TA value of the wireless device is not zero), the RAR window may start after an additional UE-gNB RTT of the serving cell. The wireless device may determine the UE-gNB RTT (e.g., in ms or in number of slots) based on the current TA value (e.g., $T_{\text{TA}}$) and/or the K-mac indicated by the NTN-config. The length of the RAR window in number of slots may be based on the SCS for Type1-PDCCH CSS set and is provided/indicated by the one or more configuration parameters (e.g., *msgB-ResponseWindow*).

With reference to slots for a PUSCH transmission scheduled by a RAR UL grant, if a base station may receive a PDSCH with a RAR message ending in slot n for a corresponding PRACH transmission from the base station, the wireless device may transmit the PUSCH in slot $n + k_2 + \Delta + 2^{\mu} \cdot K_{\text{cell,offset}}$, where the $k_2$ and $\Delta$ are provided by NR specification (e.g., TS 38.214) and $K_{\text{cell,offset}}$ is indicated by *cellSpecificKoffset*; otherwise, if not provided, $K_{\text{cell,offset}} = 0$.

A source base station (e.g., via a source cell) may configure/indicate the wireless device to handover to a target base station (e.g., via a target cell), e.g., by transmitting to the wireless device the handover command (e.g., RACH-less handover command and/or a PDCCH order) and/or the RRC reconfiguration message. The RACH-less (or RACH-skip) handover command (e.g., when the handover command comprises RACH-skip configuration) may allow the wireless device to perform handover operation by skipping/voiding an RA procedure.

In an NTN scenario with along propagation delay (e.g., 20-40 ms in LEO satellite or approximately 600 ms in GEO satellite), the wireless device may unnecessarily monitor PDCCH when/while/during performing the handover procedure. For example, the wireless device may, when performing the handover procedure, monitor the PDCCH to receive an UL grant (e.g., for transmission of an initial PUSCH transmission on/via the target cell, e.g., for transmission of the RRC reconfiguration complete message) and/or a DL grant (e.g., for receiving a PDSCH comprising a contention resolution identity MAC CE). A propagation delay in the NTN scenario may be 20-600 times greater than a (maximum) propagation delay in a terrestrial network (TN) scenario. By unnecessarily monitoring the PDCCH, based on at least some technologies, consumed power of the wireless device may increase (e.g., reduce battery life of the wireless device) for performing the handover procedure. For example, in an NTN with a moving NTN node (e.g., LEO satellite), the wireless device may (on average) perform the handover procedure (e.g., based on receiving the RACH-less handover command) frequently (e.g., each 6-133 seconds, e.g., depending on beam radius of the NTN node). In at least some technologies, in the NTN with the long propagation delay and frequent handover procedure, performing the handover procedure may increase (compared to the TN scenario) the consumed power of the wireless device (e.g., by monitoring PDCCH during each handover procedure). Improvements in handover procedure (e.g., RACH-less handover procedure and/or LTM procedure) may allow the wireless device to reduce consumed power for PDCCH monitoring during the (e.g., RACH-less) handover procedure.

The wireless device may delay/postpone monitoring the PDCCH based on (e.g., in response to) receiving the RACH-less handover command from a source cell (e.g., a first cell) and/or transmitting an initial PUSCH via a target cell (e.g., a second cell). The wireless device may delay/postpone staring monitoring the PDCCH after a first timing gap after the transmitting the initial PUSCH via the target cell. The wireless device may delay/postpone staring monitoring the PDCCH after a second timing gap after the receiving the RACH-less handover command via the source cell. Example embodiments may reduce consumed power of the wireless device (e.g., for monitoring the PDCCH) during the handover procedure. For example, in the NTN scenario with long propagation delay and/or moving NTN node, solutions of the present disclosure may reduce possibility of unnecessarily monitoring the PDCCH by the wireless device during the handover procedure.

The wireless device may receive, via the first cell (e.g., the source cell) of the NTN, the (e.g., RACH-less) handover command comprising: a pre-allocated/pre-configured uplink grant for a physical uplink shared channel (PUSCH) transmission via the second cell (e.g., the target cell) of the NTN; and/or a random access channel (RACH)-skip configuration. The wireless device may transmit, using the pre-allocated uplink grant, the PUSCH transmission via the second cell. The wireless device may start monitoring, after the first timing gap from the transmitting the PUSCH transmission via the second cell, downlink control channels for receiving a PDCCH via the second cell. The first timing gap may be based on a round trip transmission delay (or round trip delay or round trip time (RTT)) of the second cell. For example, the wireless device may determine the RTT of the second cell based on a second NTN configuration parameters corresponding to the second cell. The wireless device may receive the second NTN configuration parameters via the source cell (e.g., SIB 19 transmitted via the source cell and/or the handover command). The wireless device may determine the first timing offset based on a second cell-specific timing offset indicated by the second NTN configuration parameters.

The wireless device may transmit the RRC reconfiguration complete message during the PUSCH transmission. The wireless device may receive, at least after the first timing gap from the transmitting the PUSCH transmission via the second cell, the PDCCH via the second cell addressing to a cell radio network temporary identifier (RNTI), C-RNTI. The PDCCH schedules a physical downlink shared channel (PDSCH) reception on the second cell. The PDSCH comprises a contention resolution identity MAC control element. In response to receiving the PDCCH via the second cell addressing to the C-RNTI, e.g., at least after the first timing gap from the transmitting the PUSCH transmission, the wireless device may complete the handover procedure. Example embodiments may improve consume power of the wireless device for performing the handover procedure.

The wireless device may determine whether to delay/offset the starting monitoring the PDCCH (e.g., after the transmitting the PUSCH). In an example, when the second cell is part of the TN, the wireless device may monitor the PDCCH after the transmitting the PUSCH (e.g., the first timing gap=0). The source cell may be part of the NTN or the TN.

The wireless device may monitor the PDCCH after the first timing gap from the transmitting the PUSCH, for example, if the second cell is part of the NTN. For example, when the second cell is part of the NTN, the wireless device may determine the source base station configures/enables the wireless device for delaying/offsetting the start of the PDCCH monitoring by the first timing gap after the transmission of the PUSCH. In an example embodiment, when the second cell is part of the NTN and the source base station does not configure/enable the wireless device for delaying/offsetting the start of the PDCCH monitoring, the wireless device may set/initialize the first timing gap by 0 (e.g., the wireless device may avoid/skip delaying/offsetting the start of the PDCCH monitoring after the transmission of the PUSCH). The source cell may be part of the NTN or the TN.

The wireless device may start monitoring downlink control channels after the second timing gap from the receiving the RACH-less handover command, for example, based on (e.g., in response to) the RACH-less handover command not indicating the pre-allocated uplink grant. The wireless device may receive, while monitoring the downlink control channels and via the target cell, a third PDCCH indicating a dynamic uplink grant. The wireless device may transmit, using the dynamic uplink grant, a PUSCH transmission (e.g., for transmitting the RRC reconfiguration complete message) via the target cell. The second timing gap may be based on the second NTN configuration parameters and/or a first NTN configuration parameters corresponding to the first cell. For example, the second timing gap may be based on the RTT of the second cell and/or an RTT of the first cell. In another example, the second timing gap may be based on a second cell-specific scheduling timing indicated by the second NTN configuration parameters and/or a first cell-specific scheduling timing indicated by the first NTN configuration parameters.

The wireless device may determine whether to delay/offset the starting monitoring the PDCCH (e.g., after the receiving the RACH-less handover command without the pre-allocated uplink grant). In an example, when the second cell is part of the TN, the wireless device may monitor the PDCCH after receiving the RACH-less handover command without the pre-allocated uplink grant (e.g., the second timing gap=0). The source cell may be part of the NTN or the TN.

The wireless device may monitor the PDCCH after the second timing gap from the receiving the RACH-less handover command without the pre-allocated uplink grant, for example, if the second cell is part of the NTN. For example, when the second cell is part of the NTN, the wireless device may determine the source base station configures/enables the wireless device for delaying/offsetting the start of the PDCCH monitoring by the second timing gap after the receiving the RACH-less handover command without the pre-allocated uplink grant. In an example embodiment, when the second cell is part of the NTN and the source base station does not configure/enable the wireless device for delaying/offsetting the start of the PDCCH monitoring after the receiving the RACH-less handover command without the pre-allocated uplink grant, the wireless device may set/initialize the second timing gap by 0 (e.g., the wireless device may avoid/skip delaying/offsetting the start of the PDCCH monitoring after the receiving the RACH-less handover command without the pre-allocated uplink grant). The source cell may be part of the NTN or the TN.

The wireless device may receive, via the first cell of the NTN, a PDCCH indicating/triggering a preamble transmission via the second cell of the NTN (e.g., Layer 1/2 mobility, e.g., LTM procedure). The PDCCH may indicate switching from the first cell to the second cell The wireless device may start monitoring, after the first timing gap (e.g.,

the RTT of the second cell) from a transmission of the preamble via the second cell, downlink control channels for receiving a random access response (RAR) from the second cell. In an example embodiment, the wireless device may start a RAR window (e.g., for monitoring the PDCCH) after the first timing gap from the transmitting the preamble. For example, the source base station may configure/enable the wireless device for receiving the RAR via the second cell during the RAR window. Example embodiments may reduce consumed power of the wireless device for performing Layer 1/2 based handover procedure.

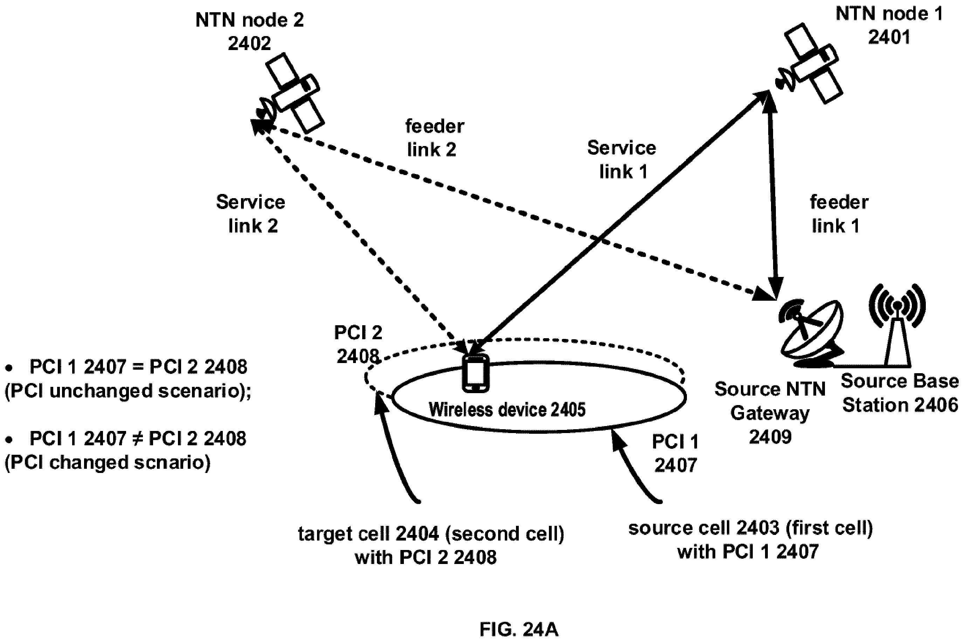

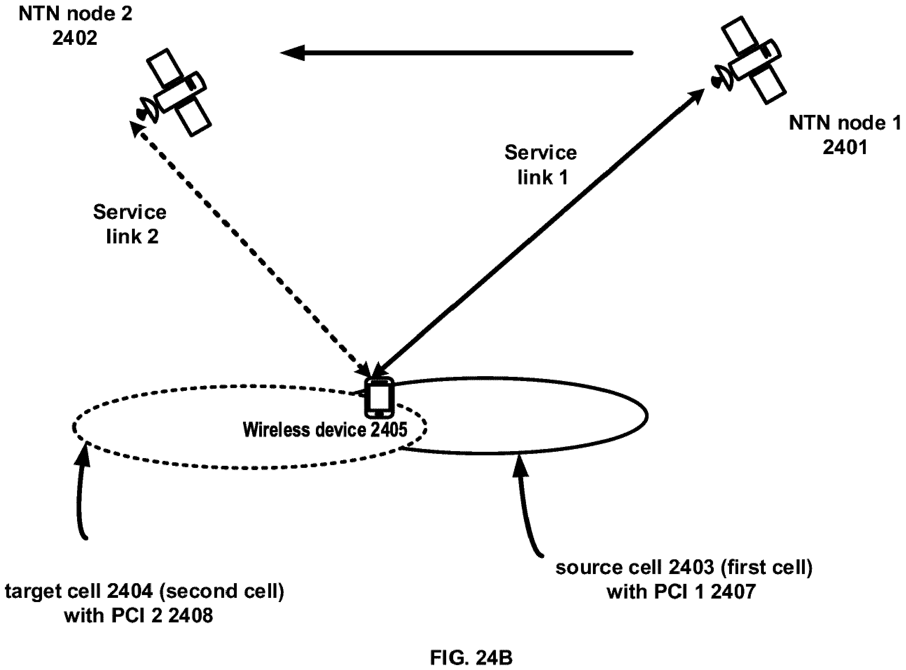

FIG. 24A and FIG. 24B shows examples of a handover procedure in a non-terrestrial network (NTN). More specifically, FIG. 24A shows an example of a handover in an Earth-fixed (or quasi-Earth-fixed) scenario. More specifically, FIG. 24B may show an example of handover in an Earth-moving scenario. For example, a handover procedure may comprise switching from a first NTN node/payload (e.g., a NTN node 1 2401 as shown in FIG. 24A) to a second NTN node/payload (e.g., a NTN node 2 as shown in FIG. 24A). For example, the first NTN node (e.g., the NTN node 1 2401) and/or the second NTN node (e.g., the NTN node 2 2402) may be a LEO satellite (e.g., a NGEO satellite), a MEO satellite, or a GEO satellite. A source cell 2403 (e.g., a first cell) and/or a target cell 2404 (e.g., a second cell) may be a quasi-Earth-fixed cell. The source cell (and/or the target cell) may be an earth-moving cell.

As described with respect to FIG. 24A and/or FIG. 24B, for example, prior to performing the handover procedure (e.g., receiving the handover command via a source cell), a wireless device 2405 may communicate (e.g., send or receive) with a source base station 2406 (e.g., of the source cell 2403 (the first cell)) via a non-terrestrial network (NTN), e.g., the wireless device 2405 and the source base station 2406 may operate in the NTN and/or the source base station 2406 may be an NTN base station and/or the source cell 2403 (e.g., a source serving cell) may be part of the NTN. The source cell 2403 may correspond to a first PCI (e.g., PCI 1 2407 as shown in FIG. 24A). For example, the wireless device 2405 may communicate via the first NTN node (e.g., NTN node 1 2401) with the source base station 2406. The first NTN node (e.g., NTN node 1 2401) may have (or be associated with) a unique identification number. The first NTN node (e.g., NTN node 1 2401) may correspond to a first ephemeris data/information (e.g., 1st ephemeris information 2671 of a first NTN-config 2651).

The wireless device 2405 may, by performing the handover procedure, communicate with a target base station (e.g., of the target cell or a second cell) via the non-terrestrial network (NTN), e.g., the wireless device and the target base station may operate in the NTN and/or the target base station may be an NTN base station and/or the target cell (e.g., a target serving cell) may be part of the NTN. The wireless device may, for example, switch from the first NTN node (e.g., NTN node 1 2401) to the second NTN node (e.g., a NTN node 2 2402) for communicating with the target cell (or the target base station). In the example of FIG. 24A, the second NTN node (e.g., a NTN node 2 2402) may be different than the first NTN node (e.g., NTN node 1 2401). For example, the second NTN node (e.g., a NTN node 2 2402) may have (or be associated with) a unique identification number that is different than the identification number of the first NTN node (e.g., NTN node 1 2401).

A source base station and a target base station may be a same base station (e.g., connecting to the first NTN node (e.g., NTN node 1 2401) and/or the second NTN node (e.g., a NTN node 2 2402) via a same NTN gateway), e.g., intra-satellite handover with the same feeder link. In other implementations, the source base station and the target base station may not be a same base station (e.g., the source base station is connecting to the first NTN node (e.g., NTN node 1 2401) via a first NTN gateway and/or the target base station is connecting to the second NTN node (e.g., a NTN node 2 2402) via a second NTN gateway), e.g., an intra-satellite handover with different feeder links and/or inter-satellite handover with NTN gateway/base station switch. For example, the handover may correspond to an inter-satellite handover with same NTN gateway/base station.

A serving cell (e.g., the first cell and/or the second cell) may have a unique cell ID/identification/index (e.g., physical cell ID (PCI)). As described with respect to FIG. 24A, the PCI of the source cell 2403 (e.g., the first PCI, or PCI 1 2407) and the PCI of the target cell 2404 (e.g., the second PCI, or PCI 2 2408) may be different (e.g., PCI changed scenario) or the same (e.g., PCI unchanged scenario), for example, depending on the network configuration.

Based on whether the handover procedure may be ongoing (or starting or have been completed), the cell ID/identification/index of the serving cell may remain unchanged. For example, the source cell 2403 and the target cell 2404 may have the same PCI (e.g., a PCI unchanged (or fixed) scenario (or scheme, case, protocol, or method). For example, as described with respect to FIG. 24A, the source cell 2403 and the target cell 2404 may have different PCIs (e.g., PCI 1 2407 corresponding to the source cell 2403 and PCI 2 2408 corresponding to the target cell 2404 may not be equal) (e.g., a PCI changed scenario).

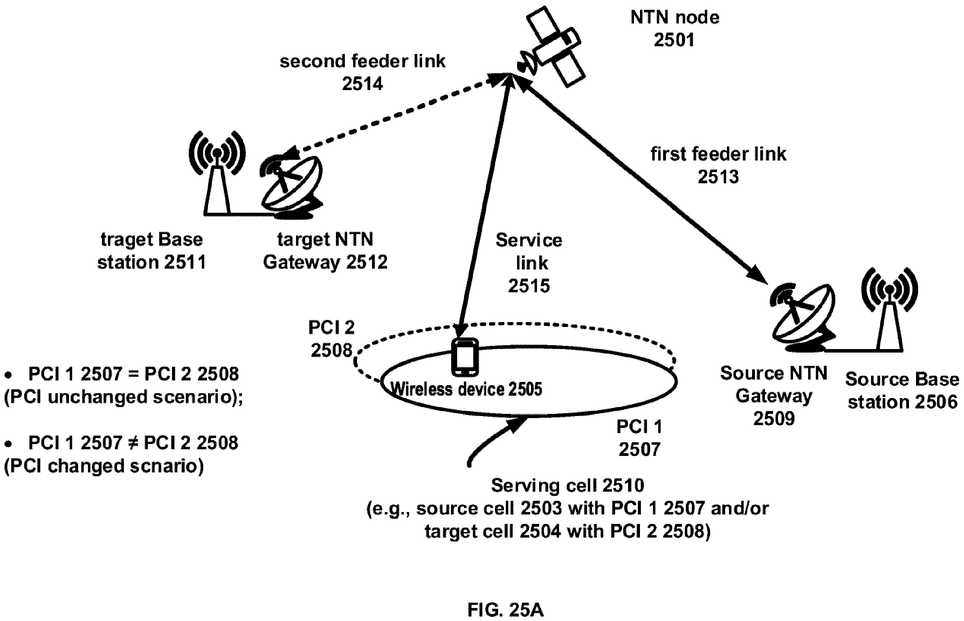

FIG. 25A shows a feeder link switchover/switching procedure in a non-terrestrial network (NTN). A handover procedure may comprise a feeder link switchover procedure (e.g., from a first feeder link 2513 to a second feeder link 2514 as shown in FIG. 25A). As described with respect to FIG. 25A, a wireless device 2505 may communicate (e.g., send or receive) with a source base station 2506 (and/or a source NTN Gateway 2509) on a serving cell 2510 of the NTN. For example, the communication (or connection) between the wireless device 2505 and the source base station 2506 (and/or the source NTN Gateway 2509) may be via an NTN node/payload (e.g., an NTN node 2501 as shown in FIG. 25A, or a LEO satellite) of the NTN. The communication between the NTN node 2501 and the source NTN Gateway 2509 may be through/via a first feeder link 2513. The source NTN Gateway 2509 may be associated (or correspond to or communicate with) the source base station 2506 and/or the first feeder link 2513.

A feeder link switchover procedure (e.g., a feeder link switching procedure, or FLS procedure) may be ongoing/started (e.g., by/at the NTN node), for example, to change the feeder link from the first feeder link to a second feeder link. For example, based on the feeder link switchover, the NTN node may switch from the source NTN Gateway 2509 to a target NTN Gateway 2512 (and/or from the source base station to a target base station). The second feeder link may be associated with the target Gateway/base station. For example, by performing/terminating the feeder link switchover, the wireless device's communication with the target base station (and/or the target NTN Gateway) may be through/via the NTN node and the second feeder link (e.g., the NTN node may connect to the target NTN Gateway 2512 and/or the target base station 2511).

The NTN node 2501 may connect to only one NTN Gateway at any given time, for example, based on a hard feeder link switchover (compared to a soft feeder link switchover). For example, a radio link interruption may occur during the transition between the feeder links (e.g., during the feeder link switchover procedure). For the hard feeder link switchover, the NTN node 2501 may only connect to the source NTN Gateway 2509, for example, prior to starting the feeder link switchover and/or after finishing/performing the hard feeder link switchover, the NTN node 2501 may only connect to the target NTN gateway 2512. The radio link interruption time (e.g., window or duration) may correspond to the time (e.g., window or duration) to perform the hard feeder link switchover at the NTN node and/or the network side.

The wireless device 2505 may simultaneously communicate (e.g., send or receive) with both the source base station 2506 (e.g., on/via a source serving cell, or the source cell 2503) and the target base station 2511 (e.g., on/via the target serving cell, or the target cell 2504), for example, during the soft FLS procedure (e.g., being ongoing).

A serving cell 2510 may have a unique cell ID/identification/index (e.g., physical cell ID, PCI). As described with respect to FIG. 25A, for example, based on the status of the FLS procedure, which may be ongoing, starting, or already completed, the cell ID/identification/index of the serving cell may not change. For example, in a scenario (e.g., scheme, case, protocol, or method) where a PCI may remain unchanged (or fixed) in the FLS procedure, both a source serving cell and a target serving cell may have the same PCI. For example, as described with respect to FIG. 25A, the source serving cell with a PCI 1 2507 (e.g., a serving cell before the FLS procedure may start or be completed, and/or a serving cell associated with the source NTN gateway 2509 and/or the source base station 2506) may be the same as the target serving cell with PCI 2 2508 (e.g., a serving cell after the FLS procedure may be completed and/or a serving cell associated with the target NTN gateway 2512 and/or the target base station 2511. The cell provided by the NTN may be the source serving cell (e.g., prior to the start of the FLS procedure) and/or the target serving cell (e.g., after the FLS procedure being completed).

As described with respect to FIG. 25A, the source serving cell 2503 and the target serving cell 2504 may have different PCIs (e.g., PCI 1 2507 corresponding to the source serving cell 2503 and PCI 2 2508 corresponding to the target serving cell 2504 may not be equal, a PCI changed scenario, e.g., for FLS procedure). For example, based on the FLS procedure, the cell ID/identification/index of the serving cell may change. The source serving cell 2503 (e.g., associated with the source NTN gateway 2509 and/or the source base station 2506) may be different than the target serving cell 2504 (e.g., associated with the target NTN gateway 2512 and/or the target base station 2511).

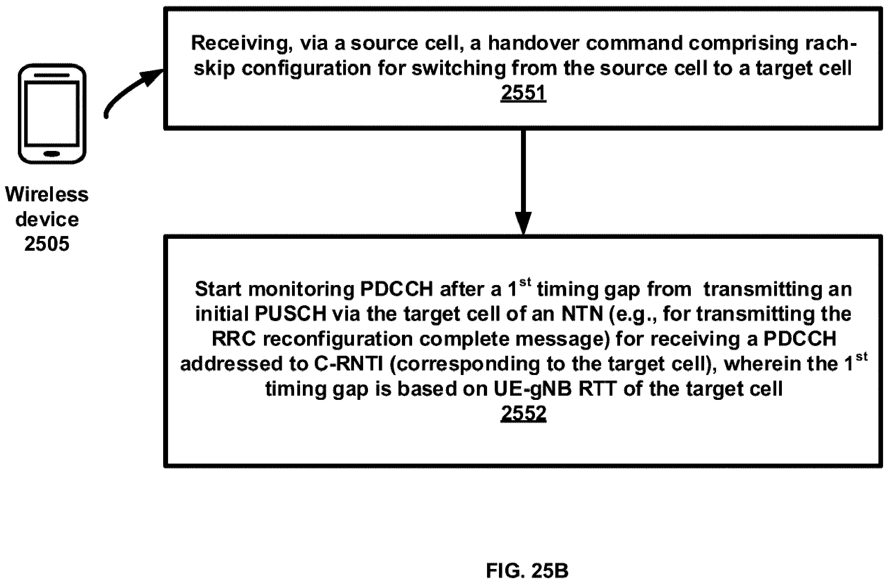

FIG. 25B shows a flowchart of a RACH-less handover procedure in an NTN. At step 2551, a wireless device (e.g., wireless device 2505) may receive (e.g., via a first cell or a source cell) a handover command. The handover command may indicate/trigger/initiate a RACH-less handover procedure by the wireless device, the source base station, and/or the target base station. The handover command may be the RRC reconfiguration message comprising *reconfiguraionWithSync.* The handover command may comprise RACH-skip configurations. The handover procedure may be described herein with respect to FIG. 18, FIG. 19, FIG. 20, FIG. 21, FIG. 22, FIG. 24A, FIG. 24B, and/or FIG. 25A.

At step 2552, the wireless device 2505 may, for example, based on (e.g., in response to) sending (e.g., transmitting) an initial PUSCH via the second cell/target cell (e.g., for transmission of the RRC reconfiguration complete messages via the second cell/target cell), start monitoring the PDCCH (corresponding to the target cell), for example, after a first timing gap from the initial PUSCH transmission. The wireless device may determine the first timing gap, for example, based on a UE-gNB RTT of the second cell (e.g., target cell).

In at least some wireless communications, such as Non-Terrestrial Networks (NTNs) involving satellites, a wireless device may maintain the same physical cell identifier (PCI) while switching a link from a source satellite to a target satellite. Even with the PCI unchanged, the wireless device may synchronize uplink and downlink communications with the target satellite. This synchronization may comprise initiating a random access procedure, which may include sending one or more preambles to the target satellite and receiving a random access response from the target satellite.

If a wireless device switches a link from a source satellite to a target satellite but maintains the same PCI, conducting a random access procedure for synchronization with the target satellite may be inefficient and/or unnecessary. Because the cell's parameters may not change, performing a random access procedure (e.g., typically necessary for establishing initial communication with a new satellite) may lead to unnecessary resource usage and/or power consumption by the wireless device.

As described herein, a base station may send, to a wireless device, one or more messages (e.g., radio resource control (RRC) message(s)) indicating a process for switching from a source to a target satellite without changing the PCI. The one or more messages (e.g., RRC message(s)) may specify whether to follow a random access channel (RACH) switch or to skip the RACH switch (e.g., known as a RACH-less switch). If a RACH-less switch may be determined, the wireless device may switch a link while maintaining the same PCI without undergoing a random access procedure. Following the switch, the one or more messages (e.g., RRC message(s)) may provide timing advance (TA) values to adjust the wireless device's transmission timing for the synchronization between the base station and the target satellite. This approach may simplify the switch between links by eliminating unnecessary procedures, as described further herein.

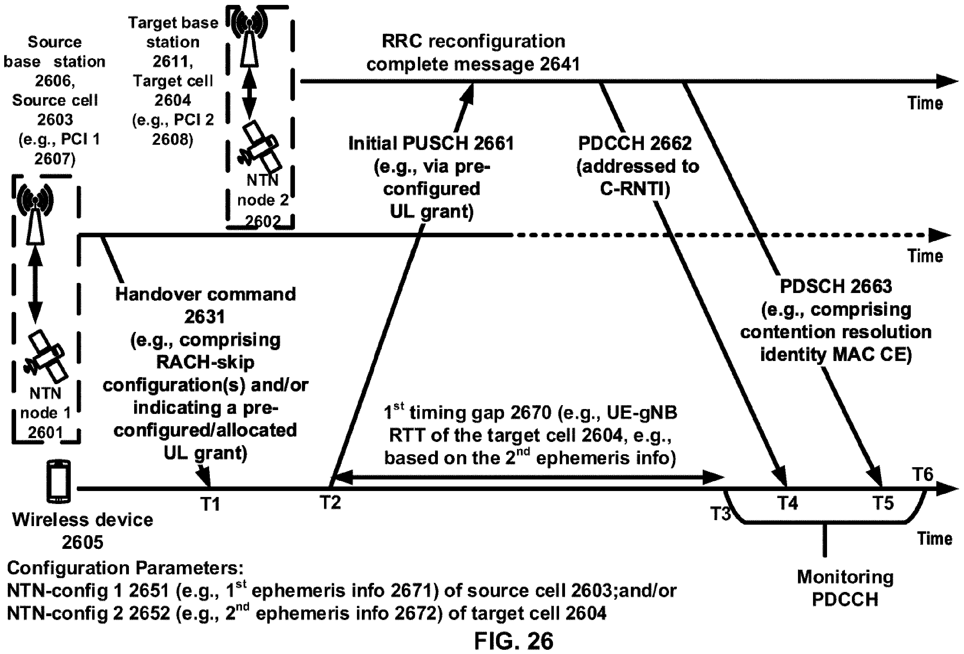

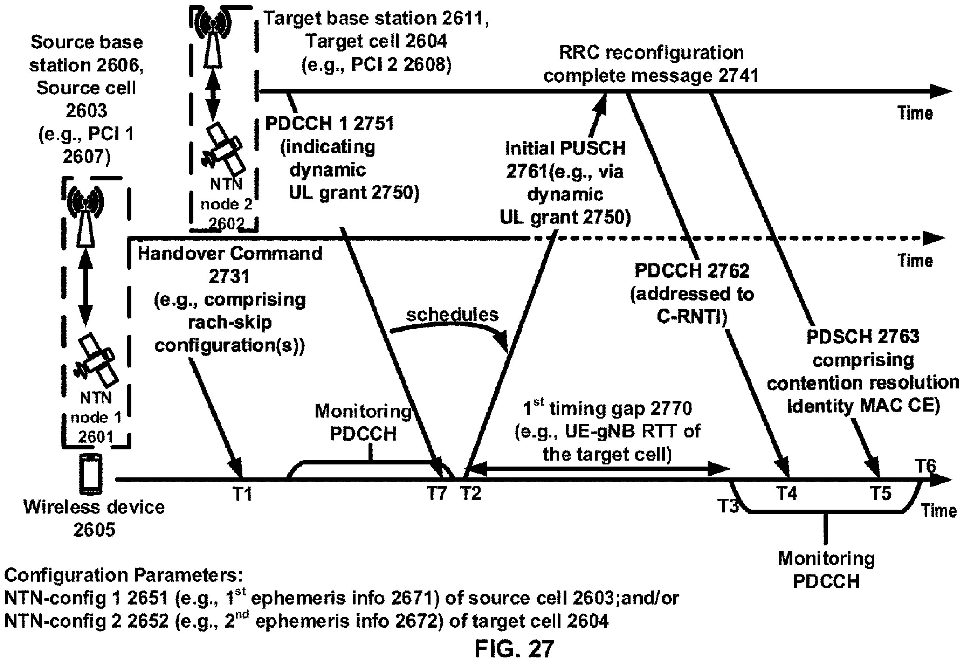

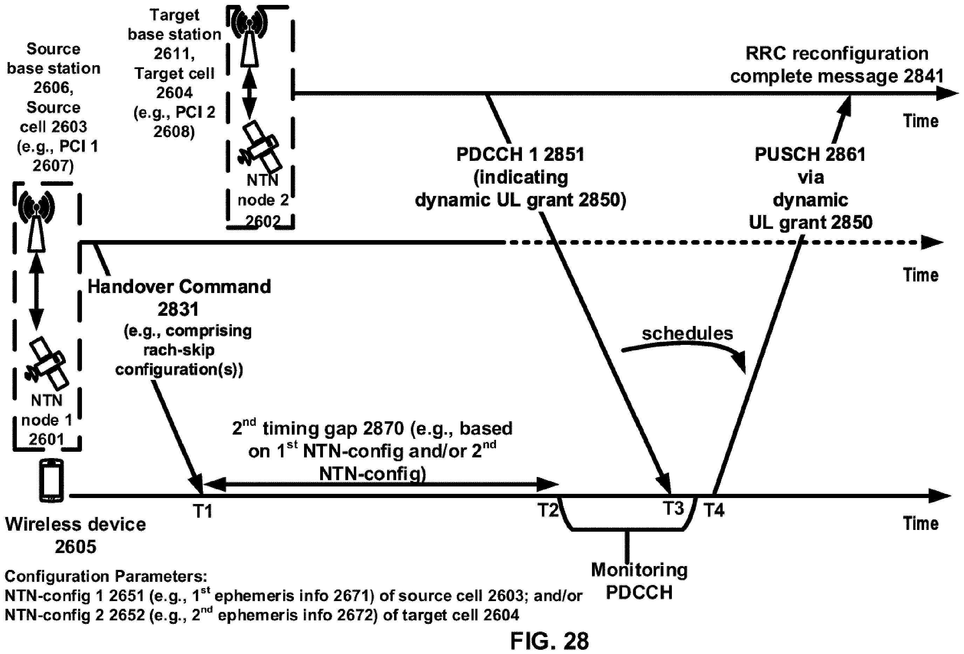

FIG. 26 shows an example of a handover procedure in wireless communications systems. FIG. 26 shows a timeline of the procedure of FIG. 25B at a wireless device and/or a source/target base station. FIG. 26 shows an example of the procedure of FIG. 24B and/or FIG. 25B, for example, for a quasi-earth-fixed system/scenario and/or a moving-earth system/scenario (or any other examples may be possible). FIG. 25B and/or FIG. 26 show examples of a RACH-less handover procedure. FIG. 27 shows an example of a handover procedure in wireless communications systems. FIG. 28 shows an example of a handover procedure in wireless communications systems.

A RACH-less (or RACH-skip) handover procedure may avoid performing/initiating or skip a random access (RA) procedure, for example, if switching from a source cell to a target cell (e.g., a candidate target cell and/or a candidate cell from neighboring cells indicated by *ntn-NeighCellConfigList IE*). The target cell may be a neighboring cell. The RACH-less handover procedure may comprise skipping/avoiding performing the RA procedure for switching from the source cell to the target cell. The wireless device may skip/avoid initiating/performing the RA procedure for switching from the source cell to the target cell, for example, if one or more configuration parameters (e.g., RRC reconfiguration message(s)) may comprise configurations for the RACH-less (or RACH-skip) handover procedure (e.g., *rach-skip* and/or *rach-skipSCG*).

FIG. 26, FIG. 27, and/or FIG. 28 may show examples of a procedure for monitoring PDCCH (e.g., at a wireless device), for example, if receiving a handover command 2631 (e.g., indicating RACH-less handover procedure) from a source base station 2606 (or via a source cell 2603). Performing the handover procedure (e.g., measurement report, handover request, ...) may be based on examples of FIG. 18, FIG. 19, FIG. 20, FIG. 21, and/or FIG. 22 described herein. Performing the handover procedure may be based on examples of FIG. 24A, FIG. 24B, and/or FIG. 25A described herein.

As described herein, a wireless device may receive one or more configuration parameters via a source cell (not shown in FIG. 26, FIG. 27, and/or FIG. 28). For example, the one or more configuration parameters may comprise one or more serving cell (e.g., the one or more Serving Cells or the one or more cells) configuration parameters (e.g., *ServingCellConfigCommon*, *ServingCellConfigCommonSIB*, and/or *ServingCellConfig*) for configuring one or more cells (e.g., the one or more Serving Cells). For example, the one or more cells may comprise a master (or primary) cell group (MSG) and/or a secondary cell group (SCG). A cell of the one or more cells may be a primary secondary cell (PSCell), a primary cell (PCell), a secondary cell (SCell), or a special cell (SpCell). A cell of the one or more cells may belong to a first cell group corresponding to a primary TAG (pTAG) or a second cell group corresponding to a secondary TAG (sTAG). For example, the one or more configuration parameters may configure the wireless device for multi-cell communication and/or carrier aggregation.

The source cell may belong to a first SCG group or a first MCG group. The target cell may belong to a second SCG group or a second MCG group. The source cell may correspond to a first pTAG (or a first sTAG). The target cell may, for example, correspond to a second pTAG (or a second sTAG). The target cell and/or the source cell may be a PCell, a PSCell, or a SpCell.

The one or more configuration parameters may comprise a first set of NTN configuration parameters. For example, the wireless device 2605 may receive the first set of NTN configuration parameters via an NTN-specific SIB (e.g., SIB19) corresponding to the source cell and/or the target cell (e.g., with PCI 1 2607 as shown in in FIG. 26, FIG. 27, and/or FIG. 28). The first set of NTN configuration parameters may comprise a first plurality of NTN-config(s). For example, a first NTN-config (e.g., the NTN-config 1 2651 in FIG. 26, FIG. 27, and/or FIG. 28) of the first plurality of NTN-config(s) may correspond to the source cell 2603. The first NTN-config may, for example, indicate a first cell-specific scheduling offset (e.g., 1st $K_{cell,offset}$), a first ephemeris data/information 2671, a first common timing advance (TA) parameters, and/or a first MAC-layer scheduling offset (e.g., *K-mac*). For example, the wireless device 2605 may obtain the first NTN-config via acquiring the SIB1 and/or SIB19, for example, if communicating with the source base station 2606 via the source cell 2603.

The first plurality of NTN-config(s) may comprise a second NTN-config (e.g., NTN-config 2 2652 as shown in in FIG. 26, FIG. 27, and/or FIG. 28) that may correspond to the target cell 2604 (e.g., with PCI 2 2608 as shown in FIG. 26, FIG. 27, and/or FIG. 28). The second NTN-config may, for example, indicate a second cell-specific scheduling offset (e.g., 2nd $K_{cell,offset}$), a second ephemeris data/information 2672, a second common TA parameters, and/or a second MAC-layer scheduling offset (e.g., *K-mac*). For example, the wireless device 2605 may obtain the second NTN-config (e.g., a neighbor NTN-config in the SIB 19) via acquiring the SIB1 and/or the SIB19, for example, if communicating with the source base station 2606 via the source cell 2603. The wireless device 2605 may receive the second NTN-config via the handover command 2631 (e.g., the RRC reconfiguration message, or RACH-less configuration). The wireless device 2605 may receive the second NTN-config, for example, based on obtaining the SIB 1 and/or the SIB 19 of the target cell (e.g., before performing the handover procedure). The wireless device 2605 may acquire/receive the second NTN-config, for example, prior to preforming the handover procedure.

The second NTN-config may become available for the wireless device 2605, for example, based on receiving the *RRCReconfiguration* message for the target cell 2604 that may comprise *reconfiguraionWithSync.* The second NTN-config may become available for the wireless device 2605, based on conditional reconfiguration execution, for example, if applying a stored *RRCReconfiguraion* message for the target cell 2604 that may comprise *reconfiguraionWithSync.*

FIG. 26 shows an example of a RACH-less handover method in wireless communications systems. For example, as described with respect to FIG. 26, the handover command 2631 may indicate an index/id/identification of the second PCI (e.g., PCI 2 2608). The wireless 2605 device may obtain the second NTN-config from the first plurality of NTN-config(s), for example, based on the indicated index/id/identification of the handover command 2631. The wireless device 2605 may not need to acquire SIB19 via the target cell 2604, for example, because the first plurality of NTN-config(s) may be received via the source cell (e.g., SIB19 of the source cell). Using the index/id/identification in the handover command 2631 (e.g., instead of including the second NTN-config in the handover command 2631) may reduce the signal overhead/payload of the handover command 2631.

The wireless device 2605 (e.g., as described with respect to FIG. 26, FIG. 27, and/or FIG. 28) may receive the handover command 2631 from the source cell 2603, for example, at (or in or during) time T1. For example, the handover command 2631 may be a RACH-less handover command (e.g., comprising a *rach-skip* or *rach-skipSCG*, e.g., similar to LTE specification). The handover command 2631 may comprise configuration parameters for performing the RACH-less handover procedure by the wireless device 2605. The handover command 2631 may comprise an RRC reconfiguration message.

The handover command 2631 may comprise a pre-configured (or pre-allocated or pre-assigned or configured) UL grant (or one or more pre-configured UL grants). The pre-configured UL grant may indicate configured PUSCH resource(s) for the transmission of an RRC reconfiguration complete message 2641 to the target base station 2611 by the wireless device 2605 (e.g., transmission of the initial PUSCH, or a RACH-less initial PUSCH on/via the target cell 2604) on/via the target cell 2604. For example, the source base station 2606 may configure/indicate the pre-configure UL grant that may be similar to RRC configurations for Type1/Type2 configured grant(s) in NR specification.

As described with respect to FIG. 26, based on (e.g., in response to) receiving the handover command 2631, the wireless device 2605 may send (e.g., transmit) an initial PUSCH transmission 2661 at/on/in/during time/interval/occasion/slot T2 for sending (e.g., transmitting) the RRC reconfiguration complete message 2641 to the target base station 2611 via/on the target cell 2604, for example, based on the pre-configured UL grant.

FIG. 27 shows an example of a RACH-less handover method in wireless communications systems. As described with respect to FIG. 27, a handover command 2631 may comprise/indicate a pre-configured UL grant (e.g., pre-configured UL grant for the initial PUSCH transmission may be absent from the handover command 2631). For example, the wireless device 2605 may start monitoring PDCCH (e.g., corresponding to the target cell 2604) for receiving a dynamic UL grant 2750 from the target base station 2611 (e.g., via the target cell 2604) or from the source base station 2606 (e.g., via the source cell 2603) for transmission of the RRC reconfiguration complete message 2641 on/via the target cell 2604. The dynamic UL grant 2750 may be received, for example, based on receiving a first PDCCH (e.g., PDCCH 1 2751 at time/occasion T7 as shown in FIG. 27) from the target cell 2604. Based on (e.g., in response to) receiving the handover command 2631, the wireless device 2605 may stop monitoring the PDCCH corresponding to the target cell 2604 based on the pre-configured UL grant. For example, the wireless device 2605 may send (e.g., transmit) (e.g., at/on/in/during time/interval/occasion/slot T2 as shown in FIG. 27) the initial PUSCH 2761 for transmitting the RRC reconfiguration complete message 2741 to the target base station 2611 via/on the target cell 2604 via/using the dynamic UL grant 2750.

The wireless device 2605 may start monitoring a PDCCH 2762 (e.g., downlink control channels) for receiving the PDCCH 2762 from the target base station 2611 (via/on the target cell 2604), for example, based on (e.g., after/in response to) sending (e.g., transmitting) the initial PUSCH 2761. As described with respect to FIG. 26 and/or FIG. 27, the wireless device 2605 may start monitoring the PDCCH 2762 during a first timing gap 2770 (e.g., in ms or in number of slots/symbols) from a last/final/ending/latest symbol of transmission occasion/time (e.g., T2) of the initial PUSCH 2761 transmission. The wireless device 2605 may start monitoring the PDCCH 2762 during the first timing gap 2770 after a CORESET. For example, the wireless device 2605 may start monitoring the PDCCH 2762 during the first timing gap 2770 after a first/starting/earliest/initial symbol of the CORESET. The one or more configuration parameters (e.g., the RRC reconfiguration messages) may configure the CORESET for receiving the PDCCH 2762 (e.g., for a user-specific search space set (USS) corresponding to/associated with the target cell 2604) via/on the target cell 2604. The CORESET may be an earliest/starting/initial CORESET for receiving the PDCCH 2762 via the target cell 2604.

The wireless device 2605 may determine the first timing gap 2770, for example, based on the second NTN-config parameters (e.g., NTN-config 2 2652 corresponding to the target cell 2604). The first timing gap 2770 may be, for example, based on the second ephemeris information/data 2672. The first timing gap 2770 may, for example, be based on common TA parameters of the target cell 2604 (e.g., the second common TA parameters). The first timing gap 2770 may, for example, be based on a K-Mac of the target cell 2604 (the second MAC-layer scheduling offset). For example, the first timing gap 2770 may be a UE-gNB RTT of the target cell 2604. The wireless device 2605 may determine the first timing gap 2770, for example, based on a second open-loop TA value of the wireless device 2605 (e.g., corresponding to the target cell 2604). The first timing gap 2770 may be, for example, based on the second cell-specific scheduling offset. The first timing gap 2770 may be, for example, based on one or more numerologies. The one or more numerologies may comprise a numerology of the second cell-specific scheduling offset (e.g., the second $K_{cell,offset}$). The one or more numerologies may comprise a numerology of the second MAC-layer scheduling offset (e.g., the second K-mac). The one or more numerologies may comprise a numerology of the initial PUSCH transmission.

The one or more configuration parameters (e.g., the RRC reconfiguration message) may configure/enable/allow/indicate delaying the PDCCH monitoring (e.g., by the first timing gap 2770), for example, after the initial PUSCH transmission 2761 on the target cell 2604. For example, the one or more configuration parameters (e.g., the RRC reconfiguration message) may indicate a first configured parameter. Based on (e.g., in response to) the first configured parameter being configured/enable (or not being disabled), the wireless device 2605 may delay the PDCCH monitoring (e.g., by the first timing gap 2770), for example, after the initial PUSCH transmission 2761 on the target cell 2604. Based on (e.g., in response) to the first configured parameter being absent from the one or more configured parameters (or not being configured/enable) or being disabled, the wireless device 2605 may not delay the PDCCH monitoring (e.g., by the first timing gap 2770), for example, after the initial PUSCH transmission 2761 on the target cell 2604 (e.g., the first timing gap 2770 is zero). For example, based on (e.g., in response) to the first configured parameter being absent from the one or more configured parameters (or not being configured/enable) or being disabled, the wireless device 2605 may start the PDCCH monitoring (e.g., without the first timing gap 2770), for example, after the initial PUSCH transmission 2761 on the target cell 2604.

Based on the target cell 2604 not being part of the NTN (e.g., the target cell 2604 being part of the terrestrial network), the wireless device 2605 may not delay monitoring the PDCCH (e.g., by the first timing gap 2770), for example, after the initial PUSCH transmission 2761 on the target cell 2604. For example, if the target cell 2604 may not be part of the NTN (e.g., the target cell 2604 may be part of the terrestrial network), the wireless device 2605 may set (e.g., determine) the first timing gap 2770 equal to 0.

Delaying the start of monitoring the PDCCH 2762 may reduce the power consumption and/or complexity of the wireless device for PDCCH monitoring. For example, during a time window from time/occasion T2 to time/occasion T3, the target base station 2611 may wait to receive the initial PUSCH 2761 from the wireless device 2605, decode the initial PUSCH 2761, and/or send (e.g., transmit) the PDCCH 2762.

Based on (e.g., in response to) sending (e.g., transmitting) the RRC reconfiguration complete message 2741 via the initial PUSCH transmission 2761 at time/occasion T2, the wireless device 2605 may start monitoring the PDCCH 2762 at time/occasion T3. For example, the wireless device 2605 may receive the PDCCH 2762 addressed to a C-RNTI of the wireless device 2605 (e.g., while monitoring the PDCCH 2762) from the target base station 2611 (e.g., via/on the target cell 2604). For example, the C-RNTI may be indicated (e.g., by the base station) via the handover command 2631 (e.g., RRC reconfiguration message). The C-RNTI may correspond to the target cell 2604 (e.g., a unique identity of the wireless device for communication via the target cell 2604). The PDCCH 2762 addressed to the C-RNTI may schedule/indicate a PDSCH 2763 transmission from the target base station 2611 (and/or the target cell 2604). The PDSCH 2763 transmission may comprise a contention resolution identity MAC CE. The wireless device 2605 may ignore the contention resolution identity MAC CE (e.g., if/when the wireless device may be configured with parameters of RACH-less handover, e.g., *rach-skip* IE and/or the *rach-skipSCG* IE).

Based on (e.g., in response to) receiving the PDCCH 2762 addressed to the C-RNTI from the target base station 2611 (e.g., via/on the target cell 2604), the wireless device 2605 may stop the T304 timer and/or release the *rach-skip* IE (and/or the *rach-skipSCG* IE), for example, by releasing RACH-less configurations. The wireless device 2605 may determine that the RACH-less handover procedure has been successfully completed, for example, based on (e.g., in response to) receiving the PDCCH 2762 addressed to the C-RNTI from the target base station 2611 (e.g., via/on the target cell 2604). The wireless device 2605 may apply first parts of CQI reporting configuration, SR configuration, and/or SRS configuration that may not require the wireless device 2605 to know a system frame number (SFN) of the target base station 2611, for example, based on (e.g.,. after/in response to) receiving the PDCCH 2762 addressed to the C-RNTI from the target base station 2611 (e.g., via/on the target cell 2604). For example, based on (e.g., after/in response to) receiving the PDCCH 2762 addressed to the C-RNTI from the target base station 2611 (e.g., via/on the target cell 2604), the wireless device 2605 may apply the second parts of measurement and/or radio resource configuration that may require the wireless device 2605 to know the SFN of the target base station 2611 (e.g., measurement gaps, periodic CQI reporting, SR configuration, and/or SRS configuration), for example, if (e.g., after) acquiring the SFN of the target base station 2611.

FIG. 28 shows an example of a RACH-less handover procedure in wireless communications systems. As described with respect to FIG. 28, the wireless device 2605 may start monitoring a PDCCH 1 2851 (e.g., at/in/on time/occasion T2 as shown in FIG. 28) after a second timing gap 2870 from a reception time of the handover command 2631 (e.g., at/in/on time/occasion T1 as shown in FIG. 28), for example, if a handover command 2831 may not comprise (or indicate) the pre-configured UL grant for the transmission of an initial PUSCH 2861. For example, a starting/initial/first symbol (or time) to monitor the PDCCH for receiving the PDCCH 1 2851 (indicating a dynamic UL grant 2850) from the target base station 2611 (e.g., on/via the target cell 2604) may be the second timing gap 2870 after/from the reception time of the handover command 2631 (e.g., RACH-less handover command). The reception time of the handover command 2631 (e.g., T1) may correspond to a last/final/ending symbol (or time) of a PDSCH that may carry the handover command 2631. The reception time of the handover command 2631 may correspond to a slot (or time) to receive the PDSCH that may carry the handover command 2631.

The second timing gap 2870 may allow the wireless device 2605 to receive the PDCCH 1 2851 that may be sent (e.g., transmitted) from the target cell 2604, for example, after receiving the handover command 2631 (e.g., without the pre-configured UL grant for the transmission of the initial PUSCH 2861) from the source cell 2603. Using the second timing gap 2870 may reduce a possibility of missing the PDCCH 12851 at the wireless device 2605, for example, if a first UE-gNB RTT (e.g., between the wireless device 2605 and the source base station 2606, for example, corresponding to the source cell 2603) is different (e.g., larger) than a second UE-gNB RTT (e.g., between the wireless device 2605 and the target base station 2611, for example, corresponding to the target cell 2604). The robustness and/or efficiency of the RACH-less handover procedure may be improved by reducing the possibility of missing the first PDCCH (e.g., PDCCH 1 2851) at the wireless device 2605.

The second timing gap 2870 may be based on one or more numerologies. The one or more numerologies may comprise a numerology of the second cell-specific scheduling offset (e.g., the second $K_{cell,offset}$) and/or a numerology of the first cell-specific scheduling offset (e.g., the first $K_{cell,offset}$). The one or more numerologies may comprise a numerology of the second MAC-layer scheduling offset (e.g., the second K-mac) and/or a numerology of the first MAC-layer scheduling offset (e.g., the first K-mac).

Using the second timing gap 2870 may reduce a possibility of unnecessarily monitoring the PDCCH 1 2851 by the wireless device 2605, for example, if a first UE-gNB RTT (e.g., between the wireless device 2605 and the source base station 2606, e.g., corresponding to the source cell 2603) is different (e.g., smaller) than a second UE-gNB RTT (e.g., between the wireless device 2605 and the target base station 2611, for example, corresponding to the target cell 2604). The power consumption of the wireless device 2605 for receiving the PDCCH 1 2851 on/via the target cell 2604 may be reduced.

The handover command 2631 (e.g., without the pre-configured UL grant for the transmission of the initial PUSCH 2861) may configure the second timing gap 2870. The wireless device 2605 may determine the second timing gap 2870. The wireless device 2605 may determine the second timing gap 2870, for example, based on the second NTN-config parameters (e.g., NTN-config 2 2652 corresponding to the target cell 2604) and/or the first NTN-config parameters (e.g., NTN-config 1 2651).

The wireless device 2605 may, for example, determine the second timing gap 2870, for example, based the first UE-gNB RTT and/or the second UE-gNB RTT. For example, the second timing gap 2870 may be based on a difference between the first UE-gNB RTT and the second UE-gNB RTT. The second timing gap 2870 may be based on a maximum of (or a minimum of) the first UE-gNB RTT and the second UE-gNB RTT. Determining the second timing gap 2870 (e.g., based the first UE-gNB RTT and/or the second UE-gNB RTT) may allow each wireless device delay monitoring the PDCCH 1 2851 (e.g., after the receiving the handover command 2831) in a dedicate manner. For example, each wireless device (e.g., depending on a relative location of the wireless device 2605 to the first NTN node 2601 and the second NTN node 2602) may delay monitoring the PDCCH 1 2851 after the receiving the handover command 2831 with a corresponding second timing gap 2870 to the wireless device 2605.

A benefit of determining the second offset based on the first UE-gNB RTT and the second UE-gNB RTT may be a more efficient PDCCH monitoring (e.g., reducing the power consumption of the wireless device 2605). A drawback of determining the first UE-gNB RTT and the second UE-gNB RTT may be a more complex handover procedure at the network (e.g., the target base station 2611).

The wireless device 2605 may determine the second timing gap 2870, for example, based the first cell-specific scheduling offset and/or the second cell-specific scheduling offset. For example, the second timing gap 2870 may be based on a difference between the first cell-specific scheduling offset and the second cell-specific scheduling offset. The second timing gap 2870 may be based on a maximum of (or a minimum of) the first cell-specific scheduling offset and the second cell-specific scheduling offset. Determining the second timing gap 2870 (e.g., based the cell-specific scheduling offset and/or the second cell-specific scheduling offset) may allow a common approach for (all) wireless devices to delay monitoring the PDCCH (e.g., after the receiving the handover command 2831 without the pre-configured UL grant). For example, each wireless device (e.g., regardless of a relative location of the wireless device 2605 to the first NTN node 2601 and the second NTN node 2602) may delay monitoring the PDCCH 1 2851 after the receiving the handover command 2831 (e.g., without the pre-configured UL grant for the transmission of the initial PUSCH 2861) with a common (e.g., among all wireless devices that performing the handover) second timing gap.

A benefit of determining the second offset based on the first cell-specific scheduling offset and/or the second cell-specific scheduling offset may be a simplified handover procedure at the network (e.g., the target base station 2611). A drawback of determining the second offset based on the first cell-specific scheduling offset and/or the second cell-specific scheduling offset may be an increase in PDCCH monitoring power at the wireless device 2605 (which may be still smaller than the case that the wireless device 2605 may not delay the PDCCH monitoring).

As described with respect to FIG. 28, the wireless device 2605 may receive the PDCCH 1 2851 indicating the dynamic UL grant 2850 via/on the target cell 2604 at time/occasion T3. The wireless device 2605 may send (e.g., transmit) the initial PUSCH 2861, for example, based on the indicated dynamic UL grant 2850 at/on/in time/occasion T4.

The one or more configuration parameters (e.g., the RRC reconfiguration message) may configure/enable/allow/indicate delaying the PDCCH monitoring (e.g., by the second timing gap) after receiving the handover command 2631 (e.g., without the pre-configured UL grant for the transmission of the initial PUSCH) from the source cell. For example, the one or more configuration parameters (e.g., the RRC reconfiguration message) may indicate a second configured parameter. The second configured parameter may be the same as the first configured parameter. The second configured parameter may be different than the same as the first configured parameter. In response to the second configured parameter being configured/enable (or not being disabled), the wireless device 2605 may delay the PDCCH monitoring (e.g., by the second timing gap) after receiving the handover command (e.g., without the pre-configured UL grant for the transmission of the initial PUSCH) from the source cell. Based on (e.g., in response to) the second configured parameter being absent from the one or more configured parameters (or not being configured/enable) or being disabled, the wireless device 2605 may not delay the PDCCH monitoring (e.g., by the second timing gap) after receiving the handover command (e.g., without the pre-configured UL grant for the transmission of the initial PUSCH) from the source cell (e.g., the second timing gap is zero). For example, based on (e.g., in response to) the second configured parameter being absent from the one or more configured parameters (or not being configured/enable) or being disabled, the wireless device 2605 may start the PDCCH monitoring (e.g., without the second timing gap) after receiving the handover command (e.g., without the pre-configured UL grant for the transmission of the initial PUSCH) from the source cell.

The wireless device 2605 may not delay monitoring the PDCCH after receiving the handover command 2631 (e.g., without the pre-configured UL grant for the transmission of the initial PUSCH) from the source cell 2603, for example, based on the target cell 2604 and/or the source cell 2603 not being part of the NTN (e.g., the target cell 2604 and/or the source cell 2603 being part of the terrestrial network). For example, if both the target cell 2604 and the source cell 2603 not being part of the NTN, the wireless device 2605 may set (or determine) the second timing gap equal to 0. For example, if at least one of the target cell 2604 and/or the source cell 2603 being part of the NTN, the wireless device 2605 may delay the PDCCH monitoring by the second timing gap (e.g., with a non-zero value) after receiving the handover command 2631 (e.g., without the pre-configured UL grant for the transmission of the initial PUSCH) from the source cell.

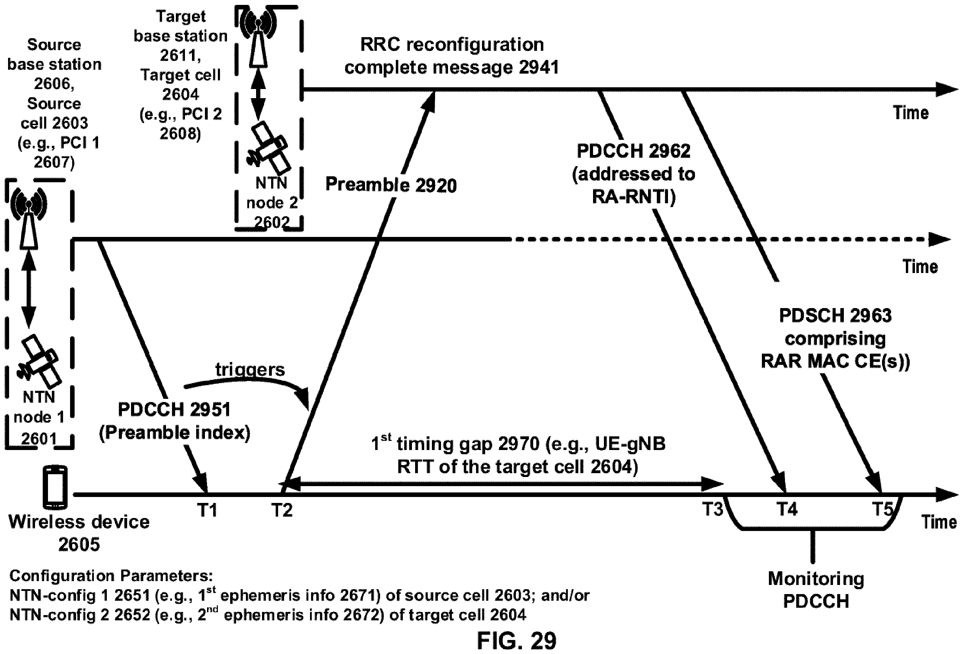

FIG. 29 shows an example of a RACH-less handover procedure in wireless communications systems. More specifically, FIG. 29 shows an example of a Layer 1/2 triggered handover procedure (e.g., layer 1/2 triggered mobility, e.g., LTM). FIG. 29 shows examples for (enhanced) RACH-less handover procedure (e.g., in the NTN). FIG. 29 shows an example of PDCCH-ordered PRACH transmissions in wireless communication systems, for example, before and/or during performing the handover procedure. The wireless device 2605 may communicate with the source base station 2606 (e.g., of the source cell 2603) via the NTN. The wireless device 2605 may communicate with the target base station 2611 (e.g., of the target cell 2604) via the NTN, for example, by performing the RACH-less handover procedure.

The wireless device 2605 may receive the one or more configuration parameters (not shown in FIG. 29) via the source cell 2603. The one or more configuration parameters may comprise the first set of NTN configuration parameters. The first plurality of NTN-config(s) may comprise the first NTN-config 2651 corresponding to the source cell 2603 (e.g., with PCI 1 2607 as shown in FIG. 29) and/or the second NTN-config 2652 corresponding to the target cell 2604 (e.g., with PCI 2 2608 as shown in FIG. 29). The one or more configuration parameters may comprise one or more RACH configuration parameters. The one or more RACH configuration parameters may comprise a first dedicated RACH resources (e.g., *rach-ConfigDedicated*) corresponding to the source cell 2603. The wireless device 2605 may receive the first dedicated RACH resources (e.g., *rach-ConfigDedicated*) via a first dedicated/broadcast signaling(s) of the source cell 2603 (e.g., RRC configuration message, SIB1, ...). For example, the first dedicated RACH resources (e.g., *rach-ConfigDedicated*) may configure a first plurality of RACH occasions, for example, for contention-free preamble transmission(s) by the wireless device 2605 to the source base station 2606 (e.g., via the source cell 2603). The first dedicated RACH resources (e.g., *rach-ConfigDedicated*) may configure/indicate/provide a first set of dedicated preambles.

The one or more RACH configuration parameters may comprise a second dedicated RACH resources (e.g., *rach-ConfigDedicated*) corresponding to the target cell 2604. The wireless device 2605 may receive the second dedicated RACH resources (e.g., *rach-ConfigDedicated*) corresponding to the source cell 2603 via a second dedicated/broadcast signaling(s) (e.g., RRC reconfiguration message, the handover command, ...). For example, the second dedicated RACH resources (e.g., *rach-ConfigDedicated*) may configure a second plurality of RACH occasions, e.g., for contention-free preamble transmission(s) by the wireless device 2605 to the target base station 2611 (e.g., via the target cell 2604). The wireless device 2605 may receive the second dedicated/broadcast signaling(s), for example, after receiving the first dedicated/broadcast signaling(s). The second dedicated RACH resources (e.g., *rach-ConfigDedicated*) may configure/indicate/provide a second set of dedicated preambles.

As described with respect to FIG. 29, the wireless device 2605 may, from the source base station 2606 (e.g., via the source cell 2603), receive a PDCCH at/on/in/during time/occasion/slot T1, e.g., for initiating/triggering a CFRA procedure (e.g., as discussed in FIG. 13B above). The wireless device 2605 may, based on receiving the PDCCH, trigger/initiate the CFRA procedure (e.g., for performing the handover to the target base station 2611/target cell 2604). The PDCCH may trigger/indicate/order a PRACH/preamble transmission by the wireless device 2605 to the target base station 2611 via the target cell 2604. The Layer 1/2 handover procedure (e.g., as described with respect to FIG. 20 and/or FIG. 21) may comprise the CFRA procedure (e.g., transmission of the preamble on/via the target cell 2604). The PDCCH may indicate a preamble index (e.g., a *ra_PreambleIndex*) corresponding to the preamble/PRACH that the wireless device 2605 may send (e.g., transmit) to the target base station 2611. The preamble index may belong to the second set of dedicated preambles.

The wireless device 2605 may detect a DCI (e.g., transmitted by the source base station 2606), for example, to receive the PDCCH 2951. For example, the DCI may have a DCI format 1_0 with/having the CRC that may be scrambled by the C-RNTI of the wireless device 2605. The DCI format of the DCI may be different than the DCI format 1_0. The C-RNTI may be received from the source base station 2606 as an identity of the wireless device 2605 for communication with the source base station 2606 via the source cell 2603. The C-RNTI may be indicated by the RRC reconfiguration message (e.g., for performing the handover and/or communication with the target base station 2611).

The DCI may comprise a field, such as a "Frequency domain resource assignment" field, being of all ones. For example, the PDCCH order (or the DCI) may indicate at least one for the following: the preamble index (e.g., the *ra-PreambleIndex*), an SS/PBCH (SSB) index (e.g., indicating a SS/PBCH that may be used for performing the CFRA procedure by the wireless device 2605), and/or a PRACH mask index indicating an RACH occasion (RO) associated with the SS/PBCH indicated by the SS/PBCH index (e.g., for the preamble transmission). The DCI may indicate the target cell 2604 (e.g., index/ID of the target cell 2604, e.g., PCI 2 2608). Based on receiving the DCI (or the PDCCH 2951), the wireless device 2605 may determine the triggered/initiated CFRA procedure may be for performing the handover and/or sending (e.g., transmitting) the preamble to the target base station 2611 (e.g., via the target cell 2604).

The wireless device 2605 may determine a RACH occasion (among/of the second plurality of RACH occasions) for the preamble transmission, for example, based on the DCI (or the PDCCH 2951). The RACH occasion may be associated with the SS/PBCH block (e.g., SSB) index indicated by the SS/PBCH block index field of the DCI (e.g., a PDCCH order). The SSB may belong to (or correspond to or be associated with) the target cell 2604 (e.g., sent by the target base station 2611 via the target cell 2604). For example, the wireless device 2605 may set PREAMBLE_INDEX based on the preamble index indicated by the PDCCH 2951 (e.g., the PDCCH order). As described with respect to FIG. 29, the wireless device 2605 may send (e.g., transmit) the PRACH to the target base station 2611 (e.g., via the target cell 2604).

The one or more configuration parameters (e.g., the RRC reconfiguration message, e.g., the handover command) may configure/enable/allow the wireless device 2605 to receive a random access response (RAR), for example, based on (e.g., in response to) the sent (e.g., transmitted) preamble (e.g., preamble 2920) to the target base station 2611. For example, the target base station 2611 (on/via the target cell 2604) may send (e.g., transmit) a PDCCH 2962 (e.g., addressed to an RA-RNTI), for example, based on (e.g., in response to) detecting/receiving the preamble 2920 sent from the wireless device 2605 and/or based on the wireless device 2605 being configured to receive the RAR from the target base station 2611.

As described with respect to FIG. 29, the target base station 2611 may receive/detect a target preamble (e.g., preamble 2920). The PDCCH 2962 may be different from the PDCCH order. The PDCCH 2962 may indicate/schedule a PDSCH 2963 that may comprise the RAR message. For example, the RAR message may correspond to the sent (e.g., transmitted) preamble (e.g., preamble 2920) by the wireless device 2605. The RAR message may schedule/indicate a target TA value that may correspond to the target cell 2604 and/or an UL grant for transmission of Msg3 by the wireless device 2605 on/via the target cell 2604 to the target base station 2611.

The wireless device 2605 may monitor the PDCCH 2962 during a RAR window (e.g., *ra-Response Window* or *msgB-ResponseWindow*) to receive the PDCCH 2962 scheduling the RAR message, for example, based on the one or more configuration parameters (e.g., the RRC reconfiguration message, the handover command) configuring/enabling/allowing the wireless device 2605 to receive the RAR based on (e.g., in response to) the sent (e.g., transmitted) preamble (e.g., preamble 2920) to the target base station 2611.

The one or more configuration parameters may configure at least two (e.g., 2) Type1-PDCCH CSS sets. A first Type 1-PDCCH CSS set of the at least two Type1-PDCCH CSS sets may correspond to the source cell 2603. For example, based on (e.g., in response to) transmission of a first preamble to the source base station 2606 (on/via the source cell 2603), the wireless device 2605 may monitor the PDCCH 2951 based on the first Type1-PDCCH CSS set of the at least two Type1-PDCCH CSS sets. A second Type1-PDCCH CSS set of the at least two Type 1-PDCCH CSS sets may correspond to the target cell 2604 (or a candidate cell of the one or more candidate/target cells). For example, based on (e.g., in response to) transmitting the preamble 2920 to the target base station 2611 (on/via the target cell 2604) abon/during time/occasion/interval T2 (as shown in FIG. 29) and/or the one or more configuration parameters configuring/enabling/allowing the wireless device 2605 to receive the RAR on the target cell 2604, the wireless device 2605 may monitor the PDCCH 2962 based on the second Type1-PDCCH CSS set of the at least two Type1-PDCCH CSS sets (e.g., during the RAR window). The one or more configuration parameters (e.g., the RRC reconfiguration message, e.g., the handover command) may indicate a value for a length of the RAR window. The length of the RAR window in number of slots may be based on the SCS for the second Type1-PDCCH CSS set of the at least two Type1-PDCCH CSS sets.

The wireless device 2605 may detect (or attempt to detect) a DCI format 1_0 with CRC scrambled by a corresponding RA-RNTI/MSGB-RNTI (e.g., calculated by the wireless device 2605 and/or the base station based on the preamble and/or the RACH occasion selected for transmission of the preamble) during the RAR window (e.g., *ra-ResponseWindow* or *msgB-ResponseWindow*), for example, if the RAR window may be running. The RAR window may start at a first/initial/earliest symbol of an earliest CORESET the wireless device 2605 may be configured to receive the PDCCH 2962 for the second Type1-PDCCH CSS set of the at least two Type1-PDCCH CSS sets. The earliest CORESET may be at least one symbol, for example, after the last/final/ending symbol of the RACH occasion corresponding to the preamble transmission. The symbol duration may correspond to an SCS for second Type1-PDCCH CSS set of the at least two Type1-PDCCH CSS sets.

The wireless device 2605 may start the RAR window, for example, after the first timing gap following the last/final/ending symbol of the RACH occasion that may correspond to the preamble transmission, for example, if the target cell 2604 may belong to the NTN node 2 2602 and/or the one or more configuration parameters (e.g., the RRC reconfiguration message, or the handover command) that may configure (enable or allow) the wireless device 2605 to receive the RAR. For example, earliest CORESET (e.g., the wireless device 2605 configured to receive the PDCCH 2662 for the second Type1-PDCCH CSS set of the at least two Type1-PDCCH CSS sets) may be at least the first timing gap (e.g., UE-gNB RTT of the target cell 2604 and/or the cell-specific scheduling offset of the target cell 2604), for example, after/from the last/final/ending symbol of the RACH occasion that may correspond to the preamble transmission. The wireless device 2605 may determine the first timing gap, for example, based on a numerology of the preamble transmission (or the preamble).

As described with respect to FIG. 29, the wireless device 2605 may stop the RAR window, for example, based on (e.g., in response to) receiving the PDCCH indicating/scheduling the RAR and/or receiving the RAR corresponding to the preamble 2920. For example, the RAR window may comprise an UL grant for transmission of the Msg3 to the target base station 2611 (on/via the target cell 2604), for example, for transmission of the RRC reconfiguration complete message. The wireless device 2605 may determine a PUSCH (via/using the UL grant) to the target base station 2611 via/on the target cell 2604. For example, a transmission occasion/slot of the PUSCH may be at least the first timing gap (e.g., the second cell-specific scheduling offset) after/from a slot/occasion/symbol that the wireless device 2605 may receive the PDSCH comprising the RAR (e.g., time/occasion/slot T5 in FIG. 29).

The wireless device 2605 may retransmit a PRACH (or preamble 2920) to the target base station 2611 (on/via the target cell 2604), for example, based on (e.g., if or when) the target cell 2604 may belong to the NTN and/or the one or more configuration parameters (e.g., the RRC reconfiguration message, or the handover command 2631) configuring/enabling/allowing the wireless device 2605 to receive the RAR. For example, based on not receiving the PDCCH indicating/scheduling the RAR until an expiry of the RAR window, the wireless device 2605 may retransmit the PRACH (or preamble 2920) to the target base station 2611 (on/via the target cell 2604). The wireless device 2605 may retransmit the PRACH (or preamble 2920) to the target base station 2611 (on/via the target cell 2604), for example, based on the one or more configuration parameters configuring/enabling/allowing the preamble retransmission (e.g., for the LTM) on/via the target cell 2604.

For example, based on (e.g., in response to) the expiry of the RAR window, the wireless device 2605 may retransmit the preamble 2920 to the target base station 2611 (on/via the target cell 2604), for example, based on at least one of the following being satisfied: the target cell 2604 being part of the NTN; and/or the one or more configuration parameters (e.g., the RRC reconfiguration message, or the handover command 2631) configuring/enabling/allowing (or not disabling) the wireless device 2605 to receive the RAR based on (e.g., in response to) the preamble transmission; and/or the one or more configuration parameters configuring/enabling/allowing (or not disabling) the preamble retransmission (e.g., for the LTM) on/via the target cell 2604.

For example, based on (e.g., in response to) the expiry of the RAR window, the wireless device 2605 may refrain/refuse retransmitting the preamble 2920 to the target base station 2611 (on/via the target cell 2604) based on at least one of the following being satisfied: the target cell 2604 not being part of the NTN; and/or the one or more configuration parameters (e.g., the RRC reconfiguration message, or the handover command 2631) not configuring/ not enabling/not allowing (or disabling) the wireless device 2605 to receive the RAR based on (e.g., in response to) the preamble transmission; and/or the one or more configuration parameters not configuring/not enabling/not allowing (or disabling) the preamble retransmission (e.g., for the LTM) on/via the target cell 2604. For example, the source base station 2606 may indicate to the wireless device 2605 (on/via the source cell 2603) a preamble retransmission on the target cell 2604. The wireless device 2605 may properly delay the start of the RAR window, for example, based on NTN-config of the target cell 2604. The handover latency and/or power consumption associated with the wireless device 2605 performing the handover procedure may be reduced.

A wireless device may perform a method comprising multiple operations. The wireless device may receive, via a cell of a non-terrestrial network (NTN), at least one radio resource control (RRC) message. The at least one RRC message may indicate to switch from a first NTN of the cell to a second NTN of the cell. The switch may maintain a physical cell identifier (PCI) of the cell. The wireless device may perform, based on the at least one RRC message, the switch without initiating a random access procedure. The wireless device may receive, during a time period after the performing the switch, at least one message via the cell of the second NTN. The wireless device may receive, during monitoring in a time period after the performing the switch, at least one message via a downlink channel from the cell of the second NTN. The at least one RRC message may indicate whether the switch is a random access channel (RACH)-based switch or a RACH-less switch. The wireless device may perform the switch based on at least one RRC message indicating the switch is a random access channel (RACH) less switch. The at least one RRC message may be an NTN-specific system information block comprising at least one NTN configuration parameter. The at least one NTN configuration parameter may comprise at least one of: one or more first NTN configuration parameters associated with the first NTN of the cell; and one or more second NTN configuration parameters associated with the second NTN of the cell. The at least one RRC message may be a handover message. The handover message may comprise an NTN-specific system information block that may comprise the one or more second NTN configuration parameters associated with the second NTN of the cell. The at least one RRC message may indicate a timing advance value. The at least one RRC message may comprise RACH-less configuration parameters indicating the switch. The switch may be based on the RACH-less configuration parameters. The RACH-less configuration parameters may indicate a pre-allocated uplink grant for an initial physical uplink shared channel (PUSCH) transmission indicating the switch. The wireless device may send (e.g., transmit), based on the pre-allocated uplink grant, the PUSCH message via the cell. The wireless device may receive, during monitoring after a first timing gap from the transmitting the PUSCH message, at least one message via a downlink control channel of the cell. The first timing gap may be based on the one or more second NTN configuration parameters corresponding to the second NTN. The first timing gap may be based on the round trip time between the wireless device and the second NTN. The round trip time between the wireless device and the second NTN may be determined based on the one or more second NTN configuration parameters corresponding to the second NTN and location of the wireless device. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and at least one base station configured to send the at least one RRC message. A computer-readable medium may store instructions that, when executed, cause performance of the described method, additional operations, and/or include the additional elements.

A wireless device may perform a method comprising multiple operations. The wireless device may receive, via a source cell of a non-terrestrial network (NTN), a random access channel (RACH)-less handover command. The RACH-less handover command may comprise a pre-configured uplink grant for a transmission of a radio resource control (RRC) reconfiguration complete message via a target cell of the NTN. The wireless device may send (e.g., transmit), based on the pre-configured uplink grant, the RRC reconfiguration complete message via the target cell. The wireless device may receive, during monitoring after a first gap from the transmitting the RRC reconfiguration complete message via the target cell, at least one message via a downlink control channel. The first gap may be based on a round trip time of the target cell. The pre-configured uplink grant may comprise at least one physical uplink shared channel (PUSCH) resource. The wireless device may receive, from the source cell, at least one configuration parameter comprising at least one NTN configuration parameter. The at least one NTN configuration parameter may comprise at least one of: a first NTN configuration parameter associated with the source cell; and a second NTN configuration parameter associated with the target cell. The wireless device may estimate the round trip time of the target cell based on at least one NTN configuration parameter associated with the target cell. The wireless device may receive, via a second source cell, a second RACH-less handover command comprising a second pre-configured uplink grant for a transmission of a second RRC reconfiguration complete message to a target cell of a terrestrial network (TN). The wireless device may monitor, based on sending (e.g., transmitting) the second RRC reconfiguration complete message on the target cell, downlink control channels for receiving a physical downlink control channel (PDCCH) via the target cell of the TN. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and at least one base station configured to send the at least one RRC message. A computer-readable medium may store instructions that, when executed, cause performance of the described method, additional operations, and/or include the additional elements.

A wireless device may perform a method comprising multiple operations. The wireless device may receive, via a first cell of a non-terrestrial network (NTN), a physical downlink control channel (PDCCH) message indicating a preamble transmission via a second cell of the NTN. The wireless device may receive, during monitoring after a first timing gap from a transmission of the preamble via the second cell, a random access response (RAR) via a downlink control channel from the second cell. The first timing gap may be based on a round trip time of the second cell. The PDCCH message may indicate a switch from the first cell to the second cell. The wireless device may receive at least one configuration parameter comprising NTN configuration parameters. The NTN configuration parameters may comprise at least one of: a first NTN configuration parameter associated with the first cell; and a second NTN configuration parameter associated with the second cell. The wireless device may determine the round trip time of the second cell, for example, based on at least one second NTN configuration parameter associated with the second cell. The wireless device may send (e.g., transmit) the preamble via the second cell. The wireless device may receive, via a third cell, a second PDCCH message indicating a second preamble transmission to a fourth cell of the NTN. The wireless device may monitor, after the first timing gap from a transmission of the second preamble via the fourth cell of the NTN, downlink control channels for a second random access response (RAR) via the fourth cell. The wireless device may receive, via a fifth cell, a third PDCCH message indicating a third preamble transmission to a sixth cell of a terrestrial network (TN. The wireless device may monitor, based one transmitting of the third preamble via the sixth cell of the TN, downlink control channels for a third random access response (RAR) via the sixth cell. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and at least one base station configured to send the at least one RRC message. A computer-readable medium may store instructions that, when executed, cause performance of the described method, additional operations, and/or include the additional elements.

A wireless device may perform a method comprising multiple operations. The wireless device may receive, via a first cell of a non-terrestrial network (NTN), a handover command comprising: a pre-allocated uplink grant for a physical uplink shared channel (PUSCH) transmission via a second cell of the NTN; and a random access channel (RACH)-skip configuration. The wireless device may transmit, using the pre-allocated uplink grant, the PUSCH transmission via the second cell. The wireless device may start monitoring, after a first timing gap from the transmitting the PUSCH transmission via the second cell, downlink control channels for receiving a physical downlink control channel (PDCCH) on the second cell. The first timing gap may be based on a round trip transmission delay (or round trip delay or round trip time (RTT)) of the second cell. The source cell may receive one or more configuration parameters comprising NTN configuration parameters. The NTN configuration parameters may comprise at least one of: a first NTN configuration parameters corresponding to the first cell; and a second NTN configuration parameters corresponding to the second cell. The handover command may comprise the second NTN configuration parameters. The wireless device may determine/estimate the RTT of the second cell based on the second NTN configuration parameters. The first NTN configuration parameters may comprise at least one of: a first satellite ephemeris data; a first common timing advance (TA) parameters; a first cell-specific scheduling offset; or a first medium access control (MAC)-layer scheduling offset. The second NTN configuration parameters may comprise at least one of: a second satellite ephemeris data; a second common timing advance (TA) parameters; a second cell-specific scheduling offset; or a second medium access control (MAC)-layer scheduling offset. The first timing gap is based on the second cell-specific scheduling offset. The wireless device may determine/estimate the RTT of the second cell based on at least one of: the second satellite ephemeris data; the second common timing advance (TA) parameters; or the second MAC-layer scheduling offset. A wireless device may receive, at least after the first timing gap from the transmitting the PUSCH transmission via the second cell, the PDCCH on the second cell addressing to a cell radio network temporary identifier (RNTI) (C-RNTI). The PDCCH may schedule a physical downlink shared channel (PDSCH) reception on the second cell. The PDSCH may comprise a contention resolution identity MAC control element. The wireless device may ignore the contention resolution identity MAC control element; and may release, based on (e.g., in response to) receiving the PDCCH addressing to the C-RNTI, the RACH-skip configuration. The one or more configuration parameters configure/enable the wireless device to delay the monitoring the downlink control channel by the first timing gap after the transmitting the PUSCH via the second cell. The wireless device may initialize the first timing gap by 0 based on the one or more configuration parameters not configuring/enabling the wireless device to delay the monitoring the downlink control channel after the transmitting the PUSCH via the second cell. The wireless device may receive, via a third cell, a second handover command comprising: a second pre-allocated uplink grant for a second physical uplink shared channel (PUSCH) transmission via a fourth cell of a terrestrial network (TN); and a second random access channel (RACH)-skip configuration. The wireless device may transmit, using the pre-allocated uplink grant, the second PUSCH transmission via the fourth cell. The wireless device may start monitoring, based on (e.g., in response to) transmitting the second PUSCH via the fourth cell, downlink control channels for receiving a second physical downlink control channel (PDCCH) via the fourth cell. The third cell is part of the NTN. The third cell is part of the TN. The wireless device may receive, via a fifth cell of an NTN, a third handover command comprising a third random access channel (RACH)-skip configuration; based on (e.g., in response to) the third handover command not indicating a pre-allocated uplink grant, monitoring downlink control channels after a second timing gap from the receiving the third handover command, wherein the second timing gap may be based on the NTN configuration parameters; receiving, while monitoring the downlink control channels and on a sixth cell, a third PDCCH indicating a dynamic uplink grant; and transmitting, using the dynamic uplink grant, a third PUSCH transmission via the sixth cell. The wireless device may start monitoring, after the first timing gap from the transmitting the third PUSCH transmission via the sixth cell, downlink control channels for receiving a fourth PDCCH via the sixth cell. The second timing gap is based on a third NTN configuration parameters corresponding to the fifth cell. The second timing gap is based on an RTT of the fifth cell, wherein the RTT of the fifth cell is based on the third NTN configuration parameters. The second timing gap is based on a second cell-specific scheduling timing indicated by the third NTN configuration parameters. The second timing gap is based on a fourth NTN configuration parameters corresponding to the sixth cell. The second timing gap is based on an RTT of the sixth cell, wherein the RTT of the sixth cell is based on the fourth NTN configuration parameters. The second timing gap is based on a fourth cell-specific scheduling timing indicated by the fourth NTN configuration parameters. The second timing gap is based on third NTN configuration parameters corresponding to the fifth cell and a fourth NTN configuration parameters corresponding to the sixth cell. The second timing gap is based on a first RTT of the fifth cell and a second RTT of the sixth cell. The second timing gap may be at least one of: a difference between the first RTT and the second RTT; a summation of the first RTT and the second RTT; a maximum of the first RTT and the second RTT; or a minimum of the first RTT and the second RTT. The second timing gap may be based on a first cell-specific scheduling timing indicated by the third NTN configuration parameters and a second cell-specific scheduling timing indicated by the fourth NTN configuration parameters. The second timing gap may be at least one of: a difference between the first cell-specific scheduling timing and the second cell-specific scheduling timing; a summation of the first cell-specific scheduling timing and the second cell-specific scheduling timing; a maximum of the first cell-specific scheduling timing and the second cell-specific scheduling timing; or a minimum of the first cell-specific scheduling timing and the second cell-specific scheduling timing. The first RTT may be greater than the second RTT. The first RTT may be smaller than the second RTT. The wireless device may receive the one or more configuration parameters via the fifth cell. The one or more configuration parameters configure/enable the wireless device to delay the monitoring the downlink control channel after receiving the third handover command. The second gap is 0 based on the one or more configuration parameters not configuring/enabling the wireless device to delay the monitoring the downlink control channel after receiving the third handover command. The wireless device may receive, via a seventh cell of a TN, a fourth handover command comprising a fourth random access channel (RACH)-skip configuration; in response to the fourth handover command not indicating a pre-allocated uplink grant for transmission of a fourth PUSCH via an eights cell of the TN, starting monitoring downlink control channels after receiving the fourth handover command; receiving, while monitoring the downlink control channels and on the eight cell, a fourth PDCCH indicating a second dynamic uplink grant; and transmitting, using the second dynamic uplink grant, the fourth PUSCH transmission via the eighth cell. The wireless device may receive, via a ninth cell of a TN, a fifth handover command comprising a fifth random access channel (RACH)-skip configuration; in response to the fifth handover command not indicating a pre-allocated uplink grant for transmission of a fifth PUSCH via a tenth cell of the NTN, starting monitoring downlink control channels after a third timing gap after receiving the fifth handover command, wherein the third timing gap is based on a fifth NTN configuration parameters corresponding to the tenth cell; receiving, while monitoring the downlink control channels and on the tenth cell, a fifth PDCCH indicating a third dynamic uplink grant; and transmitting, using the third dynamic uplink grant, the fifth PUSCH transmission via the tenth cell. The third timing gap may be based on an RTT of the tenth cell or a cell-specific scheduling offset of the tenth cell, wherein the fifth NTN configuration parameters indicate the cell-specific scheduling offset of the tenth cell. The wireless device may receive, via an eleventh cell of the NTN, a sixth handover command comprising a sixth random access channel (RACH)-skip configuration; in response to the sixth handover command not indicating a pre-allocated uplink grant for transmission of a sixth PUSCH via a twelfth cell of a TN, starting monitoring downlink control channels receiving the sixth handover command; receiving, while monitoring the downlink control channels and on the twelfth cell, a sixth PDCCH indicating a fourth dynamic uplink grant; and transmitting, using the fourth dynamic uplink grant, the sixth PUSCH transmission via the twelfth cell. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and at least one base station configured to send the at least one RRC message. A computer-readable medium may store instructions that, when executed, cause performance of the described method, additional operations, and/or include the additional elements.

A wireless device may perform a method comprising multiple operations. The wireless device may receive, via a source cell of a non-terrestrial network (NTN), a random access channel (RACH)-less handover command comprising a pre-configured uplink grant for a transmission of a radio resource control (RRC) reconfiguration complete message on/via a target cell of the NTN. The wireless device may transmit, using the preconfigured uplink grant, the RRC reconfiguration complete message on the target cell. The wireless device may monitor, after a first gap (or a first timing gap or a first timing offset) from the transmitting the RRC reconfiguration complete message on the target cell, downlink control channels for receiving a physical downlink control channel (PDCCH) via/on the target cell. The first gap may be based on a round trip transmission delay (or round-trip delay or round trip time (RTT)) of the target cell. The pre-configured uplink grant may be for a physical uplink shared channel (PUSCH) transmission. The wireless device may receive, from the source cell, one or more configuration parameters comprising NTN configuration parameters, wherein the NTN configuration parameters comprise at least one of: a first NTN configuration parameters corresponding to the source cell; and a second NTN configuration parameters corresponding to the target cell. The wireless device may determines/estimate the RTT of the target cell based on the second NTN configuration parameters. The first NTN configuration parameters may comprise at least one of: a first satellite ephemeris data; a first common timing advance (TA) parameters; a first cell-specific scheduling offset; or a first medium access control (MAC)-layer scheduling offset. The second NTN configuration parameters may comprise at least one of: a second satellite ephemeris data; a second common timing advance (TA) parameters; a second cell-specific scheduling offset; or a second medium access control (MAC)-layer scheduling offset. The first gap may be based on the second cell-specific scheduling offset. The wireless device may determines/estimate the RTT of the target cell based on at least one of: the second satellite ephemeris data; the second common timing advance (TA) parameters; the second MAC-layer scheduling offset. The wireless device may receive the PDCCH on the target cell addressing to a cell radio network temporary identifier (RNTI), C-RNTI. The PDCCH may schedule a physical downlink shared channel (PDSCH) reception on the target cell. The PDSCH may comprise a contention resolution identity MAC control element. The wireless device may ignore the contention resolution identity MAC control element; and releasing, in response to receiving the PDCCH addressing to the C-RNTI, configuration parameters of RACH-less handover. The one or more configuration parameters may configure/enable the wireless device to delay the monitoring the downlink control channel. The wireless device may set the first gap equal to 0 based on the one or more configuration parameters not configuring/enabling the wireless device to delay the monitoring the downlink control channel. The wireless device may receive, via a second source cell, a second RACH-less handover command comprising a second pre-configured uplink grant for a transmission of a second RRC reconfiguration complete message to a target cell of a terrestrial network (TN). The wireless device may monitor, based on (e.g., in response to) transmitting the second RRC reconfiguration complete message on the target cell, downlink control channels for receiving a physical downlink control channel (PDCCH) via/on the target cell. The source cell may be part of the NTN. The source cell may be part of the TN. The wireless device may receive, via the source cell, a third RACH-less handover command without a pre-configured uplink grant for a transmission of a third RRC reconfiguration complete message on the target cell. Based on (e.g., in response to) the third RACH-less handover command not indicating a pre-configured uplink grant, The wireless device may monitor downlink control channels after a second gap from the receiving the third RACH-less handover command. The second gap may be based on the NTN configuration parameters. The wireless device may receive, while monitoring the downlink control channels and on the target cell, a second PDCCH indicating a dynamic uplink grant. The wireless device may transmit, using the dynamic uplink grant, the third RRC reconfiguration complete message on the target cell. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and at least one base station configured to send the at least one RRC message. A computer-readable medium may store instructions that, when executed, cause performance of the described method, additional operations, and/or include the additional elements.

A wireless device may perform a method comprising multiple operations. The wireless device may receive, via a first cell of a non-terrestrial network (NTN), a random access channel (RACH)-less handover command comprising a pre-configured uplink grant corresponding to a physical uplink shared channel (PUSCH) transmission via a second cell of the NTN. The wireless device may transmit, using the preconfigured uplink grant, the PUSCH transmission on the target cell. The wireless device may start monitoring, after a first timing gap from the transmitting the PUSCH on the target cell, downlink control channels for receiving a physical downlink control channel (PDCCH) via/on the target cell. The first timing gap may be determined based on a round trip transmission delay (or round trip delay or round trip time (RTT)) of the target cell. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and at least one base station configured to send the at least one RRC message. A computer-readable medium may store instructions that, when executed, cause performance of the described method, additional operations, and/or include the additional elements.

A wireless device may perform a method comprising multiple operations. The wireless device may receive, via a first cell of an NTN, a random access channel (RACH)-less handover command without a pre-configured uplink grant for a physical uplink shared channel (PUSCH) on a second cell of the NTN. Based on (e.g., in response to) the RACH-less handover command not indicating a pre-configured uplink grant, The wireless device may start monitoring downlink control channels after a second timing gap from the receiving the RACH-less handover command, wherein the second timing gap is based on NTN configuration parameters. The wireless device may receive, while monitoring the downlink control channels and on the second cell, a physical downlink control channel (PDCCH) indicating a dynamic uplink grant. The wireless device may send (e.g., transmit), using the dynamic uplink grant, the PUSCH transmission via the second cell. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and at least one base station configured to send the at least one RRC message. A computer-readable medium may store instructions that, when executed, cause performance of the described method, additional operations, and/or include the additional elements.

A wireless device may perform a method comprising multiple operations. The wireless device may receive, via a first cell of a non-terrestrial network (NTN), a physical downlink control channel (PDCCH) indicating/triggering a preamble transmission via a second cell of the NTN. The wireless device may monitor, after a first timing gap from a transmission of the preamble via the second cell, downlink control channels for receiving a random access response (RAR) from the second cell, wherein the first timing gap is based on a round trip transmission delay (or round trip delay or round trip time (RTT)) of the second cell. The PDCCH may be for switching from the first cell to the second cell. The wireless device may receive one or more configuration parameters comprising NTN configuration parameters, wherein the NTN configuration parameters comprise at least one of: a first NTN configuration parameters corresponding to the first cell; and a second NTN configuration parameters corresponding to the second cell. The wireless device may determine/estimate the RTT of the second cell based on the second NTN configuration parameters. The first NTN configuration parameters may comprise at least one of: a first satellite ephemeris data; a first common timing advance (TA) parameters; a first cell-specific scheduling offset; or a first medium access control (MAC)-layer scheduling offset. The second NTN configuration parameters may comprise at least one of: a second satellite ephemeris data; a second common timing advance (TA) parameters; a second cell-specific scheduling offset; or a second medium access control (MAC)-layer scheduling offset. The one or more configuration parameters may configure/enable the wireless device for receiving the RAR via the second cell during a RAR window. The one or more configuration parameters may configure at least two common search space sets for monitoring the downlink control channel during the RAR window. The wireless device may monitor the downlink control channels during the RAR window based on a second common search space set of the at least two common search space sets corresponding to the second cell. The wireless device may determine/estimate the RTT of the second cell based on at least one of: the second satellite ephemeris data; the second common timing advance (TA) parameters; the second MAC-layer scheduling offset. The wireless device may receive the PDCCH on the second cell addressing to a random access (RA) radio network temporary identifier (RNTI), RA-RNTI, wherein the RA-RNTI is determined based on the preamble. The PDCCH may schedule a physical downlink shared channel (PDSCH) reception on the second cell, wherein the PDSCH comprises the RAR. The one or more configuration parameters may configure/enable the wireless device to delay the monitoring the downlink control channel for receiving the RAR. The first gap is 0 based on the one or more configuration parameters do not configure/enable the wireless device to delay the monitoring the downlink control channel for receiving the RAR. The wireless device may transmit the preamble on the second cell. The wireless device may receive, via a third cell, a second PDCCH indicating a second preamble transmission to a fourth cell of the NTN. The wireless device may monitor, after the first timing gap from a transmission of the second preamble via the fourth cell of the NTN, downlink control channels for receiving a second random access response (RAR) via the fourth cell. The third cell may be part of the NTN. The third cell may be part of a TN. The wireless device may receive, via a fifth cell, a third PDCCH indicating a third preamble transmission to a sixth cell of an TN. The wireless device may monitor, based on (e.g., in response to) transmitting of the third preamble via the sixth cell of the TN, downlink control channels for receiving a third random access response (RAR) via the sixth cell. The fifth cell may be part of the NTN. The fifth cell may be part of the TN. A first base station may transmit, to a wireless device, via a first cell of a non-terrestrial network (NTN), a handover command comprising: a pre-allocated uplink grant for a physical uplink shared channel (PUSCH) transmission via a second cell of the NTN; and a random access channel (RACH)-skip configuration. A second base station may receive, from the wireless device using the pre-allocated uplink grant, the PUSCH transmission via the second cell. The second base station may transmit, to the wireless device via the second cell, a physical downlink control channel (PDCCH) based on (e.g., in response to) the receiving the PUSCH transmission. A first base station may transmit, to a wireless device, via a first cell of a non-terrestrial network (NTN), a physical downlink control channel (PDCCH) indicating/triggering a preamble transmission via a second cell of the NTN. A second base station may transmit, to the wireless device, via the second cell, a random access response (RAR) corresponding to the preamble transmission. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and at least one base station configured to send the at least one RRC message. A computer-readable medium may store instructions that, when executed, cause performance of the described method, additional operations, and/or include the additional elements.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising: receiving, by a wireless device and via a cell of a non-terrestrial network (NTN), at least one radio resource control (RRC) message indicating to switch from a first NTN of the cell to a second NTN of the cell while maintaining a physical cell identifier (PCI) of the cell.

Clause 2. The method of clause 1, further comprising performing, based on the at least one RRC message, the switch without initiating a random access procedure.

Clause 3. The method of any one of clauses 1 to 2, further comprising receiving, during a time period after the performing the switch, at least one message via the cell of the second NTN.

Clause 4. The method of any one of clauses 1 to 3, further comprising receiving, during monitoring in a time period after the performing the switch, at least one message via a downlink channel from the cell of the second NTN.

Clause 5. The method of any one of clauses 1 to 4, wherein the at least one RRC message indicates whether the switch is a random access channel (RACH)-based switch or a RACH-less switch.

Clause 6. The method of any one of clauses 1 to 5, further comprising performing the switch based on at least one RRC message indicating the switch is a random access channel (RACH) less switch.

Clause 7. The method of any one of clauses 1 to 6, wherein the at least one RRC message is an NTN-specific system information block comprising at least one NTN configuration parameter, wherein the at least one NTN configuration parameter comprises at least one of: one or more first NTN configuration parameters associated with the first NTN of the cell; and one or more second NTN configuration parameters associated with the second NTN of the cell.

Clause 8. The method of any one of clauses 1 to 7, wherein the at least one RRC message is a handover message, wherein the handover message comprises an NTN-specific system information block comprising the one or more second NTN configuration parameters associated with the second NTN of the cell.

Clause 9. The method of any one of clauses 1 to 8, wherein the at least one RRC message indicates a timing advance value.

Clause 10. The method of any one of clauses 1 to 9, wherein the at least one RRC message comprises RACH-less configuration parameters indicating the switch, and wherein the switch is based on the RACH-less configuration parameters.

Clause 11. The method of any one of clauses 1 to 10, wherein the RACH-less configuration parameters indicate a pre-allocated uplink grant for an initial physical uplink shared channel (PUSCH) transmission indicating the switch.

Clause 12. The method of any one of clauses 1 to 11, further comprising: transmitting, based on the pre-allocated uplink grant, the PUSCH message via the cell; and receiving, during monitoring after a first timing gap from the transmitting the PUSCH message, at least one message via a downlink control channel of the cell, and wherein the first timing gap is based on the one or more second NTN configuration parameters corresponding to the second NTN.

Clause 13. The method of any one of clauses 1 to 12, wherein the first timing gap is based on the round trip time between the wireless device and the second NTN, and wherein the round trip time between the wireless device and the second NTN is determined based on the one or more second NTN configuration parameters corresponding to the second NTN and location of the wireless device.

Clause 14. A method comprising: receiving, by a wireless device via a cell of a non-terrestrial network (NTN), one or more radio resource control (RRC) messages indicating whether a satellite switch is a random access channel (RACH)-based switch or is a RACH-less switch, wherein the satellite switch is: for switching from a first NTN node of the cell to a second NTN node of the cell; and without changing a physical cell identifier (PCI) of the cell.

Clause 15. The method of any one of clauses 1 to 14, further comprising, based on the one or more RRC messages indicating the satellite switch is the RACH-less switch, performing the satellite switch without initiating an RA procedure.

Clause 16. The method of any one of clauses 1 to 15, The method of claim 5, wherein the RACH-less configuration parameters: indicate a reference signal (RS) for monitoring physical downlink control channel (PDCCH); and does not indicate a pre-allocated uplink grant for an initial physical uplink shared channel (PUSCH) transmission for the satellite switch.

Clause 17. The method of any one of clauses 1 to 16, further comprising starting monitoring, after a second timing gap from the receiving the one or more RRC messages, downlink control channels via the cell, wherein the second timing gap is based on at least: one or more second NTN configuration parameters corresponding to the second NTN node; and the one or more first NTN configuration parameters corresponding to the first NTN node.

Clause 18. The method of any one of clauses 1 to 17, wherein the second timing gap is based on a subtraction of a second round trip transmission delay between the wireless device and the second NTN node and a first round trip transmission delay between the wireless device and the first NTN node, wherein: the second round trip transmission delay between the wireless device and the second NTN node is determined based on the one or more second NTN configuration parameters corresponding to the second NTN node and location of the wireless device; and the first round trip transmission delay between the wireless device and the first NTN node is determined based on the one or more first NTN configuration parameters corresponding to the first NTN node and location of the wireless device.

Clause 19. The method of any one of clauses 1 to 18, wherein an RRC message of the one or more RRC messages is a handover message, wherein the handover message: indicate the satellite switch is without changing the PCI of the cell; and comprises an NTN-specific SIB comprising one or more second NTN configuration parameters corresponding to the second NTN node of the cell.

Clause 20. The method of any one of clauses 1 to 19, further comprising not transmitting a preamble of the RA procedure for performing the satellite switch.

Clause 21. A method comprising: receiving, by a wireless device via a first cell of an NTN, one or more messages indicating a timing advance (TA) value for switching from the first cell to a second cell of the NTN; and based on the one or more messages indicating the TA value, switching from the first cell to the second cell without transmitting a preamble of an RA procedure.

Clause 22. The method of any one of clauses 1 to 21, wherein a message of the one or more messages comprises a handover command, wherein a PCI of the second cell is different than the PCI of the first cell.

Clause 23. The method of any one of clauses 1 to 22, wherein a PCI of the second cell is the same as the PCI of the first cell.

Clause 24. The method of any one of clauses 1 to 23, wherein the switching from the first cell to the second cell comprises a switching from a first NTN node of the first cell to a second NTN node of the second cell.

Clause 25. The method of any one of clauses 1 to 24, wherein the switching from the first cell to the second cell comprises a switching from a first NTN node of the first cell to the first NTN node of the second cell.

Clause 26. A method comprising: receiving, by a wireless device via a cell of a non-terrestrial network (NTN), one or more radio resource control (RRC) messages, wherein the one or more RRC messages: indicate switching from the first NTN node of the cell to a second NTN node of the cell, wherein the satellite switch is without changing a physical cell identifier (PCI) of the cell; and comprise: one or more first NTN configuration parameters, corresponding to the first NTN node of the cell, for determining a first TA value; and one or more second NTN configuration parameters, corresponding to the second NTN node of the cell, for determining a second TA value;

Clause 27. The method of any one of clauses 1 to 26, further comprising receiving a physical downlink control channel (PDCCH) indicating a preamble for switching from the first NTN node of the cell to the second NTN node of the cell.

Clause 28. The method of any one of clauses 1 to 27, further comprising starting a response window after a first timing gap from a transmission of the preamble, wherein the first timing gap is based on the second TA value.

Clause 29. The method of any one of clauses 1 to 28, further comprising transmitting, in response to the PDCCH, the preamble via the second NTN node.

Clause 30. The method of any one of clauses 1 to 29, wherein the starting the response window is based on the transmitting the preamble.

Clause 31. The method of any one of clauses 1 to 30, wherein the starting the response windows is based on an indication enabling the starting the response window, wherein the one or more RRC messages indicates the indication.

Clause 32. The method of any one of clauses 1 to 31, wherein the receiving the PDCCH is via the first NTN node.

Clause 33. The method of any one of clauses 1 to 32, further comprising monitoring PDCCH candidates during the response window for receive at least one DCI from the second NTN node.

Clause 34. A computing device comprising: one or more processors; and memory storing instructions that, when executed by the one or more processors, cause the computing device to perform: the method of any one of clauses 1 to 33.

Clause 35. A system comprising: a wireless device configured to perform the method of any one of claims 1 to 33; and at least one base station configured to send the at least one RRC message.

Clause 36. A computer-readable medium storing instructions that, when executed, cause performance of: the method of any one of clauses 1 to 33.

Clause 37. A method comprising: receiving, by a wireless device and via a source cell of a non-terrestrial network (NTN), a random access channel (RACH)-less handover command, wherein the RACH-less handover command comprises a pre-configured uplink grant for a transmission of a radio resource control (RRC) reconfiguration complete message via a target cell of the NTN.

Clause 38. The method of clause 37, further comprising transmitting, based on the pre-configured uplink grant, the RRC reconfiguration complete message via the target cell.

Clause 39. The method of any one of clauses 37 to 38, further comprising receiving, during monitoring after a first gap from the transmitting the RRC reconfiguration complete message via the target cell, at least one message via a downlink control channel, wherein the first gap is based on a round trip time of the target cell.

Clause 40. The method of any one of clauses 37 to 39, wherein the pre-configured uplink grant comprises at least one physical uplink shared channel (PUSCH) resource.

Clause 41. The method of any one of clauses 37 to 40, further comprising receiving, from the source cell, at least one configuration parameter comprising at least one NTN configuration parameter, wherein the at least one NTN configuration parameter comprises at least one of: a first NTN configuration parameter associated with the source cell; and a second NTN configuration parameter associated with the target cell.

Clause 42. The method of any one of clauses 37 to 41, wherein the wireless device estimates the round trip time of the target cell based on at least one NTN configuration parameter associated with the target cell.

Clause 43. The method of any one of clauses 37 to 42, further comprising: receiving, via a second source cell, a second RACH-less handover command comprising a second pre-configured uplink grant for a transmission of a second RRC reconfiguration complete message to a target cell of a terrestrial network (TN).

Clause 44. The method of any one of clauses 37 to 43, further comprising monitoring, based on transmitting the second RRC reconfiguration complete message on the target cell, downlink control channels for receiving a physical downlink control channel (PDCCH) via the target cell of the TN.

Clause 45. The method of any one of clauses 37 to 44, wherein the first NTN configuration parameters comprises at least one of: a first satellite ephemeris data; a first common timing advance (TA) parameters; a first cell-specific scheduling offset; or a first medium access control (MAC)-layer scheduling offset.

Clause 46. The method of any one of clauses 37 to 45, wherein the second NTN configuration parameters comprises at least one of: a second satellite ephemeris data; a second common timing advance (TA) parameters; a second cell-specific scheduling offset; or a second medium access control (MAC)-layer scheduling offset.

Clause 47. The method of any one of clauses 37 to 46, wherein the first gap is based on the second cell-specific scheduling offset.

Clause 48. The method of any one of clauses 37 to 47, wherein the wireless device determines/estimates the RTT of the target cell based on at least one of: the second satellite ephemeris data; the second common timing advance (TA) parameters; the second MAC-layer scheduling offset.

Clause 49. The method of any one of clauses 37 to 48, further comprising receiving the PDCCH on the target cell addressing to a cell radio network temporary identifier (RNTI), C-RNTI.

Clause 50. The method of any one of clauses 37 to 49, wherein the PDCCH schedules a physical downlink shared channel (PDSCH) reception on the target cell.

Clause 51. The method of any one of clauses 37 to 50, wherein the PDSCH comprises a contention resolution identity MAC control element.

Clause 52. The method of any one of clauses 37 to 51, further comprising: ignoring the contention resolution identity MAC control element; and releasing, in response to receiving the PDCCH addressing to the C-RNTI, configuration parameters of RACH-less handover.

Clause 53. The method of any one of clauses 37 to 52, wherein the one or more configuration parameters configure/enable the wireless device to delay the monitoring the downlink control channel.

Clause 54. The method of any one of clauses 37 to 53, further comprising setting the first gap equal to 0 based on the one or more configuration parameters not configuring/enabling the wireless device to delay the monitoring the downlink control channel.

Clause 55. The method of any one of clauses 37 to 54, wherein the source cell is part of the NTN.

Clause 56. The method of any one of clauses 37 to 55, wherein the source cell is part of the TN.

Clause 57. The method of any one of clauses 37 to 56, further comprising: receiving, via the source cell, a third RACH-less handover command without a pre-configured uplink grant for a transmission of a third RRC reconfiguration complete message on the target cell;

Clause 58. The method of any one of clauses 37 to 57, based on the third RACH-less handover command not indicating a pre-configured uplink grant, monitoring downlink control channels after a second gap from the receiving the third RACH-less handover command, wherein the second gap is based on the NTN configuration parameters;

Clause 59. The method of any one of clauses 37 to 58, further comprising receiving, while monitoring the downlink control channels and on the target cell, a second PDCCH indicating a dynamic uplink grant.

Clause 60. The method of any one of clauses 37 to 59, further comprising transmitting, using the dynamic uplink grant, the third RRC reconfiguration complete message on the target cell.

Clause 61. A method comprising: receiving, by a wireless device via a first cell of a non-terrestrial network (NTN), a random access channel (RACH)-less handover command comprising a pre-configured uplink grant corresponding to a physical uplink shared channel (PUSCH) transmission via a second cell of the NTN.

Clause 62. The method of clause 60, further comprising transmitting, using the preconfigured uplink grant, the PUSCH transmission on the target cell.

Clause 63. The method of any one of clauses 37 to 62, further comprising starting monitoring, after a first timing gap from the transmitting the PUSCH on the target cell, downlink control channels for receiving a physical downlink control channel (PDCCH) via/on the target cell, wherein the first timing gap is determined based on a round trip transmission delay (RTT) of the target cell.

Clause 64. A method comprising receiving, by a wireless device via a first cell of an NTN, a random access channel (RACH)-less handover command without a pre-configured uplink grant for a physical uplink shared channel (PUSCH) on a second cell of the NTN;

Clause 65. The method of clause 64, in response to the RACH-less handover command not indicating a pre-configured uplink grant, starting monitoring downlink control channels after a second timing gap from the receiving the RACH-less handover command, wherein the second timing gap is based on NTN configuration parameters;

Clause 66. The method of any one of clauses 37 to 65, further comprising receiving, while monitoring the downlink control channels and on the second cell, a physical downlink control channel (PDCCH) indicating a dynamic uplink grant.

Clause 67. The method of any one of clauses 37 to 66, further comprising transmitting, using the dynamic uplink grant, the PUSCH transmission via the second cell.

Clause 68. A computing device comprising: one or more processors; and memory storing instructions that, when executed by the one or more processors, cause the computing device to perform: the method of any one of clauses 37 to 67.

Clause 69. A system comprising: a wireless device configured to perform the method of any one of claims 37 to 68; and at least one base station configured to send the at least one RRC message.

Clause 70. A computer-readable medium storing instructions that, when executed, cause performance of: the method of any one of clauses 37 to 69.

Clause 71. A method comprising: receiving, by a wireless device and via a first cell of a non-terrestrial network (NTN), a physical downlink control channel (PDCCH) message indicating a preamble transmission via a second cell of the NTN.

Clause 72. The method of clause 71, receiving, during monitoring after a first timing gap from a transmission of the preamble via the second cell, a random access response (RAR) via a downlink control channel from the second cell, wherein the first timing gap is based on a round trip time of the second cell.

Clause 73. The method of any one of clauses 71 to 72, wherein the PDCCH message indicates a switch from the first cell to the second cell.

Clause 74. The method of any one of clauses 71 to 73, further comprising receiving at least one configuration parameter comprising NTN configuration parameters, wherein the NTN configuration parameters comprise at least one of: a first NTN configuration parameter associated with the first cell; and a second NTN configuration parameter associated with the second cell.

Clause 75. The method of any one of clauses 71 to 74, wherein the wireless device determines the round trip time of the second cell based on at least one second NTN configuration parameter associated with the second cell.

Clause 76. The method of any one of clauses 71 to 75, further comprising transmitting the preamble via the second cell.

Clause 77. The method of any one of clauses 71 to 76, further comprising receiving, via a third cell, a second PDCCH message indicating a second preamble transmission to a fourth cell of the NTN.

Clause 78. The method of any one of clauses 71 to 77, further comprising monitoring, after the first timing gap from a transmission of the second preamble via the fourth cell of the NTN, downlink control channels for a second random access response (RAR) via the fourth cell.

Clause 79. The method of any one of clauses 71 to 78, further comprising receiving, via a fifth cell, a third PDCCH message indicating a third preamble transmission to a sixth cell of a terrestrial network (TN).

Clause 80. The method of any one of clauses 71 to 79, further comprising monitoring, based one transmitting of the third preamble via the sixth cell of the TN, downlink control channels for a third random access response (RAR) via the sixth cell.

Clause 81. The method of any one of clauses 71 to 80, wherein the first NTN configuration parameters comprises at least one of: a first satellite ephemeris data; a first common timing advance (TA) parameters; a first cell-specific scheduling offset; or a first medium access control (MAC)-layer scheduling offset.

Clause 82. The method of any one of clauses 71 to 81, wherein the second NTN configuration parameters comprises at least one of: a second satellite ephemeris data; a second common timing advance (TA) parameters; a second cell-specific scheduling offset; or a second medium access control (MAC)-layer scheduling offset.

Clause 83. The method of any one of clauses 71 to 82, wherein the one or more configuration parameters configure/enable the wireless device for receiving the RAR via the second cell during a RAR window.

Clause 84. The method of any one of clauses 71 to 83, wherein the one or more configuration parameters configure at least two common search space sets for monitoring the downlink control channel during the RAR window.

Clause 85. The method of any one of clauses 71 to 84, further comprising monitoring the downlink control channels during the RAR window based on a second common search space set of the at least two common search space sets corresponding to the second cell.

Clause 86. The method of any one of clauses 71 to 85, wherein the wireless device determines/estimates the RTT of the second cell based on at least one of: the second satellite ephemeris data; the second common timing advance (TA) parameters; the second MAC-layer scheduling offset.

Clause 87. The method of any one of clauses 71 to 86, further comprising receiving the PDCCH on the second cell addressing to a random access (RA) radio network temporary identifier (RNTI), RA-RNTI, wherein the RA-RNTI is determined based on the preamble.

Clause 88. The method of any one of clauses 71 to 87, wherein the PDCCH schedules a physical downlink shared channel (PDSCH) reception on the second cell, wherein the PDSCH comprises the RAR.

Clause 89. The method of any one of clauses 71 to 88, wherein the one or more configuration parameters configure/enable the wireless device to delay the monitoring the downlink control channel for receiving the RAR.

Clause 90. The method of any one of clauses 71 to 89, wherein the first gap is 0 based on the one or more configuration parameters do not configure/enable the wireless device to delay the monitoring the downlink control channel for receiving the RAR.

Clause 91. The method of any one of clauses 71 to 90, wherein the third cell is part of the NTN.

Clause 92. The method of any one of clauses 71 to 91, wherein the third cell is part of a TN.

Clause 93. The method of any one of clauses 71 to 92, further comprising receiving, via a fifth cell, a third PDCCH indicating a third preamble transmission to a sixth cell of an TN.

Clause 94. The method of any one of clauses 71 to 93, further comprising monitoring, based on transmitting of the third preamble via the sixth cell of the TN, downlink control channels for receiving a third random access response (RAR) via the sixth cell.

Clause 95. The method of any one of clauses 71 to 94, wherein the fifth cell is part of the NTN.

Clause 96. The method of any one of clauses 71 to 95, wherein the fifth cell is part of the TN.

Clause 97. A computing device comprising: one or more processors; and memory storing instructions that, when executed by the one or more processors, cause the computing device to perform: the method of any one of clauses 71 to 96.

Clause 98. A system comprising: a wireless device configured to perform the method of any one of claims 71 to 96; and at least one base station configured to send the at least one RRC message.

Clause 99. A computer-readable medium storing instructions that, when executed, cause performance of: the method of any one of clauses 71 to 96.

Clause 100. A method comprising receiving, by a wireless device via a first cell of a non-terrestrial network (NTN), a handover command comprising: a pre-allocated uplink grant for a physical uplink shared channel (PUSCH) transmission via a second cell of the NTN; and a random access channel (RACH)-skip configuration.

Clause 101. The method of clause 100, further comprising transmitting, using the pre-allocated uplink grant, the PUSCH transmission via the second cell.

Clause 102. The method of any one of clauses 100 to 101, further comprising starting monitoring, after a first timing gap from the transmitting the PUSCH transmission via the second cell, downlink control channels via the second cell, wherein the first timing gap is based on a round trip transmission delay (RTT) of the second cell.

Clause 103. The method of any one of clauses 100 to 102, further comprising receiving, from the source cell, one or more configuration parameters comprising NTN configuration parameters, wherein the NTN configuration parameters comprise at least one of: a first NTN configuration parameters corresponding to the first cell; and a second NTN configuration parameters corresponding to the second cell.

Clause 104. The method of any one of clauses 100 to 103, wherein the handover command comprises the second NTN configuration parameters.

Clause 105. The method of any one of clauses 100 to 104, wherein the wireless device determines/estimates the RTT of the second cell based on the second NTN configuration parameters.

Clause 106. The method of any one of clauses 100 to 105, wherein the first NTN configuration parameters comprises at least one of: a first satellite ephemeris data; a first common timing advance (TA) parameters; a first cell-specific scheduling offset; or a first medium access control (MAC)-layer scheduling offset.

Clause 107. The method of any one of clauses 100 to 106, wherein the second NTN configuration parameters comprises at least one of: a second satellite ephemeris data; a second common timing advance (TA) parameters; a second cell-specific scheduling offset; or a second medium access control (MAC)-layer scheduling offset.

Clause 108. The method of any one of clauses 100 to 107, wherein the first timing gap is based on the second cell-specific scheduling offset.

Clause 109. The method of any one of clauses 100 to 108, wherein the wireless device determines/estimates the RTT of the second cell based on at least one of: the second satellite ephemeris data; the second common timing advance (TA) parameters; or the second MAC-layer scheduling offset.

Clause 110. The method of any one of clauses 100 to 109, further comprising receiving, at least after the first timing gap from the transmitting the PUSCH transmission via the second cell, the PDCCH on the second cell addressing to a cell radio network temporary identifier (RNTI), C-RNTI.

Clause 111. The method of any one of clauses 100 to 110, wherein the PDCCH schedules a physical downlink shared channel (PDSCH) reception on the second cell.

Clause 112. The method of any one of clauses 100 to 111, wherein the PDSCH comprises a contention resolution identity MAC control element.

Clause 113. The method of any one of clauses 100 to 112, further comprising ignoring the contention resolution identity MAC control element.

Clause 114. The method of any one of clauses 100 to 113, further comprising releasing, based on receiving the PDCCH addressing to the C-RNTI, the RACH-skip configuration.

Clause 115. The method of any one of clauses 100 to 114, wherein the one or more configuration parameters configure/enable the wireless device to delay the monitoring the downlink control channel by the first timing gap after the transmitting the PUSCH via the second cell.

Clause 116. The method of any one of clauses 100 to 115, further comprising initializing the first timing gap by 0 based on the one or more configuration parameters not configuring/enabling the wireless device to delay the monitoring the downlink control channel after the transmitting the PUSCH via the second cell.

Clause 117. The method of any one of clauses 100 to 116, further comprising: receiving, a third cell, a second handover command comprising a second pre-allocated uplink grant for a second physical uplink shared channel (PUSCH) transmission via a fourth cell of a terrestrial network (TN); and a second random access channel (RACH)-skip configuration.

Clause 118. The method of any one of clauses 100 to 117, further comprising transmitting, using the pre-allocated uplink grant, the second PUSCH transmission via the fourth cell.

Clause 119. The method of any one of clauses 100 to 118, further comprising starting monitoring, based on transmitting the second PUSCH via the fourth cell, downlink control channels for receiving a second physical downlink control channel (PDCCH) via the fourth cell.

Clause 120. The method of any one of clauses 100 to 119, wherein the third cell is part of the NTN.

Clause 121. The method of any one of clauses 100 to 120, wherein the third cell is part of the TN.

Clause 122. The method of any one of clauses 100 to 121, further comprising receiving, via a fifth cell of an NTN, a third handover command comprising a third random access channel (RACH)-skip configuration.

Clause 123. The method of any one of clauses 100 to 122, further comprising, based on the third handover command not indicating a pre-allocated uplink grant, monitoring downlink control channels after a second timing gap from the receiving the third handover command, wherein the second timing gap is based on the NTN configuration parameters;

Clause 124. The method of any one of clauses 100 to 123, further comprising receiving, while monitoring the downlink control channels and on a sixth cell, a third PDCCH indicating a dynamic uplink grant.

Clause 125. The method of any one of clauses 100 to 124, further comprising transmitting, using the dynamic uplink grant, a third PUSCH transmission via the sixth cell.

Clause 126. The method of any one of clauses 100 to 125, further comprising starting monitoring, after the first timing gap from the transmitting the third PUSCH transmission via the sixth cell, downlink control channels for receiving a fourth PDCCH via the sixth cell.

Clause 127. The method of any one of clauses 100 to 126, wherein the second timing gap is based on a third NTN configuration parameters corresponding to the fifth cell.

Clause 128. The method of any one of clauses 100 to 127, wherein the second timing gap is based on an RTT of the fifth cell, wherein the RTT of the fifth cell is based on the third NTN configuration parameters.

Clause 129. The method of any one of clauses 100 to 128, wherein the second timing gap is based on a second cell-specific scheduling timing indicated by the third NTN configuration parameters.

Clause 130. The method of any one of clauses 100 to 129, wherein the second timing gap is based on a fourth NTN configuration parameters corresponding to the sixth cell.

Clause 131. The method of any one of clauses 100 to 130, wherein the second timing gap is based on an RTT of the sixth cell, wherein the RTT of the sixth cell is based on the fourth NTN configuration parameters.

Clause 132. The method of any one of clauses 100 to 131, wherein the second timing gap is based on a fourth cell-specific scheduling timing indicated by the fourth NTN configuration parameters.

Clause 133. The method of any one of clauses 100 to 132, wherein the second timing gap is based on third NTN configuration parameters corresponding to the fifth cell and a fourth NTN configuration parameters corresponding to the sixth cell.

Clause 134. The method of any one of clauses 100 to 133, wherein the second timing gap is based on a first RTT of the fifth cell and a second RTT of the sixth cell.

Clause 135. The method of any one of clauses 100 to 134, wherein the second timing gap is at least one of: a difference between the first RTT and the second RTT; a summation of the first RTT and the second RTT; a maximum of the first RTT and the second RTT; or a minimum of the first RTT and the second RTT.

Clause 136. The method of any one of clauses 100 to 135, wherein the second timing gap is based on a first cell-specific scheduling timing indicated by the third NTN configuration parameters and a second cell-specific scheduling timing indicated by the fourth NTN configuration parameters.

Clause 137. The method of any one of clauses 100 to 136, wherein the second timing gap is at least one of: a difference between the first cell-specific scheduling timing and the second cell-specific scheduling timing; a summation of the first cell-specific scheduling timing and the second cell-specific scheduling timing; a maximum of the first cell-specific scheduling timing and the second cell-specific scheduling timing; or a minimum of the first cell-specific scheduling timing and the second cell-specific scheduling timing.

Clause 138. The method of any one of clauses 100 to 137, wherein the first RTT is greater than the second RTT.

Clause 139. The method of any one of clauses 100 to 138, wherein the first RTT is smaller than the second RTT.

Clause 140. The method of any one of clauses 100 to 139, further comprising receiving the one or more configuration parameters via the fifth cell.

Clause 141. The method of any one of clauses 100 to 140, wherein the one or more configuration parameters configure/enable the wireless device to delay the monitoring the downlink control channel after receiving the third handover command.

Clause 142. The method of any one of clauses 100 to 141, wherein the second gap is 0 based on the one or more configuration parameters not configuring/enabling the wireless device to delay the monitoring the downlink control channel after receiving the third handover command.

Clause 143. The method of any one of clauses 100 to 142, further comprising receiving, via a seventh cell of a TN, a fourth handover command comprising a fourth random access channel (RACH)-skip configuration;

Clause 144. The method of any one of clauses 100 to 143, further comprising, based on the fourth handover command not indicating a pre-allocated uplink grant for transmission of a fourth PUSCH via an eights cell of the TN, starting monitoring downlink control channels after receiving the fourth handover command;

Clause 145. The method of any one of clauses 100 to 144, further comprising receiving, while monitoring the downlink control channels and on the eight cell, a fourth PDCCH indicating a second dynamic uplink grant.

Clause 146. The method of any one of clauses 100 to 145, further comprising transmitting, using the second dynamic uplink grant, the fourth PUSCH transmission via the eighth cell.

Clause 147. The method of any one of clauses 100 to 146, further comprising receiving, via a ninth cell of a TN, a fifth handover command comprising a fifth random access channel (RACH)-skip configuration.

Clause 148. The method of any one of clauses 100 to 147, further comprising, based on the fifth handover command not indicating a pre-allocated uplink grant for transmission of a fifth PUSCH via a tenth cell of the NTN, starting monitoring downlink control channels after a third timing gap after receiving the fifth handover command, wherein the third timing gap is based on a fifth NTN configuration parameters corresponding to the tenth cell.

Clause 149. The method of any one of clauses 100 to 148, further comprising receiving, while monitoring the downlink control channels and on the tenth cell, a fifth PDCCH indicating a third dynamic uplink grant.

Clause 150. The method of any one of clauses 100 to 149, further comprising transmitting, using the third dynamic uplink grant, the fifth PUSCH transmission via the tenth cell.

Clause 151. The method of any one of clauses 100 to 150, wherein the third timing gap is based on an RTT of the tenth cell or a cell-specific scheduling offset of the tenth cell, wherein the fifth NTN configuration parameters indicate the cell-specific scheduling offset of the tenth cell.

Clause 152. The method of any one of clauses 100 to 151, further comprising receiving, via an eleventh cell of the NTN, a sixth handover command comprising a sixth random access channel (RACH)-skip configuration.

Clause 153. The method of any one of clauses 100 to 152, further comprising, based on the sixth handover command not indicating a pre-allocated uplink grant for transmission of a sixth PUSCH via a twelfth cell of a TN, starting monitoring downlink control channels receiving the sixth handover command;

Clause 154. The method of any one of clauses 100 to 153, further comprising receiving, while monitoring the downlink control channels and on the twelfth cell, a sixth PDCCH indicating a fourth dynamic uplink grant.

Clause 155. The method of any one of clauses 100 to 154, further comprising transmitting, using the fourth dynamic uplink grant, the sixth PUSCH transmission via the twelfth cell.

Clause 156. A computing device comprising: one or more processors; and memory storing instructions that, when executed by the one or more processors, cause the computing device to perform: the method of any one of clauses 100 to 155.

Clause 157. A system comprising: a wireless device configured to perform the method of any one of claims 100 to 155; and at least one base station configured to send the at least one RRC message.

Clause 158. A computer-readable medium storing instructions that, when executed, cause performance of: the method of any one of clauses 100 to 155.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described herein, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the scope of the descriptions herein. Accordingly, the foregoing description is by way of example only, and is not limiting.

## Claims

1. A method comprising:

   receiving, by a wireless device and via a cell of a non-terrestrial network (NTN), at least one radio resource control (RRC) message indicating to switch from a first NTN of the cell to a second NTN of the cell while maintaining a physical cell identifier (PCI) of the cell; and
   performing, based on the at least one RRC message, the switch without initiating a random access procedure.

2. The method of claim 1, further comprising receiving, during a time period after the performing the switch, at least one message via the cell of the second NTN.

3. The method of any one of claims 1 to 2, further comprising receiving, during monitoring in a time period after the performing the switch, at least one message via a downlink channel from the cell of the second NTN.

4. The method of any one of claims 1 to 3, wherein the at least one RRC message indicates whether the switch is a random access channel (RACH)-based switch or a RACH-less switch.

5. The method of any one of claims 1 to 4, further comprising performing the switch based on at least one RRC message indicating the switch is a random access channel (RACH) less switch.

6. The method of any one of claims 1 to 5, wherein the at least one RRC message is an NTN-specific system information block comprising at least one NTN configuration parameter, wherein the at least one NTN configuration parameter comprises at least one of:

   one or more first NTN configuration parameters associated with the first NTN of the cell; and
   one or more second NTN configuration parameters associated with the second NTN of the cell.

7. The method of any one of claims 1 to 6, wherein the at least one RRC message is a handover message, wherein the handover message comprises an NTN-specific system information block comprising the one or more second NTN configuration parameters associated with the second NTN of the cell.

8. The method of any one of claims 1 to 7, wherein the at least one RRC message indicates a timing advance value.

9. The method of any one of claims 1 to 8, wherein the at least one RRC message comprises RACH-less configuration parameters indicating the switch, and wherein the switch is based on the RACH-less configuration parameters.

10. The method of any one of claims 1 to 9, wherein the RACH-less configuration parameters indicate a pre-allocated uplink grant for an initial physical uplink shared channel (PUSCH) transmission indicating the switch.

11. The method of any one of claims 1 to 10, further comprising:

    transmitting, based on the pre-allocated uplink grant, the PUSCH message via the cell; and
    receiving, during monitoring after a first timing gap from the transmitting the PUSCH message, at least one message via a downlink control channel of the cell, and wherein the first timing gap is based on the one or more second NTN configuration parameters corresponding to the second NTN.

12. The method of any one of claims 1 to 11, wherein the first timing gap is based on the round trip time between the wireless device and the second NTN, and wherein the round trip time between the wireless device and the second NTN is determined based on the one or more second NTN configuration parameters corresponding to the second NTN and location of the wireless device.

13. A computing device comprising:

    one or more processors; and
    memory storing instructions that, when executed by the one or more processors, cause the computing device to perform the method of any one of claims 1 to 12.

**14.** A system comprising:

a wireless device configured to perform the method of any one of claims 1 to 12; and
at least one base station configured to send the at least one RRC message.

**15.** A computer-readable medium storing instructions that, when executed, cause performance of the method of any one of claims 1 to 12.

100
Wireless Device 106
RAN 104
CN 102
DN(s) 108
150
Wireless Device 156A
Uu
gNB 160A
Xn
ng-eNB 162A
NG
NG
Xn
Xn
ng-eNB 162B
NG
NG
AMF 158A
UPF 158B
AMF/UPF 158
DN(s) 170
Xn
Wireless Device 156B
Uu
gNB 160B
5G-CN 152
Wireless Devices 156
NG-RAN 154

FIG. 1A

FIG. 1B

Wireless Device
210
SDAP
215
PDCP
214
RLC
213
MAC
212
PHY
211
Base Station
220
SDAP
225
PDCP
224
RLC
223
MAC
222
PHY
221

FIG. 2A

Wireless Device
210
NAS
217
RRC
216
PDCP
214
RLC
213
MAC
212
PHY
211
Base Station
220
RRC
226
PDCP
224
RLC
223
MAC
222
PHY
221
AMF
230
NAS
237

FIG. 2B

IP Packets
QoS Flows
SDAP 215/225
QoS Flow Handling
Radio Bearers
PDCP 214/224
Header Comp., Ciphering
Header Comp., Ciphering
Reordering, Retransmission
Reordering, Retransmission
RLC Channels
RLC 213/223
Segmentation, ARQ
Segmentation, ARQ
Logical Channels
MAC 212/222
Multiplexing
HARQ
Transport Channel
PHY 211/221
Coding, Resource Mapping

FIG. 3

IP Packet
n
IP Packet
n+1
IP Packet
m
SDAP 225
PDCP 224
RLC 223
MAC 222
PHY 221
radio bearer 402
radio bearer 404
H
SDAP SDU
SDAP PDU
PDCP SDU
RLC SDU
SDU Seg.
MAC SDU
PHY SDU (Transport Block)
PHY SDU


FIG. 4A


R
F
LCID
SDU Length
H
MAC CE
MAC SDU
MAC PDU


FIG. 4B

Logical Channels
Transport Channels
Physical Channels
Physical Signals
PCCH
BCCH
CCCH
DCCH
DTCH
PCH
BCH
DL-SCH
DCI
PBCH
PDSCH
PDCCH
PSS/SSS
CSI-RS
DM-RS
PT-RS
Downlink
CCCH
DCCH
DTCH
UL-SCH
RACH
UCI
PUSCH
PUCCH
PRACH
DM-RS
PT-RS
SRS
Uplink

FIG. 5A

FIG. 5B

Connection
Release
608
RRC IDLE
606
Connection
Release
616
RRC INACTIVE
604
Connection
Inactivation
610
RRC CONNECTED
602
614
Connection
Resume
612
Connection
Establishment

FIG. 6

1 Frame (10 ms)
0
1
2
3
4
5
6
7
8
9
1 Subframe (1 ms)
Subcarrier spacing = 15 kHz
1 slot per subframe
1 Slot (1 ms, 14 OFDM Symbols)
Subcarrier spacing = 30 kHz
2 slots per subframe
1 Slot (0.5 ms, 14 OFDM Symbols)
Subcarrier spacing = 60 kHz
4 slots per subframe
1 Slot (0.25 ms, 14 OFDM Symbols)
Subcarrier spacing = 120 kHz
8 slots per subframe
1 Slot (0.0125 ms, 14 OFDM Symbols)

FIG. 7

Resource Element (RE)
1 Symbol x 1 Subcarrier
Resource Block (RB)
12 Subcarriers
One Slot (14 Symbols)
NR Carrier Bandwidth
(Up to 3300 Subcarriers)
Time
Frequency

FIG. 8

Initial Active
Default
Frequency
NR Carrier
Time
BWP (40MHz/ 15kHz) 902
SP 908
BWP (10MHz/15kHz) 904
SP 910
BWP (20MHz/ 60kHz) 906
SP 912
BWP (10MHz/15kHz) 904
SP 914
BWP (40MHz/ 15kHz) 902

FIG. 9

Component Carrier
Intraband, contiguous 1002
Freq. Band A
Freq. Band B
Intraband, non-contiguous 1004
Freq. Band A
Freq. Band B
Interband 1006
Freq. Band A
Freq. Band B

FIG. 10A

PUCCH Group 1010
PUCCH Group 1050
Downlink Component Carriers
PCell 1011
SCell 1012
SCell 1013
PSCell 1051
SCell 1052
SCell 1053
UCI 1031
UCI 1032
UCI 1033
UCI 1071
UCI 1072
UCI 1073
Uplink Component Carriers
PCell 1021
SCell 1022
SCell 1023
PSCell 1061
SCell 1062
SCell 1063

FIG. 10B

Frequency
Set of SS/
PBCH blocks
PSS
SSS
PBCH
Time

FIG. 11A

Beam #1
Beam #2
Beam #3
Frequency
1101
1102
1103
1101
CSI-RS #1
CSI-RS #2
CSI-RS #3
Time

FIG. 11B

Base station
Tx beam
Wireless device
Rx beam
P1
P2
P3
Base station
Rx beam
Wireless device
Tx beam
U1
U2
U3

FIG. 12A

FIG. 12B

Wireless Device
Base Station
Configuration 1310
Msg 1 1311
Msg 2 1312
Msg 3 1313
Msg 4 1314
Wireless Device
Base Station
Configuration 1320
Msg 1 1321
Msg 2 1322
Wireless Device
Base Station
Configuration 1330
Msg A 1331
Preamble 1341
1342 Transport block
Msg B 1332


FIG. 13A

FIG. 13B

FIG. 13C

CORESET 1403
CORESET 1402
CORESET 1401
CORESET 1404
Bandwidth
One slot
CORESET
CCE-to-REG mapping
Search Space
PDCCH candidate
PDCCH candidate
PDCCH candidate

FIG. 14A

FIG. 14B

Air Interface
1506
Peripheral(s)
1526
Memory
1524
GPS Chipset
1527
TX Processing System
1520
Processing System
1518
RX Processing System
1522
TX Processing System
1510
Processing System
1508
RX Processing System
1512
Peripheral(s)
1516
Memory
1514
GPS Chipset
1517
Wireless Device
1502
Base Station
1504


FIG. 15A

Network
1540
Display
1536
1530
Device
Controller
1537
Network
I/O
1539
ROM
1532
Removable
Media
1534
Processor
1531
RAM
1533
GPS
1541
Hard Drive
1535
WiFi
1543
Bluetooth
1542
1538

FIG. 15B

Scrambling
Modulation mapper
Scrambling
Modulation mapper
Layer mapper
Transform precoder
Transform precoder
Precoding
Resource element mapper
Resource element mapper
signal gen.
signal gen.
Antenna ports
$s_l(t)$
Split
$\mathrm{Re}\{s_l(t)\}$
$\mathrm{Im}\{s_l(t)\}$
$\cos(2\pi f_0 t)$
$-\sin(2\pi f_0 t)$
Filtering
$s_l^{(p)}(t)$
Split
$\mathrm{Re}\{s_l^{(p)}(t)\}$
$\mathrm{Im}\{s_l^{(p)}(t)\}$
$\cos(2\pi f_0 t)$
$-\sin(2\pi f_0 t)$
Filtering
Scrambling
Modulation mapper
Scrambling
Modulation mapper
Layer mapper
Transform precoder
Transform precoder
Precoding
Resource element mapper
Resource element mapper
OFDM signal gen.
OFDM signal gen.
Antenna ports

FIG. 16A

FIG. 16B

FIG. 16D

FIG. 16C

| DCI format | Usage |
|---|---|
| 0_0 | Scheduling of PUSCH in one cell |
| 0_1 | Scheduling of one or multiple PUSCH in one cell, or indicating CG-DFI for configured grant PUSCH |
| 0_2 | Scheduling of PUSCH in one cell |
| 1_0 | Scheduling of PDSCH in one cell |
| 1_1 | Scheduling of PDSCH in one cell, and/or triggering one shot HARQ-ACK codebook feedback |
| 1_2 | Scheduling of PDSCH in one cell |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |
| 2_4 | Notifying a group of UEs of the PRB(s) and OFDM symbol(s) where UE cancels the corresponding UL transmission from the UE |
| 2_5 | Notifying the availability of soft resources |
| 2_6 | Notifying the power saving information outside DRX Active Time for one or more UEs |
| 3_0 | Scheduling of NR sidelink in one cell |
| 3_1 | Scheduling of LTE sidelink in one cell |

FIG. 17

Wireless Device
1801
Source Base
Station 1802
Target Bsse
Station 1803
Measurement Report 1804
Handover request 1805
Handover request ACK 1806
Start
T304
RRC reconfiguration 1807
(CF RACH resources)
Preamble transmission 1808
RAR transmission 1809
Stop
T304
RRCReconfigurationComplete 1810

FIG. 18

Wireless device 1901
Source Base station 1902 (e.g., source PCell)
Target Base station 1 1910 (e.g., candidate PCell 1)
Target Base station 2 1920 (e.g., candidate PCell 2)
Measurement Report 1941
Handover request 1942
Config. of Conditions for CHO with candidate Pcells 1944
Handover request ACK 1943
Evaluate CHO conditions for the candidate Pcells 1945
Conditions met for any of PCells? 1946
No
Yes
Select one target Pcell 1947
RA procedure if PCell 1 is selected 1948
RRCReconfigurationComplete 1949
CHO: Conditional Handover

FIG. 19

Wireless device 2005
Source Base station 2002 (e.g., source PCell)
Target Base station 1 2010 (e.g., candidate PCell 1)
Target Base station 2 2020 (e.g., candidate PCell 2)
L3 Measurement Report 2041
Handover request 2042
Handover request ACK 2043
Config. of candidate PCells for L1/L2 based mobility 2044
L1 beam/CSI report of Cell 0, Cell 1, Cell 2 etc. 2045
1st DCI/MAC CE(s) configuring Cell 1 as a cell for ICBM 2046
For ICBM only
Tx/Rx via Cell 0 and Cell 1 2047
2nd DCI/MAC CE(s) triggering PCell change/switch to Cell 1 2048
Uplink Sync (RACH) 2049
RRCReconfigurationComplete 2050
ICBM: Inter-Cell Beam Management

FIG. 20

Wireless device 2105
Source Base station 2102 (e.g., source PCell)
Target Base station 1 2110 (e.g., candidate PCell 1)
Target Base station 2 2120 (e.g., candidate PCell 2)
L3 Measurement Report 2141
Coordination 2142
Config. of candidate PCells 2143 (Cell 1, Cell 2, etc.)
L1/2 Meas. Config. of candidate Pcells 2144
SSBs/CSI-RSs 2145
CSI meas. 2146
gNB/Event-triggered L1/2 CSI report 2147
Early TA acquisition
PDCCH order triggering RACH towards Cell 1 2148
Preamble 2149
Estimate TA 2151
TA indication 2152
TA indication 2153
MAC CE triggering PCell switch to Cell 1 2154
Switch PCell to Cell 1 2155

FIG. 21

Wireless device 2205
Source Base station 2202
Target Base station 2203
Measurement Report 2241
Handover request 2242
Handover request ACK 2243
Handover command (e.g., comprising pre-configured UL grant) for RACH-less handover 2244
Start T304
PDCCH (dynamic UL grant) 2245
RRCReconfigurationComplete via pre-configured UL grant or dynamic UL grant 2246
PDCCH addressed to C-RNTI 2247
PDSCH (comprising contention resolution identity MAC CE) 2248
Stop T304;
Release RACH-less configurajton 2249
If pre-configured UL grant is not provided by the handover command:
monitor PDCCH to receive a dynamic grant for transmission of RRCReconfigurationComplete 2250
else
Transmit RRCReconfigurationComplete via the indicated pre-configured UL grant 2251

FIG. 22

AMF/UPF
NG
NTN gateway 2309
Feeder link 2313
NTN node/payload 2301
NR Uu
Wireless device 2305
Base station 2306

FIG. 23A

NTN node 2351 (Transparent payload)
Common TA/ delay
Reference point
DL
UL
Service link for broadcast (SIB1/ SIB19) and/or dedicated signalings
kmac
Feeder link
kmac
DL
UL
Maximum delay link
TA_1
DL
UL
Wireless station 2305
Wireless station 2355
TA_2
DL
UL
Cell/beam center 2370
NTN Gateway 2309
Base station 2306


FIG. 23B

```
SIB19-r17 ::=
SEQUENCE {
   ntn-Config-r17
   t-Service-r17
   referenceLocation-
  r17
    distanceThresh-
  r17
    ntn-
  NeighCellConfigList
  -r17
  lateNonCriticalExte
  nsion
}
```

2300

```
NTN-NeighCellConfig-r17 ::=
SEQUENCE{
        ntn-Config-r17
        carrierFreq-r17
        physCellId-r17
}
```

2320

```
NTN-Config-r17 ::=SEQUENCE {
    epochTime-r17
    ntn-
UlSyncValidityDuration-r17
    cellSpecificKoffset-r17
    kmac-r17
    ta-Info-r17
    ntn-PolarizationDL-r17
    ntn-PolarizationUL-r17
    ephemerisInfo-r17
    ta-Report-r17
}
```

2310

FIG. 23C

NTN node 2
2402
NTN node 1
2401
feeder
link 2
Service
link 1
Service
link 2
feeder
link 1
PCI 2
2408
• PCI 1 2407 = PCI 2 2408
(PCI unchanged scenario);
• PCI 1 2407 ≠ PCI 2 2408
(PCI changed scnario)
Wireless device 2405
Source NTN
Gateway
2409
Source Base
Station 2406
PCI 1
2407
target cell 2404 (second cell)
with PCI 2 2408
source cell 2403 (first cell)
with PCI 1 2407

FIG. 24A

NTN node 2
2402
NTN node 1
2401
Service
link 2
Service
link 1
Wireless device 2405
target cell 2404 (second cell)
with PCI 2 2408
source cell 2403 (first cell)
with PCI 1 2407

FIG. 24B

NTN node
2501
first feeder link
2513
Source NTN
Gateway
2509
Source Base
station 2506
second feeder link
2514
Service
link
2515
target NTN
Gateway 2512
traget Base
station 2511
PCI 2
2508
PCI 1
2507
Wireless device 2505
Serving cell 2510
(e.g., source cell 2503 with PCI 1 2507 and/or
target cell 2504 with PCI 2 2508)
• PCI 1 2507 = PCI 2 2508
(PCI unchanged scenario);
• PCI 1 2507 ≠ PCI 2 2508
(PCI changed scnario)

FIG. 25A

Wireless device 2505
Receiving, via a source cell, a handover command comprising rach-skip configuration for switching from the source cell to a target cell
2551
Start monitoring PDCCH after a 1st timing gap from transmitting an initial PUSCH via the target cell of an NTN (e.g., for transmitting the RRC reconfiguration complete message) for receiving a PDCCH addressed to C-RNTI (corresponding to the target cell), wherein the 1st timing gap is based on UE-gNB RTT of the target cell
2552

FIG. 25B

Source base station 2606, Source cell 2603 (e.g., PCI 1 2607)
NTN node 1 2601
Target base station 2611, Target cell 2604 (e.g., PCI 2 2608)
NTN node 2 2602
RRC reconfiguration complete message 2641
Time
Initial PUSCH 2661 (e.g., via pre-configured UL grant)
PDCCH 2662 (addressed to C-RNTI)
Time
Handover command 2631 (e.g., comprising RACH-skip configuration(s) and/or indicating a pre-configured/allocated UL grant)
PDSCH 2663 (e.g., comprising contention resolution identity MAC CE)
1st timing gap 2670 (e.g., UE-gNB RTT of the target cell 2604, e.g., based on the 2nd ephemeris info)
T1
T2
T3
T4
T5
T6
Time
Wireless device 2605
Monitoring PDCCH
Configuration Parameters:
NTN-config 1 2651 (e.g., 1st ephemeris info 2671) of source cell 2603;and/or
NTN-config 2 2652 (e.g., 2nd ephemeris info 2672) of target cell 2604

FIG. 26

Source base station 2606, Source cell 2603 (e.g., PCI 1 2607)
NTN node 1 2601
Target base station 2611, Target cell 2604 (e.g., PCI 2 2608)
NTN node 2 2602
RRC reconfiguration complete message 2741
Time
PDCCH 1 2751 (indicating dynamic UL grant 2750)
Initial PUSCH 2761(e.g., via dynamic UL grant 2750)
Handover Command 2731 (e.g., comprising rach-skip configuration(s))
Time
PDCCH 2762 (addressed to C-RNTI)
schedules
PDSCH 2763 comprising contention resolution identity MAC CE)
Monitoring PDCCH
1st timing gap 2770 (e.g., UE-gNB RTT of the target cell)
Wireless device 2605
T1
T7
T2
T3
T4
T5
T6
Time
Monitoring PDCCH
Configuration Parameters:
NTN-config 1 2651 (e.g., 1st ephemeris info 2671) of source cell 2603;and/or
NTN-config 2 2652 (e.g., 2nd ephemeris info 2672) of target cell 2604

FIG. 27

Source
base station
2606,
Source
cell 2603
(e.g., PCI 1
2607)
NTN
node 1
2601
Target
base station
2611,
Target cell
2604
(e.g., PCI 2
2608)
NTN
node 2
2602
RRC reconfiguration
complete message 2841
Time
PDCCH 1 2851
(indicating
dynamic UL grant 2850)
PUSCH 2861
via
dynamic
UL grant 2850
Time
Handover Command
2831
(e.g., comprising
rach-skip
configuration(s))
schedules
2nd timing gap 2870 (e.g., based
on 1st NTN-config and/or 2nd
NTN-config)
T1
T2
T3
T4
Time
Wireless device
2605
Monitoring
PDCCH
Configuration Parameters:
NTN-config 1 2651 (e.g., 1st ephemeris info 2671) of source cell 2603; and/or
NTN-config 2 2652 (e.g., 2nd ephemeris info 2672) of target cell 2604

FIG. 28

Source base station 2606, Source cell 2603 (e.g., PCI 1 2607)
NTN node 1 2601
Target base station 2611, Target cell 2604 (e.g., PCI 2 2608)
NTN node 2 2602
RRC reconfiguration complete message 2941
Time
Preamble 2920
PDCCH 2962 (addressed to RA-RNTI)
Time
PDSCH 2963 comprising RAR MAC CE(s))
triggers
PDCCH 2951 (Preamble index)
1st timing gap 2970 (e.g., UE-gNB RTT of the target cell 2604)
Wireless device 2605
T1
T2
T3
T4
T5
Time
Monitoring PDCCH
Configuration Parameters:
NTN-config 1 2651 (e.g., 1st ephemeris info 2671) of source cell 2603; and/or
NTN-config 2 2652 (e.g., 2nd ephemeris info 2672) of target cell 2604


FIG. 29

# EUROPEAN SEARCH REPORT

Application Number
EP 24 16 7228

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JUHA KORHONEN ET AL: "Report from Break-Out Session on NTN, IoT NTN and RedCap", 3GPP DRAFT; R2-2301901; TYPE REPORT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 2, no. Athens, GR; 20230227 - 20230303 3 March 2023 (2023-03-03), XP052251675, Retrieved from the Internet: URL:https://www.3gpp.org/ftp/TSG_RAN/WG2_RL2/TSGR2_121/Docs/R2-2301901.zip R2-2301901 - Report from Break-out session on NR-NTN, IoT-NTN and RedCap.docx [retrieved on 2023-03-03] | 1-5, 8-10, 13-15 | INV. H04W36/00 ADD. H04W74/00 H04W84/06 |
| Y | * page 44 - page 45 * * page 47 * | 6,7,11, 12 | |
| Y | US 2022/408327 A1 (LI HAITAO [CN]) 22 December 2022 (2022-12-22) * paragraph [0053] * * paragraph [0064] - paragraph [0066] * | 1,13-15 | TECHNICAL FIELDS SEARCHED (IPC) H04W |

-/--

The present search report has been drawn up for all claims

| Place of search | Date of completion of the search | Examiner |
|---|---|---|
| Munich | 18 August 2024 | Emander, Andreas |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

# EUROPEAN SEARCH REPORT

Application Number
EP 24 16 7228

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ETSI MCC: "Report of 3GPP TSG RAN WG2 meeting #116bis-e, Online", 3GPP DRAFT; R2-2202102, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , no. 20220117 - 20220125 5 March 2022 (2022-03-05), XP052192296, Retrieved from the Internet: URL:https://ftp.3gpp.org/tsg_ran/WG2_RL2/TSGR2_116bis-e/Report/R2-2202102.zip R2-2202102.docx [retrieved on 2022-03-05] * page 127 * | 6,7 | |
| Y | WO 2023/279308 A1 (GUANGDONG OPPO MOBILE TELECOMMUNICATIONS CORP LTD [CN]) 12 January 2023 (2023-01-12) * abstract * & EP 4 340 432 A1 (GUANGDONG OPPO MOBILE TELECOMMUNICATIONS CORP LTD [CN]) 20 March 2024 (2024-03-20) * paragraph [0011] * | 11,12 | TECHNICAL FIELDS SEARCHED (IPC) |

-/--

The present search report has been drawn up for all claims

| Place of search | Date of completion of the search | Examiner |
|---|---|---|
| Munich | 18 August 2024 | Emander, Andreas |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 3

Europäisches
Patentamt
European
Patent Office
Office européen
des brevets

# EUROPEAN SEARCH REPORT

Application Number
EP 24 16 7228

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | XIANGDONG ZHANG ET AL: "Discussion on PCI unchanged scenario", 3GPP DRAFT; R2-2211316; TYPE DISCUSSION; NR_NTN_ENH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 2, no. Toulouse, FR; 20221114 - 20221118 4 November 2022 (2022-11-04), XP052215428, Retrieved from the Internet: URL:https://www.3gpp.org/ftp/TSG_RAN/WG2_RL2/TSGR2_120/Docs/R2-2211316.zip R2-2211316 Discussion on PCI unchanged scenario-final.docx [retrieved on 2022-11-04] * page 1 - page 2 * ----- | 1,13-15 | |

TECHNICAL FIELDS SEARCHED (IPC)

The present search report has been drawn up for all claims

| Place of search | Date of completion of the search | Examiner |
|---|---|---|
| Munich | 18 August 2024 | Emander, Andreas |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 3 of 3

## ANNEX TO THE EUROPEAN SEARCH REPORT ON EUROPEAN PATENT APPLICATION NO.

EP 24 16 7228

This annex lists the patent family members relating to the patent documents cited in the above-mentioned European search report. The members are as contained in the European Patent Office EDP file on
The European Patent Office is in no way liable for these particulars which are merely given for the purpose of information.

18-08-2024

| Patent document cited in search report | Publication date | Patent family member(s) | Publication date |
|---|---|---|---|
| US 2022408327 A1 | 22-12-2022 | CN 115136650 A | 30-09-2022 |
| | | EP 4109964 A1 | 28-12-2022 |
| | | US 2022408327 A1 | 22-12-2022 |
| | | WO 2021168627 A1 | 02-09-2021 |
| WO 2023279308 A1 | 12-01-2023 | CN 117322032 A | 29-12-2023 |
| | | EP 4340432 A1 | 20-03-2024 |
| | | US 2024129072 A1 | 18-04-2024 |
| | | WO 2023279308 A1 | 12-01-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 63455364